# EUROPEAN PATENT SPECIFICATION

(11) **EP 1 828 247 B1**
(45) Date of publication and mention of the grant of the patent: **13.07.2011**
(21) Application number: 05821472.7
(22) Date of filing: 19.12.2005
(51) Int. Cl.: C07K 16/10, A61K 39/42, A61P 31/14, C12N 15/13, C12N 5/10, A61K 51/10

(54) **BINDING MOLECULES CAPABLE OF NEUTRALIZING WEST NILE VIRUS AND USES THEREOF**
ZUR NEUTRALISIERUNG DES WEST-NILE-VIRUS FÄHIGE BINDUNGSMOLEKÜLE UND DEREN ANWENDUNGEN
MOLECULES DE LIAISON CAPABLES DE NEUTRALISER LE VIRUS DU NIL OCCIDENTAL ET UTILISATIONS CORRESPONDANTES

(30) Priority: 20.12.2004 EP 04053609; 12.05.2005 EP 05052160; 08.06.2005 EP 05052648; 23.06.2005 EP 05052946; 15.08.2005 EP 05054002
(43) Date of publication of application: 05.09.2007
(73) Proprietor: Crucell Holland B.V., 2333 CN Leiden (NL)
(72) Inventor: THROSBY, Mark, NL-3581 RB Utrecht (NL); DE KRUIF, Cornelis Adriaan, NL-3731 EL De Bilt (NL)
(74) Representative: Hateboer, Guus
(86) International application number: PCT/EP2005/056926
(87) International publication number: WO 2006/067122

(56) References cited:
- WO-A2-02/072036
- US-A1- 2003 211 110
- HAMDAN A ET AL: "POSSIBLE BENEFIT OF INTRAVENOUS IMMUNOGLOBULIN THERAPY IN A LUNG TRANSPLANT RECIPIENT WITH WEST NILE VIRUS ENCEPHALITIS" TRANSPLANT INFECTIOUS DISEASE, MUNKSGAARD, COPENHAGEN, DK, vol. 4, no. 3, September 2002 (2002-09), pages 160-162, XP009069702 ISSN: 1398-2273
- D. BEN-NATHAN ET AL: "Prophylatic and therapeutic efficacy of human intravenous immunoglobulin in treating West Nile Virus infection in mice" THE JOURNAL OF INFECTIOUS DISEASES, vol. 188, 2003, pages 5-12, XP002434247
- BESSELAAR T G ET AL: "ANTIGENIC ANALYSIS OF WEST NILE VIRUS STRAINS USING MONOCLONAL ANTIBODIES" 1988, ARCHIVES OF VIROLOGY, NEW YORK, NY, US, PAGE(S) 75-88 , XP009040311 ISSN: 0304-8608 See "Determination of Mab specificity", "Serological activity of Mabs"

## Description

### FIELD OF THE INVENTION

The invention relates to medicine. In particular the invention relates to the diagnosis, prophylaxis and/or treatment of infection by the West Nile virus (WNV).

### BACKGROUND OF THE INVENTION

West Nile virus (WNV) is a member of the *Flaviviridae* family, genus Flavivirus. Flaviviruses are small spherical enveloped positive-strand RNA viruses. The Flavivirus genus comprises more than 60 highly related viruses including several human pathogens such as *inter alia* yellow fever virus, Japanese encephalitis virus, St. Louis encephalitis virus, Murray Valley encephalitis virus, tick-borne encephalitis virus, and dengue virus.

WNV was initially isolated in 1937 in the West Nile region of Uganda but has now an almost worldwide distribution including parts of Africa, Asia, Australia, Europe and, most recently, North America. WNV was first diagnosed in the New York area in 1999 and has continued to spread rapidly across North America causing infections in persons in over 40 different states reaching as far as California.

WNV is mainly transmitted to man by mosquitoes but occasionally transmission has been linked to blood transfusion and organ transplantation. WNV infections generally have mild symptoms, which generally last 3 to 6 days, varying from a fever of sudden onset, headache, tremors, skin rash to swollen lymph glands. However, in 30% of the cases, particularly in elderly and immunocompromised patients, the disease progresses to a more severe state (*e.g.,* encephalitis or aseptic meningitis), which can lead to death. By 2002 human mortality increased to over 150 cases. Besides infecting humans, WNV is also known to infect horses and several bird species and can cause severe illness and death in said species.

The two main strategies for preventing WNV infections are a) controlling the spread of WNV by spraying large areas with insecticides to kill mosquito vectors and b) reducing the contact between humans and mosquitoes by using personal protection such as anti-insect repellents. These strategies are however highly inefficacious. Furthermore, there are concerns regarding the toxic effects of insecticides. Moreover, spraying requires repeated applications and is considered to be unreliable, as it does not provide complete coverage of mosquito breeding areas or eradication of mosquitoes.

There is no specific treatment of WNV infection. Treatment has only been supportive, since there are no available anti-viral or other drugs with proven efficacy. The most promising potential treatment options currently available for humans include the anti-viral compounds ribavirin and interferon-alpha2b (Anderson and Rahal, 2002), and human anti-WNV immunoglobulins (Ben Nathan *et al.,* 2003). A disadvantage associated with ribavirin and interferon alpha2b are their significant toxicities. A disadvantage of anti-WNV immunoglobulins is that they are not available in sufficient amounts and are too expensive. In addition, the possibility of contamination by known or unknown pathogens is an additional concern associated with anti-WNV immunoglobulins. Furthermore, in WO 02/072036 it has been suggested that the WNV E protein may be used to prepare murine anti-WNV monoclonal antibodies, and it was demonstrated that passive immunization with sera containing such antibodies can alter susceptibility to WNV in mice. However, murine antibodies, in naked or immunoconjugated format, are limited for their use *in vivo* due to problems associated with administration of murine antibodies to humans, such as short serum half life, an inability to trigger certain human effector functions and elicitation of an unwanted dramatic immune response against the murine antibody in a human. Accordingly, there is an urgent need for a medicament suitable for detection, prevention and/or treatment of WNV infections.

### DESCRIPTION OF THE FIGURES

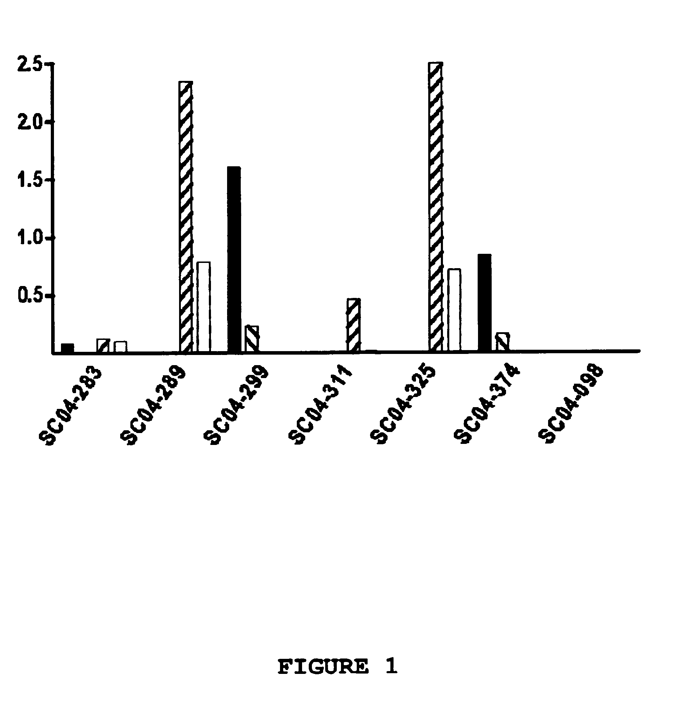

Figure 1 shows the domain mapping of anti WNV-E protein binding scFvs. On the X-axis the tested scFvs are shown and on the Y-axis the OD 492nm value is given. The filled bars show competition ELISA of the scFvs with the murine anti-WNV monoclonal antibody 6B6C-1, the striped (upwards from left to right) bars show competition ELISA of the scFvs with the murine anti-WNV monoclonal antibody 7H2, the striped (upwards from right to left) bars show competition ELISA of the scFvs with the anti-WNV monoclonal antibody 4G2, and the open bars show competition ELISA of the scFvs with the anti-WNV monoclonal antibody 3A3.

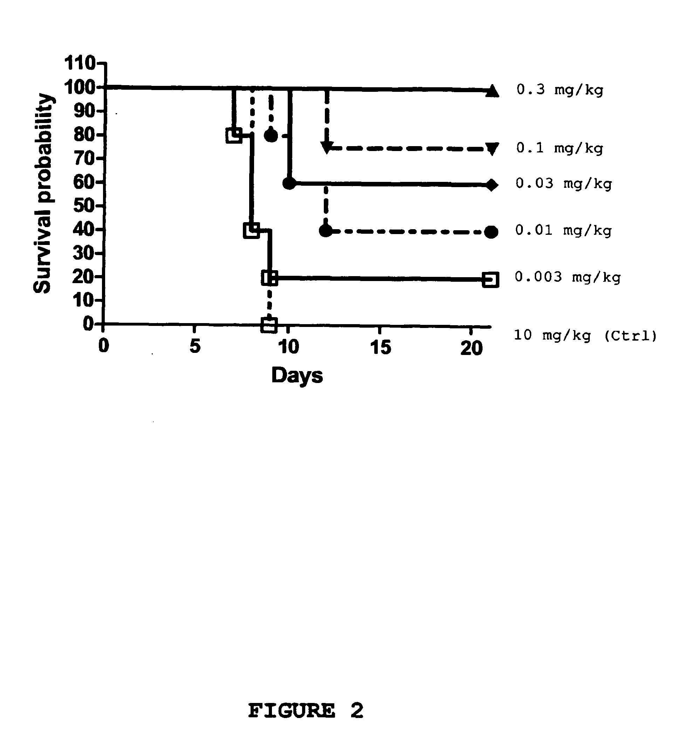

Figure 2 shows the titration of anti-WNV monoclonal antibody CR4374 in a murine WNV challenge model. From top to bottom titration of anti-WNV monoclonal antibody CR4374 using doses of 0.3, 0.1, 0.03, 0.01, and 0.003 mg/kg and titration with a control antibody at a concentration of 10 mg/kg are shown. On the X-axis days are shown and on the Y-axis the survival probability (%) is represented.

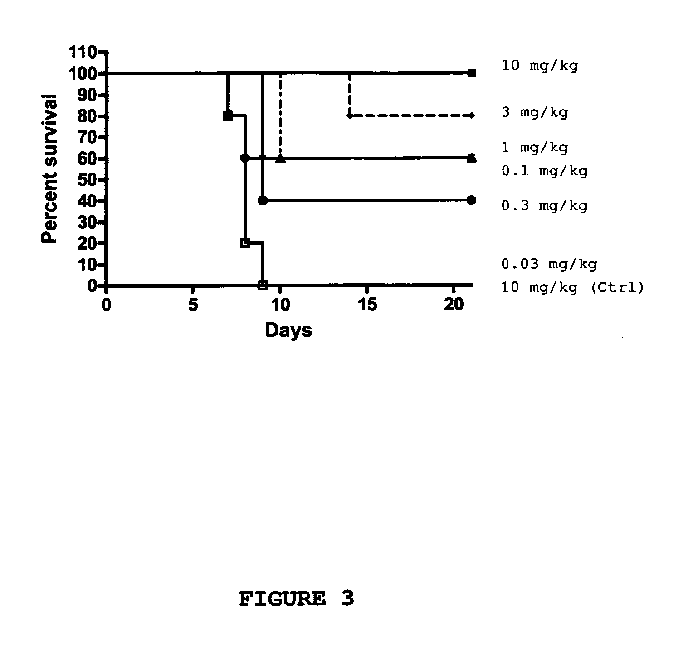

Figure 3 shows the titration of anti-WNV monoclonal antibody CR4353 in a murine WNV challenge model. From top to bottom titration of anti-WNV monoclonal antibody CR4353 using doses of 10, 3, 1, 0.1,0.3, and 0.03 mg/kg and titration with a control antibody at a concentration of 10 mg/kg are shown. On the X-axis days are shown and on the Y-axis the survival probability is represented.

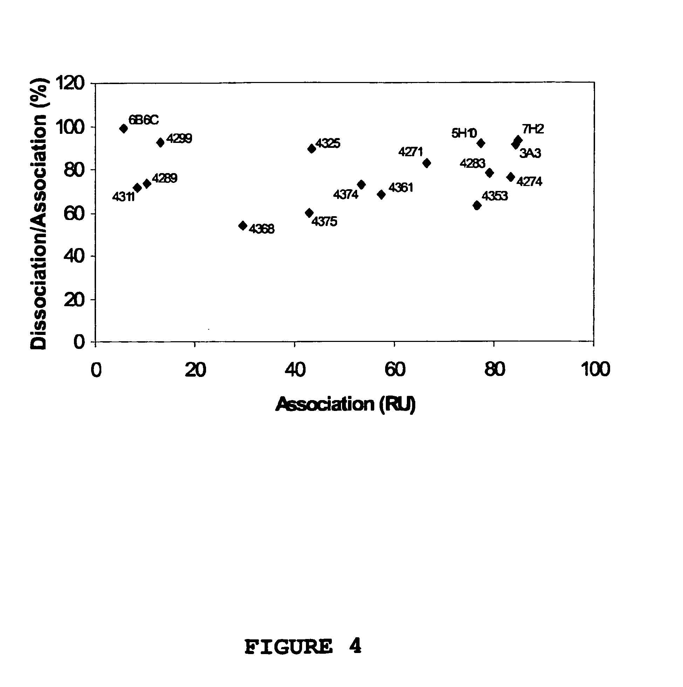

Figure 4. Affinity ranking of antibodies using surface plasmon resonance. Antibodies with a relatively high affinity for West Nile Virus are located in the upper right corner of this plot, indicating good association and slow dissociation. The average of two measurements is shown for each antibody.

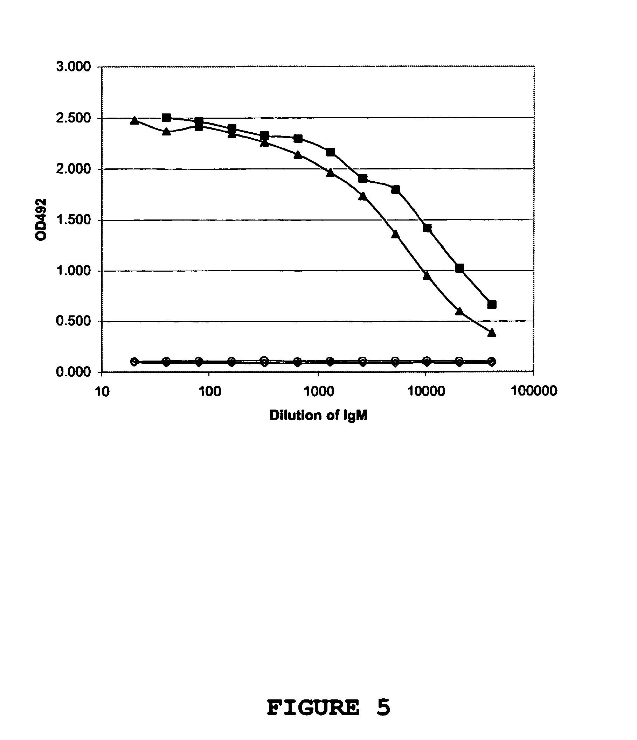

Figure 5. Binding curve of IgM form of CR4374 (CRM4374) to virus-like particles (VLPs). Two different purification runs are shown (▲ and **■,** IgM; ο and ◇, control).

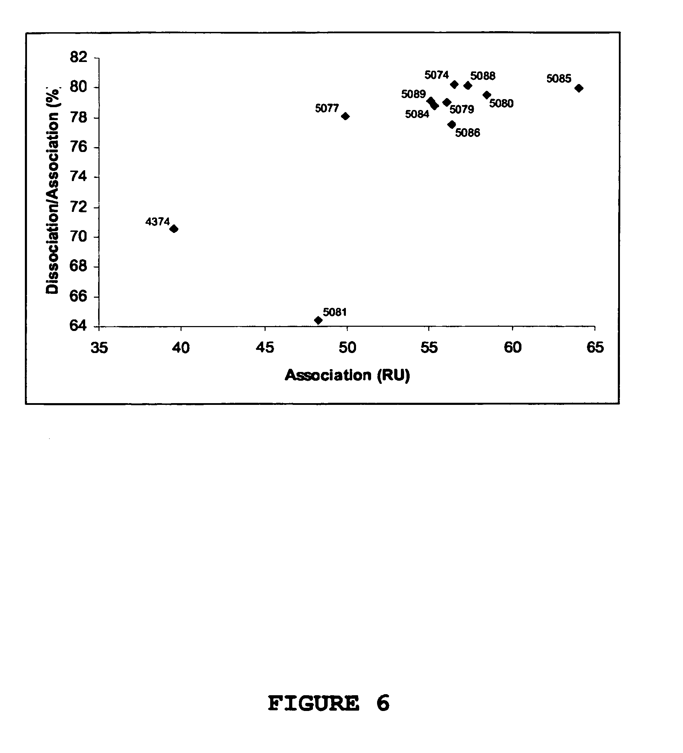

Figure 6. Affinity ranking of affinity matured CR4374 variants using surface plasmon resonance. Antibodies with a relatively high affinity for West Nile Virus are located in the upper right corner of this plot, indicating good association and slow dissociation. The average of two measurements is shown for each antibody.

### DESCRIPTION OF THE INVENTION

Here below follow definitions of terms as used in the invention.

### DEFINITIONS

### Amino acid sequence

The term "amino acid sequence" as used herein refers to naturally occurring or synthetic molecules and to a peptide, oligopeptide, polypeptide or protein sequence.

### Binding molecule

As used herein the term "binding molecule" refers to an intact immunoglobulin including monoclonal antibodies, such as chimeric, humanized or human monoclonal antibodies, or to an antigen-binding and/or variable domain comprising fragment of an immunoglobulin that competes with the intact immunoglobulin for specific binding to the binding partner of the immunoglobulin, *e.g*. WNV. Regardless of structure, the antigen-binding fragment binds with the same antigen that is recognized by the intact immunoglobulin.

The term "binding molecule", as used herein includes all immunoglobulin classes and subclasses known in the art. Depending on the amino acid sequence of the constant domain of their heavy chains, binding molecules can be divided into the five major classes of intact antibodies: IgA, IgD, IgE, IgG, and IgM, and several of these may be further divided into subclasses (isotypes), *e.g*., IgA1, IgA2, IgG1, IgG2, IgG3 and IgG4.

Antigen-binding fragments include, *inter alia,* Fab, F(ab'), F(ab')2, Fv, dAb, Fd, complementarity determining region (CDR) fragments, single-chain antibodies (scFv), bivalent single-chain antibodies, single-chain phage antibodies, diabodies, triabodies, tetrabodies, (poly)peptides that contain at least a fragment of an immunoglobulin that is sufficient to confer specific antigen binding to the (poly)peptide, etc. The above fragments may be produced synthetically or by enzymatic or chemical cleavage of intact immunoglobulins or they may be genetically engineered by recombinant DNA techniques. The methods of production are well known in the art and are described, for example, in Antibodies: A Laboratory Manual, Edited by: E. Harlow and D, Lane (1988), Cold Spring Harbor Laboratory, Cold Spring Harbor, New York. A binding molecule or antigen-binding fragment thereof may have one or more binding sites. If there is more than one binding site, the binding sites may be identical to one another or they may be different.

The binding molecule can be a naked or unconjugated binding molecule but can also be part of an immunoconjugate. A naked or unconjugated binding molecule is intended to refer to a binding molecule that is not conjugated, operatively linked or otherwise physically or functionally associated with an effector moiety or tag, such as *inter alia* a toxic substance, a radioactive substance, a liposome, an enzyme. It will be understood that naked or unconjugated binding molecules do not exclude binding molecules that have been stabilized, multimerized, humanized or in any other way manipulated, other than by the attachment of an effector moiety or tag. Accordingly, all post-translationally modified naked and unconjugated binding molecules are included herewith, including where the modifications are made in the natural binding molecule-producing cell environment, by a recombinant binding molecule-producing cell, and are introduced by the hand of man after initial binding molecule preparation. Of course, the term naked or unconjugated binding molecule does not exclude the ability of the binding molecule to form functional associations with effector cells and/or molecules after administration to the body, as some of such interactions are necessary in order to exert a biological effect. The lack of associated effector group or tag is therefore applied in definition to the naked or unconjugated binding molecule *in vitro,* not *in vivo.*

### Complementarity determining regions (CDR)

The term "complementarity determining regions" as used herein means sequences within the variable regions of binding molecules, such as immunoglobulins, that usually contribute to a large extent to the antigen binding site which is complementary in shape and charge distribution to the epitope recognized on the antigen. The CDR regions can be specific for linear epitopes, discontinuous epitopes, or conformational epitopes of proteins or protein fragments, either as present on the protein in its native conformation or, in some cases, as present on the proteins as denatured, *e.g*., by solubilization in SDS. Epitopes may also consist of posttranslational modifications of proteins.

### Expression-regulating nucleic acid sequence

The term "expression-regulating nucleic acid sequence" as used herein refers to polynucleotide sequences necessary for and/or affecting the expression of an operably linked coding sequence in a particular host organism. The expression-regulating nucleic acid sequences, such as *inter alia* appropriate transcription initiation, termination, promoter, enhancer sequences; repressor or activator sequences; efficient RNA processing signals such as splicing and polyadenylation signals; sequences that stabilize cytoplasmic mRNA; sequences that enhance translation efficiency (*e.g*., ribosome binding sites); sequences that enhance protein stability; and when desired, sequences that enhance protein secretion, can be any nucleic acid sequence showing activity in the host organism of choice and can be derived from genes encoding proteins, which are either homologous or heterologous to the host organism. The identification and employment of expression-regulating sequences is routine to the person skilled in the art.

### Functional variant

The term "functional variant", as used herein, refers to a binding molecule that comprises a nucleotide and/or amino acid sequence that is altered by one or more nucleotides and/or amino acids compared to the nucleotide and/or amino acid sequences of the parent binding molecule and that is still capable of competing for binding to the binding partner, *e.g*. WNV, with the parent binding molecule. In other words, the modifications in the amino acid and/or nucleotide sequence of the parent binding molecule do not significantly affect or alter the binding characteristics of the binding molecule encoded by the nucleotide sequence or containing the amino acid sequence, *i.e*. the binding molecule is still able to recognize and bind its target. The functional variant may have conservative sequence modifications including nucleotide and amino acid substitutions, additions and deletions. These modifications can be introduced by standard techniques known in the art, such as site-directed mutagenesis and random PCR-mediated mutagenesis, and may comprise natural as well as non-natural nucleotides and amino acids.

Conservative amino acid substitutions include the ones in which the amino acid residue is replaced with an amino acid residue having similar structural or chemical properties. Families of amino acid residues having similar side chains have been defined in the art. These families include amino acids with basic side chains (*e.g*., lysine, arginine, histidine), acidic side chains (*e.g*., aspartic acid, glutamic acid), uncharged polar side chains (*e.g*., glycine, asparagine, glutamine, serine, threonine, tyrosine, cystine, tryptophan), nonpolar side chains (*e.g*., alanine, valine, leucine, isoleucine, proline, phenylalanine, methionine), beta-branched side chains (*e.g*., threonine, valine, isoleucine) and aromatic side chains (*e.g*., tyrosine, phenylalanine, tryptophan, histidine). It will be clear to the skilled artisan that other classifications of amino acid residue families than the one used above can also be employed. Furthermore, a variant may have non-conservative amino acid substitutions, *e.g*., replacement of an amino acid with an amino acid residue having different structural or chemical properties. Similar minor variations may also include amino acid deletions or insertions, or both. Guidance in determining which amino acid residues may be substituted, inserted, or deleted without abolishing immunological activity may be found using computer programs well known in the art.

A mutation in a nucleotide sequence can be a single alteration made at a locus (a point mutation), such as transition or transversion mutations, or alternatively, multiple nucleotides may be inserted, deleted or changed at a single locus. In addition, one or more alterations may be made at any number of loci within a nucleotide sequence. The mutations may be performed by any suitable method known in the art.

### Host

The term "host", as used herein, is intended to refer to an organism or a cell into which a vector such as a cloning vector or an expression vector has been introduced. The organism or cell can be prokaryotic or eukaryotic. It should be understood that this term is intended to refer not only to the particular subject organism or cell, but to the progeny of such an organism or cell as well. Because certain modifications may occur in succeeding generations due to either mutation or environmental influences, such progeny may not, in fact, be identical to the parent organism or cell, but are still included within the scope of the term "host" as used herein.

### Human

The term "human", when applied to binding molecules as defined herein, refers to molecules that are either directly derived from a human or based upon a human sequence. When a binding molecule is derived from or based on a human sequence and subsequently modified, it is still to be considered human as used throughout the specification. In other words, the term human, when applied to binding molecules is intended to include binding molecules having variable and constant regions derived from human germline immunoglobulin sequences or based on variable or constant regions occurring in a human or human lymphocyte and modified in some form. Thus, the human binding molecules may include amino acid residues not encoded by human germline immunoglobulin sequences, comprise substitutions and/or deletions (*e.g*., mutations introduced by for instance random or site-specific mutagenesis in *vitro* or by somatic mutation *in vivo*). "Based on" as used herein refers to the situation that a nucleic acid sequence may be exactly copied from a template, or with minor mutations, such as by error-prone PCR methods, or synthetically made matching the template exactly or with minor modifications. Semi-synthetic molecules based on human sequences are also considered to be human as used herein.

### Isolated

The term "isolated", when applied to binding molecules as defined herein, refers to binding molecules that are substantially free of other proteins or polypeptides, particularly free of other binding molecules having different antigenic specificities, and are also substantially free of other cellular material and/or chemicals. For example, when the binding molecules are recombinantly produced, they are preferably substantially free of culture medium, and when the binding molecules are produced by chemical synthesis, they are preferably substantially free of chemical precursors or other chemicals, *i.e*., they are separated from chemical precursors or other chemicals which are involved in the synthesis of the protein. The term "isolated" when applied to nucleic acid molecules encoding binding molecules as defined herein, is intended to refer to nucleic acid molecules in which the nucleotide sequences encoding the binding molecules are free of other nucleotide sequences, particularly nucleotide sequences encoding binding molecules that bind binding partners other than WNV. Furthermore, the term "isolated" refers to nucleic acid molecules that are substantially separated from other cellular components that naturally accompany the native nucleic acid molecule in its natural host, *e.g*., ribosomes, polymerases, or genomic sequences with which it is naturally associated. Moreover, "isolated" nucleic acid molecules, such as cDNA molecules, can be substantially free of other cellular material, or culture medium when produced by recombinant techniques, or substantially free of chemical precursors or other chemicals when chemically synthesized.

### Monoclonal antibody

The term "monoclonal antibody" as used herein refers to a preparation of antibody molecules of single molecular composition. A monoclonal antibody displays a single binding specificity and affinity for a particular epitope. Accordingly, the term "human monoclonal antibody" refers to an antibody displaying a single binding specificity which has variable and constant regions derived from or based on human germline immunoglobulin sequences or derived from completely synthetic sequences. The method of preparing the monoclonal antibody is not relevant.

### Naturally occurring

The term "naturally occurring" as used herein as applied to an object refers to the fact that an object can be found in nature. For example, a polypeptide or polynucleotide sequence that is present in an organism that can be isolated from a source in nature and which has not been intentionally modified by man in the laboratory is naturally occurring.

### Nucleic acid molecule

The term "nucleic acid molecule" as used in the present invention refers to a polymeric form of nucleotides and includes both sense and anti-sense strands of RNA, cDNA, genomic DNA, and synthetic forms and mixed polymers of the above. A nucleotide refers to a ribonucleotide, deoxynucleotide or a modified form of either type of nucleotide. The term also includes single- and double-stranded forms of DNA. In addition, a polynucleotide may include either or both naturally occurring and modified nucleotides linked together by naturally occurring and/or non-naturally occurring nucleotide linkages. A reference to a nucleic acid sequence encompasses its complement unless otherwise specified. Thus, a reference to a nucleic acid molecule having a particular sequence should be understood to encompass its complementary strand, with its complementary sequence. The complementary strand is also useful, *e.g*., for anti-sense therapy, hybridization probes and PCR primers.

### Operably linked

The term "operably linked" refers to two or more nucleic acid sequence elements that are usually physically linked and are in a functional relationship with each other. For instance, a promoter is operably linked to a coding sequence, if the promoter is able to initiate or regulate the transcription or expression of a coding sequence, in which case the coding sequence should be understood as being "under the control of" the promoter.

### Pharmaceutically acceptable excipient

By "pharmaceutically acceptable excipient" is meant any inert substance that is combined with an active molecule such as a drug, agent, or binding molecule for preparing an agreeable or convenient dosage form. The "pharmaceutically acceptable excipient" is an excipient that is non-toxic to recipients at the dosages and concentrations employed, and is compatible with other ingredients of the formulation comprising the drug, agent or binding molecule.

### Specifically Binding

The term "specifically binding", as used herein, in reference to the interaction of a binding molecule, *e.g*. an antibody, and its binding partner, *e.g*. an antigen, means that the interaction is dependent upon the presence of a particular structure, *e.g*. an antigenic determinant or epitope, on the binding partner. In other words, the antibody preferentially binds or recognizes the binding partner even when the binding partner is present in a mixture of other molecules or organisms. The binding may be mediated by covalent or non-covalent interactions or a combination of both. In yet other words, the term "specifically binding" means immunospecifically binding to an antigen or a fragment thereof and not immunospecifically binding to other antigens. A binding molecule that immunospecifically binds to an antigen may bind to other peptides or polypeptides with lower affinity as determined by, *e.g*., radioimmunoassays (RIA), enzyme-linked immunosorbent assays (ELISA), BIACORE, or other assays known in the art. Binding molecules or fragments thereof that immunospecifically bind to an antigen may be cross-reactive with related antigens. Preferably, binding molecules or fragments thereof that immunospecifically bind to an antigen do not cross-react with other antigens.

### Therapeutically effective amount

The term "therapeutically effective amount" refers to an amount of the binding molecule as defined herein that is effective for preventing, ameliorating and/or treating a condition resulting from infection with WNV.

### Treatment

The term "treatment" refers to therapeutic treatment as well as prophylactic or preventative measures to cure or halt or at least retard disease progress. Those in need of treatment include those already inflicted with a condition resulting from infection with WNV as well as those in which infection with WNV is to be prevented. Subjects partially or totally recovered form infection with WNV might also be in need of treatment. Prevention encompasses inhibiting or reducing the spread of WNV or inhibiting or reducing the onset, development or progression of one or more of the symptoms associated with infection with WNV.

### SUMMARY OF THE INVENTION

The invention provides human binding molecules capable of specifically binding to WNV and capable of neutralizing WNV. The invention also pertains to nucleic acid molecules encoding at least the binding region of the human binding molecules. Also disclosed is the use of the human binding molecules of the invention in the prophylaxis and/or treatment of a subject having, or at risk of developing, a WNV infection. Besides that, Also disclosed is the use of the human binding molecules of the invention in the diagnosis/detection of WNV.

### DETAILED DESCRIPTION OF THE INVENTION

In a first aspect the present invention encompasses binding molecules capable of specifically binding to WNV. Preferably, the binding molecules are human binding molecules. Preferably, the binding molecules of the invention are capable of neutralizing WNV. More preferably, the binding molecules of the invention are capable of binding to and neutralizing both WNV lineage I variants such as *inter alia* strain 385-99 and WNV lineage II variants such as *inter alia* strain H-442. In the most preferred embodiment the binding molecules of the invention are capable of neutralizing essentially all WNV variants currently known. The binding molecules of the invention may be capable of specifically binding to WNV in activated or inactivated/attenuated form. Methods for inactivating/attenuating viruses are well known in the art and include, but are not limited to, heat inactivation, inactivation by UV irradiation, and inactivation by gamma irradiation.

The binding molecules of the invention may also be capable of specifically binding to one or more fragments of WNV such as *inter alia* a preparation of one or more proteins and/or (poly)peptides derived from WNV or one or more recombinantly produced WNV proteins and/or polypeptides. Alternatively, the fragments have the form of WNV-like particles. Such particles comprise WNV structural proteins including, but not limited to, the WNV envelope (E) protein and/or the WNV membrane (preM/M) protein. For methods of treatment and/or prevention of WNV the binding molecules are preferably capable of specifically binding to surface accessible proteins of WNV including the E protein and preM/M protein. For diagnostical purposes the binding molecules may also be capable of specifically binding to proteins not present on the surface of WNV including the WNV capsid (C) protein and/or the WNV non-structural (NS) proteins NS1, NS2A, NS2B, NS3, NS4A, NS4B, and NS5. The nucleotide and/or amino acid sequence of proteins of various strains of WNV can be found in the GenBank-database, EMBL-database and/or other databases. The complete or partial genomes of a number of WNV isolates from outbreaks in for instance the United States have been sequenced. The complete sequence of WNV isolated from a dead Chilean flamingo (WN-NY99, strain 382-99) at the Bronx Zoo can be found in the Genbank database under accession number AF 196835 (see Lanciotti *et al.,* 1999). The genome of a WNV isolate from human victims of the 1999 New York outbreak (WNV-NY1999) was sequenced and can be found in the Genbank database under accession number AF202541 (see Jia *et al.,* 1999). Partial sequences of isolates from two species of mosquito, a crow and a hawk from Connecticut can be found in the Genbank database under accession numbers AF206517-AF206520, respectively (see Anderson *et al.,* 1999). It is well within the reach of the skilled person to find further sequences of WNV isolates and proteins in databases.

Preferably, the fragment at least comprises an antigenic determinant recognized by the binding molecules of the invention. An "antigenic determinant" as used herein is a moiety, such as a WNV (poly)peptide, protein, glycoprotein, analog or fragment thereof, that is capable of binding to a binding molecule of the invention with sufficiently high affinity to form a detectable antigen-binding molecule complex.

In an embodiment the binding molecules of the invention are capable of specifically binding to the WNV E protein. The human binding molecules of the invention may be capable of binding to domain I, II and/or III of the E protein. The binding molecules of the invention can be intact immunoglobulin molecules such as polyclonal or monoclonal antibodies or the binding molecules can be antigen-binding fragments including, but not limited to, Fab, F(ab'), F(ab')₂, Fv, dAb, Fd, complementarity determining region (CDR) fragments, single-chain antibodies (scFv), bivalent single-chain antibodies, single-chain phage antibodies, diabodies, triabodies, tetrabodies, and (poly)peptides that contain at least a fragment of an immunoglobulin that is sufficient to confer specific antigen binding to the WNV or a fragment thereof. In a preferred embodiment the human binding molecules having WNV neutralizing activity are administered in IgG1 format.

The binding molecules of the invention can be used in non-isolated or isolated form. Furthermore, the binding molecules of the invention can be used alone or in a mixture comprising at least one binding molecule (or variant or fragment thereof) of the invention. In other words, the binding molecules can be used in combination, *e.g*., as a pharmaceutical composition comprising two or more binding molecules of the invention, variants or fragments thereof. For example, binding molecules having different, but complementary activities can be combined in a single therapy to achieve a desired prophylactic, therapeutic or diagnostic effect, but alternatively, binding molecules having identical activities can also be combined in a single therapy to achieve a desired prophylactic, therapeutic or diagnostic effect. The mixture may further comprise at least one other therapeutic agent. Preferably, the therapeutic agent is useful in the prophylaxis and/or treatment of a condition resulting from WNV.

Typically, binding molecules according to the invention can bind to their binding partners, *i.e*. WNV or fragments thereof, with an affinity constant (K_{d}-value) that is lower than 0.2*10⁻⁴ M, 1.0*10⁻⁵ M, 1.0*10⁻⁶ M, 1.0*10⁻⁷ M, preferably lower than 1.0*10⁻⁸ M, more preferably lower than 1.0*10⁻⁹ M, more preferably lower than 1.0*10⁻¹⁰ M, even more preferably lower than 1.0*10⁻¹¹ M, and in particular lower than 1.0*10⁻¹² M. The affinity constants can vary for antibody isotypes. For example, affinity binding for an IgM isotype refers to a binding affinity of at least about 1.0*10⁻⁷ M. Affinity constants can for instance be measured using surface plasmon resonance, *i.e*. an optical phenomenon that allows for the analysis of real-time biospecific interactions by detection of alterations in protein concentrations within a biosensor matrix, for example using the BIACORE system (Pharmacia Biosensor AB, Uppsala, Sweden).

The binding molecules according to the invention may bind to WNV or a fragment thereof in soluble form such as for instance in a sample or may bind to WNV or a fragment thereof bound or attached to a carrier or substrate, *e.g*., microtiter plates, membranes and beads, etc. Carriers or substrates may be made of glass, plastic (*e.g*., polystyrene), polysaccharides, nylon, nitrocellulose, or Teflon, etc. The surface of such supports may be solid or porous and of any convenient shape. Furthermore, the binding molecules may bind to WNV in purified/isolated or non-purified/non-isolated form.

The binding molecules of the invention are capable of neutralizing WNV infectivity. This may be achieved by preventing the attachment of WNV to possible receptors on susceptible host cells or inhibition of the fusion of WNV and cell membranes. Neutralization can for instance be measured as described herein. Alternative neutralization assays are described in for instance Gollins and Porterfield (1986).

Furthermore, the neutralizing binding molecules of the invention may abolish replication of WNV, be complement fixing human binding molecules capable of assisting in the lysis of WNV, and/or might act as opsonins and augment phagocytosis of WNV either by promoting its uptake via Fc or C3b receptors or by agglutinating WNV to make it more easily phagocytosed.

Particularly preferred is a binding molecule according to the invention comprising at least a heavy chain CDR3 region, comprising the amino acid sequence of SEQ ID NO:10. More preferably, the binding molecule according to the invention comprises at least a heavy chain CDR1 and CDR2 region comprising the amino acid sequence of SEQ ID NO:30 and 40, respectively. In an embodiment the binding molecules of the invention may comprise two, three, four, five or even all six CDR regions of the binding molecules of the invention. The heavy chain CDR1 region, heavy chain CDR2 region, light chain CDR1 region, light chain CDR2 region and light chain CDR3 region of each binding molecule of the invention are shown in Table 9. CDR regions are according to Kabat *et al.* (1991) as described in Sequences of Proteins of Immunological Interest. In a specific embodiment, the binding molecule comprising at least a CDR3 region, preferably a heavy chain CDR3 region, comprising the amino acid sequence of SEQ ID NO:10 comprises a heavy chain CDR1 and heavy chain CDR2 region comprising the amino acid sequence of SEQ ID NO:30 and 40, respectively, and a light chain CDR1 region comprising the amino acid sequence selected from the group consisting of SEQ ID Nos: 236-239, a light chain CDR2 region comprising the amino acid sequence selected from the group consisting of SEQ ID Nos: 240-243 and/or a light chain CDR3 region comprising the amino acid sequence selected from the group consisting of SEQ ID Nos: 244-247.

In yet another embodiment, the binding molecules according to the invention comprise a heavy chain comprising the variable heavy chain of the amino acid sequence of SEQ ID NO:80.

In a further embodiment, the binding molecules according to the invention comprise a light chain comprising the variable light chain of the amino acid sequence of SEQ ID NO:80, SEQ ID NO:229, SEQ ID NO:231, SEQ ID NO:233, and SEQ ID NO:235. Table 8 and 18 specify, next to the heavy chain CDR3 region, the heavy and light chain variable regions of the binding molecule of the invention.

In a further embodiment, the binding molecules of the invention comprise a heavy chain comprising the variable heavy chain of the amino acid sequence of SEQ ID NO 131. In another embodiment, the binding molecules of the invention comprise a light chain comprising the variable light chain of the amino acid sequence selected from the group consisting of SEQ ID NOs 151, 221, 223, 225, and 227.

In yet a further embodiment the binding molecules of the invention comprise a heavy chain comprising the amino acid sequence of SEQ ID NO 131, and comprise a light chain comprising the amino acid sequence selected from the group consisting of SEQ ID NOs 151, 221, 223, 225, and 227.

Another aspect of the invention includes functional variants of the binding molecules as defined herein. Molecules are considered to be functional variants of a binding molecule according to the invention, if the variants are capable of competing for specifically binding to WNV or a fragment thereof with the parent human binding molecules. In other words, when the functional variants are still capable of binding to WNV or a fragment thereof. Furthermore, molecules are considered to be functional variants of a binding molecule according to the invention, if they have WNV neutralizing activity. Functional variants include, but are not limited to, derivatives that are substantially similar in primary structural sequence, but which contain *e.g. in vitro* or *in vivo* modifications, chemical and/or biochemical, that are not found in the parent binding molecule. Such modifications include *inter alia* acetylation, acylation, covalent attachment of a nucleotide or nucleotide derivative, covalent attachment of a lipid or lipid derivative, cross-linking, disulfide bond formation, glycosylation, hydroxylation, methylation, oxidation, pegylation, proteolytic processing, phosphorylation.

Alternatively, functional variants can be binding molecules as defined in the present invention comprising an amino acid sequence containing substitutions, insertions, deletions or combinations thereof of one or more amino acids compared to the amino acid sequences of the parent binding molecules. Furthermore, functional variants can comprise truncations of the amino acid sequence at either or both the amino or carboxyl termini. Functional variants according to the invention may have the same or different, either higher or lower, binding affinities compared to the parental binding molecule but are still capable of binding to WNV or a fragment thereof. For instance, functional variants according to the invention may have increased or decreased binding affinities for WNV or a fragment thereof compared to the parent binding molecules. Preferably, the amino acid sequences of the variable regions, including, but not limited to, framework regions, hypervariable regions, in particular the CDR3 regions, are modified. Generally, the light chain and the heavy chain variable regions comprise three hypervariable regions, comprising three CDRs, and more conserved regions, the so-called framework regions (FRs). The hypervariable regions comprise amino acid residues from CDRs and amino acid residues from hypervariable loops. Functional variants intended to fall within the scope of the present invention have at least about 50% to about 99%, preferably at least about 60% to about 99%, more preferably at least about 70% to about 99%, even more preferably at least about 80% to about 99%, most preferably at least about 90% to about 99%, in particular at least about 95% to about 99%, and in particular at least about 97% to about 99% amino acid sequence homology with the parent human binding molecules as defined herein. Computer algorithms such as *inter alia* Gap or Bestfit known to a person skilled in the art can be used to optimally align amino acid sequences to be compared and to define similar or identical amino acid residues. Functional variants can be obtained by altering the parent binding molecules or parts thereof by general molecular biology methods known in the art including, but not limited to, error-prone PCR, oligonucleotide-directed mutagenesis, site-directed mutagenesis and heavy or light chain shuffling. Preferably, the functional variants of the invention have WNV neutralizing activity. This neutralizing activity may either be identical, or be higher or lower compared to the parent binding molecules. Furthermore, the functional variants having neutralizing activity may inhibit or down regulate WNV replication, are complement fixing binding molecules capable of assisting in the lysis of WNV and/or act as opsonins and augment phagocytosis of WNV either by promoting its uptake via Fc or C3b receptors or by agglutinating WNV to make it more easily phagocytosed. Henceforth, when the term (human) binding molecule is used, this also encompasses functional variants of the (human) binding molecule.

In yet a further aspect, the invention includes immunoconjugates, *i.e*. molecules comprising at least one binding molecule as defined herein and further comprising at least one tag, such as *inter alia* a detectable moiety/agent. Also contemplated in the present invention are mixtures of immunoconjugates according to the invention or mixtures of at least one immunoconjugates according to the invention and another molecule, such as a therapeutic agent or another binding molecule or immunoconjugate. In a further embodiment, the immunoconjugates of the invention may comprise more than one tag. These tags can be the same or distinct from each other and can be joined/conjugated non-covalently to the binding molecules. The tag(s) can also be joined/conjugated directly to the human binding molecules through covalent bonding. Alternatively, the tag(s) can be joined/conjugated to the binding molecules by means of one or more linking compounds. Techniques for conjugating tags to binding molecules are well known to the skilled artisan.

The tags of the immunoconjugates of the present invention may be therapeutic agents, but preferably they are detectable moieties/agents. The tags may also be toxins, such as botulinum toxin or functional parts thereof. Immunoconjugates comprising a detectable agent can be used diagnostically to, for example, assess if a subject has been infected with WNV or monitor the development or progression of a WNV infection as part of a clinical testing procedure to, *e.g*., determine the efficacy of a given treatment regimen. However, they may also be used for other detection and/or analytical and/or diagnostic purposes. Detectable moieties/agents include, but are not limited to, enzymes, prosthetic groups, fluorescent materials, luminescent materials, bioluminescent materials, radioactive materials, positron emitting metals, and non-radioactive paramagnetic metal ions. The tags used to label the binding molecules for detection and/or analytical and/or diagnostic purposes depend on the specific detection/analysis/diagnosis techniques and/or methods used such as *inter alia* immunohistochemical staining of (tissue) samples, flow cytometric detection, scanning laser cytometric detection, fluorescent immunoassays, enzyme-linked immunosorbent assays (ELISA's), radioimmunoassays (RIA's), bioassays (*e.g*., neutralization assays), Western blotting applications, etc. Suitable labels for the detection/analysis/diagnosis techniques and/or methods known in the art are well within the reach of the skilled artisan.

Furthermore, the human binding molecules or immunoconjugates of the invention can also be attached to solid supports, which are particularly useful for *in vitro* immunoassays or purification of WNV or a fragment thereof. Such solid supports might be porous or nonporous, planar or non-planar. The binding molecules of the present invention can be fused to marker sequences, such as a peptide to facilitate purification. Examples include, but are not limited to, the hexa-histidine tag, the hemagglutinin (HA) tag, the myc tag or the flag tag. Alternatively, an antibody can be conjugated to a second antibody to form an antibody heteroconjugate. In another aspect the binding molecules of the invention may be conjugated/attached to one or more antigens. Preferably, these antigens are antigens which are recognized by the immune system of a subject to which the binding molecule-antigen conjugate is administered. The antigens may be identical, but may also differ from each other. Conjugation methods for attaching the antigens and binding molecules are well known in the art and include, but are not limited to, the use of cross-linking agents. The binding molecules of the invention will bind to WNV and the antigens attached to the binding molecules will initiate a powerful T-cell attack on the conjugate, which will eventually lead to the destruction of the WNV.

Next to producing immunoconjugates chemically by conjugating, directly or indirectly, via for instance a linker, the immunoconjugates can be produced as fusion proteins comprising the binding molecules of the invention and a suitable tag. Fusion proteins can be produced by methods known in the art such as, *e.g*., recombinantly by constructing nucleic acid molecules comprising nucleotide sequences encoding the binding molecules in frame with nucleotide sequences encoding the suitable tag(s) and then expressing the nucleic acid molecules.

It is another aspect of the present invention to provide a nucleic acid molecule encoding at least a binding molecule or immunoconjugate according to the invention. Such nucleic acid molecules can be used as intermediates for cloning purposes, *e.g*. in the process of affinity maturation as described above. In a preferred embodiment, the nucleic acid molecules are isolated or purified.

The skilled man will appreciate that functional variants of these nucleic acid molecules are also intended to be a part of the present invention. Functional variants are nucleic acid sequences that can be directly translated, using the standard genetic code, to provide an amino acid sequence identical to that translated from the parent nucleic acid molecules.

Preferably, the nucleic acid molecules encode binding molecules comprising a CDR3 region, preferably a heavy chain CDR3 region, comprising an amino acid sequence of SEQ ID NO: 10. In a further embodiment the nucleic acid molecules encode binding molecules comprising two, three, four, five or even all six CDR regions of the binding molecules of the invention.

In another embodiment, the nucleic acid molecules encode binding molecules comprising a heavy chain comprising the variable heavy chain of the amino acid sequence of SEQ ID NO:80. In another embodiment the nucleic acid molecules encode binding molecules comprising a light chain comprising the variable light chain of the amino acid sequence selected from the group consisting of SEQ ID NO:80, SEQ ID NO:229, SEQ ID NO:231, SEQ ID NO:233, and SEQ ID NO:235.

In a further embodiment, the nucleic acid molecules encode binding molecules comprising a heavy chain comprising the variable heavy chain of the amino acid sequence of SEQ ID NO 131. In another embodiment, the nucleic acid molecules encode binding molecules comprising a light chain comprising the variable light chain of the amino acid sequence selected from the group consisting of SEQ ID NOs 151, 221, 223, 225, and 227.

In yet a further embodiment the nucleic acid molecules encode binding molecules comprising a heavy chain comprising the amino acid sequence of SEQ ID No 131, and comprising a light chain comprising the amino acid sequence selected from the group consisting of SEQ ID Nos 151, 221, 223, 225, and 227.

It is another aspect of the invention to provide vectors, *i.e*. nucleic acid constructs, comprising one or more nucleic acid molecules according to the present.invention. Vectors can be derived from plasmids such as *inter alia* F, R1, RPI, Col, pBR322, TOL, Ti, etc; cosmids; phages such as lambda, lambdoid, M13, Mu, P1, P22, Qβ, T-even, T-odd, T2, T4, T7, etc; plant viruses. Vectors can be used for cloning and/or for expression of the binding molecules of the invention and might even be used for gene therapy purposes. Vectors comprising one or more nucleic acid molecules according to the invention operably linked to one or more expression-regulating nucleic acid molecules are also covered by the present invention. The choice of the vector is dependent on the recombinant procedures followed and the host used. Introduction of vectors in host cells can be effected by *inter alia* calcium phosphate transfection, virus infection, DEAE-dextran mediated transfection, lipofectamin transfection or electroporation. Vectors may be autonomously replicating or may replicate together with the chromosome into which they have been integrated. Preferably, the vectors contain one or more selection markers. The choice of the markers may depend on the host cells of choice, although this is not critical to the invention as is well known to persons skilled in the art. They include, but are not limited to, kanamycin, neomycin, puromycin, hygromycin, zeocin, thymidine kinase gene from Herpes simplex virus (HSV-TK), dihydrofolate reductase gene from mouse (dhfr). Vectors comprising one or more nucleic acid molecules encoding the human binding molecules as described above operably linked to one or more nucleic acid molecules encoding proteins or peptides that can be used to isolate the human binding molecules are also covered by the invention. These proteins or peptides include, but are not limited to, glutathione-S-transferase, maltose binding protein, metal-binding polyhistidine, green fluorescent protein, luciferase and beta-galactosidase.

Hosts containing one or more copies of the vectors mentioned above are an additional subject of the present invention. Preferably, the hosts are host cells. Host cells include, but are not limited to, cells of mammalian, plant, insect, fungal or bacterial origin. Bacterial cells include, but are not limited to, cells from Gram positive bacteria such as several species of the genera *Bacillus, Streptomyces* and *Staphylococcus* or cells of Gram negative bacteria such as several species of the genera *Escherichia,* such as *E. coli,* and *Pseudomonas.* In the group of fungal cells preferably yeast cells are used. Expression in yeast can be achieved by using yeast strains such as *inter alia Pichia pastoris, Saccharomyces cerevisiae* and *Hansenula polymorpha.* Furthermore, insect cells such as cells from Drosophila and Sf9 can be used as host cells. Besides that, the host cells can be plant cells such as *inter alia* cells from crop plants such as forestry plants, or cells from plants providing food and raw materials such as cereal plants, or medicinal plants, or cells from ornamentals, or cells from flower bulb crops. Transformed (transgenic) plants or plant cells are produced by known methods, for example, Agrobacterium-mediated gene transfer, transformation of leaf discs, protoplast transformation by polyethylene glycol-induced DNA transfer, electroporation, sonication, microinjection or bolistic gene transfer. Additionally, a suitable expression system can be a baculovirus system. Expression systems using mammalian cells such as Chinese Hamster Ovary (CHO) cells, COS cells, BHK cells or Bowes melanoma cells are preferred in the present invention. Mammalian cells provide expressed proteins with posttranslational modifications that are most similar to natural molecules of mammalian origin. Since the present invention deals with molecules that may have to be administered to humans, a completely human expression system would be particularly preferred. Therefore, even more preferably, the host cells are human cells. Examples of human cells are *inter alia* HeLa, 911, AT1080, A549, 293 and HEK293T cells. In preferred embodiments, the human producer cells comprise at least a functional part of a nucleic acid sequence encoding an adenovirus E1 region in expressible format. In even more preferred embodiments, said host cells are derived from a human retina and immortalized with nucleic acids comprising adenoviral E1 sequences, such as 911 cells or the cell line deposited at the European Collection of Cell Cultures (ECACC), CAMR, Salisbury, Wiltshire SP4 OJG, Great Britain on 29 February 1996 under number 96022940 and marketed under the trademark PER.C6^{®} (PER.C6 is a registered trademark of Crucell Holland B.V.). For the purposes of this application "PER.C6" refers to cells deposited under number 96022940 or ancestors, passages up-stream or downstream as well as descendants from ancestors of deposited cells, as well as derivatives of any of the foregoing. Production of recombinant proteins in host cells can be performed according to methods well known in the art. The use of the cells marketed under the trademark PER.C6^{®} as a production platform for proteins of interest has been described in WO 00/63403.

A pharmaceutical composition comprising the binding molecule, the pharmaceutical composition further comprising at least one pharmaceutically acceptable excipient is also an aspect of the present invention. Pharmaceutically acceptable excipients are well known to the skilled person. The pharmaceutical composition according to the invention may further comprise at least one other therapeutic agent. Suitable agents are also well known to the skilled artisan.

In yet a further aspect, the invention provides compositions comprising at least one binding molecule, at least one functional variant thereof, at least one immunoconjugate according to the invention or a combination thereof. In addition to that, the compositions may comprise *inter alia* stabilizing molecules, such as albumin or polyethylene glycol, or salts. Preferably, the salts used are salts that retain the desired biological activity of the binding molecules and do not impart any undesired toxicological effects. If necessary, the human binding molecules of the invention may be coated in or on a material to protect them from the action of acids or other natural or non-natural conditions that may inactivate the binding molecules.

In yet a further aspect, the invention provides compositions comprising at least one nucleic acid molecule as defined in the present invention. The compositions may comprise aqueous solutions such as aqueous solutions containing salts (*e.g*., NaCl or salts as described above), detergents (*e.g*., SDS) and/or other suitable components.

Furthermore, the present invention pertains to pharmaceutical compositions comprising at least one binding molecule (or functional fragment or variant thereof), at least one immunoconjugate according to the invention, at least one composition according to the invention, or combinations thereof. The pharmaceutical composition of the invention further comprises at least one pharmaceutically acceptable excipient.

A pharmaceutical composition according to the invention can further comprise at least one other therapeutic, prophylactic and/or diagnostic agent. Preferably, the pharmaceutical composition comprises at least one other prophylactic and/or therapeutic agent. Preferably, said further therapeutic and/or prophylactic agents are agents capable of preventing and/or treating an infection and/or a condition resulting from WNV. Therapeutic and/or prophylactic agents include, but are not limited to, anti-viral agents. Such agents can be binding molecules, small molecules, organic or inorganic compounds, enzymes, polynucleotide sequences etc. Other agents that are currently used to treat patients infected with WNV are interferon-alpha and ribavirin. These can be used in combination with the binding molecules of the invention. Agents capable of preventing and/or treating an infection with WNV and/or a condition resulting from WNV that are in the experimental phase might also be used as other therapeutic and/or prophylactic agents useful in the present invention.

The binding molecules or pharmaceutical compositions of the invention can be tested in suitable animal model systems prior to use in humans. Such animal model systems include, but are not limited to, a murine model, a hamster model, and geese model system.

Typically, pharmaceutical compositions must be sterile and stable under the conditions of manufacture and storage. The binding molecules, immunoconjugates, nucleic acid molecules or compositions of the present invention can be in powder form for reconstitution in the appropriate pharmaceutically acceptable excipient before or at the time of delivery. In the case of sterile powders for the preparation of sterile injectable solutions, the preferred methods of preparation are vacuum drying and freeze-drying (lyophilization) that yield a powder of the active ingredient plus any additional desired ingredient from a previously sterile-filtered solution thereof.

Alternatively, the binding molecules, immunoconjugates, nucleic acid molecules or compositions of the present invention can be in solution and the appropriate pharmaceutically acceptable excipient can be added and/or mixed before or at the time of delivery to provide a unit dosage injectable form. Preferably, the pharmaceutically acceptable excipient used in the present invention is suitable to high drug concentration, can maintain proper fluidity and, if necessary, can delay absorption.

The choice of the optimal route of administration of the pharmaceutical compositions will be influenced by several factors including the physico-chemical properties of the active molecules within the compositions, the urgency of the clinical situation and the relationship of the plasma concentrations of the active molecules to the desired therapeutic effect. For instance, if necessary, the binding molecules of the invention can be prepared with carriers that will protect them against rapid release, such as a controlled release formulation, including implants, transdermal patches, and microencapsulated delivery systems. Biodegradable, biocompatible polymers can *inter alia* be used, such as ethylene vinyl acetate, polyanhydrides, polyglycolic acid, collagen, polyorthoesters, and polylactic acid. Furthermore, it may be necessary to coat the binding molecules with, or co-administer the binding molecules with, a material or compound that prevents the inactivation of the human binding molecules. For example, the binding molecules may be administered to a subject in an appropriate carrier, for example, liposomes or a diluent.

The routes of administration can be divided into two main categories, oral and parenteral administration. The preferred administration route is intravenous.

Oral dosage forms can be formulated *inter alia* as tablets, troches, lozenges, aqueous or oily suspensions, dispersable powders or granules, emulsions, hard capsules, soft gelatin capsules, syrups or elixirs, pills, dragees, liquids, gels, or slurries. These formulations can contain pharmaceutically excipients including, but not limited to, inert diluents, granulating and disintegrating agents, binding agents, lubricating agents, preservatives, coloring, flavoring or sweetening agents, vegetable or mineral oils, wetting agents, and thickening agents.

The pharmaceutical compositions of the present invention can also be formulated for parenteral administration. Formulations for parenteral administration can be *inter alia* in the form of aqueous or non-aqueous isotonic sterile non-toxic injection or infusion solutions or suspensions. The solutions or suspensions may comprise agents that are non-toxic to recipients at the dosages and concentrations employed such as 1,3-butanediol, Ringer's solution, Hank's solution, isotonic sodium chloride solution, oils, fatty acids, local anesthetic agents, preservatives, buffers, viscosity or solubility increasing agents, water-soluble antioxidants, oil-soluble antioxidants, and metal chelating agents.

In a further aspect, the binding molecules (functional fragments and variants thereof), immunoconjugates, compositions, or pharmaceutical compositions of the invention can be used as a medicament. So, a method of treatment and/or prevention of a WNV infection using the binding molecules, immunoconjugates, compositions, or pharmaceutical compositions of the disclosure is another part of the disclosure. The above-mentioned molecules can *inter alia* be used in the diagnosis, prophylaxis, treatment, or combination thereof, of one or more conditions resulting from WNV. They are suitable for treatment of yet untreated patients suffering from a condition resulting from WNV and patients who have been or are treated from a condition resulting from WNV. They protect against further infection by WNV for approximately 1 month and/or will retard the onset or progress of the symptoms associated with WNV. They may also be used in post-exposure prophylaxis, when there is a chance of infection but symptoms are absent. They may also be used as prophylaxis in the transplant of infected organs or in other patient populations at high risk of exposure and progression to disease due to *inter alia* age or immune status. It is known that WNV causes neuroinvasive disease in humans in <1 % of infections with a case-fatality ratio of ±9%. However, ±60% of the survivors have not regained their normal neurological functions after 12 months and many of the 13% of neuroinvasive cases which develop an acute flaccid paralysis (AFP) syndrome do not recover. Persistence of WNV has been described in different vertebrate hosts including in the brain of monkeys. Currently there is no specific therapy for WNV encephalitis.

The above-mentioned molecules or compositions may be employed in conjunction with other molecules useful in diagnosis, prophylaxis and/or treatment. They can be used *in vitro, ex vivo* or *in vivo.* For instance, the binding molecules, immunoconjugates or pharmaceutical compositions of the invention can be co-administered with a vaccine against WNV. Alternatively, the vaccine may also be administered before or after administration of the molecules of the invention. Instead of a vaccine, interferon-alpha and/or ribavirin can also be employed in conjunction with the binding molecules of the present invention.

The molecules are typically formulated in the compositions and pharmaceutical compositions of the invention in a therapeutically or diagnostically effective amount. Alternatively, they may be formulated and administered separately. For instance the other molecules such as interferon-alpha or ribavirin may be applied systemically, while the binding molecules of the invention may be applied intrathecally or intraventricularly.

Dosage regimens can be adjusted to provide the optimum desired response (*e.g*., a therapeutic response). A suitable dosage range may for instance be 0.1-100 mg/kg body weight, preferably 0.5-15 mg/kg body weight. Furthermore, for example, a single bolus may be administered, several divided doses may be administered over time or the dose may be proportionally reduced or increased as indicated by the exigencies of the therapeutic situation. The molecules and compositions according to the present invention are preferably sterile. Methods to render these molecules and compositions sterile are well known in the art. The other molecules useful in diagnosis, prophylaxis and/or treatment can be administered in a similar dosage regimen as proposed for the binding molecules of the invention. If the other molecules are administered separately, they may be administered to a patient prior to (*e.g.,* 2 minutes, 5 minutes, 10 minutes, 15 minutes, 30 minutes, 45 minutes, 60 minutes, 2 hours, 4 hours, 6 hours, 8 hours, 10 hours, 12 hours, 14 hours, 16 hours, 18 hours, 20 hours, 22 hours, 24 hours, 2 days, 3 days, 4 days, 5 days, 7 days, 2 weeks, 4 weeks or 6 weeks before), concomitantly with, or subsequent to (*e.g.,* 2 minutes, 5 minutes, 10 minutes, 15 minutes, 30 minutes, 45 minutes, 60 minutes, 2 hours, 4 hours, 6 hours, 8 hours, 10 hours, 12 hours, 14 hours, 16 hours, 18 hours, 20 hours, 22 hours, 24 hours, 2 days, 3 days, 4 days, 5 days, 7 days, 2 weeks, 4 weeks or 6 weeks after) the administration of one or more of the human binding molecules or pharmaceutical compositions of the invention. The exact dosing regimen is usually sorted out during clinical trials in human patients.

Human binding molecules and pharmaceutical compositions comprising the human binding molecules are particularly useful, and often preferred, when to be administered to human beings as *in vivo* therapeutic agents, since recipient immune response to the administered antibody will often be substantially less than that occasioned by administration of a monoclonal murine, chimeric or humanized binding molecule.

In another aspect, the invention concerns the use of the (human) binding molecules (functional fragments and variants thereof), immunoconjugates, nucleic acid molecules, compositions or pharmaceutical compositions according to the invention in the preparation of a medicament for the diagnosis, prophylaxis, treatment, or combination thereof, of a condition resulting from WNV.

The invention further pertains to a method of detecting WNV in a sample, wherein the method comprises the steps of a) contacting a sample with a diagnostically effective amount of a binding molecule (functional fragments and variants thereof) or an immunoconjugate according to the invention, and b) determining whether the binding molecule or immunoconjugate specifically binds to a molecule of the sample. The sample may be a biological sample including, but not limited to blood, serum, urine, tissue or other biological material from (potentially) infected subjects, or a non-biological sample such as water, drink, etc. The (potentially) infected subjects may be human subjects, but also animals that are suspected as carriers of WNV might be tested for the presence of WNV using the human binding molecules or immunoconjugates of the invention. The sample may first be manipulated to make it more suitable for the method of detection. Manipulation means *inter alia* treating the sample suspected to contain and/or containing WNV in such a way that the WNV will disintegrate into antigenic components such as proteins, (poly)peptides or other antigenic fragments. Preferably, the human binding molecules or immunoconjugates of the invention are contacted with the sample under conditions which allow the formation of an immunological complex between the human binding molecules and WNV or antigenic components thereof that may be present in the sample. The formation of an immunological complex, if any, indicating the presence of WNV in the sample, is then detected and measured by suitable means. Such methods include, *inter alia,* homogeneous and heterogeneous binding immunoassays, such as radio-immunoassays (RIA), ELISA, immunofluorescence, immunohistochemistry, FACS, BIACORE and Western blot analyses.

Preferred assay techniques, especially for large-scale clinical screening of patient sera and blood and blood-derived products are ELISA and Western blot techniques. ELISA tests are particularly preferred. For use as reagents in these assays, the binding molecules or immunoconjugates of the invention are conveniently bonded to the inside surface of microtiter wells. The binding molecules or immunoconjugates of the invention may be directly bonded to the microtiter well. However, maximum binding of the binding molecules or immunoconjugates of the invention to the wells might be accomplished by pre-treating the wells with polylysine prior to the addition of the binding molecules or immunoconjugates of the invention. Furthermore, the binding molecules or immunoconjugates of the invention may be covalently attached by known means to the wells. Generally, the binding molecules or immunoconjugates are used between 0.01 to 100 µg/ml for coating, although higher as well as lower amounts may also be used. Samples are then added to the wells coated with the binding molecules or immunoconjugates of the invention.

### EXAMPLES

To illustrate the invention, the following examples are provided. The examples are not intended to limit the scope of the invention in any way.

### Example 1

### Construction of a scFv phage display library using RNA extracted from peripheral blood of WNV convalescent donors.

From three convalescent WNV patients samples of blood were taken 1, 2 and 3 months after infection. Peripheral blood leukocytes were isolated by centrifugation and the blood serum was saved and frozen at -80°C. All donors at all time points had high titers of neutralizing antibodies to WNV as determined using a virus neutralization assay. Total RNA was prepared from the cells using organic phase separation and subsequent ethanol precipitation. The obtained RNA was dissolved in RNAse free water and the concentration was determined by OD 260nm measurement. Thereafter, the RNA was diluted to a concentration of 100 ng/µl. Next, 1 µg of RNA was converted into cDNA as follows: To 10 µl total RNA, 13 µl DEPC-treated ultrapure water and 1 µl random hexamers (500 ng/µl) were added and the obtained mixture was heated at 65°C for 5 minutes and quickly cooled on wet-ice. Then, 8 µl 5X First-Strand buffer, 2 µl dNTP (10 mM each), 2 µl DTT (0.1 M), 2 µl Rnase-inhibitor (40 U/µl) and 2 µl Superscript^{™}III MMLV reverse transcriptase (200 U/µl) were added to the mixture, incubated at room temperature for 5 minutes and incubated for 1 hour at 50°C. The reaction was terminated by heat inactivation, *i.e*. by incubating the mixture for 15 minutes at 75°C.

The obtained cDNA products were diluted to a final volume of 200 µl with DEPC-treated ultrapure water. The OD 260nm of a 50 times diluted solution (in 10 mM Tris buffer) of the dilution of the obtained cDNA products gave a value of 0.1.

For each donor 5 to 10 µl of the diluted cDNA products were used as template for PCR amplification of the immunoglobulin gamma heavy chain family and kappa or lambda light chain sequences using specific oligonucleotide primers (see Tables 1-6). PCR reaction mixtures contained, besides the diluted cDNA products, 25 pmol sense primer and 25 pmol anti-sense primer in a final volume of 50 µl of 20 mM Tris-HCl (pH 8.4), 50 mM KCI, 2.5 mM MgCl₂, 250 µM dNTPs and 1.25 units Taq polymerase. In a heated-lid thermal cycler having a temperature of 96°C, the mixtures obtained were quickly melted for 2 minutes, followed by 30 cycles of: 30 seconds at 96°C, 30 seconds at 60°C and 60 seconds at 72°C.

In a first round amplification, each of seventeen light chain variable region sense primers (eleven for the lambda light chain (see Table 1) and six for the kappa light chain (see Table 2) were combined with an anti-sense primer recognizing the C-kappa called HuCk 5'-ACACTCTCCCCTGTTGAAGCT CTT-3' (see SEQ ID NO:81) or C-lambda constant region HuCλ2 5'-TGAACATTCTGTAGGGGCCACTG-3' (see SEQ ID NO:82) and HuCλ7 5'-AGAGCATTCTGCAGGGGCCACTG-3' (see SEQ ID NO:83) (the HuCλ2 and HuCλ7 anti-sense primers were mixed to equimolarity before use), yielding 4 times 17 products of about 600 base pairs. These products were purified on a 2% agarose gel and isolated from the gel using Qiagen gel-extraction columns. 1/10 of each of the isolated products was used in an identical PCR reaction as described above using the same seventeen sense primers, whereby each lambda light chain sense primer was combined with one of the three Jlambda-region specific anti-sense primers and each kappa light chain sense primer was combined with one of the five Jkappa-region specific anti-sense primers. The primers used in the second amplification were extended with restriction sites (see Table 3) to enable directed cloning in the phage display vector PDV-C06 (see SEQ ID NO:84). This resulted in 4 times 63 products of approximately 350 base pairs that were pooled to a total of 10 fractions. This number of fractions was chosen to maintain the natural distribution of the different light chain families within the library and not to over or under represent certain families. The number of alleles within a family was used to determine the percentage of representation within a library (see Table 4). In the next step, 2.5 µg of pooled fraction and 100 µg PDV-C06 vector were digested with SamlI and NotI and purified from gel. Thereafter, a ligation was performed overnight at 16°C as follows. To 500 ng PDV-C06 vector 70 ng pooled fraction was added in a total volume of 50 µl ligation mix containing 50 mM Tris-HCl (pH 7.5), 10 mM MgCl₂, 10 mM DTT, 1 mM ATP, 25 µg/ml BSA and 2.5 µl T4 DNA Ligase (400 U/µl). This procedure was followed for each pooled fraction. The ligation mixes were purified by phenol/chloroform, followed by a chloroform extraction and ethanol precipitation, methods well known to the skilled artisan. The DNA obtained was dissolved in 50 µl ultrapure water and per ligation mix two times 2.5 µl aliquots were electroporated into 40 µl of TG1 competent *E*. *coli* bacteria according to the manufacturer's protocol (Stratagene). Transformants were grown overnight at 37°C in a total of 30 dishes (three dishes per pooled fraction; dimension of dish: 240 mm x 240 mm) containing 2TY agar supplemented with 50 µg/ml ampicillin and 4.5% glucose. A (sub)library of variable light chain regions was obtained by scraping the transformants from the agar plates. This (sub)library was directly used for plasmid DNA preparation using a Qiagen^{™} QIAFilter MAXI prep kit.

For each donor the heavy chain immunoglobulin sequences were amplified from the same cDNA preparations in a similar two round PCR procedure and identical reaction parameters as described above for the light chain regions with the proviso that the primers depicted in Tables 5 and 6 were used. The first amplification was performed using a set of nine sense directed primers (see Table 5; covering all families of heavy chain variable regions) each combined with an IgG specific constant region anti-sense primer called HuCIgG 5'-GTC CAC CTT GGT GTT GCT GGG CTT-3' (SEQ ID NO:85) yielding four times nine products of about 650 base pairs. These products were purified on a 2% agarose gel and isolated from the gel using Qiagen gel-extraction columns. 1/10 of each of the isolated products was used in an identical PCR reaction as described above using the same nine sense primers, whereby each heavy chain sense primer was combined with one of the four JH-region specific anti-sense primers. The primers used in the second round were extended with restriction sites (see Table 6) to enable directed cloning in the light chain (sub)library vector. This resulted per donor in 36 products of approximately 350 base pairs. These products were pooled for each donor per used (VH) sense primer into nine fractions. The products obtained were purified using Qiagen PCR purification columns. Next, the fractions were digested with SfiI and XhoI and ligated in the light chain (sub)library vector, which was cut with the same restriction enzymes, using the same ligation procedure and volumes as described above for the light chain (sub)library. Alternatively, the fractions were digested with NcoI and XhoI and ligated in the light chain vector, which was cut with the same restriction enzymes, using the same ligation procedure and volumes as described above for the light chain (sub)library. Ligation purification and subsequent transformation of the resulting definitive library was also performed as described above for the light chain (sub)library and at this point the ligation mixes of each donor were combined per VH pool. The transformants were grown in 27 dishes (three dishes per pooled fraction; dimension of dish: 240 mm x 240 mm) containing 2TY agar supplemented with 50 µg/ml ampicillin and 4.5% glucose. All bacteria were harvested in 2TY culture medium containing 50 µg/ml ampicillin and 4.5% glucose, mixed with glycerol to 15% (v/v) and frozen in 1.5 ml aliquots at -80°C. Rescue and selection of each library were performed as described below.

### Example 2

### Selection of phages carrying single chain Fv fragments specifically recognizing WNV envelope (E) protein

Antibody fragments were selected using antibody phage display libraries, general phage display technology and Abstract® technology, essentially as described in US Patent Number 6,265,150 and in WO 98/15833 (both of which are incorporated by reference herein). The antibody phage libraries used were two different semi-synthetic scFv phage libraries (JK1994 and WT2000) and the immune library prepared as described in Example 1. The first semi-synthetic scFv phage library (JK1994) has been described in de Kruif *et al.,* 1995b, the second one (WT2000) was build essentially as described in de Kruif *et al.,* 1995b. Briefly, the library has a semi-synthetic format whereby variation was incorporated in the heavy and light chain V genes using degenerated oligonucleotides that incorporate variation within CDR regions. Only VH3 heavy chain genes were used, in combination with kappa- and lambda light chain genes. CDR1 and CDR3 of the heavy chain and CDR3 of the light chain were recreated synthetically in a PCR-based approach similar as described in de Kruif *et al.,* 1995b. The thus created V region genes were cloned sequentially in scFv format in a phagemid vector and amplified to generate a phage library as described before. Furthermore, the methods and helper phages as described in WO 02/103012 (incorporated by reference herein) were used in the present invention. For identifying phage antibodies recognizing WNV E protein, phage selection experiments were performed using whole WNV (called strain USA99b or strain 385-99) inactivated by gamma irradiation (50 Gy for 1 hour), recombinantly expressed WNV E protein (strain 382-99), and/or WNV-like particles expressing WNV E protein (strain 382-99) on their surface.

The recombinantly expressed E protein was produced as follows. The nucleotide sequence coding for the preM/M protein and the full length E protein of WNV strain 382-99 (see SEQ ID NO:86 for the amino acid sequence of a fusion protein comprising both WNV polypeptides) was synthesised. Amino acids 1-93 of SEQ ID NO:86 constitute the WNV preM protein, amino acids 94-168 of SEQ ID NO:86 constitute the WNV M protein, amino acids 169-669 of SEQ ID NO:86 constitute the WNV E protein (the soluble WNV E protein (ectodomain) constitutes amino acids 169-574 of SEQ ID NO:86, while the WNV E protein stem and transmembrane region constitutes amino acids 575-669 of SEQ ID NO:86) The synthesised nucleotide sequence was cloned into the plasmid pAdapt and the plasmid obtained was called pAdapt.WNV.prM-E (FL).

To produce a soluble secreted form of the E protein a construct was made lacking the transmembrane spanning regions present in the final 95 amino acids at the carboxyl terminal of the full length E protein (truncated form). For that purpose the full length construct pAdapt.WNV.prM-E (FL) was PCR amplified with the primers CMV-Spe (SEQ ID NO:87) and WNV-E-95 REV (SEQ ID NO:88) and the fragment obtained was cloned into the plasmid pAdapt.myc.his to create the plasmid called pAdapt.WNV -95. Next, the region coding for the preM protein, the truncated E protein, the Myc tag and His tag were PCR amplified with the primers clefsmaquwnv (SEQ ID NO:89) and reverse WNVmychis (SEQ ID NO:90) and cloned into the vector pSyn-C03 containing the HAVT20 leader peptide using the restriction sites EcoRI and SpeI. The expression construct obtained, pSyn-C03-WNV-E - 95, was transfected into 90% confluent HEK293T cells using lipofectamine according to the manufacturers instructions. The cells were cultured for 5 days in serum-free ultra CHO medium, then the medium was harvested and purified by passage over HisTrap chelating columns (Amersham Bioscience) pre-charged with nickel ions. The truncated E protein was eluted with 5 ml of 250 mM imidazole and further purified by passage over a G-75 gel filtration column equilibrated with phosphate buffered saline (PBS). Fractions obtained were analysed by SDS-PAGE analysis and Western blotting using the WNV-E protein specific murine antibody 7H2 (Biorelience, see Beasley and Barrett 2002). Three 5 ml fractions containing a single band of ∼45 kDa that was immunoreactive with antibody 7H2 were aliquoted and stored at -20°C until further use. The protein concentration was determined by OD 280nm.

WNV-like particles were produced as follows. The construct pSyn-C03-WNV-E -95 described above and pcDNA3.1 (Invitrogen) were digested with the restriction endonucleases MunI and XbaI and the construct pAdapt.WNV.prM-E (FL) described above was digested with the restriction endonucleases ClaI and XbaI. The resulting fragments were combined in a three-point ligation to produce the construct pSyn-H-preM/E FL. This construct contained the full length E protein and expressed the two structural WNV proteins, protein M and E, required for assembly of an enveloped virion. The construct was transfected into 70% confluent HEK293T cells using lipofectamine according to the manufacturers instructions. The cells were cultured for 3 days in serum-free ultra CHO medium, then the medium was harvested, layered on to a 30% glycerol solution at a 2:1 ratio and pelleted by centrifugation for 2 hours at 120,000*g at 4°C. The WNV-like particles were resuspended in PBS, aliqouted and stored at -80°C. Aliquots were analysed by SDS-PAGE analysis and Western blotting using the WNV-E protein specific murine antibody 7H2 (Biorelience).

Before inactivation, whole WNV was purified by pelleting through a 30% glycerol solution as described above for WNV-like particles. The purified WNV was resuspended in 10 mM Tris/HCl pH 7.4 containing 10 mM EDTA and 200 mM NaCl, the obtained preparation was kept on dry ice during inactivation, tested for infectivity and stored at -80°C in small aliquots. Aliquots were analysed by SDS-PAGE analysis and Western blotting using the WNV-E protein specific murine antibody 7H2 (Biorelience).

Whole inactivated WNV, WNV-like particles or recombinantly expressed soluble E protein were diluted in PBS. 2-3 ml of the preparation was added to MaxiSorp^{™} Nunc-Immuno Tubes (Nunc) and incubated overnight at 4°C on a rotating wheel. An aliquot of a phage library (500 µl, approximately 10¹³ cfu, amplified using CT helper phage (see WO 02/103012)) was blocked in blocking buffer (2% Protifar in PBS) for 1-2 hours at room temperature. The blocked phage library was added to the immunotubes, incubated for 2 hours at room temperature, and washed with wash buffer (0.1% v/v Tween-20 in PBS) to remove unbound phages. Bound phages were eluted from the antigen by incubation with 1 ml of 50 mM Glycine-HCl pH 2.2 for 10 minutes at room temperature. Subsequently, the eluted phages were mixed with 0.5 ml of 1 M Tris-HCl pH 7.5 to neutralize the pH. This mixture was used to infect 5 ml of an XL1-Blue *E.coli* culture that had been grown at 37°C to an OD 600nm of approximately 0.3. The phages were allowed to infect the XL1-Blue bacteria for 30 minutes at 37°C. Then, the mixture was centrifuged for 10 minutes at 3200*g at room temperature and the bacterial pellet was resuspended in 0.5 ml 2-trypton yeast extract (2TY) medium. The obtained bacterial suspension was divided over two 2TY agar plates supplemented with tetracyclin, ampicillin and glucose. After overnight incubation of the plates at 37°C, the colonies were scraped from the plates and used to prepare an enriched phage library, essentially as described by De Kruif *et al.* (1995a) and WO 02/103012. Briefly, scraped bacteria were used to inoculate 2TY medium containing ampicillin, tetracycline and glucose and grown at a temperature of 37°C to an OD 600nm of ∼0.3. CT helper phages were added and allowed to infect the bacteria after which the medium was changed to 2TY containing ampicillin, tetracycline and kanamycin. Incubation was continued overnight at 30°C. The next day, the bacteria were removed from the 2TY medium by centrifugation after which the phages in the medium were precipitated using polyethylene glycol (PEG) 6000/NaCl. Finally, the phages were dissolved in 2 ml of PBS with 1% bovine serum albumin (BSA), filter-sterilized and used for the next round of selection.

Typically, two rounds of selections were performed before isolation of individual phage antibodies. After the second round of selection, individual *E.coli* colonies were used to prepare monoclonal phage antibodies. Essentially, individual colonies were grown to log-phase in 96 well plate format and infected with CT helper phages after which phage antibody production was allowed to proceed overnight. The produced phage antibodies were PEG/NaCl-precipitated and filter-sterilized and tested in ELISA for binding to WNV-like particles purified as described *supra.*

### Example 3

### Validation of the WNV specific single-chain phage antibodies

Selected single-chain phage antibodies that were obtained in the screens described above were validated in ELISA for specificity, *i.e*. binding to WNV E protein, whole inactivated WNV and WNV-like particles, all purified as described *supra.* Additionally, the single-chain phage antibodies were also tested for binding to 5% FBS. For this purpose, whole inactivated WNV, the WNV E protein, WNV-like particles or 5% FBS preparation was coated to Maxisorp^{™} ELISA plates. In addition, whole inactivated rabies virus was coated onto the plates as a control. After coating, the plates were blocked in PBS containing 1% Protifar for 1 hour at room temperature. The selected single-chain phage antibodies were incubated for 15 minutes in an equal volume of PBS containing 1% Protifar to obtain blocked phage antibodies. The plates were emptied, and the blocked single-chain phage antibodies were added to the wells. Incubation was allowed to proceed for one hour, the plates were washed in PBS containing 0.1% v/v Tween-20 and bound phage antibodies were detected (using OD 492nm measurement) using an anti-M13 antibody conjugated to peroxidase. As a control, the procedure was performed simultaneously without single-chain phage antibody, with a negative control single-chain phage antibody directed against rabies virus glycoprotein (antibody called SC02-447), with a negative control single-chain phage antibody directed against SARS-CoV (antibody called SC03-014) and a positive control single-chain phage antibody directed against rabies virus. As shown in Table 7, the selected phage antibodies called SC04-271, SC04-274, SC04-283, SC04-289, SC04-299, SC04-311, SC04-325, SC04-353, SC04-361 and SC04-374 displayed significant binding to immobilized whole inactivated WNV (see Table 7) and WNV-like particles (data not shown). In addition, for SC04-325, SC04-353, SC04-361 and SC04-374 no binding to rabies virus was observed. When the ELISA was performed with recombinantly expressed purified soluble WNV E protein prepared as described *supra* all single-chain phage antibodies bound with the exception of SC04-283, SC04-299, SC04-353 and SC04-361, suggesting they either bind to a region not present in the truncated soluble E protein, bind to an unrelated protein on the virion surface, do not bind to the monomeric form of the E protein or do not bind because of the phage antibody format.

### Example 4

### Characterization of the WNV specific scFvs

From the selected specific single-chain phage antibody (scFv) clones plasmid DNA was obtained and nucleotide sequences were determined according to standard techniques. The nucleotide sequences of the scFvs (including restriction sites for cloning) called SC04-271, SC04-274, SC04-283, SC04-289, SC04-299, SC04-311, SC04-325, SC04-353, SC04-361 and SC04-374 are shown in SEQ ID NO:61, SEQ ID NO:63, SEQ ID NO:65, SEQ ID NO:67, SEQ ID NO:69, SEQ ID NO:71, SEQ ID NO:73, SEQ ID NO:75, SEQ ID NO:77, and SEQ ID NO:79, respectively. The amino acid sequences of the scFvs called SC04-271, SC04-274, SC04-283, SC04-289, SC04-299, SC04-311, SC04-325, SC04-353, SC04-361 and SC04-374 are shown in SEQ ID NO:62, SEQ ID NO:64, SEQ ID NO:66, SEQ ID NO:68, SEQ ID NO:70, SEQ ID NO:72, SEQ ID NO:74, SEQ ID NO:76, SEQ ID NO:78, and SEQ ID NO:80, respectively.

The VH and VL gene identity (see Tomlinson IM, Williams SC, Ignatovitch O, Corbett SJ, Winter G. V-BASE Sequence Directory. Cambridge United Kingdom: MRC Centre for Protein Engineering (1997)) and heavy chain CDR3 sequences of the scFvs specifically binding WNV are depicted in Table 8. Table 9 shows the other CDR regions of the WNV specific scFvs.

### Example 5

### Construction offully human immunoglobulin molecules (human monoclonal anti-WNV antibodies) from the selected anti-WNV single chain Fvs

Heavy and light chain variable regions of the scFvs called SC04-271, SC04-274, SC04-283, SC04-299, SC04-311, SC04-325, and SC04-374 were PCR-amplified using oligonucleotides to append restriction sites and/or sequences for expression in the IgG expression vectors pSyn-C18-HCγ1 (see SEQ ID No:91) pSyn-C05-Cκ (see SEQ ID No:92) and pSyn-C04-Cλ (see SEQ ID No:93). The heavy chain variable regions of the scFvs called SC04-271, SC04-274, SC04-283, SC04-299, SC04-311, SC04-325, and SC04-374 were cloned into the vector pSyn-C18-HCγ1; the light chain variable regions of the scFv called SC04-274, SC04-283 and SC04-325 were cloned into the vector pSyn-C05-Cκ; the light chain variable regions of the scFvs called SC04-271, SC04-299, SC04-311, and SC04-374 were cloned into the vector pSyn-C04-Cλ. The VL kappa genes were first amplified using the following oligonucleotide sets; SC04-274, 5K-G (SEQ ID NO:94) and sy3K-F (SEQ ID NO:95); SC04-283, 5K-B (SEQ ID NO:96) and sy3K-F (SEQ ID NO:95); SC04-325, 5K-J (SEQ ID NO:97) and sy3K-F (SEQ ID NO:95) and the PCR products cloned into vector psyn-C05-Cκ. The VL lambda genes were first amplified using the following oligonucleotides sets; SC04-271, 5L-B (SEQ ID NO:98) and sy3L-E (SEQ ID NO:99); SC04-299, 5L-G (SEQ ID NO:100) and sy3L-Cmod (SEQ ID NO:101); SC04-311, 5L-C (SEQ ID NO: 102) and sy3L-Cmod (SEQ ID NO:101); SC04-374, 5L-C (SEQ ID NO: 102) and sy3L-Cmod (SEQ ID NO:101) and the PCR products cloned into vector pSyn-C04-Cλ. Nucleotide sequences for all constructs were verified according to standard techniques known to the skilled artisan. VH genes were first amplified using the following oligonucleotide sets: SC04-271, 5H-H (SEQ ID NO: 103) and sy3H-A (SEQ ID NO: 104); SC04-274, 5H-H (SEQ ID NO:103) and sy3H-C (SEQ ID NO:105); SC04-283, 5H-H (SEQ ID NO:103) and sy3H-A (SEQ ID NO:104); SC04-299, 5H-C (SEQ ID NO:106) and sy3H-C (SEQ ID NO:105); SC04-311, 5H-C (SEQ ID NO:106) and sy3H-A (SEQ ID NO:104); SC04-325, 5H-A (SEQ ID NO:107) and sy3H-A (SEQ ID NO:104); SC04-374; First 5H-N (SEQ ID NO:108) and sy3H-D (SEQ ID NO: 109). Thereafter, the PCR products were cloned into vector pSyn-C18-HCγ1 and nucleotide sequences were verified according to standard techniques known to the skilled person in the art.

Heavy and light chain variable regions of the scFvs called SC04-289, SC04-353, and SC04-361 were cloned directly by restriction digest for expression in the IgG expression vectors pIg-C911-HCgammal (see SEQ ID NO:110) and pIg-C909-Ckappa (see SEQ ID NO:111). The heavy chain variable regions of the scFvs called SC04-289, SC04-353, and SC04-361 were cloned into the vector pIg-C911-HCgammal by restriction digest using the enzymes SfiI and XhoI and the light chain variable region of the scFv called SC04-289, SC04-353, and SC04-361 were cloned into the vector pIg-C909-Ckappa by restriction digest using the enzymes SalI and NotI. Thereafter the nucleotide sequences were verified according to standard techniques known to the person skilled in the art.

The resulting expression constructs pgG104-271C18, pgG104-274C18, pgG104-283C18, pgG104-289C911, pgG104-299C18, pgG104-311C18, pgG104-32SC18, pgG104-353C911, pgG104-361C911, and pgG104-374C18 encoding the anti-WNV human IgG1 heavy chains and pgG104-271C04, pgG104-274C05, pgG104.283C05, pgG 1 04-289C909, pgG104-299C04, pgG104-311C04, pgG104-32SC05, pgG104-353C909, pgG104-361C909, and pgG104-374C04 encoding the anti-WNV human IgG1 light chains were transiently expressed in combination in 293T cells and supernatants containing human IgG1 antibodies were obtained. The nucleotide sequences of the heavy chains of the antibodies called CR4271, CR4274, CR4283, CR4289, CR4299, CR4311, CR4325, CDR4353, CR4361, and CR4374 are shown in SEQ ID NOs 112, 114, 116, 118, 120, 122, 124, 126, 128, and 130, respectively. The amino acid sequences of the heavy chains of the antibodies called CR4271, CR4274, CR4283, CR4289, CR4299, CR4311, CR4325, CR4353, CR4361, and CR4374 are shown in SEQ ID NOs 113, 115, 117, 119, 121, 123, 125, 127, 129, and 131, respectively.

The nucleotide sequences of the light chain of antibodies CR4271, CR4274, CR4283, CR4289, CR4299, CR4311, CR4325, CR4353, CR4361, and CR4374 are shown in SEQ ID NOs 132, 134, 136, 138, 140, 142, 144, 146, 148, and 150, respectively. The amino acid sequences of the light chain of antibodies CR4271, CR4274, CR4283, CR4289, CR4299, CR4311, CR4325, CR4353, CR4361, and CR4374 are shown in SEQ ID NOs 133, 135, 137, 139, 141, 143, 145, 147, 149, and 151, respectively. A person skilled in the art can determine the variable regions of the heavy and light chains of the above antibodies by following Kabat *et al.* (1991) as described in Sequences of Proteins of Immunological Interest. The human anti-WNV IgG1 antibodies were validated for their ability to bind to irradiated WNV in ELISA essentially as described for scFvs (see Table 10). Three dilutions of the respective antibodies in blocking buffer were tested. The positive control was the murine anti-WNV antibody 7H2 and the negative control was an anti-rabies virus antibody.

Alternatively, batches of greater than 1 mg of each antibody were produced and purified using standard procedures. The antibodies were then titrated on a fixed concentration of irradiated West Nile virus and tested in ELISA as described above. The results are shown in Table 11. As a negative control an anti-rabies virus antibody was used. All antibodies showed binding to the virus in a dose dependent manner.

Furthermore, CR4374 was converted into a fully human IgM format by removing the gamma Fc region from construct pgG104-374C18 by restriction digestion with the endonucleases Nhel and XbaI. The vector pCR-IgM (SEQ ID NO:216) containing a mu Fc region was digested with the same restriction enzymes and the obtained mu Fc region was ligated into vector pgG104-374C18 and fused in frame with the variable heavy chain gene derived from SC04-374 to make vector pgM104-374C899. This construct was transiently expressed in combination together with the light chain construct pgG104-374C04 (see above) in 293T cells and supernatants containing human IgM antibodies were obtained. The nucleotide sequence of vector pgM104-374C899 is shown in SEQ ID NO:217. The amino acid sequence of the heavy chain the antibody called CRM4374 is shown in SEQ ID NO:218. The IgM antibody was purified from the supernatant by adding ammonium sulphate to a final concentration of 2.4 M and incubating the mixture overnight on ice, while stirring. The precipitated IgM was recovered by centrifugation at 10,395xg for 30 minutes. The pellet was resuspended in PBS and further purified by gel filtration. A HiLoad 26/60 Superdex 200 prep grade column (GE heathcare) equilibrated with PBS was loaded with the resuspended IgM and fractions were collected from the column, while being flushed under a constant flow rate with PBS. The first major elution peak, which contained the purified IgM, was collected. Binding activity of the antibody was confirmed by titration on West Nile virus-like particles (VLPs) (see Figure 5).

### Example 6

### In vitro neutralization of WNV by WNYspecific scFvs and IgGs (virus neutralization assay)

In order to determine whether the selected scFvs are capable of blocking WNV infection, *in vitro* virus neutralization assays (VNA) are performed. The VNA are performed on Vero cells (ATCC CCL 81). The WNV strain 385-99 which is used in the assay is diluted to a titer of 4x10³ TCID₅₀/ml (50% tissue culture infective dose per ml), with the titer calculated according to the method of Spearman and Kaerber. The scFv preparations are serially 2-fold-diluted in PBS starting from 1:2 (1:2 - 1:1024). 25 µl of the respective scFv dilution is mixed with 25 µl of virus suspension (100 TCID₅₀/25 µl) and incubated for one hour at 37°C. The suspension is then pipetted twice in triplicate into 96-well plates. Next, 50 µl of a freshly trypsinized and homogenous suspension of Vero cells (1:3 split of the confluent cell monolayer of a T75-flask) resuspended in DMEM with 10% v/v fetal calf serum and antibiotics is added. The inoculated cells are cultured for 3-4 days at 37°C and observed daily for the development of cytopathic effect (CPE). CPE is compared to the positive control (WNV inoculated cells) and negative controls (mock-inoculated cells or cells incubated with scFV only). The complete absence of CPE in an individual cell culture is defined as protection (= 100% titer reduction). The serum dilution giving protection in 50% percent of wells (i.e. three out of six wells) is defined as the 50% neutralizing antibody titer. The murine neutralising antibody 7H2 (Biorelience) is used as a positive control in the assay. A 50% neutralization titer of ≤1:4 (meaning the antibody is diluted 4 times or more) is regarded as specific evidence of neutralizing activity of the scFv against WNV.

Alternatively, *in vitro* virus neutralization assays (VNA) were performed in order to determine whether the anti-WNV IgGs were capable of blocking WNV infection. The VNA were performed essentially as described for scFvs, with the proviso that the serum dilution giving protection in 66% percent of wells (*i.e*. two out of three wells) was defined as the 66% neutralizing antibody titer and a 66% neutralization titer of ≤ 1:2 was regarded as specific evidence of neutralizing activity of the IgG against WNV.

Supernatants containing the human anti-WNV antibodies called CR4271, CR4274, CR4283, CR4289, CR4299, CR4311, CR4325, CR4353, CR4361, and CR374 were expressed as described in Example 5 and subjected to the above-described VNA. All antibodies had a neutralising titer ≤ 1:2. The potency of the antibodies (in µg/ml) is given in Table 12. The neutralizing antibodies recognized WNV E protein by Western Blot analysis or immunoprecipitation of an inactivated WNV preparation (data not shown).

### Example 7

### WNV E protein competition ELISA with scFvs

To identify antibodies that bind to non-overlapping, non-competing epitopes, a WNV E protein competition ELISA is performed. Nunc-Immuno^{™} Maxisorp F96 plates (Nunc) are coated overnight at 4°C with a 1:100 dilution of purified WNV E protein (100 µg/ml) in PBS (50 µl). Uncoated protein is washed away before the wells are blocked with 100 µl PBS containing 1% Protifar for 1 hour at room temperature. Subsequently, the blocking solution is discarded and 50 µl of the non-purified anti-WNV scFvs in PBS containing 1% Protifar (2x diluted) is added. Wells are washed five times with 100 µl of PBS containing 0.05% Tween-20. Then, 50 µl biotinylated anti-WNV competitor murine monoclonal IgGs, 7H2 or 6B6C-1, is added to each well, incubated for 5 minutes at room temperature, and the wells washed fives times with 100 µl of PBS containing 0.05% Tween-20. To detect the binding of 7H2 or 6B6C-1, 50 µl of a 1:2000 dilution of streptavidin-HRP antibody (Becton Dickinson) is added to the wells and incubated for 1 hour at room temperature. Wells are washed again as above and the ELISA is further developed by addition of 100 µl of OPD reagent (Sigma). The reaction is stopped by adding 50 µl 1 M H₂SO₄ before measuring the OD at 492 nm.

Alternatively, to investigate if antibodies are capable of binding to non-overlapping, non-competing epitopes, the following competition ELISA was performed. Nunc-Immuno^{™} Maxisorp F96 plates (Nunc) were coated overnight at 4°C with a 1:1000 dilution with either of the murine anti-WNV monoclonal IgGs 7H2 (see Beasley and Barrett 2002) or 6B6C-1 (see Roehrig *et al.* 1983, Blitvich *et al.* 2003 and Roehrig *et al.* 2001). Uncoated antibody was washed away before the wells were blocked with 100 µl PBS containing 1% Protifar for 1 hour at room temperature. Subsequently, the blocking solution was discarded and 100 µl of purified recombinant WNV-E protein in PBS containing 1% Protifar (2x diluted) was added and incubated for 1 hour at room temperature. Wells were washed three times with 100 µl of PBS containing 0.05% Tween-20. Then, 100 µl of anti-WNV scFvs were added to the wells and incubated for 1 hour at room temperature. The wells were then washed five times with 100 µl of PBS containing 0.05% Tween-20. To detect the binding of scFV, 100 µl of a 1:4000 dilution of anti-VSV-HRP antibody (Boehringer Mannheim) was added to the wells and incubated for 1 hour at room temperature. Wells were washed again as above and the ELISA was further developed by addition of 100 µl of OPD reagent (Sigma). The reaction was stopped by adding 50 µl 1 M H₂SO₄ before measuring the OD at 492 nm. The results of the assay are shown in Figure 1 for the scFv SC04-283, SC04-289, SC04-299, SC04-311, SC04-325, and SC04-374. When recombinant WNV-E protein was captured with the antibody 7H2, whose binding epitope has been mapped to domain III, the scFv SC04-299 and SC04-374 were blocked from binding, whereas SC04-289, SC04-311, and SC04-325 were able to bind. In contrast, when the antibody 6B6C-1, whose binding epitope has been mapped to domain II, was used for capture, SC04-299 and SC04-374 were able to bind recombinant WNV-E protein, but SC04-289, SC04-311, and SC04-325 were blocked from binding. These data indicate that both SC04-299 and SC04-374 bind to an epitope in domain III of the WNV-E protein and SC04-289, SC04-311, and SC04-325 bind to an epitope in domain II of the WNV-E protein. SC04-283 was not blocked by either antibody, suggesting that it might recognize an epitope away from the binding regions of 7H2 and 6B6C-1. Similar results as above were observed for the monoclonal antibodies called 4G2 and 3A3 which recognize an epitope on domain II and III, respectively. It has been suggested that domain III is the putative receptor binding site responsible for cellular attachment, while it has been suggested that domain II of the WNV-E protein contains the fusion peptide necessary for viral entry into the cytoplasm of the infected cell. The scFvs SC04-271 and SC04-274 did not bind to recombinant WNV-E protein either directly coated or coated by means of any of the two murine antibodies (data not shown). The negative control SC04-098 also did not bind to recombinant WNV-E protein coated by means of any of the two murine antibodies.

### Example 8

### In vivo protection by anti-WNV monoclonal antibodies from lethal WNV infection in a murine challenge model

A murine challenge model was adapted from the literature (see Ben-Nathan *et al.* 2003; Beasley *et al.* 2002; Wang *et al.* 2001). In Ben-Nathan *et al.* (2003) 4-week old BALB/c mice were used and the animals were inoculated intraperitoneally (i.p.) with 20-times the viral dose resulting in 50% survival (LD₅₀) ofWNV strain ISR52 (LD₅₀ was equivalent to 5 pfu). Under this dosing mice succumbed to infection 6-7 days after inoculation and reached 100% mortality after 11 days. In another study, the WNV strain USA99 (used in the experiments described here) was shown to have an LD₅₀ of 0.5 pfu. This is 10-fold lower than the LD₅₀ of ISR52, which may indicate a higher degree of neuroinvasiveness for this viral strain or differences associated with the mouse strain used (see Beasley *et al.* 2002).

To determine the i.p., LD₅₀ of USA99 in 4-week BALB/c mice, animals (5 per group) were injected with USA99 at TCID₅₀ (tissue culture infectious dose) of 100, 30, 10, 3, 1, 0.3, 0.1, 0.03 the 50% in two separate experiments. The LD₅₀ calculated from the first experiment was 5.75 TCID₅₀ and from the second experiment 13.25 TCID₅₀. For the calculation of the viral dose in further experiments the average of the two experiments, i.e. 9.5 TCID₅₀, was calculated by probit regression analysis.

The protective capacity of the *in vitro* neutralizing antibodies CR4271, CR4274, CR4283, CR4289, CR4299, CR4311, CR4325, CR4353, CR4361, and CR4374 was tested in the *in vivo* model. Purified antibodies were injected i.p. into 4-week BALB/c mice (5 animals per group) at a concentration of 15 mg/kg. After 24 hours the WNV strain USA99 was injected i.p. at a dose of 20-times the LD₅₀ calculated. The animals were observed for signs of disease over 21 days and sacrificed when symptoms of encephalitis were evident. In the model unprotected animals generally succumbed to infection between day 8 and day 10.

Table 13 shows that one antibodies, CR4374, is 100% protective *in vivo* and an additional antibody CR4353 is 75% protective at the dose of 15 mg/kg. The positive control antibody 7H2 (an anti-WNV murine monoclonal) was fully protective and the negative control antibody (binding an irrelevant antigen) showed no protection in the experiment.

To establish a dose protection relationship, the protective antibodies CR4353 and CR4374 were titrated in the mouse model using doses of 10, 3, 1, 0.3, 0.1, 0.03, 0.01, 0.003 and 0.001 mg/kg. A negative control antibody binding an irrelevant antigen was included as a control at a dose 10 mg/kg.

As shown in Figure 2, the antibody CR4374 is 100% protective at a dose of 0.3 mg/kg. The doses 10, 3 and 1 mg/kg were also 100% protective (data not shown). Figure 2 also shows that there is a direct correlation between dose and protective capacity. The 50% protective dose calculated by probit regression analysis is 0.013 mg/kg.

Figure 3 shows that the antibody CR4353 is 100% protective at a dose of 10 mg/kg. Moreover, Figure 3 shows that there is a direct correlation between dose and protective capacity. The 50% protective dose calculated by probit regression analysis is 0.357 mg/kg.

The titration data of the antibodies were compared by probit regression analysis. Values for the Pearson Goodness-of-Fit test (Chi Square = 10.38, DF = 30, p = 1.00) demonstrated that the model was valid and the results of the Parallelism Test (Chi Square = 3.47, DF = 3, p = 0.324) meant that the curves could be reliably compared. The values for the 50% protective dose and 95% protective dose are summarized in Table 14.

### Example 9

### Affinity analysis using Biacore

Affinity studies were performed using surface plasmon resonance analysis with a BIAcore3000TM analytical system at 25°C, using HBS-EP (Biacore AB, Sweden) as running buffer at a flow rate of 30 µl/min. IgG CR4283 was immobilized on a research grade CM5 4-flow channel (Fc) sensor chip (Biacore AB, Sweden) using amine coupling. A constant amount of inactivated and purified West Nile Virus was then captured on the chip via the immobilized CR4283, followed by injection of a varying amount of the antibody of interest to analyse the binding interaction between this antibody and the captured virus. Regeneration using 15, 20, 30 or 40 mM NaOH was performed at the end of each measurement to remove bound antibody as well as captured virus, while leaving the immobilized CR4283 on the chip.

For affinity ranking studies, 60 µl of purified West Nile virus was injected, followed by injection of 40 µl 1000 nM antibody. Then, running buffer was applied for 770 seconds, followed by regeneration of the CM5 chip with 5 µl 30 or 40 mM NaOH. The resonance signals expressed as resonance units (RU) were recorded as a function of time for each antibody. The response after the association phase was determined, as well as the response after 370 seconds of dissociation. The dissociation response expressed as percentage of the association response was then plotted against the association response (see Figure 4). Antibodies CR4368 and CR4375 have the same heavy chain CDR3 as CR4374, but differ in other parts of the sequences. Mouse monoclonal antibodies 7H2, 3A3, 5H10 (all from BioReliance) and 6B6C-1 (Chemicon) were included for comparison. Antibodies with a relatively high affinity are located in the upper right corner of the plot, indicating good association combined with slow dissociation.

Affinity constants were determined for CR4283, CR4353, CR4374 and mouse antibody 7H2. After capture of 22, 23 or 60 µl West Nile virus, 40 µl of antibody was injected, followed by a dissociation phase of 770 seconds, and regeneration using 5 µl 15, 20 or 30 mM NaOH. Twelve concentrations in 2-fold dilutions from 1000 nM down to 0.39 nM were measured for each antibody. The resulting data were fitted using a bivalent analyte model and the dissociation constant KD was calculated. Average KD values from duplicate experiments were 0.8 ± 0.6 nM for CR4283, 6.5 ± 0.4 nM for CR4353, 56 ± 4 nM for CR4374 and 0.32 ± 0.06 nM for 7H2.

### Example 10

### In vitro neutralization potency by plaque reduction neutralization test(PRNT)

To further investigate the neutralizing activity of the anti-WNV antibodies of the invention a PRNT was developed. Briefly, Vero-E6 cells were trypsinized and counted. 2.5x10⁵ cells were added to each well of a 12-well plate and incubated overnight at 37°C in a humidified CO₂ incubator. Serial dilutions (10-fold) of a titrated stock of West Nile virus USA99b were made in complete medium. Equal volume (250 µl) mixtures of virus (100 pfu) and serial dilutions of purified IgG1 antibodies were incubated in duplicate at 37°C for 1 hour. Dilutions of both virus and antibodies were done in DMEM medium. The mixture was then added (400 µl) to the 12-well plates containing Vero cell monolayers after careful aspiration of the overnight medium. After the plates had been incubated at 37°C for 1 hour, an 1.5 ml overlay of CMC carboxymethyl-cellulose medium with 10% FBS (v/v) (CMC:complete medium) was added per well and the plates placed in a humidified CO₂ incubator for 3 days at 37°C. One day before staining the CMC:complete medium was removed from the wells and replaced with a mixture of CMC:PBS (1:1; v/v) containing 8.25 mg/ml of neutral red (2 ml neutral red at 3.3 g/l in 80 ml CMC:PBS). Plates were incubated 1 day further at 37°C in a humidified CO₂ incubator, after which the number of visible plaques was quantified.

To analyze the antibody potency data from the PRNT a binary regression model known as probit analysis was used. Probit analysis is valid, if it can be assumed that the probability of neutralizing WNV *in vitro* follows a normal distribution with regard to the amount of antibodies used. The assumption of normality most likely holds on a logarithmic scale, hence the neutralization of virus was modeled as a function of the logarithm of the amount of antibodies administered. Antibodies were compared directly in the regression model, with significance level alpha set at 0.05. Antibody concentrations yielding 50% and 90% neutralization were estimated from the model, together with 95% confidence intervals. A summary of the final analysis of the panel is given in Table 15. Taking the PRNT50 and PRNT90 values into account, CR4374 is the most potent neutralizing antibody. CR4353 has a lower PRNT50 value, but its PRNT90 value is high due to the fact that it retains neutralizing activity at very low concentrations, but is not able to completely neutralize the virus even at very high concentrations. The above may be related to differences in the mechanisms of action of both antibodies. As shown above however, CR4374 is more protective than CR4353 in the murine challenge model. For CR4271, CR4274 and CR4283 no value could be given for PRNT50, because of low potency and for CR4368 and CR4361 no value could be given for PRNT90, because of the high degree of uncertainty again due to low potency. By converting CR4374 into IgM format (CRM4374) the *in vitro* potency was increased dramatically (see Table 15 and 18).

### Example 11

### Measurement of the breadth of neutralizing activity against different West Nile virus and flavivirus strains by plaque reduction neutralization test (PRNT)

Using the assay described above, the anti-WNV IgG1 antibody CR4374, that was protective in the murine challenge model, was tested for its neutralizing potency against different strains of West Nile virus (see Table 16 for the description of the WNV strains tested) and other flaviviruses including yellow fever virus, Japanese encephalitis virus, St. Louis encephalitis virus and dengue virus 2 and 4. CR4374 had no significant neutralizing activity against any of the other flaviviruses (data not shown). CR4374 neutralized however all of the lineage I and lineage II WNV strains tested with equal potency with the exception of TUN97 which was even neutralized significantly better than USA99b, the original strain used for selection (see Table 17).

### Example 12

### Affinity maturation of CR4374 and Affinity and neutralizing potency analysis using Biacore and plaque reduction neutralization test, respectively

Affinity maturation of CR4374 was performed as follows. The variable heavy chain region of SC04-374 was cloned into the (sub)library of variable light chain regions according to the same method as described in Example 1 for cloning of the heavy chain repertoire into the (sub)library. Phage display selections using the constructed library were performed essentially as described in Example 2, followed by screening and analysis of selected clones essentially as described in Example 3 and 4. The nucleotide and amino acid sequences of the selected scFvs SC05-074, SC05-080, SC05-085 and SC05-088 as well as the amino acid sequences of their CDR regions are shown in Tables 18 and 19, respectively. Fully human immunoglobulin molecules of isolated clones were generated essentially as described in Example 5, using vector pIg-C910-Clambda (SEQ ID NO:219) instead of plg-C909-Ckappa for cloning of the light chains. The nucleotide sequences of the light chains of the affinity matured immunoglobulins called CR5074, CR5080, CR5085 and CR5088 are shown in SEQ ID NO:220, SEQ ID NO:222, SEQ ID NO:224, and SEQ ID NO:226. The amino acid sequences of the light chains of the affinity matured immunoglobulins called CR5074, CR5080, CR5085 and CR5088 are shown in SEQ ID NO:221, SEQ ID NO:223, SEQ ID NO:225, and SEQ ID NO:227. A person skilled in the art can determine the variable region of the light chains of the above antibodies by following Kabat *et al.* (1991) as described in Sequences of Proteins of Immunological Interest. Affinity ranking studies with these affinity matured immunoglobulins were performed using surface plasmon resonance analysis essentially as described in Example 9. The dissociation response expressed as percentage of the association response was plotted against the association response (see Figure 6). As shown in Figure 6, the affinity of all but one mutated antibody (CR5081) had clearly improved. Affinity constants for the mutated immunoglobulins CR5074, CR5080, CR5085 and CR5088 were also determined essentially as described in Example 9. Average KD values from duplicate experiments were 3.9 ± 0.5 nM for CR5074, 2.7 ± 0.1 nM for CR5080, 3.7 ± 0.7 nM for CR5085, and 1.7 ± 0.1 nM for CR5088. These KD values are all an order of magnitude higher compared to CR4374.

In addition to the affinity, the neutralizing potency of the mutated immunoglobulins against West Nile virus strain USA99b was measured by PRNT. From Table 20 can be deducted that the PRNT50 and PRNT90 values of all affinity matured immunoglobulins are an order of magnitude higher compared to CR4374. This is in agreement with the affinity data.

**Table 1: Human lambda chain variable region primers (sense).**

| Primer name | Primer nucleotide sequence | SEQ ID NO |
|---|---|---|
| HuVλ1A | | SEQ ID NO:152 |
| HUVλ1B | | SEQ ID NO:153 |
| HuVλ1C | | SEQ ID NO:154 |
| HuVλ2 | | SEQ ID NO:155 |
| HuVλ3A | | SEQ ID NO:156 |
| HuVλ3B | | SEQ ID NO:157 |
| HuVλ4 | | SEQ ID NO:158 |
| HuVλ5 | | SEQ ID NO:159 |
| HuVλ6 | | SEQ ID NO:160 |
| HuVλ7/8 | | SEQ ID NO:161 |
| HuVλ9 | | SEQ ID NO:162 |

**Table 2: Human kappa chain variable region primers (sense).**

| Primer name | Primer nucleotide sequence | SEQ ID NO |
|---|---|---|
| HuVκ1B | | SEQ ID NO:163 |
| HuVκ2 | | SEQ ID NO:164 |
| HuVκ3 | | SEQ ID NO:165 |
| HuVκ4 | | SEQ ID NO:166 |
| HuVκS | | SEQ ID NO:167 |
| HuVκ6 | | SEQ ID NO:168 |

**Table 3: Human kappa chain variable region primers extended with SalI restriction sites (sense), human kappa chain J-region primers extended with NotI restriction sites (anti-sense), human lambda chain variable region primers extended with SalI restriction sites (sense) and human lambda chain J-region primers extended with NotI restriction sites (anti-sense).**

| Primer name | Primer nucleotide sequence | SEQ ID NO |
|---|---|---|
| HuVκ1B-SalI | | SEQ ID NO:169 |
| HuVκ2-SalI | | SEQ ID NO:170 |
| HuVκ3B-SalI | | SEQ ID NO:171 |
| HuVκ4B-SalI | | SEQ ID NO:172 |
| HuVκ5-SalI | | SEQ ID NO:173 |
| HuVκ6-SalI | | SEQ ID NO:174 |
| HuJκ1-NotI | | SEQ ID NO:175 |
| HuJκ2-NotI | | SEQ ID NO:176 |
| HuJκ3-NotI | | SEQ ID NO:177 |
| HuJκ4-NotI | | SEQ ID NO:178 |
| HuJκ5-NotI | | SEQ ID NO:179 |
| HuVλ1A-SalI | | SEQ ID NO:180 |
| HuVλ1B-SalI | | SEQ ID NO:181 |
| HuVλ1C-SalI | | SEQ ID NO:182 |
| | | |
| HuVλ2-SalI | | SEQ ID NO:183 |
| HyVλ3A-SalI | | SEQ ID NO:184 |
| HuVλ3B-SalI | | SEQ ID NO:185 |
| HuVλ4-SalI | | SEQ ID NO:186 |
| HuVλ5-SalI | | SEQ ID NO:187 |
| HuVλ6-SalI | | SEQ ID NO:188 |
| HuVλ7/8-SalI | | SEQ ID NO:1889 |
| HuVλ9-SalI | | SEQ ID NO:190 |
| HuJλ1-NotI | | SEQ ID NO:191 |
| HuJλ2/3-NotI | | SEQ ID NO:192 |
| | | |
| HuJλ4/5-NotI | | SEQ ID NO:193 |

**Table 4: Distribution of the different light chain products over the 10 fractions**

| Light chain products | Number of alleles | Fraction number | alleles/fraction |
|---|---|---|---|
| Vk1B/Jk1-5 | 19 | 1 and 2 | 9.5 |
| Vk2/Jk1-5 | 9 | 3 | 9 |
| Vk3B/Jk1-5 | 7 | 4 | 7 |
| Vk4B/Jk1-5 | 1 | 5 | 5 |
| Vk5/1k1-5 | 1 | | |
| Vk6/Jk1-5 | 3 | | |
| Vλ1A/J11-3 | 5 | 6 | 5 |
| Vλ1B/J11-3 | | | |
| Vλ1C/J11-3 | | | |
| Vλ2/J11-3 | 5 | 7 | 5 |
| Vλ3A/J11-3 | 9 | 8 | 9 |
| Vλ3B/J1-3 | | | |
| Vλ4/J11-3 | 3 | 9 | 5 |
| Vλ5/J11-3 | 1 | | |
| Vλ6/J11-3 | 1 | | |
| Vλ7/8/J11-3 | 3 | 10 | 6 |
| Vλ9/J11-3 | 3 | | |

**Table 5: Human IgG heavy chain variable region primers (sense).**

| Primer name | Primer nucleotide sequence | SEQ ID NO |
|---|---|---|
| HuVH1B/7A | | SEQ ID NO: 194 |
| HuVH1C | | SEQ ID NO: 195 |
| HuVH2B | | SEQ ID NO: 196 |
| HuVH3B | | SEQ ID NO:197 |
| HuVH3C | | SEQ ID NO: 198 |
| HuVH4B | | SEQ ID NO:199 |
| HuVH4C | | SEQ ID NO:200 |
| HuVH5B | | SEQ ID NO:201 |
| HuVH6A | | SEQ ID NO:202 |

**Table 6: Human IgG heavy chain variable region primers extended with SfiI/NcoI restriction sites (sense) and human IgG heavy chain J-region primers extended with XhoI/BstEII restriction sites (anti-sense).**

| Primer name | Primer nucleotide sequence | SEQ ID NO |
|---|---|---|
| HuVH1B/7A-SfiI | | SEQ ID NO:203 |
| HuVH1C-SfiI | | SEQ ID NO:204 |
| | | |
| HuVH2B-SfiI | | SEQ ID NO:205 |
| HuVH3B-SfiI | | SEQ ID NO:206 |
| HuVH3C-SfiI | | SEQ ID NO:207 |
| HuVH4B-SfiI | | SEQ ID NO:208 |
| HuVH4C-SfiI | | SEQ ID NO:209 |
| HuVH5B-SfiI | | SEQ ID NO:210 |
| HuVH6A-SfiI | | SEQ ID NO:211 |
| HuJH1/2-XhoI | | SEQ ID NO:212 |
| HuJH3-XhoI | | SEQ ID NO:213 |
| HuJH4/5-XhoI | | SEQ ID NO:214 |
| HuJH6-XhoI | | SEQ ID NO:215 |

**Table 7: Binding of single-chain (scFv) phage antibodies to West Nile virus (WNV), recombinant WNV E protein, FBS, and rabies virus as measured by ELISA at 492nm).**

| Name phage antibody | WN virus | WNV E protein | FBS (5%) | Rabies virus |
|---|---|---|---|---|
| SC04-271 | 0.984 | 0.608 | ND | ND |
| SC04-274 | 0.961 | 0.496 | ND | ND |
| SC04-283 | 1.205 | 0.074 | ND | ND |
| SC04-289 | 0.759 | 1.389 | ND | ND |
| SC04-299 | 1.075 | 0.072 | ND | ND |
| SC04-311 | 1.036 | 1.538 | ND | ND |
| SC04-325 | 1.183 | 1.397 | ND | 0.053 |
| SC04-353 | 1.002 | 0.099 | ND | 0.057 |
| SC04-361 | 0.660 | 0.076 | ND | 0.059 |
| SC04-374 | 0.975 | 1.360 | ND | 0.056 |
| SC02-447 | 0.094 | 0.057 | 0.041 | ND |
| SC03-014 | 0.061 | 0.060 | ND | 0.062 |
| Pos. control | 0.067 | 0.056 | ND | 0.991 |

| | | | | |
|---|---|---|---|---|
| ND means not determined | | | | |

**Table 8: Data of the WNV specific single-chain Fvs.**

| Name scFv | SEQ ID NO of nucl. sequence | SEQ ID NO of amino acid sequence* | HCDR3 (SEQ ID NO:) | VH-locus | VL-locus |
|---|---|---|---|---|---|
| SC04-271 | 61 | 62 (Vh 1-122; Vl 139-248) | RPGYDYGFYYFDY (SEQ ID NO:1) | 5-51 (DP-73) | V12 (2a2 - V 1-04) |
| SC04-274 | 63 | 64 (Vh 1-130; Vl 147-259) | | 5-51 (DP-73) | Vk IV (B3 - DPK24) |
| SC04-283 | 65 | 66 (Vh 1-130; VI 147-253) | | 5-51 (DP-73) | VkI(H2) |
| SC04-289 | 67 | 68 (Vh 1-125; Vl 142-250) | | 5-51 (DP-73) | Vk III (L2 - DPK21) |
| SC04-299 | 69 | 70 (Vh 1-124; Vl 141-250) | | 3-30 (DP-49) | Vl 1 (1a - V1-11) |
| SC04-311 | 71 | 72 (Vh 1-119; Vl 136-245) | GYNSGHYFDY (SEQ ID NO:6) | 3-30 (DP-49) | Vl 1 (1b - V1-19) |
| SC04-325 | 73 | 74 (Vh 1-117; VI 134-246) | GGMATTPGLDY (SEQ NO:7) | 1-69 (DP-10) | Vk IV (B3 - DPK24) |
| SC04-353 | 75 | 76 (Vh 1-127; Vl 144-250) | | 3-30 (DP-49) | Vk III (A27 - DPK22) |
| SC04-361 | 77 | 78 (Vh 1-130; Vl 147-259) | | 5-51 (DP-73) | Vk IV (B3 - DPK24) |
| SC04-374 | 79 | 80 (Vh 1-130; Vl 147-257) | | 2-05 | Vl 1 (1e-V1-13) |

| | | | | | |
|---|---|---|---|---|---|
| * between brackets the amino acids making up the heavy chain variable region (VH) and the light chain variable region (VL) is shown | | | | | |

**Table 9: Data of the CDR regions of the WNV specific single-chain Fvs.**

| Name scFv | HCDR1 (SEQ ID NO:) | HCDR2 (SEQ ID NO:) | LCDR1 (SEQ ID NO:) | LCDR2 (SEQ ID NO:) | LCDR3 (SEQ ID NO:) |
|---|---|---|---|---|---|
| SC04-271 | 21 | 31 | 41 | 51 | 11 |
| SC04-274 | 22 | 32 | 42 | 52 | 12 |
| SC04-283 | 23 | 33 | 43 | 53 | 13 |
| SC04-289 | 24 | 34 | 44 | 54 | 14 |
| SC04-299 | 25 | 35 | 45 | 55 | 15 |
| SC04-311 | 26 | 36 | 46 | 56 | 16 |
| SC04-325 | 27 | 37 | 47 | 57 | 17 |
| SC04-353 | 28 | 38 | 48 | 58 | 18 |
| SC04-361 | 29 | 39 | 49 | 59 | 19 |
| SC04-374 | 30 | 40 | 50 | 60 | 20 |

**Table 10: Binding of IgG1 antibodies to WNV as measured by ELISA (OD 492nm).**

| Antibody | WN virus (dilution) | | |
|---|---|---|---|
| | 1:5* | 1:25 | 1.125 |
| CR4271 | 1.785 | 1.853 | 1.818 |
| CR4274 | 2.308 | 2.351 | 2.164 |
| CR4299 | 1.477 | 1.337 | 0.929 |
| CR43H11 | 1.047 | 0.817 | 0.754 |
| CR4374 | 2.321 | 2.272 | 2.121 |
| pos ctrl | 2.092 | 2.122 | 2.135 |
| neg ctrl | 0.062 | 0.056 | 0.046 |

| | | | |
|---|---|---|---|
| * dilution of the antibody | | | |

**Table 11: Binding of IgG1 antibodies to WNV as measured by ELISA (OD 492nm).**

| Ab | Antibody Concentration (µg/ml) | | | | | | | | | | |
|---|---|---|---|---|---|---|---|---|---|---|---|
| | 20.000 | 10.000 | 5.000 | 2.500 | 1.250 | 0.630 | 0.310 | 0.1.60 | 0.078 | 0.039 | 0.000 |
| CR4271 | 1.554 | 1.632 | 1.585 | 1.488 | 1.560 | 1.580 | 1.449 | 1.414 | 1.199 | 0.761 | 0.003 |
| CR4274 | 1.698 | 1.645 | 1.538 | 1.492 | 1.538 | 1.519 | 1.378 | 1.146 | 0.841 | 0.448 | 0.003 |
| CR4283 | 1.678 | 1.645 | 1.761 | 1.621 | 1.633 | 1.618 | 1.542 | 1.564 | 1.351 | 1.019 | 0.003 |
| CR4289 | ND | 0.752 | 0.586 | 0.492 | 0.415 | 0.351 | 0.313 | 0.250 | 0.209 | 0.147 | 0.003 |
| CR4299 | 1.193 | 1.125 | 1.073 | 1.031 | 0.977 | 0.891 | 0.756 | 0.610 | 0.446 | 0.227 | 0.003 |
| CR4311 | 0.852 | 0.773 | 0.627 | 0.527 | 0.444 | 0.352 | 0.236 | 0.174 | 0.105 | 0.044 | 0.003 |
| CR4325 | 1.545 | 1.656 | 1.444 | 1.245 | 1.048 | 0.845 | 0.597 | 0.421 | 0.269 | 0.132 | 0.003 |
| CR4353 | ND | 1.567 | 1.554 | 1.432 | 1.418 | 1.330 | 1.169 | 1.069 | 0.734 | 0.595 | 0.003 |
| CR4374 | 1.687 | 1.723 | 1.645 | 1.577 | 1.499 | 1.451 | 1.242 | 0.997 | 0.729 | 0.458 | 0.003 |
| Neg. control | 0.051 | ND | ND | ND | ND | ND | ND | ND | ND | ND | ND |

**Table 12: Potency of the anti-WNV antibodies in the 66% neutralizing antibody titer assay.**

| Antibody name | µg/ml |
|---|---|
| CR4271 | 13.50 |
| CR4274 | 11.00 |
| CR4283 | 23.44 |
| CR4289 | 10.13 |
| CR4299 | 3.00 |
| CR4311 | 20.00 |
| CR4325 | 5.25 |
| CR4353 | 2.11 |
| CR4361 | 2.50 |
| CR4374 | 0.34 |

**Table 13: Protection from lethal WNV challenge in mice by anti-WNV monoclonal antibodies.**

| Antibody (15 mg/kg) | Surviving animals |
|---|---|
| CR4271 | 3/5 |
| CR4274 | 0/5 |
| CR4283 | 1/5 |
| CR4289 | 1/5 |
| CR4299 | 0/5 |
| CR4311 | 1/5 |
| CR4325 | 1/5 |
| CR4353 | 3/4* |
| CR4361 | 1/5 |
| CR4374 | 5/5 |
| 7H2 | 5/5 |
| Negative Control IgG1 | 0/5 |

| | |
|---|---|
| * 4 instead of 5 mice tested due to injection error as measured by IgG1 levels in serum of mouse taken 24 hours after antibody injection. | |

**Table 14: Probit analysis of the protective activity of human anti-WNV IgG1 in a murine lethal challenge model**

| Antibody | 50% protection (µg/kg) | 95% protection (µg/kg) |
|---|---|---|
| CR4374 | 12.9 | 270 |
| CR4353 | 357 | 7475 |

**Table 15: Neutralizing potency against West Nile virus strain USA99b as measured by PRNT.**

| Antibody | PRNT50 (95% CI) | PRNT90 (95% CI) |
|---|---|---|
| | (µg/ml) | (µg/ml) |
| CR4271 | > 100 | NA |
| CR4274 | > 100 | NA |
| CR4283 | > 100 | NA |
| CR4289 | 2.62 (1.16 - 6.10) | 37.4 (13.7 - 241) |
| CR4299 | 0.78 (0.28 -1.82) | 10.3 (3.92 - 67.7) |
| CR4311 | 2.91 (2.26 - 3.74) | 39.6 (27.3 - 62.3) |
| CR4325 | 1.45 (0.66 - 3.05) | 15.8 (6.58 - 75.6) |
| CR4353 | 0.026 (0.012 - 0.045) | 36.4 (19.1 - 82.6) |
| CR4361 | 2.03 (0.90- 4.34) | > 100 |
| CR4368 | 2.05 (1.07-3.76) | >100 |
| CR4374 | 0.18 (0.17 - 0.20) | 0.95 (0.82 - 1.12) |
| CRM4374 | < 0.1 | < 0.1 |
| CR4375 | 0.17 (0.12 - 0.23) | 2.29 (1.59 - 3.67) |
| 7H2 | 0.0030 (0.0020 - 0.0040) | 0.026 (0.020 - 0.037) . |
| 6B6C-1 | 0.70 (0.37 - 1.55) | 6.32 (2.42 - 106) |
| 5H10 | 0.016 (0.009 - 0.024) | 0.096 (0.074 - 0.140) |
| 3A3 | 0.0062 (0.0044 - 0.0079) | 0.042 (0.031 - 0.067) |

**Table 16: Description of WNV strains used.**

| Name | Strain | Origin | Year | Source | Lineage | CHOb* |
|---|---|---|---|---|---|---|
| USA99b | 385-99 | United States | 1999 | Bird | I | + |
| FRA00 | PaAn001 | France | 2000 | Horse | I | + |
| TUN97 | paH001 | Tunisia | 1997 | Human | I | + |
| SEN90 | ArD-76104 | Senegal | 1990 | Mosquito | II | - |
| CAR82 | ArB3573/82 | Central African Republic | 1982 | Tick | II | + |
| MAD78 | DakAnMg798 | Madagascar | 1978 | Bird | II | + |

| | | | | | | |
|---|---|---|---|---|---|---|
| * CHOb means glycosylation | | | | | | |

**Table 17: Neutralizing potency ofCR4374 against lineage I and II strains of WNV.**

| Virus | PRNT50 (95% CI) | PRNT90 (95% CI) |
|---|---|---|
| USA99b | 0.17 (0.11 - 0.25) | 0.82 (0.50 - 1.77) |
| TUN97 | 0.03 (0.02 - 0.04) | 0.22 (0.15 - 0.39) |
| FRA00 | 0.11 (0.08 - 0.15) | 1.36 (0.09 - 2.33) |
| SEN90 | 0.29 (0.11 - 0.67) | 3.92 (1.49 - 25.37) |
| MAD78 | 0.12 (0.09 - 0.16) | 4.12 (2.78 - 6.68) |
| CAR82 | 0.14 (0.08 - 0.22) | 2.90 (1.52 - 7.49) |

**Table 18: Data of the affinity matured immunoglobulins.**

| Name scFv | SEQ ID NO of nucl. sequence | SEQ ID NO of amino acid sequence* | VH-locus | VL-locus |
|---|---|---|---|---|
| SC05-074 | 228 | 229 | 2-05 | Vl 1 |
| | | (Vh 1-130; | | (1e-V1-13) |
| | | Vl 147-257) | | |
| SC05-080 | 230 | 231 | 2-05 | Vl 1 |
| | | (Vh 1-130; | | (1e-V1-13) |
| | | Vl 147-257) | | |
| SC05-085 | 232 | 233 | 2-05 | Vl 1 |
| | | (Vh 1-130; | | (1e - V1-13) |
| | | Vl 147-257) | | |
| SC05-088 | 234 | 235 | 2-05 | Vl 1 |
| | | (Vh 1-130; | | (1e - V1-13) |
| | | Vl 147-257) | | |

| | | | | |
|---|---|---|---|---|
| * between brackets the amino acids making up the heavy chain variable region (VH) and the light chain variable region (VL) is shown | | | | |

**Table 19: Data of the CDR regions of the affinity matured immunoglobulins.**

| Name scFv | HCDR1 (SEQ ID NO:) | HCDR2 (SEQ ID NO:) | HCDR3 (SEQ ID NO:) | LCDR1 (SEQ ID NO:) | LCDR2 (SEQ ID NO:) | LCDR3 (SEQ ID NO:) |
|---|---|---|---|---|---|---|
| SC05-074 | 30 | 40 | 10 | 236 | 240 | 244 |
| SC05-080 | 30 | 40 | 10 | 237 | 241 | 245 |
| SC05-085 | 30 | 40 | 10 | 238 | 242 | 246 |
| SC05-088 | 30 | 40 | 10 | 239 | 243 | 247 |

**Table 20: Neutralizing potency of affinity maturated and IgM variants of CR4374 against WNV USA99b.**

| Virus | PRNT50 (95% CI) (µg/ml) | PRNT90 (95% CI) (µg/ml) |
|---|---|---|
| CR5074 | 0.013 (0.009 - 0.020) | 0.067 (0.044 - 0.106) |
| CR5080 | 0.016 (0.010 - 0.023) | 0.080 (0.052 - 0.128) |
| CR5085 | 0.015 (0.010 - 0.023) | 0.077 (0.050 - 0.121) |
| CR5088 | 0.017 (0.011 - 0.026) | 0.087 (0.057 - 0.139) |
| CRM4374 | 0.011 (0.007 - 0.017) | 0.057 (0.037 - 0.091) |

### REFERENCES

Anderson JF, Andreadis TG, Vossbrinck CR, Tirrell S, Wakem EM, French RA, Garmendia AE and Van Kruiningen HJ (1999), Isolation of West Nile virus from mosquitoes, crows, and a Cooper's hawk in Connecticut. Science 286:2331-2333.

Anderson JF and Rahal JJ (2002), Efficacy of interferon alpha-2b and ribavirin against WNV in vitro. Emerg. Infect. Dis. 8:107-108.

Beasley DW and Barrett AD (2002), Identification of neutralizing epitopes within structural domain III of the West Nile virus envelope protein. J. Virol. 76:13097-13100.

Beasley DW, Li L, Suderman MT and Barrett AD (2002), Mouse neuroinvasive phenotype of West Nile virus strains varies depending upon virus genotype. Virology 296:17-23.

Ben-Nathan D, Lustig S, Tam G, Robinzon S, Segal S and Rager-Zisman B (2003), Prophylactic and therapeutic efficacy of human intravenous immunoglobulin in treating WNV infection in mice. J. Infect. Dis. 188:5-12.

Blitvich BJ, Marlenee NL, Hall RA, Calisher CH, Bowen RA, Roehrig JT, Komar N, Langevin SA and Beaty BJ (2003), Epitope-blocking enzyme-linked immunosorbent assays for the detection of serum antibodies to west nile virus in multiple avian species. J. Clin. Microbiol. 41:1041-1047.

Boel E, Verlaan S, Poppelier MJ, Westerdaal NA, Van Strijp JA and Logtenberg T (2000), Functional human monoclonal antibodies of all isotypes constructed from phage display library-derived single-chain Fv antibody fragments. J. Immunol. Methods 239:153-166.

Burton DR and Barbas CF (1994), Human antibodies from combinatorial libraries. Adv. Immunol. 57:191-280.

Chou, TC and P Talalay (1984), Quantitative analysis of dose-effect relationships: the combined effects of multiple drugs or enzyme inhibitors. Adv. Enzyme Regul. 22:27-55.

De Kruif J, Terstappen L, Boel E and Logtenberg T (1995a), Rapid selection of cell subpopulation-specific human monoclonal antibodies from a synthetic phage antibody library. Proc. Natl. Acad. Sci. USA 92:3938.

De Kruif J, Boel E and Logtenberg T (1995b), Selection and application of human single-chain Fv antibody fragments from a semi-synthetic phage antibody display library with designed CDR3 regions. J. Mol. Biol. 248:97-105.

Eijkenboom M, Gerlach I, Jork R, Lowe D and van der Staay, FJ (2000), Effects of subdural haematoma on sensorimotor functioning and spatial learning in rats. Neuropharmacology 39:817-834.

Gollins SW and Porterfield JS (1986), A new mechanism for the neutralization of enveloped viruses by antiviral antibody. Nature 321:244-246.

Huls G, Heijnen IJ, Cuomo E, van der Linden J, Boel E, van de Winkel J and Logtenberg T (1999), Antitumor immune effector mechanisms recruited by phage display-derived fully human IgG1 and IgA1 monoclonal antibodies. Cancer Res. 59:5778-5784.

Jia XY, Briese T, Jordan I, Rambaut A, Chi HC, Mackenzie JS, Hall RA, Scherret J and Lipkin WI (1999), Genetic analysis of West Nile New York 1999 encephalitis virus. The Lancet 354:1971-1972.

Kuno G, Chang GJ, Tsuchiya KR, Karabatsos N and Cropp CB (1998), Phylogeny of the genus Flavivirus. J. Virol. 72:73-83.

Lanciotti RS, Roehrig JT, Deubel V, Smith J, Parker M, Steele K, Crise B,Volpe KE, Crabtree MB, Scherret JH, Hall RA, MacKenzie JS, Cropp CB, Panigrahy B, Ostlund E, Schmitt B, Malkinson M, Banet C, Weissman J, Komar N, Savage HM, Stone W, McNamara T and Gubler DJ (1999), Origin of the West Nile virus responsible for an outbreak of encephalitis in the northeastern United States. Science 286:2333-2337.

Leyssen P, Croes R, Rau P, Heiland S, Verbeken E, Sciot R, Paeshuyse J, Charlier N, De Clercq E, Meyding-Lamadé U and Neyts J (2003), Acute encephalitis, a polyomyelitis-like syndrome and neurological sequelae in a hamster model for flavivirus infections. Brain Pathology 13:279-290.

Morin LP and Wood RI (2001), A Stereotaxic Atlas of the Golden Hamster Brain. New York, Elsevier.

Morrey JD, Craig WD, Julander JG, Blatt LM, Smee DF, Sidwell RW (2004a), Effect of interferon-alpha and interferon-inducers on West Nile virus in mouse and hamster animal models. Aniviral Chemistry and Chemotherapy 15:101-109.

Morrey JD, Day CW, Julander JG, Olsen AL, Sidewell RW, Cheney CD and Blatt LM (2004b), Modeling hamsters for evaluating West Nile virus therapies. Antiviral Research 63:41-50.

Roehrig JT, Mathews JH and Trent DW (1983), Identification of epitopes on the E glycoprotein of Saint Louis encephalitis virus using monoclonal antibodies. J. Virol. 128:118-126.

Roehrig JT, Staudinger LA, Hunt AR, Mathews JH and Blair CD (2001), Antibody prophylaxis and therapy for flavivirus encephalitis infections. Ann. NY Acad. Sci. 951: 286-297.

Slootstra JW, Puijk WC, Ligtvoet GJ, Langeveld JP, Meloen RH (1996), Structural aspects of antibody-antigen interaction revealed through small random peptide libraries. Mol. Divers. 1:87-96.

van der Staay FJ, Augstein K-H and Horváth E (1996a), Sensorimotor impairments in rats with cerebral infarction, induced by unilateral occlusion of the left middle cerebral artery: strain differences and effects of the occlusion site. Brain Research 735:271-284.

van der Staay FJ, Augstein K-H and Horváth E (1996b), Sensorimotor impairments in Wistar Kyoto rats with cerebral infarction, induced by unilateral occlusion of the middle cerebral artery: recovery of function. Brain Research 715:180-188.

Wang T, Anderson JF, Magnarelli LA, Wong SJ, Koski RA and Fikrig E (2001), Immunization of mice against West Nile virus with recombinant envelope protein. J. Immunol. 167:5273-5277.

## Claims

1. An antibody capable of specifically binding to the E protein of West Nile Virus (WNV) and having WNV neutralizing activity, wherein said antibody comprises a heavy chain CDR1 region comprising the amino acid sequence of SEQ ID NO:30, a heavy chain CDR2 region comprising the amino acid sequence of SEQ ID NO:40, a heavy chain CDR3 region comprising the amino acid sequence of SEQ ID NO:10, a light chain CDR1 region comprising the amino acid sequence of SEQ ID NO:50, a light chain CDR2 region comprising the amino acid sequence of SEQ ID NO:60, and a light chain CDR3 region comprising the amino acid sequence of SEQ ID NO:20.

2. An antibody according to claim 1, wherein the antibody is a human antibody.

3. An affinity matured mutant of an antibody according to claim 1, having a higher affinity as compared to the antibody according to claim 1 and
wherein said affinity matured mutant is capable of specifically binding to the E protein of WNV and has WNV neutralizing activity.

4. An immunoconjugate comprising an antibody according to claim 1 or 2, or an affinity matured mutant according to claim 3, the immunoconjugate further comprising at least one tag.

5. A nucleic acid molecule encoding an antibody according to claim 1 or 2, or an affinity matured mutant according to claim 3.

6. A pharmaceutical composition comprising an antibody according to claim 1 or 2, an affinity matured mutant according to claim 3, or an immunoconjugate according to claim 4, and a pharmaceutically acceptable excipient.

7. An antibody according to claim 1 or 2, an affinity matured mutant according to claim 3, or an immunoconjugate according to claim 4, for use as a medicament.

8. An antibody according to claim 1 or 2, an affinity matured mutant according to claim 3, or an immunoconjugate according to claim 4, for use in the diagnosis, prophylaxis or treatment of a condition resulting from WNV infection.

9. An antibody according to claim 1 or 2, an affinity matured mutant according to claim 3, or an immunoconjugate according to claim 4, for the in vitro diagnosis of WNV infection.

## Patentansprüche

1. Antikörper, der in der Lage ist, spezifisch an das E-Protein vom West-Nil-Virus (WNV) zu binden, und WNV-neutralisierende Aktivität hat, wobei der Antikörper umfasst: eine CDR 1-Region der schweren Kette, die die Aminosäuresequenz der SEQ ID NO: 30 umfasst; eine CDR 2-Region der schweren Kette, die die Aminosäuresequenz der SEQ ID NO: 40 umfasst; eine CDR 3-Region der schweren Kette, die die Aminosäuresequenz der SEQ ID NO: 10 umfasst; eine CDR 1-Region der leichten Kette, die die Aminosäuresequenz der SEQ ID NO: 50 umfasst; eine CDR 2-Region der leichten Kette, die die Aminosäuresequenz der SEQ ID NO: 60 umfasst; und eine CDR 3-Region der leichten Kette, die die Aminosäuresequenz der SEQ ID NO: 20 umfasst.

2. Antikörper nach Anspruch 1, wobei der Antikörper ein menschlicher Antikörper ist.

3. Affinitätsgereifte Mutante eines Antikörpers nach Anspruch 1, die eine höhere Affinität im Vergleich zum Antikörper nach Anspruch 1 hat, und
wobei die affinitätsgereifte Mutante in der Lage ist, spezifisch an das E-Protein von WNV zu binden, und WNV-neutralisierende Aktivität hat.

4. Immunkonjugat, umfassend einen Antikörper nach Anspruch 1 oder 2, oder eine affinitätsgereifte Mutante nach Anspruch 3, wobei das Immunkonjugat ferner mindestens eine Markierung umfasst.

5. Nucleineäuremolekül, das einen Antikörper nach Anspruch 1 oder 2 oder eine affinitätsgereifte Mutante nach Anspruch 3 codiert.

6. Pharmazeutische Zusammensetzung, umfassend einen Antikörper nach Anspruch 1 oder 2, eine affinitätsgereifte Mutante nach Anspruch 3 oder ein Immunkonjugat nach Anspruch 4, und einen pharmazeutisch verträglichen Exzipienten.

7. Antikörper nach Anspruch 1 oder 2, affinitätsgereifte Mutante nach Anspruch 3 oder Immunkonjugat nach Anspruch 4 für die Verwendung als Medikament.

8. Antikörper nach Anspruch 1 oder 2, affinitätsgereifte Mutante nach Anspruch 3 oder Immunkonjugat nach Anspruch 4 für die Verwendung in der Vorbeugung oder Behandlung eines Zustands, der durch eine WNV-Infektion bedingt ist.

9. Antikörper nach Anspruch 1 oder 2, affinitätsgereifte Mutante nach Anspruch 3 oder Immunkonjugat nach Anspruch 4 für die in vitro-Diagnose einer WNV-Infektion.

## Revendications

1. Anticorps capable de se lier de manière spécifique à la protéine E du virus du Nil occidental (WNV) et possédant une activité de neutralisation du WNV, dans lequel ledit anticorps comprend une région CDR1 de la chaîne lourde comprenant la séquence d'acides aminés de la SEQ ID NO:30, une région CDR2 de la chaîne lourde comprenant la séquence d'acides aminés de la SEQ ID NO:40, une région CDR3 de la chaîne lourde comprenant la séquence d'acides aminés de la SEQ ID NO:10, une région CDR1 de la chaîne légère comprenant la séquence d'acides aminés de la SEQ ID NO:50, une région CDR2 de la chaîne légère comprenant la séquence d'acides aminés de la SEO ID NO:60, et une région CDR3 de la chaîne légère comprenant la séquence d'acides aminés de la SEQ ID NO:20.

2. Anticorps selon la revendication 1, dans lequel l'anticorps est un anticorps humain.

3. Mutant d'affinité arrivé à maturité d'un anticorps selon la revendication 1, possédant une affinité supérieure par rapport à celle de l'anticorps selon la revendication 1, et dans lequel ledit mutant d'affinité arrivé à maturité est capable de se lier de manière spécifique à la protéine E du WNV et possède une activité de neutralisation du WNV.

4. Immunoconjugué comprenant un anticorps selon la revendication 1 ou 2, ou un mutant d'affinité arrivé à maturité selon la revendication 3, l'immunoconjugué comprenant en outre au moins une étiquette.

5. Molécule d'acide nucléique codant pour un anticorps selon la revendication 1 ou 2, ou pour un mutant d'affinité arrivé à maturité selon la revendication 3.

6. Composition pharmaceutique comprenant un anticorps selon la revendication 1 ou 2, un mutant d'affinité arrivé à maturité selon la revendication 3, ou un immunoconjugué selon la revendication 4, et un excipient pharmaceutiquement acceptable.

7. Anticorps selon la revendication 1 ou 2, mutant d'affinité arrivé à maturité selon la revendication 3, ou immunoconjugué selon la revendication 4, à utiliser comme médicament.

8. Anticorps selon la revendication 1 ou 2, mutant d'affinité arrivé à maturité selon la revendication 3, ou immunoconjugué selon la revendication 4, à utiliser dans la prophylaxie ou le traitement d'une affection résultant d'une infection par le WNV.

9. Anticorps selon la revendication 1 ou 2, mutant d'affinité arrivé à maturité selon la revendication 3, ou immunoconjugué selon la revendication 4, pour le diagnostic in vitro d'une infection par le WNV.


### SEQUENCE LISTING

<110> Crucell Holland B.V.
   Throsby, Mark
   de Kruif, John
<120> Binding molecules capable of neutralizing West Nile virus and uses thereof
<130> 0112 WO 00 ORD
<150> PCT/EP2004/053609
   <151> 2004-12-20
<150> PCT/EP2005/052160
   <151> 2005-05-12
<150> PCT/EP2005/052648
   <151> 2005-06-08
<150> PCT/EP2005/052946
   <151> 2005-06-23
<150> PCT/EP2005/054002
   <151> 2005-08-15
<160> 247
<170> Patent In version 3.1
<210> 1
   <211> 13
   <212> PRT
   <213> Artificial sequence
<220>
   <223> HCDR3
<400> 1
   Arg Pro Gly Tyr Asp Tyr Gly Phe Tyr Tyr Phe Asp Tyr
   1               5                   10
<210> 2
   <211> 21
   <212> PRT
   <213> Artificial sequence
<220>
   <223> HCDR3
<400> 2
   Leu Arg Gly Pro Tyr Tyr Asp Phe Trp Asn Gly Tyr Arg Glu Thr His
   1               5                   10                  15
   Asp Ala Phe Asn Val
               20
<210> 3
   <211> 21
   <212> PRT
   <213> Artificial sequence
<220>
   <223> HCDR3
<400> 3
   Leu Thr Phe Arg Arg Gly Tyr Ser Gly Ser Asp Ser Phe Leu Pro Pro
   1               5                   10                  15
   Gly Asp Phe Asp Tyr
               20
<210> 4
   <211> 16
   <212> PRT
   <213> Artificial sequence
<220>
   <223> HCDR3
<400> 4
   Asp Val Val Gly Val Gly Ala Ser Asp Tyr Tyr Tyr Tyr Met Asp Val
   1               5                   10                  15
<210> 5
   <211> 15
   <212> PRT
   <213> Artificial sequence
<220>
   <223> HCDR3
<400> 5
   Glu Ser Gly Gly Pro Ile Trp Tyr Lys Tyr Tyr Gly Val Asp Val
   1               5                   10                  15
<210> 6
   <211> 10
   <212> PRT
   <213> Artificial sequence
<220>
   <223> HCDR3
<400> 6
   Gly Tyr Asn Ser Gly His Tyr Phe Asp Tyr
   1 5 10
<210> 7
   <211> 11
   <212> PRT
   <213> Artificial sequence
<220>
   <223> HCDR3
<400> 7
   Gly Gly Met Ala Thr Thr Pro Gly Leu Asp Tyr
   1 5 10
<210> 8
   <211> 18
   <212> PRT
   <213> Artificial sequence
<220>
   <223> HCDR3
<400> 8
   Asp Phe Trp Ser Gly Tyr Ser Met Val Asp Ser Tyr Tyr Tyr Tyr Met
   1 5 10 15
   Asp Val
<210> 9
   <211> 21
   <212> PRT
   <213> Artificial sequence
<220>
   <223> HCDR3
<400> 9
   Leu Arg Gly Pro Tyr Tyr Asp Phe Trp Asn Gly Tyr Arg Glu Thr His
   1 5 10 15
   Asp Ala Phe Asn Val
   20
<210> 10
   <211> 19
   <212> PRT
   <213> Artificial sequence
<220>
   <223> HCDR3
<400> 10
   His Arg Tyr Tyr Asp Ile Ser Gly Tyr Tyr Arg Leu Phe Ser Asp
   1 5 10 15
   Ala Phe Asp Ile
<210> 11
   <211> 10
   <212> PRT
   <213> Artificial sequence
<220>
   <223> LCDR3
<400> 11
   Ser Ser Tyr Thr Ser Ser Ser Thr Tyr Val
   1 5 10
<210> 12
   <211> 9
   <212> PRT
   <213> Artificial sequence
<220>
   <223> LCDR3
<400> 12
   Gln Gln Tyr Tyr Ser Thr Pro Pro Thr
   1 5
<210> 13
   <211> 9
   <212> PRT
   <213> Artificial sequence
<220>
   <223> LCDR3
<400> 13
   Gln Gln Tyr Asn Thr Tyr Pro Leu Thr
   1 5
<210> 14
   <211> 10
   <212> PRT
   <213> Artificial sequence
<220>
   <223> LCDR3
<400> 14
   Gln Gln Tyr Asn Asn Trp Pro Pro Ile Thr
   1               5                   10
<210> 15
   <211> 11
   <212> PRT
   <213> Artificial sequence
<220>
   <223> LCDR3
<400> 15
   Ala Ala Trp Asp Asp Thr Leu Ser Ala Trp Val
   1               5                   10
<210> 16
   <211> 11
   <212> PRT
   <213> Artificial sequence
<220>
   <223> LCDR3
<400> 16
   Gly Thr Trp Asp Ser Ser Leu Thr Ala Val Val
   1               5                   10
<210> 17
   <211> 9
   <212> PRT
   <213> Artificial sequence
<220>
   <223> LCDR3
<400> 17
   Gln Gln Tyr Tyr Ser Thr Pro Leu Thr
   1               5
<210> 18
   <211> 8
   <212> PRT
   <213> Artificial sequence
<220>
   <223> LCDR3
<400> 18
   Gln Gln Tyr Gly Ser Ser Leu Thr
   1 5
<210> 19
   <211> 9
   <212> PRT
   <213> Artificial sequence
<220>
   <223> LCDR3
<400> 19
   Gln Gln Tyr Tyr Asn Thr Pro Ile Thr
   1 5
<210> 20
   <211> 11
   <212> PRT
   <213> Artificial sequence
<220>
   <223> LCDR3
<400> 20
   Gln Ser Tyr Asp Ser Ser Leu Ser Gly Ser Val
   1 5 10
<210> 21
   <211> 5
   <212> PRT
   <213> Artificial sequence
<220>
   <223> HCDR1
   <400> 21
   Asn Tyr Trp Ile Gly
   1 5
<210> 22
   <211> 5
   <212> PRT
   <213> Artificial sequence
<220>
   <223> HCDR1
<400> 22
   Ser Tyr Trp Ile Gly
   1 5
<210> 23
   <211> 5
   <212> PRT
   <213> Artificial sequence
<220>
   <223> HCDR1
<400> 23
   Thr Tyr Trp Ile Gly
   1 5
<210> 24
   <211> 5
   <212> PRT
   <213> Artificial sequence
<220>
   <223> HCDR1
<400> 24
   Ser Asn Trp Ile Thr
   1 5
<210> 25
   <211> 5
   <212> PRT
   <213> Artificial sequence
<220>
   <223> HCDR1
<400> 25
   Gly Tyr Ala Met His
   1 5
<210> 26
   <211> 5
   <212> PRT
   <213> Artificial sequence
<220>
   <223> HCDR1
   <400> 26
   Lys Asp Ala Met His
   1               5
<210> 27
   <211> 5
   <212> PRT
   <213> Artificial sequence
<220>
   <223> HCDR1
   <400> 27
   Ser Tyr Ala Ile Ser
   1               5
<210> 28
   <211> 5
   <212> PRT
   <213> Artificial sequence
<220>
   <223> HCDR1
<400> 28
   Asn Tyr Ala Met His
   1               5
<210> 29
   <211> 5
   <212> PRT
   <213> Artificial sequence
<220>
   <223> HCDR1
<400> 29
   Thr Tyr Trp Ile Gly
   1               5
<210> 30
   <211> 7
   <212> PRT
   <213> Artificial sequence
<220>
   <223> HCDR1
<400> 30
   Thr Ser Gly Val Gly Val Gly
   1 5
<210> 31
   <211> 17
   <212> PRT
   <213> Artificial sequence
<220>
   <223> HCDR2
<400> 31
   Ile Ile Tyr Pro Gly Asp Ser Asp Thr Arg Tyr Ser Pro Ser Val Gln
   1 5 10 15
   Gly
<210> 32
   <211> 17
   <212> PRT
   <213> Artificial sequence
<220>
   <223> HCDR2
<400> 32
   Ile Ile Tyr Pro Gly Asp Ser Asp Thr Arg Tyr Ser Pro Ser Phe Gln
   1 5 10 15
   Gly
<210> 33
   <211> 17
   <212> PRT
   <213> Artificial sequence
<220>
   <223> HCDR2
<400> 33
   Ile Ile Tyr Pro Gly Asp Ser Asp Thr Ile Tyr Ser Pro Ser Phe Gln
   1 5 10 15
   Gly
<210> 34
   <211> 17
   <212> PRT
   <213> Artificial sequence
<220>
   <223> HCDR2
<400> 34
   Arg Ile Asp Pro Ser Asp Ser Tyr Thr Asn Tyr Ser Pro Ser Phe Gln
   1 5 10 15
   Gly
<210> 35
   <211> 17
   <212> PRT
   <213> Artificial sequence
<220>
   <223> HCDR2
<400> 35
   Val Ile Ser Tyr Asp Gly Ser Glu Lys Tyr Ser Ala Asp Ser Val Lys
   1 5 10 15
   Gly
<210> 36
   <211> 17
   <212> PRT
   <213> Artificial sequence
<220>
   <223> HCDR2
<400> 36
   Val Ile Ser Tyr Asp Gly Ser Asp Lys His Tyr Ala Asp Ser Val Lys
   1 5 10 15
   Gly
<210> 37
<211> 14
<212> PRT
   <213> Artificial sequence
<220>
   <223> HCDR2
<400> 37
   Gly Ile Phe Gly Thr Ala Ser Tyr Ala Gln Lys Phe Gln Gly
   1               5                   10
<210> 38
   <211> 17
   <212> PRT
   <213> Artificial sequence
<220>
   <223> HCDR2
<400> 38
   Val Ile Ser Tyr Asp Gly Gly Asn Lys Tyr Tyr Ala Asp Ser Val Lys
   1               5                   10                  15
   Gly
<210> 39
   <211> 17
   <212> PRT
   <213> Artificial sequence
<220>
   <223> HCDR2
<400> 39
   Ile Ile Tyr Pro Ala Asp Ser Asp Thr Arg Tyr Ser Pro Ser Phe Gln
   1               5                   10                  15
   Gly
<210> 40
   <211> 16
   <212> PRT
   <213> Artificial sequence
<220>
   <223> HCDR2
<400> 40
   Val Ile Tyr Trp Asn Asp Asp Lys Leu Tyr Arg Pro Ser Leu Lys Ser
   1               5                   10                  15
<210> 41
   <211> 14
   <212> PRT
   <213> Artificial sequence
<220>
   <223> LCDR1
<400> 41
   Thr Gly Thr Ser Ser Asp Val Gly Gly Tyr Asn Tyr Val Ser
   1 5 10
<210> 42
   <211> 17
   <212> PRT
   <213> Artificial sequence
<220>
   <223> LCDR1
<400> 42
   Lys Ser Ser Gln Ser Val Leu Tyr Ser Ser Asn Asn Lys Asn Tyr Leu
   1 5 10 15
   Ala
<210> 43
   <211> 11
   <212> PRT
   <213> Artificial sequence
<220>
   <223> LCDR1
<400> 43
   Arg Ala Ser Gln Ser Ile Ser Ser Trp Leu Ala
   1 5 10
<210> 44
   <211> 12
   <212> PRT
   <213> Artificial sequence
<220>
   <223> LCDR1
<400> 44
   Arg Thr Ser Gln Ser Val Ser Ser Ser Tyr Leu Gly
   1 5 10
<210> 45
   <211> 13
   <212> PRT
   <213> Artificial sequence
<220>
   <223> LCDR1
<400> 45
   Ser Gly Ser Ser Ser Asn Ile Gly Asn Tyr Gly Val Asn
   1               5                   10
<210> 46
   <211> 13
   <212> PRT
   <213> Artificial sequence
<220>
   <223> LCDR1
<400> 46
   Ser Gly Thr Ser Ser Asn Ile Gly Asp Asn Tyr Val Ser
   1               5                   10
<210> 47
   <211> 17
   <212> PRT
   <213> Artificial sequence
<220>
   <223> LCDR1
<400> 47
   Lys Ser Ser Gln Ser Val Leu Tyr Ser Ser Asn Asn Lys Asn Tyr Leu
   1               5                   10                  15
   Ala
<210> 48
   <211> 12
   <212> PRT
   <213> Artificial sequence
<220>
   <223> LCDR1
<400> 48
   Arg Ala Ser Gln Ser Val Ser Asn Thr Phe Leu Ala
   1               5                   10
<210> 49
<211> 17
<212> PRT
   <213> Artificial sequence
<220>
   <223> LCDR1
<400> 49
   Lys Ser Ser Gln Asn Ile Leu Asp Asn Ser Asp Asn Lys Asn Phe Leu
   1               5                   10                  15
   Ala
<210> 50
   <211> 14
   <212> PRT
   <213> Artificial sequence
<220>
   <223> LCDR1
<400> 50
   Thr Gly Ser Ser Ser Asn Ile Gly Ala Gly Tyr Asp Val His
   1               5                   10
<210> 51
   <211> 7
   <212> PRT
   <213> Artificial sequence
<220>
   <223> LCDR2
<400> 51
   Asp Val Ser Asn Arg Pro Leu
   1               5
<210> 52
   <211> 7
   <212> PRT
   <213> Artificial sequence
<220>
   <223> LCDR2
<400> 52
   Trp Ala Ser Thr Arg Glu Ser
   1 5
<210> 53
   <211> 7
   <212> PRT
   <213> Artificial sequence
<220>
   <223> LCDR2
<400> 53
   Ala Ala Ser Ser Leu Gln Ser
   1 5
<210> 54
   <211> 7
   <212> PRT
   <213> Artificial sequence
<220>
   <223> LCDR2
<400> 54
   Gly Ala Ser Ile Arg Ala Thr
   1 5
<210> 55
   <211> 7
   <212> PRT
   <213> Artificial sequence
<220>
   <223> LCDR2
<400> 55
   Tyr Asp Asp Leu Leu Pro Ser
   1 5
<210> 56
   <211> 7
   <212> PRT
   <213> Artificial sequence
<220>
   <223> LCDR2
<400> 56
   Asp Asn Asn Lys Arg Pro Ser
   1 5
<210> 57
   <211> 7
   <212> PRT
   <213> Artificial sequence
<220>
   <223> LCDR2
<400> 57
   Trp Ala Ser Thr Arg Glu Ser
   1 5

<210> 58
   <211> 7
   <212> PRT
   <213> Artificial sequence
<220>
   <223> LCDR2
<400> 58
   Gly Ala Ser Ser Arg Ala Thr
   1 5
<210> 59
   <211> 7
   <212> PRT
   <213> Artificial sequence
<220>
   <223> LCDR2
<400> 59
   Trp Ala Ser Ala Arg Glu Ser
   1 5
<210> 60
   <211> 7
   <212> PRT
   <213> Artificial sequence
<220>
   <223> LCDR2
<400> 60
   Gly Asn Ser Asn Arg Pro Ser
   1               5
<210> 61
   <211> 747
   <212> DNA
   <213> Artificial sequence
<220>
   <223> SC04-271
   <220>
   <221> CDS
   <222> (1) .. (747)
   <223>
<400> 61
   gag gtg cag ctg gtg gag act gga gca gag gtg aaa aag ccc ggg gag        48
   Glu Val Gln Leu Val Glu Thr Gly Ala Glu Val Lys Lys Pro Gly Glu
   1               5                   10                  15
   tct ctg agg att tcc tgt aag ggt tct gga tac acc ttt aac aat tat        96
   Ser Leu Arg Ile Ser Cys Lys Gly Ser Gly Tyr Thr Phe Asn Asn Tyr
               20                  25                  30
   tgg atc ggc tgg gtg cgc cag atg ccc ggg aaa ggc ctg gag tgg atg       144
   Trp Ile Gly Trp Val Arg Gln Met Pro Gly Lys Gly Leu Glu Trp Met
           35                  40                  45
   ggg atc atc tat cct ggt gac tct gat acc aga tac agc ccg tcc gtc       192
   Gly Ile Ile Tyr Pro Gly Asp Ser Asp Thr Arg Tyr Ser Pro Ser Val
       50                  55                  60
   caa ggc cac gtc acc atc tca gcc gac aag tcc atc aac acc gcc tac       240
   Gln Gly His Val Thr Ile Ser Ala Asp Lys Ser Ile Asn Thr Ala Tyr
   65                  70                  75                  80
   ctg cag tgg agc agc ctg aag gcc tcg gac acc gcc gtg tat tac tgt       288
   Leu Gln Trp Ser Ser Leu Lys Ala Ser Asp Thr Ala Val Tyr Tyr Cys
                   85                  90                  95
   gcg aga cgg cct gga tac gac tat gga ttt tac tac ttt gac tac tgg       336
   Ala Arg Arg Pro Gly Tyr Asp Tyr Gly Phe Tyr Tyr Phe Asp Tyr Trp
               100                 105                 110
   ggc cag gga acc ctg gtc acc gtc tcg agc ggt acg ggc ggt tca ggc       384
   Gly Gln Gly Thr Leu Val Thr Val Ser Ser Gly Thr Gly Gly Ser Gly
           115                 120                 125
   gga acc ggc agc ggc act ggc ggg tcg acg cag tct gcc ctg act cag       432
   Gly Thr Gly Ser Gly Thr Gly Gly Ser Thr Gln Ser Ala Leu Thr Gln
       130                 135                 140
   cct cgc tca gtg tcc ggg tct cct gga cag tca gtc acc atc tcc tgc      480
   Pro Arg Ser Val Ser Gly Ser Pro Gly Gln Ser Val Thr Ile Ser Cys
   145                 150                 155                 160
   act gga acc agc agt gat gtt ggt ggt tat aac tat gtc tcc tgg tac      528
   Thr Gly Thr Ser Ser Asp Val Gly Gly Tyr Asn Tyr Val Ser Trp Tyr
                   165                 170                 175
   caa cat cac cca ggc aaa gcc ccc aaa ctc atg att tat gat gtc agt      576
   Gln His His Pro Gly Lys Ala Pro Lys Leu Met Ile Tyr Asp Val Ser
               180                 185                 190
   aat cgg ccc tta ggg gtt tct aat cgc ttc tct ggc tcc aag tct ggc      624
   Asn Arg Pro Leu Gly Val Ser Asn Arg Phe Ser Gly Ser Lys Ser Gly
           195                 200                 205
   aac acg gcc tcc ctg acc atc tct ggg ctc cag gct gag gac gag gct      672
   Asn Thr Ala Ser Leu Thr Ile Ser Gly Leu Gln Ala Glu Asp Glu Ala
       210                 215                 220
   gat tat tac tgc agc tca tat aca agc agc agc act tat gtc ttc gga      720
   Asp Tyr Tyr Cys Ser Ser Tyr Thr Ser Ser Ser Thr Tyr Val Phe Gly
   225                 230                 235                 240
   act ggg acc cat ctc acc gtt tta agt                                  747
   Thr Gly Thr His Leu Thr Val Leu Ser
                   245
<210> 62
   <211> 249
   <212> PRT
   <213> Artificial sequence
<220>
   <223> SC04-271
<400> 62
   Glu Val Gln Leu Val Glu Thr Gly Ala Glu Val Lys Lys Pro Gly Glu
   1               5                   10                  15
   Ser Leu Arg Ile Ser Cys Lys Gly Ser Gly Tyr Thr Phe Asn Asn Tyr
               20                  25                  30
   Trp Ile Gly Trp Val Arg Gln Met Pro Gly Lys Gly Leu Glu Trp Met
           35                  40                  45
   Gly Ile Ile Tyr Pro Gly Asp Ser Asp Thr Arg Tyr Ser Pro Ser Val
       50                  55                  60
   Gln Gly His Val Thr Ile Ser Ala Asp Lys Ser Ile Asn Thr Ala Tyr
   65 70 75 80
   Leu Gln Trp Ser Ser Leu Lys Ala Ser Asp Thr Ala Val Tyr Tyr Cys
   85 90 95
   Ala Arg Arg Pro Gly Tyr Asp Tyr Gly Phe Tyr Tyr Phe Asp Tyr Trp
   100 105 110
   Gly Gln Gly Thr Leu Val Thr Val Ser Ser Gly Thr Gly Gly Ser Gly
   115 120 125
   Gly Thr Gly Ser Gly Thr Gly Gly Ser Thr Gln Ser Ala Leu Thr Gln
   130 135 140
   Pro Arg Ser Val Ser Gly Ser Pro Gly Gln Ser Val Thr Ile Ser Cys
   145 150 155 160
   Thr Gly Thr Ser Ser Asp Val Gly Gly Tyr Asn Tyr Val Ser Trp Tyr
   165 170 175
   Gln His His Pro Gly Lys Ala Pro Lys Leu Met Ile Tyr Asp Val Ser
   180 185 190
   Asn Arg Pro Leu Gly Val Ser Asn Arg Phe Ser Gly Ser Lys Ser Gly
   195 200 205
   Asn Thr Ala Ser Leu Thr Ile Ser Gly Leu Gln Ala Glu Asp Glu Ala
   210 215 220
   Asp Tyr Tyr Cys Ser Ser Tyr Thr Ser Ser Ser Thr Tyr Val Phe Gly
   225 230 235 240
   Thr Gly Thr His Leu Thr Val Leu Ser
   245
<210> 63
   <211> 780
   <212> DNA
   <213> Artificial sequence
<220>
   <223> SC04-274
   <220>
   <221> CDS
   <222> (1)..(780)
   <223>
<400> 63
   cag gtc cag ctg gtg cag tct gga gca gag gtg aaa aag ccc ggg gag      48
   Gln Val Gln Leu Val Gln Ser Gly Ala Glu Val Lys Lys Pro Gly Glu
   1               5                   10                  15
   tct ctg aag atc tcc tgt aag ggt tct gga tac agc ttt acc agc tac      96
   Ser Leu Lys Ile Ser Cys Lys Gly Ser Gly Tyr Ser Phe Thr Ser Tyr
               20                  25                  30
   tgg atc ggc tgg gtg cgc cag atg ccc ggg aaa ggc ctg gag tgg atg     144
   Trp Ile Gly Trp Val Arg Gln Met Pro Gly Lys Gly Leu Glu Trp Met
           35                  40                  45
   ggc atc atc tat cct ggt gac tct gat acc aga tac agc ccg tcc ttc     192
   Gly Ile Ile Tyr Pro Gly Asp Ser Asp Thr Arg Tyr Ser Pro Ser Phe
       50                  55                  60
   caa ggc cag gtc acc atc tca gcc gac agg tcc atc agc acc gcc tac     240
   Gln Gly Gln Val Thr Ile Ser Ala Asp Arg Ser Ile Ser Thr Ala Tyr
   65                  70                  75                  80
   ctg cag tgg agc agc ctg aag gcc tcg gac acc gcc atg tat tac tgt     288
   Leu Gln Trp Ser Ser Leu Lys Ala Ser Asp Thr Ala Met Tyr Tyr Cys
                   85                  90                  95
   gcg aga ctc cga ggc ccc tat tac gat ttt tgg aat ggc tat cgg gag     336
   Ala Arg Leu Arg Gly Pro Tyr Tyr Asp Phe Trp Asn Gly Tyr Arg Glu
               100                 105                 110
   aca cat gat gct ttt aat gtg tgg ggc caa ggg acc acg gtc acc gtc     384
   Thr His Asp Ala Phe Asn Val Trp Gly Gln Gly Thr Thr Val Thr Val
           115                 120                 125
   tcg agc ggt acg ggc ggt tca ggc gga acc ggc agc ggc act ggc ggg     432
   Ser Ser Gly Thr Gly Gly Ser Gly Gly Thr Gly Ser Gly Thr Gly Gly
       130                 135                 140
   tcg acg gac atc cag atg acc cag tct cca gac tcc ctg gct gtg tct     480
   Ser Thr Asp Ile Gln Met Thr Gln Ser Pro Asp Ser Leu Ala Val Ser
   145                 150                 155                 160
   ctg ggc gag agg gcc acc atc aac tgc aag tcc agc cag agt gtt tta     528
   Leu Gly Glu Arg Ala Thr Ile Asn Cys Lys Ser Ser Gln Ser Val Leu
                   165                 170                 175
   tac agc tcc aac aat aag aac tac tta gct tgg tac cag cag aaa cca     576
   Tyr Ser Ser Asn Asn Lys Asn Tyr Leu Ala Trp Tyr Gln Gln Lys Pro
               180                 185                 190
   gga cag cct cct aag ctg ctc att tac tgg gca tct acc cgg gaa tcc     624
   Gly Gln Pro Pro Lys Leu Leu Ile Tyr Trp Ala Ser Thr Arg Glu Ser
           195                 200                 205
   ggg gtc cct gac cga ttc agt ggc agc ggg tct ggg aca gat ttc act        672
   Gly Val Pro Asp Arg Phe Ser Gly Ser Gly Ser Gly Thr Asp Phe Thr
       210                 215                 220
   ctc acc atc agc agc ctg cag gct gaa gat gtg gca gtt tat tat tgt        720
   Leu Thr Ile Ser Ser Leu Gln Ala Glu Asp Val Ala Val Tyr Tyr Cys
   225                 230                 235                 240
   cag caa tat tat agt act cct ccg act ttc ggc gga ggg acc aag gtg        768
   Gln Gln Tyr Tyr Ser Thr Pro Pro Thr Phe Gly Gly Gly Thr Lys Val
                   245                 250                 255
   gag atc aaa cgt                                                        780
   Glu Ile Lys Arg
               260
<210> 64
   <211> 260
<212> PRT
   <213> Artificial sequence
<220>
   <223> SC04-274
<400> 64
   Gln Val Gln Leu Val Gln Ser Gly Ala Glu Val Lys Lys Pro Gly Glu
   1               5                   10                  15
   Ser Leu Lys Ile Ser Cys Lys Gly Ser Gly Tyr Ser Phe Thr Ser Tyr
               20                  25                  30
   Trp Ile Gly Trp Val Arg Gln Met Pro Gly Lys Gly Leu Glu Trp Met
           35                  40                  45
   Gly Ile Ile Tyr Pro Gly Asp Ser Asp Thr Arg Tyr Ser Pro Ser Phe
       50                  55                  60
   Gln Gly Gln Val Thr Ile Ser Ala Asp Arg Ser Ile Ser Thr Ala Tyr
   65                  70                  75                  80
   Leu Gln Trp Ser Ser Leu Lys Ala Ser Asp Thr Ala Met Tyr Tyr Cys
                   85                  90                  95
   Ala Arg Leu Arg Gly Pro Tyr Tyr Asp Phe Trp Asn Gly Tyr Arg Glu
               100                 105                 110
   Thr His Asp Ala Phe Asn Val Trp Gly Gln Gly Thr Thr Val Thr Val
           115                 120                 125
   Ser Ser Gly Thr Gly Gly Ser Gly Gly Thr Gly Ser Gly Thr Gly Gly
   130 135 140
   Ser Thr Asp Ile Gln Met Thr Gln Ser Pro Asp Ser Leu Ala Val Ser
   145 150 155 160
   Leu Gly Glu Arg Ala Thr Ile Asn Cys Lys Ser Ser Gln Ser Val Leu
   165 170 175
   Tyr Ser Ser Asn Asn Lys Asn Tyr Leu Ala Trp Tyr Gln Gln Lys Pro
   180 185 190
   Gly Gln Pro Pro Lys Leu Leu Ile Tyr Trp Ala Ser Thr Arg Glu Ser
   195 200 205
   Gly Val Pro Asp Arg Phe Ser Gly Ser Gly Ser Gly Thr Asp Phe Thr
   210 215 220
   Leu Thr Ile Ser Ser Leu Gln Ala Glu Asp Val Ala Val Tyr Tyr Cys
   225 230 235 240
   Gln Gln Tyr Tyr Ser Thr Pro Pro Thr Phe Gly Gly Gly Thr Lys Val
   245 250 255
   Glu Ile Lys Arg
   260
<210> 65
   <211> 762
   <212> DNA
   <213> Artificial sequence
<220>
   <223> SC04-283
<220>
   <221> CDS
   <222> (1)..(762)
   <223>
<400> 65
   gaa gtg cag ctg gtg cag tct gga gca gag gtg aaa aag tcc ggg gag        48
   Glu Val Gln Leu Val Gln Ser Gly Ala Glu Val Lys Lys Ser Gly Glu
   1               5                   10                  15
   tct ctg aag atc tcc tgt aag ggt tct gga tac acc ttt aat acc tac        96
   Ser Leu Lys Ile Ser Cys Lys Gly Ser Gly Tyr Thr Phe Asn Thr Tyr
               20                  25                  30
   tgg atc ggc tgg gtg cgc cag atg ccc ggg aaa ggc ctg gag tgg atg       144
   Trp Ile Gly Trp Val Arg Gln Met Pro Gly Lys Gly Leu Glu Trp Met
           35                  40                  45
   ggg atc att tat cct ggt gac tct gat acc ata tac agc ccg tcc ttc       192
   Gly Ile Ile Tyr Pro Gly Asp Ser Asp Thr Ile Tyr Ser Pro Ser Phe
       50                  55                  60
   caa ggc cag gtc acc atc tca gcc gac aag tcc atc agc acc gcc tac       240
   Gln Gly Gln Val Thr Ile Ser Ala Asp Lys Ser Ile Ser Thr Ala Tyr
   65                  70                  75                  80
   ctg cag tgg agc agc ctg aag gcc tcg gac agc gcc atg tat tac tgt       288
   Leu Gln Trp Ser Ser Leu Lys Ala Ser Asp Ser Ala Met Tyr Tyr Cys
                   85                  90                  95
   gcg aga ctt acc ttt cga cgt gga tat agt ggc tcc gat tcg ttt ctc       336
   Ala Arg Leu Thr Phe Arg Arg Gly Tyr Ser Gly Ser Asp Ser Phe Leu
               100                 105                 110
   cct ccg ggg gac ttt gac tac tgg ggc cag gga acc ctg gtc acc gtc       384
   Pro Pro Gly Asp Phe Asp Tyr Trp Gly Gln Gly Thr Leu Val Thr Val
           115                 120                 125
   tcg agc ggt acg ggc ggt tca ggc gga acc ggc agc ggc act ggc ggg       432
   Ser Ser Gly Thr Gly Gly Ser Gly Gly Thr Gly Ser Gly Thr Gly Gly
       130                 135                 140
   tcg acg gac atc cag atg acc cag tct cct tcc acc ctg tct gca tct       480
   Ser Thr Asp Ile Gln Met Thr Gln Ser Pro Ser Thr Leu Ser Ala Ser
   145                 150                 155                 160
   gta gga gac aga gtc acc atc act tgc cgg gcc agt cag agt att agt       528
   Val Gly Asp Arg Val Thr Ile Thr Cys Arg Ala Ser Gln Ser Ile Ser
                   165                 170                 175
   agc tgg ttg gcc tgg tat cag cag aaa cca ggg aaa gcc cct aat ctc       576
   Ser Trp Leu Ala Trp Tyr Gln Gln Lys Pro Gly Lys Ala Pro Asn Leu
               180                 185                 190
   ctg atc tat gct gca tcc agt ttg caa agt ggg gtc cca tca agg ttc       624
   Leu Ile Tyr Ala Ala Ser Ser Leu Gln Ser Gly Val Pro Ser Arg Phe
           195                 200                 205
   agc ggc agt gga tct ggg aca gat ttc act ctc acc atc agc agc ctg       672
   Ser Gly Ser Gly Ser Gly Thr Asp Phe Thr Leu Thr Ile Ser Ser Leu
       210                 215                 220
   cag cct gat gac tct gca act tat tac tgc caa cag tat aat act tat       720
   Gln Pro Asp Asp Ser Ala Thr Tyr Tyr Cys Gln Gln Tyr Asn Thr Tyr
   225                 230                 235                 240
   ccc ctc act ttc ggc gga ggg acc aag gtg gaa atc aaa cgt               762
   Pro Leu Thr Phe Gly Gly Gly Thr Lys Val Glu Ile Lys Arg
                   245                 250
<210> 66
   <211> 254
   <212> PRT
   <213> Artificial sequence
<220>
   <223> SC04-283
<400> 66
   Glu Val Gln Leu Val Gln Ser Gly Ala Glu Val Lys Lys Ser Gly Glu
   1               5                   10                  15
   Ser Leu Lys Ile Ser Cys Lys Gly Ser Gly Tyr Thr Phe Asn Thr Tyr
               20                  25                  30
   Trp Ile Gly Trp Val Arg Gln Met Pro Gly Lys Gly Leu Glu Trp Met
           35                  40                  45
   Gly Ile Ile Tyr Pro Gly Asp Ser Asp Thr Ile Tyr Ser Pro Ser Phe
       50                  55                  60
   Gln Gly Gln Val Thr Ile Ser Ala Asp Lys Ser Ile Ser Thr Ala Tyr
   65                  70                  75                  80
   Leu Gln Trp Ser Ser Leu Lys Ala Ser Asp Ser Ala Met Tyr Tyr Cys
                   85                  90                  95
   Ala Arg Leu Thr Phe Arg Arg Gly Tyr Ser Gly Ser Asp Ser Phe Leu
               100                 105                 110
   Pro Pro Gly Asp Phe Asp Tyr Trp Gly Gln Gly Thr Leu Val Thr Val
           115                 120                 125
   Ser Ser Gly Thr Gly Gly Ser Gly Gly Thr Gly Ser Gly Thr Gly Gly
       130                 135                 140
   Ser Thr Asp Ile Gln Met Thr Gln Ser Pro Ser Thr Leu Ser Ala Ser
   145                 150                 155                 160
   Val Gly Asp Arg Val Thr Ile Thr Cys Arg Ala Ser Gln Ser Ile Ser
                   165                 170                 175
   Ser Trp Leu Ala Trp Tyr Gln Gln Lys Pro Gly Lys Ala Pro Asn Leu
                   180                 185                 190
   Leu Ile Tyr Ala Ala Ser Ser Leu Gln Ser Gly Val Pro Ser Arg Phe
           195                 200                 205
   Ser Gly Ser Gly Ser Gly Thr Asp Phe Thr Leu Thr Ile Ser Ser Leu
       210                 215                 220
   Gln Pro Asp Asp Ser Ala Thr Tyr Tyr Cys Gln Gln Tyr Asn Thr Tyr
   225                 230                 235                 240
   Pro Leu Thr Phe Gly Gly Gly Thr Lys Val Glu Ile Lys Arg
                   245                 250
<210> 67
   <211> 753
   <212> DNA
   <213> Artificial sequence
<220>
   <223> SC04-289
   <220>
   <221> CDS
   <222> (1)..(753)
   <223>
<400> 67
   cag atg cag ctg gtg caa tct gga gca gag gtg aaa aag ccc ggg gag      48
   Gln Met Gln Leu Val Gln Ser Gly Ala Glu Val Lys Lys Pro Gly Glu
   1               5                   10                  15
   tct ctg agg atc tcc tgt aag ggt tct gga tac agc ttt acc agt aac      96
   Ser Leu Arg Ile Ser Cys Lys Gly Ser Gly Tyr Ser Phe Thr Ser Asn
               20                  25                  30
   tgg atc acc tgg gtg cgc cag atg ccc ggg aaa ggc ctg gag tgg atg     144
   Trp Ile Thr Trp Val Arg Gln Met Pro Gly Lys Gly Leu Glu Trp Met
           35                  40                  45
   ggg agg att gat cct agt gac tct tat acc aac tac agc ccg tcc ttc     192
   Gly Arg Ile Asp Pro Ser Asp Ser Tyr Thr Asn Tyr Ser Pro Ser Phe
       50                  55                  60
   caa ggc cac gtc acc atc tca gct gac aag tcc atc agc act gcc tac     240
   Gln Gly His Val Thr Ile Ser Ala Asp Lys Ser Ile Ser Thr Ala Tyr
   65                  70                  75                  80
   ctg cag tgg agc agc ctg aag gcc tcg gac acc gcc atg tat tac tgt        288
   Leu Gln Trp Ser Ser Leu Lys Ala Ser Asp Thr Ala Met Tyr Tyr Cys
                   85                  90                  95
   gcg aga gac gta gtt ggg gtg gga gct tcc gac tac tat tat tac atg        336
   Ala Arg Asp Val Val Gly Val Gly Ala Ser Asp Tyr Tyr Tyr Tyr Met
               100                 105                 110
   gac gtc tgg ggc aaa ggg acc acg gtc acc gtc tcg agc ggt acg ggc        384
   Asp Val Trp Gly Lys Gly Thr Thr Val Thr Val Ser Ser Gly Thr Gly
           115                 120                 125
   ggt tca ggc gga acc ggc agc ggc act ggc ggg tcg acg gaa att gtg        432
   Gly Ser Gly Gly Thr Gly Ser Gly Thr Gly Gly Ser Thr Glu Ile Val
       130                 135                 140
   ttg acg cag tct cca ggc acc ctg tct ttg tct cca ggg gaa aca gcc        480
   Leu Thr Gln Ser Pro Gly Thr Leu Ser Leu Ser Pro Gly Glu Thr Ala
   145                 150                 155                 160
   acc ctc tcc tgc agg acc agt cag agt gtt agt agc agc tac tta ggc        528
   Thr Leu Ser Cys Arg Thr Ser Gln Ser Val Ser Ser Ser Tyr Leu Gly
                   165                 170                 175
   tgg tac cag cag aaa cct ggc cag gct ccc agg ctc ctc atc tat ggt        576
   Trp Tyr Gln Gln Lys Pro Gly Gln Ala Pro Arg Leu Leu Ile Tyr Gly
               180                 185                 190
   gca tcc atc agg gcc act ggc atc cca gcc agg ttc agt ggc agt ggg        624
   Ala Ser Ile Arg Ala Thr Gly Ile Pro Ala Arg Phe Ser Gly Ser Gly
           195                 200                 205
   tct ggg aca gag ttc act ctc acc atc gac agc cta cag tct gaa gat        672
   Ser Gly Thr Glu Phe Thr Leu Thr Ile Asp Ser Leu Gln Ser Glu Asp
       210                 215                 220
   ttt gca gtt tat tac tgt cag cag tat aat aac tgg cct ccg atc acc        720
   Phe Ala Val Tyr Tyr Cys Gln Gln Tyr Asn Asn Trp Pro Pro Ile Thr
   225                 230                 235                 240
   ttc ggc caa ggg aca cga ctg gag att aaa cgt                            753
   Phe Gly Gln Gly Thr Arg Leu Glu Ile Lys Arg
                   245                 250
<210> 68
   <211> 251
   <212> PRT
   <213> Artificial sequence
<220>
   <223> SC04-289
<400> 68
   Gln Met Gln Leu Val Gln Ser Gly Ala Glu Val Lys Lys Pro Gly Glu
   1               5                   10                  15
   Ser Leu Arg Ile Ser Cys Lys Gly Ser Gly Tyr Ser Phe Thr Ser Asn
               20                  25                  30
   Trp Ile Thr Trp Val Arg Gln Met Pro Gly Lys Gly Leu Glu Trp Met
           35                  40                  45
   Gly Arg Ile Asp Pro Ser Asp Ser Tyr Thr Asn Tyr Ser Pro Ser Phe
       50                  55                  60
   Gln Gly His Val Thr Ile Ser Ala Asp Lys Ser Ile Ser Thr Ala Tyr
   65                  70                  75                  80
   Leu Gln Trp Ser Ser Leu Lys Ala Ser Asp Thr Ala Met Tyr Tyr Cys
                   85                  90                  95
   Ala Arg Asp Val Val Gly Val Gly Ala Ser Asp Tyr Tyr Tyr Tyr Met
               100                 105                 110
   Asp Val Trp Gly Lys Gly Thr Thr Val Thr Val Ser Ser Gly Thr Gly
           115                 120                 125
   Gly Ser Gly Gly Thr Gly Ser Gly Thr Gly Gly Ser Thr Glu Ile Val
       130                 135                 140
   Leu Thr Gln Ser Pro Gly Thr Leu Ser Leu Ser Pro Gly Glu Thr Ala
   145                 150                 155                 160
   Thr Leu Ser Cys Arg Thr Ser Gln Ser Val Ser Ser Ser Tyr Leu Gly
                   165                 170                 175
   Trp Tyr Gln Gln Lys Pro Gly Gln Ala Pro Arg Leu Leu Ile Tyr Gly
               180                 185                 190
   Ala Ser Ile Arg Ala Thr Gly Ile Pro Ala Arg Phe Ser Gly Ser Gly
           195                 200                 205
   Ser Gly Thr Glu Phe Thr Leu Thr Ile Asp Ser Leu Gln Ser Glu Asp
       210                 215                 220
   Phe Ala Val Tyr Tyr Cys Gln Gln Tyr Asn Asn Trp Pro Pro Ile Thr
   225                 230                 235                 240
   Phe Gly Gln Gly Thr Arg Leu Glu Ile Lys Arg
                   245                 250
<210> 69
   <211> 753
   <212> DNA
   <213> Artificial sequence
<220>
   <223> SC04-299
   <220>
   <221> CDS
   <222> (1) .. (753)
   <223>
<400> 69
   gag gtg cag ctg gtg gag act ggg gga ggc gtg gtc cag cct ggg agg      48
   Glu Val Gln Leu Val Glu Thr Gly Gly Gly Val Val Gln Pro Gly Arg
   1               5                   10                  15
   tcc ctg aga ctc tcc tgt gca gcc tct gga ttc acc ttc agt ggc tat      96
   Ser Leu Arg Leu Ser Cys Ala Ala Ser Gly Phe Thr Phe Ser Gly Tyr
               20                  25                  30
   gct atg cac tgg gtc cgc cag gct cca ggc aag ggg cta gac tgg gtg      144
   Ala Met His Trp Val Arg Gln Ala Pro Gly Lys Gly Leu Asp Trp Val
           35                  40                  45
   gca gtt ata tca tat gat gga agt gaa aaa tat tcc gcc gac tct gtg      192
   Ala Val Ile Ser Tyr Asp Gly Ser Glu Lys Tyr Ser Ala Asp Ser Val
       50                  55                  60
   aag ggc cgg ttc acc atc tcc aga gac aat tcc aag aac acg ctc tat      240
   Lys Gly Arg Phe Thr Ile Ser Arg Asp Asn Ser Lys Asn Thr Leu Tyr
   65                  70                  75                  80
   ctg caa atg aac agc ctg aga gct gag gac acg gct gtg tat tat tgt      288
   Leu Gln Met Asn Ser Leu Arg Ala Glu Asp Thr Ala Val Tyr Tyr Cys
                   85                  90                  95
   gcg aaa gag tcc ggg gga cct ata tgg tac aag tac tac ggc gtg gac      336
   Ala Lys Glu Ser Gly Gly Pro Ile Trp Tyr Lys Tyr Tyr Gly Val Asp
               100                 105                 110
   gtc tgg ggc caa ggg acc acg gtc acc gtc tcg agc ggt acg ggc ggt      384
   Val Trp Gly Gln Gly Thr Thr Val Thr Val Ser Ser Gly Thr Gly Gly
           115                 120                 125
   tca ggc gga acc ggc agc ggc act ggc ggg tcg acg tcc tat gtg ctg      432
   Ser Gly Gly Thr Gly Ser Gly Thr Gly Gly Ser Thr Ser Tyr Val Leu
       130                 135                 140
   act cag cca ccc tcg ctg tct gca gcc ccc agg cag agg gtc acc atc      480
   Thr Gln Pro Pro Ser Leu Ser Ala Ala Pro Arg Gln Arg Val Thr Ile
   145                 150                 155                 160
   tcc tgt tct gga agc agc tcc aat atc gga aat tat ggt gtg aac tgg        528
   Ser Cys Ser Gly Ser Ser Ser Asn Ile Gly Asn Tyr Gly Val Asn Trp
                   165                 170                 175
   tac cag cag ctc cca gga aag gct ccc aaa ctc ctc atc tat tat gat        576
   Tyr Gln Gln Leu Pro Gly Lys Ala Pro Lys Leu Leu Ile Tyr Tyr Asp
               180                 185                 190
   gat ctg ctg ccc tca ggg gtc tct gac cga ttc tct ggc tcc aag tct        624
   Asp Leu Leu Pro Ser Gly Val Ser Asp Arg Phe Ser Gly Ser Lys Ser
           195                 200                 205
   ggc acc tca gcc tcc ctg gcc atc agt ggg ctc cag tct gag gat gaa        672
   Gly Thr Ser Ala Ser Leu Ala Ile Ser Gly Leu Gln Ser Glu Asp Glu
       210                 215                 220
   ggt gat tat tac tgt gca gcg tgg gat gac acc cta agt gct tgg gtg        720
   Gly Asp Tyr Tyr Cys Ala Ala Trp Asp Asp Thr Leu Ser Ala Trp Val
   225                 230                 235                 240
   ttc ggc gga ggg acc aag ctg acc gtc cta ggt                            753
   Phe Gly Gly Gly Thr Lys Leu Thr Val Leu Gly
                   245                 250
<210> 70
   <211> 251
   <212> PRT
   <213> Artificial sequence
<220>
   <223> SC04-299
<400> 70
   Glu Val Gln Leu Val Glu Thr Gly Gly Gly Val Val Gln Pro Gly Arg
   1               5                   10                  15
   Ser Leu Arg Leu Ser Cys Ala Ala Ser Gly Phe Thr Phe Ser Gly Tyr
               20                  25                  30
   Ala Met His Trp Val Arg Gln Ala Pro Gly Lys Gly Leu Asp Trp Val
           35                  40                  45
   Ala Val Ile Ser Tyr Asp Gly Ser Glu Lys Tyr Ser Ala Asp Ser Val
       50                  55                  60
   Lys Gly Arg Phe Thr Ile Ser Arg Asp Asn Ser Lys Asn Thr Leu Tyr
   65                  70                  75                  80
   Leu Gln Met Asn Ser Leu Arg Ala Glu Asp Thr Ala Val Tyr Tyr Cys
                   85                  90                  95
   Ala Lys Glu Ser Gly Gly Pro Ile Trp Tyr Lys Tyr Tyr Gly Val Asp
               100                 105                 110
   Val Trp Gly Gln Gly Thr Thr Val Thr Val Ser Ser Gly Thr Gly Gly
           115                 120                 125
   Ser Gly Gly Thr Gly Ser Gly Thr Gly Gly Ser Thr Ser Tyr Val Leu
       130                 135                 140
   Thr Gln Pro Pro Ser Leu Ser Ala Ala Pro Arg Gln Arg Val Thr Ile
   145                 150                 155                 160
   Ser Cys Ser Gly Ser Ser Ser Asn Ile Gly Asn Tyr Gly Val Asn Trp
                   165                 170                 175
   Tyr Gln Gln Leu Pro Gly Lys Ala Pro Lys Leu Leu Ile Tyr Tyr Asp
               180                 185                 190
   Asp Leu Leu Pro Ser Gly Val Ser Asp Arg Phe Ser Gly Ser Lys Ser
           195                 200                 205
   Gly Thr Ser Ala Ser Leu Ala Ile Ser Gly Leu Gln Ser Glu Asp Glu
       210                 215                 220
   Gly Asp Tyr Tyr Cys Ala Ala Trp Asp Asp Thr Leu Ser Ala Trp Val
   225                 230                 235                 240
   Phe Gly Gly Gly Thr Lys Leu Thr Val Leu Gly
                   245                 250
<210> 71
   <211> 738
   <212> DNA
   <213> Artificial sequence
<220>
   <223> SC04-311
   <220>
   <221> CDS
   <222> (1) .. (738)
   <223>
<400> 71
   gaa gtg cag ctg gtg cag tct ggg gga ggc gtg gtc cag cct ggc agg        48
   Glu Val Gln Leu Val Gln Ser Gly Gly Gly Val Val Gln Pro Gly Arg
   1               5                   10                  15
   tcc ctg aga ctc tcc tgt gta gcc tct gga ttc acc ttc agt aag gac        96
   Ser Leu Arg Leu Ser Cys Val Ala Ser Gly Phe Thr Phe Ser Lys Asp
               20                  25                  30
   gct atg cac tgg gtc cgc cag gct cca ggc aag ggg cta gag tgg gtg       144
   Ala Met His Trp Val Arg Gln Ala Pro Gly Lys Gly Leu Glu Trp Val
           35                  40                  45
   gca gtt ata tca tat gat gga agt gat aaa cac tac gca gac tcc gtg       192
   Ala Val Ile Ser Tyr Asp Gly Ser Asp Lys His Tyr Ala Asp Ser Val
       50                  55                  60
   aag ggc cga gtc acc atc tcc aga gac aat tcc agg aaa acg ctg tat       240
   Lys Gly Arg Val Thr Ile Ser Arg Asp Asn Ser Arg Lys Thr Leu Tyr
   65                  70                  75                  80
   ctg cga atg gac agc ctg aga gct gag gac acg gct cta tat tac tgt       288
   Leu Arg Met Asp Ser Leu Arg Ala Glu Asp Thr Ala Leu Tyr Tyr Cys
                   85                  90                  95
   gcg aga gga tac aac tct ggt cat tac ttt gac tac tgg ggc cag gga       336
   Ala Arg Gly Tyr Asn Ser Gly His Tyr Phe Asp Tyr Trp Gly Gln Gly
               100                 105                 110
   acc ctg atc acc gtc tcg agc ggt acg ggc ggt tca ggc gga acc ggc       384
   Thr Leu Ile Thr Val Ser Ser Gly Thr Gly Gly Ser Gly Gly Thr Gly
           115                 120                 125
   agc ggc act ggc ggg tcg acg cag tct gtg ctg acg cag ccg ccc tca       432
   Ser Gly Thr Gly Gly Ser Thr Gln Ser Val Leu Thr Gln Pro Pro Ser
       130                 135                 140
   gtg tct gcg gcc cca gga cag aag gtc acc atc tcc tgc tct gga acc       480
   Val Ser Ala Ala Pro Gly Gln Lys Val Thr Ile Ser Cys Ser Gly Thr
   145                 150                 155                 160
   agc tcc aat att ggg gat aat tat gta tcc tgg tac cag cac ctc cca       528
   Ser Ser Asn Ile Gly Asp Asn Tyr Val Ser Trp Tyr Gln His Leu Pro
                   165                 170                 175
   gga aca gcc ccc aaa ctc ctc att tat gac aat aat aag cga ccc tca       576
   Gly Thr Ala Pro Lys Leu Leu Ile Tyr Asp Asn Asn Lys Arg Pro Ser
               180                 185                 190
   ggg att cct gac cga ttc tct ggc tcc aag tct ggc acg tca gcc acc       624
   Gly Ile Pro Asp Arg Phe Ser Gly Ser Lys Ser Gly Thr Ser Ala Thr
           195                 200                 205
   ctg ggc gtc acc gga ctc cag act ggg gac gag gcc gat tat tac tgc       672
   Leu Gly Val Thr Gly Leu Gln Thr Gly Asp Glu Ala Asp Tyr Tyr Cys
       210                 215                 220
   gga aca tgg gat agc agc ctg act gct gtg gtc ttc ggc gga ggg acc       720
   Gly Thr Trp Asp Ser Ser Leu Thr Ala Val Val Phe Gly Gly Gly Thr
   225                 230                 235                 240
   aag ctg acc gtc cta ggt                                               738
   Lys Leu Thr Val Leu Gly
                   245
<210> 72
   <211> 246
   <212> PRT
   <213> Artificial sequence
<220>
   <223> SC04-311
<400> 72
   Glu Val Gln Leu Val Gln Ser Gly Gly Gly Val Val Gln Pro Gly Arg
   1               5                   10                  15
   Ser Leu Arg Leu Ser Cys Val Ala Ser Gly Phe Thr Phe Ser Lys Asp
               20                  25                  30
   Ala Met His Trp Val Arg Gln Ala Pro Gly Lys Gly Leu Glu Trp Val
           35                  40                  45
   Ala Val Ile Ser Tyr Asp Gly Ser Asp Lys His Tyr Ala Asp Ser Val
       50                  55                  60
   Lys Gly Arg Val Thr Ile Ser Arg Asp Asn Ser Arg Lys Thr Leu Tyr
   65                  70                  75                  80
   Leu Arg Met Asp Ser Leu Arg Ala Glu Asp Thr Ala Leu Tyr Tyr Cys
                   85                  90                  95
   Ala Arg Gly Tyr Asn Ser Gly His Tyr Phe Asp Tyr Trp Gly Gln Gly
               100                 105                 110
   Thr Leu Ile Thr Val Ser Ser Gly Thr Gly Gly Ser Gly Gly Thr Gly
           115                 120                 125
   Ser Gly Thr Gly Gly Ser Thr Gln Ser Val Leu Thr Gln Pro Pro Ser
       130                 135                 140
   Val Ser Ala Ala Pro Gly Gln Lys Val Thr Ile Ser Cys Ser Gly Thr
   145                 150                 155                 160
   Ser Ser Asn Ile Gly Asp Asn Tyr Val Ser Trp Tyr Gln His Leu Pro
                   165                 170                 175
   Gly Thr Ala Pro Lys Leu Leu Ile Tyr Asp Asn Asn Lys Arg Pro Ser
               180                 185                 190
   Gly Ile Pro Asp Arg Phe Ser Gly Ser Lys Ser Gly Thr Ser Ala Thr
           195                 200                 205
   Leu Gly Val Thr Gly Leu Gln Thr Gly Asp Glu Ala Asp Tyr Tyr Cys
       210                 215                 220
   Gly Thr Trp Asp Ser Ser Leu Thr Ala Val Val Phe Gly Gly Gly Thr
   225                 230                 235                 240
   Lys Leu Thr Val Leu Gly
                   245
<210> 73
   <211> 741
   <212> DNA
   <213> Artificial sequence
<220>
   <223> SC04-325
<220>
   <221> CDS
   <222> (1)..(741)
   <223>
<400> 73
   cag atg cag ctg gtg cag tct ggg gct gag gtg aag aag cct ggg tcc      48
   Gln Met Gln Leu Val Gln Ser Gly Ala Glu Val Lys Lys Pro Gly Ser
   1               5                   10                  15
   tcg gtg aag gtc tcc tgc aag gct tct gga gac acc ttc agc agt tat      96
   Ser Val Lys Val Ser Cys Lys Ala Ser Gly Asp Thr Phe Ser Ser Tyr
               20                  25                  30
   gct atc agc tgg gtg cga cag gcc cct gga caa ggg ctt gag tgg atg     144
   Ala Ile Ser Trp Val Arg Gln Ala Pro Gly Gln Gly Leu Glu Trp Met
           35                  40                  45
   gga ggg atc ttt ggt aca gca agc tac gca cag aag ttc cag ggc aga 192
   Gly Gly Ile Phe Gly Thr Ala Ser Tyr Ala Gln Lys Phe Gln Gly Arg
   50 55 60
   gtc acg att acc gcg gac gaa tcc acg agc aca gcc tac atg gag ctg 240
   Val Thr Ile Thr Ala Asp Glu Ser Thr Ser Thr Ala Tyr Met Glu Leu
   65 70 75 80
   agc agc ctg aga tct gag gac acg gcc gtg tat tac tgt gcg aga gga 288
   Ser Ser Leu Arg Ser Glu Asp Thr Ala Val Tyr Tyr Cys Ala Arg Gly
   85 90 95
   ggg atg gct aca aca ccg gga ctt gac tac tgg ggc cag gga acc ctg 336
   Gly Met Ala Thr Thr Pro Gly Leu Asp Tyr Trp Gly Gln Gly Thr Leu
   100 105 110
   gtc acc gtc tcg agc ggt acg ggc ggt tca ggc gga acc ggc agc ggc 384
   Val Thr Val Ser Ser Gly Thr Gly Gly Ser Gly Gly Thr Gly Ser Gly
   115 120 125
   act ggc ggg tcg acg gac atc cag ttg acc cag tct cca gac tcc ctg 432
   Thr Gly Gly Ser Thr Asp Ile Gln Leu Thr Gln Ser Pro Asp Ser Leu
   130 135 140
   gct gtg tct ctg ggc gag agg gcc acc atc aac tgc aag tcc agc cag 480
   Ala Val Ser Leu Gly Glu Arg Ala Thr Ile Asn Cys Lys Ser Ser Gln
   145 150 155 160
   agt gtt tta tac agc tcc aac aat aag aac tac tta gct tgg tac cag 528
   Ser Val Leu Tyr Ser Ser Asn Asn Lys Asn Tyr Leu Ala Trp Tyr Gln
   165 170 175
   cag aaa cca gga cag cct cct aag ctg ctc att tac tgg gca tct acc 576
   Gln Lys Pro Gly Gln Pro Pro Lys Leu Leu Ile Tyr Trp Ala Ser Thr
   180 185 190
   cgg gaa tcc ggg gtc cct gac cga ttc agt ggc agc ggg tct ggg aca 624
   Arg Glu Ser Gly Val Pro Asp Arg Phe Ser Gly Ser Gly Ser Gly Thr
   195 200 205
   gat ttc act ctc acc atc agc agc ctg cag gct gaa gat gtg gca gtt 672
   Asp Phe Thr Leu Thr Ile Ser Ser Leu Gln Ala Glu Asp Val Ala Val
   210 215 220
   tat tac tgt cag caa tat tat agt acc ccg ttg acg ttc ggc caa ggg 720
   Tyr Tyr Cys Gln Gln Tyr Tyr Ser Thr Pro Leu Thr Phe Gly Gln Gly
   225 230 235 240
   acc aag gtg gag atc aaa cgt 741
   Thr Lys Val Glu Ile Lys Arg
   245
<210> 74
   <211> 247
   <212> PRT
   <213> Artificial sequence
   <220>
   <223> SC04-325
<400> 74
   Gln Met Gln Leu Val Gln Ser Gly Ala Glu Val Lys Lys Pro Gly Ser
   1               5                   10                  15
   Ser Val Lys Val Ser Cys Lys Ala Ser Gly Asp Thr Phe Ser Ser Tyr
               20                  25                  30
   Ala Ile Ser Trp Val Arg Gln Ala Pro Gly Gln Gly Leu Glu Trp Met
           35                  40                  45
   Gly Gly Ile Phe Gly Thr Ala Ser Tyr Ala Gln Lys Phe Gln Gly Arg
       50                  55                  60
   Val Thr Ile Thr Ala Asp Glu Ser Thr Ser Thr Ala Tyr Met Glu Leu
   65                  70                  75                  80
   Ser Ser Leu Arg Ser Glu Asp Thr Ala Val Tyr Tyr Cys Ala Arg Gly
                   85                  90                  95
   Gly Met Ala Thr Thr Pro Gly Leu Asp Tyr Trp Gly Gln Gly Thr Leu
               100                 105                 110
   Val Thr Val Ser Ser Gly Thr Gly Gly Ser Gly Gly Thr Gly Ser Gly
           115                 120                 125
   Thr Gly Gly Ser Thr Asp Ile Gln Leu Thr Gln Ser Pro Asp Ser Leu
       130                 135                 140
   Ala Val Ser Leu Gly Glu Arg Ala Thr Ile Asn Cys Lys Ser Ser Gln
   145                 150                 155                 160
   Ser Val Leu Tyr Ser Ser Asn Asn Lys Asn Tyr Leu Ala Trp Tyr Gln
                   165                 170                 175
   Gln Lys Pro Gly Gln Pro Pro Lys Leu Leu Ile Tyr Trp Ala Ser Thr
               180                 185                 190
   Arg Glu Ser Gly Val Pro Asp Arg Phe Ser Gly Ser Gly Ser Gly Thr
           195                 200                 205
   Asp Phe Thr Leu Thr Ile Ser Ser Leu Gln Ala Glu Asp Val Ala Val
       210                 215                 220
   Tyr Tyr Cys Gln Gln Tyr Tyr Ser Thr Pro Leu Thr Phe Gly Gln Gly
   225                 230                 235                 240
   Thr Lys Val Glu Ile Lys Arg
                   245

<210> 75
   <211> 753
   <212> DNA
   <213> Artificial sequence
<220>
   <223> SC04-353
   <220>
   <221> CDS
   <222> (1)..(753)
   <223>
<400> 75
   gaa gtg cag ctg gtg cag tct ggg gga ggc gtg gtc cag cct ggg agg        48
   Glu Val Gln Leu Val Gln Ser Gly Gly Gly Val Val Gln Pro Gly Arg
   1               5                   10                  15
   tcc ctg aga ctc tcc tgt gca gcc tct gga ttc acc ttc agt aat tat        96
   Ser Leu Arg Leu Ser Cys Ala Ala Ser Gly Phe Thr Phe Ser Asn Tyr
               20                  25                  30
   gct atg cac tgg gtc cgc cag gct cca ggc aag ggg cta gag tgg gtg       144
   Ala Met His Trp Val Arg Gln Ala Pro Gly Lys Gly Leu Glu Trp Val
           35                  40                  45
   gca gtt ata tca tat gat gga ggt aat aaa tac tac gca gac tcc gtg       192
   Ala Val Ile Ser Tyr Asp Gly Gly Asn Lys Tyr Tyr Ala Asp Ser Val
       50                  55                  60
   aag ggc cga ttc acc atg tcc aga gac aat tcc aag aac acg ctg tat       240
   Lys Gly Arg Phe Thr Met Ser Arg Asp Asn Ser Lys Asn Thr Leu Tyr
   65                  70                  75                  80
   ctg caa atg aac agc ctg aga gct gag gac acg gct gtg tat tat tgt       288
   Leu Gln Met Asn Ser Leu Arg Ala Glu Asp Thr Ala Val Tyr Tyr Cys
                   85                  90                  95
   gcg aga gat ttt tgg agt ggt tac tca atg gta gac tcc tac tac tac       336
   Ala Arg Asp Phe Trp Ser Gly Tyr Ser Met Val Asp Ser Tyr Tyr Tyr
               100                 105                 110
   tac atg gac gtg tgg ggc aag ggg acc acg gtc acc gtc tcg agc ggt       384
   Tyr Met Asp Val Trp Gly Lys Gly Thr Thr Val Thr Val Ser Ser Gly
           115                 120                 125
   acg ggc ggt tca ggc gga acc ggc agc ggc act ggc ggg tcg acg gaa        432
   Thr Gly Gly Ser Gly Gly Thr Gly Ser Gly Thr Gly Gly Ser Thr Glu
       130                 135                 140
   acg aca ctc acg cag tcc cca ggc acc ctg tct ttg tct ccc ggg gaa        480
   Thr Thr Leu Thr Gln Ser Pro Gly Thr Leu Ser Leu Ser Pro Gly Glu
   145                 150                 155                 160
   aga gcc acc ctc tcc tgc aga gcc agt cag agt gtt agc aac acc ttc        528
   Arg Ala Thr Leu Ser Cys Arg Ala Ser Gln Ser Val Ser Asn Thr Phe
                   165                 170                 175
   tta gcc tgg tac cag cag aaa cct ggc cag gct ccc agg ctc ctc atc        576
   Leu Ala Trp Tyr Gln Gln Lys Pro Gly Gln Ala Pro Arg Leu Leu Ile
               180                 185                 190
   tat ggt gca tcc agc agg gcc act ggc atc cca gac agg ttc agt ggc        624
   Tyr Gly Ala Ser Ser Arg Ala Thr Gly Ile Pro Asp Arg Phe Ser Gly
           195                 200                 205
   agt ggg tct ggg aca gac ttc act ctc acc atc agc aga ctg gag cct        672
   Ser Gly Ser Gly Thr Asp Phe Thr Leu Thr Ile Ser Arg Leu Glu Pro
       210                 215                 220
   gaa gat ttt gca gcg tat tac tgt cag cag tat ggt agc tcg ctc act        720
   Glu Asp Phe Ala Ala Tyr Tyr Cys Gln Gln Tyr Gly Ser Ser Leu Thr
   225                 230                 235                 240
   ttc ggc cct ggg acc aaa gtg gat atc aaa cgt                            753
   Phe Gly Pro Gly Thr Lys Val Asp Ile Lys Arg
                   245                 250
<210> 76
   <211> 251
   <212> PRT
   <213> Artificial sequence
<220>
   <223> SC04-353
<400> 76
   Glu Val Gln Leu Val Gln Ser Gly Gly Gly Val Val Gln Pro Gly Arg
   1               5                   10                  15
   Ser Leu Arg Leu Ser Cys Ala Ala Ser Gly Phe Thr Phe Ser Asn Tyr
               20                  25                  30
   Ala Met His Trp Val Arg Gln Ala Pro Gly Lys Gly Leu Glu Trp Val
           35                  40                  45
   Ala Val Ile Ser Tyr Asp Gly Gly Asn Lys Tyr Tyr Ala Asp Ser Val
   50 55 60
   Lys Gly Arg Phe Thr Met Ser Arg Asp Asn Ser Lys Asn Thr Leu Tyr
   65 70 75 80
   Leu Gln Met Asn Ser Leu Arg Ala Glu Asp Thr Ala Val Tyr Tyr Cys
   85 90 95
   Ala Arg Asp Phe Trp Ser Gly Tyr Ser Met Val Asp Ser Tyr Tyr Tyr
   100 105 110
   Tyr Met Asp Val Trp Gly Lys Gly Thr Thr Val Thr Val Ser Ser Gly
   115 120 125
   Thr Gly Gly Ser Gly Gly Thr Gly Ser Gly Thr Gly Gly Ser Thr Glu
   130 135 140
   Thr Thr Leu Thr Gln Ser Pro Gly Thr Leu Ser Leu Ser Pro Gly Glu
   145 150 155 160
   Arg Ala Thr Leu Ser Cys Arg Ala Ser Gln Ser Val Ser Asn Thr Phe
   165 170 175
   Leu Ala Trp Tyr Gln Gln Lys Pro Gly Gln Ala Pro Arg Leu Leu Ile
   180 185 190
   Tyr Gly Ala Ser Ser Arg Ala Thr Gly Ile Pro Asp Arg Phe Ser Gly
   195 200 205
   Ser Gly Ser Gly Thr Asp Phe Thr Leu Thr Ile Ser Arg Leu Glu Pro
   210 215 220
   Glu Asp Phe Ala Ala Tyr Tyr Cys Gln Gln Tyr Gly Ser Ser Leu Thr
   225 230 235 240
   Phe Gly Pro Gly Thr Lys Val Asp Ile Lys Arg
   245 250
<210> 77
   <211> 780
   <212> DNA
   <213> Artificial sequence
<220>
   <223> SC04-361
   <220>
   <221> CDS
   <222> (1)..(780)
   <223>
<400> 77
   gag gtc cag ctg gta cag tct gga gca gaa gtg aaa aag ccc ggg gag       48
   Glu Val Gln Leu Val Gln Ser Gly Ala Glu Val Lys Lys Pro Gly Glu
   1               5                   10                  15
   tct ctg aag atc tcc tgt aag gcc tct gga ttc agc ttt agc acc tat       96
   Ser Leu Lys Ile Ser Cys Lys Ala Ser Gly Phe Ser Phe Ser Thr Tyr
               20                  25                  30
   tgg atc ggc tgg gta cgc cag atg ccc ggg aaa ggc ctg gag tgg atg      144
   Trp Ile Gly Trp Val Arg Gln Met Pro Gly Lys Gly Leu Glu Trp Met
           35                  40                  45
   ggg atc atc tat cct gct gac tct gat acc aga tac agc ccg tcc ttc      192
   Gly Ile Ile Tyr Pro Ala Asp Ser Asp Thr Arg Tyr Ser Pro Ser Phe
       50                  55                  60
   caa ggc cag gtc acc atc tca gcc gac aag tcc atc agc acc gcc tac      240
   Gln Gly Gln Val Thr Ile Ser Ala Asp Lys Ser Ile Ser Thr Ala Tyr
   65                  70                  75                  80
   ctg cag tgg agc agc ctg aag gcc tcg gac acc gcc atg tat tac tgt      288
   Leu Gln Trp Ser Ser Leu Lys Ala Ser Asp Thr Ala Met Tyr Tyr Cys
                   85                  90                  95
   gcg aga ctc cga ggc ccc tat tac gat ttt tgg aat ggc tat cgg gag      336
   Ala Arg Leu Arg Gly Pro Tyr Tyr Asp Phe Trp Asn Gly Tyr Arg Glu
               100                 105                 110
   aca cat gat gct ttt aat gtg tgg ggc caa ggg aca atg gtc acc gtc      384
   Thr His Asp Ala Phe Asn Val Trp Gly Gln Gly Thr Met Val Thr Val
           115                 120                 125
   tcg agc ggt acg ggc ggt tca ggc gga acc ggc agc ggc act ggc ggg      432
   Ser Ser Gly Thr Gly Gly Ser Gly Gly Thr Gly Ser Gly Thr Gly Gly
       130                 135                 140
   tcg acg gat gtt gtg atg act cag tct cca gac tcc ctg gct gtg tct      480
   Ser Thr Asp Val Val Met Thr Gln Ser Pro Asp Ser Leu Ala Val Ser
   145                 150                 155                 160
   ctg ggc gag agg gcc acc atc aac tgc aag tcc agc cag aat att tta      528
   Leu Gly Glu Arg Ala Thr Ile Asn Cys Lys Ser Ser Gln Asn Ile Leu
                   165                 170                 175
   gac aac tcc gac aat aag aac ttc tta gct tgg tac cag cag aaa cca      576
   Asp Asn Ser Asp Asn Lys Asn Phe Leu Ala Trp Tyr Gln Gln Lys Pro
               180                 185                 190
   gga cag cct cct aaa ttg ctc att tac tgg gca tct gcc cgg gag tcc      624
   Gly Gln Pro Pro Lys Leu Leu Ile Tyr Trp Ala Ser Ala Arg Glu Ser
               195                 200                 205
   ggg gtc cct gac cga ttc agt ggc agc ggg tct ggg aca gat ttc act      672
   Gly Val Pro Asp Arg Phe Ser Gly Ser Gly Ser Gly Thr Asp Phe Thr
       210                 215                 220
   ctc acc atc agc agc ctg cag gct gaa gat gtg gca ctt tat tac tgt      720
   Leu Thr Ile Ser Ser Leu Gln Ala Glu Asp Val Ala Leu Tyr Tyr Cys
   225                 230                 235                 240
   cag caa tat tat aat act ccc atc acc ttc ggt caa ggg aca cga ctg      768
   Gln Gln Tyr Tyr Asn Thr Pro Ile Thr Phe Gly Gln Gly Thr Arg Leu
                   245                 250                 255
   gag att aaa cgt                                                      780
   Glu Ile Lys Arg
               260
<210> 78
   <211> 260
   <212> PRT
   <213> Artificial sequence
<220>
   <223> SC04-361
<400> 78
   Glu Val Gln Leu Val Gln Ser Gly Ala Glu Val Lys Lys Pro Gly Glu
   1               5                   10                  15
   Ser Leu Lys Ile Ser Cys Lys Ala Ser Gly Phe Ser Phe Ser Thr Tyr
               20                  25                  30
   Trp Ile Gly Trp Val Arg Gln Met Pro Gly Lys Gly Leu Glu Trp Met
           35                  40                  45
   Gly Ile Ile Tyr Pro Ala Asp Ser Asp Thr Arg Tyr Ser Pro Ser Phe
       50                  55                  60
   Gln Gly Gln Val Thr Ile Ser Ala Asp Lys Ser Ile Ser Thr Ala Tyr
   65                  70                  75                  80
   Leu Gln Trp Ser Ser Leu Lys Ala Ser Asp Thr Ala Met Tyr Tyr Cys
                   85                  90                  95
   Ala Arg Leu Arg Gly Pro Tyr Tyr Asp Phe Trp Asn Gly Tyr Arg Glu
               100                 105                 110
   Thr His Asp Ala Phe Asn Val Trp Gly Gln Gly Thr Met Val Thr Val
           115                 120                 125
   Ser Ser Gly Thr Gly Gly Ser Gly Gly Thr Gly Ser Gly Thr Gly Gly
       130                 135                 140
   Ser Thr Asp Val Val Met Thr Gln Ser Pro Asp Ser Leu Ala Val Ser
   145                 150                 155                 160
   Leu Gly Glu Arg Ala Thr Ile Asn Cys Lys Ser Ser Gln Asn Ile Leu
                   165                 170                 175
   Asp Asn Ser Asp Asn Lys Asn Phe Leu Ala Trp Tyr Gln Gln Lys Pro
               180                 185                 190
   Gly Gln Pro Pro Lys Leu Leu Ile Tyr Trp Ala Ser Ala Arg Glu Ser
           195                 200                 205
   Gly Val Pro Asp Arg Phe Ser Gly Ser Gly Ser Gly Thr Asp Phe Thr
       210                 215                 220
   Leu Thr Ile Ser Ser Leu Gln Ala Glu Asp Val Ala Leu Tyr Tyr Cys
   225                 230                 235                 240
   Gln Gln Tyr Tyr Asn Thr Pro Ile Thr Phe Gly Gln Gly Thr Arg Leu
                   245                 250                 255
   Glu Ile Lys Arg
               260
<210> 79
   <211> 774
   <212> DNA
   <213> Artificial sequence
<220>
   <223> SC04-374
   <220>
   <221> CDS
   <222> (1)..(774)
   <223>
<400> 79
   cag gtc acc ttg aag gag tct ggt cct acg ctg gtg aaa ccc aca cag      48
   Gln Val Thr Leu Lys Glu Ser Gly Pro Thr Leu Val Lys Pro Thr Gln
   1               5                   10                  15
   acc ctc acg ttg acc tgc acc ttc tct ggg ttc tca ctc agc act agt      96
   Thr Leu Thr Leu Thr Cys Thr Phe Ser Gly Phe Ser Leu Ser Thr Ser
               20                  25                  30
   gga gtg ggt gtg ggc tgg atc cgt cag ccc cca gga aag gcc ctg gag     144
   Gly Val Gly Val Gly Trp Ile Arg Gln Pro Pro Gly Lys Ala Leu Glu
           35                  40                  45
   tgg ctt gca gtc att tat tgg aat gat gat aag ctc tac agg cca tct     192
   Trp Leu Ala Val Ile Tyr Trp Asn Asp Asp Lys Leu Tyr Arg Pro Ser
       50                  55                  60
   ctg aag agc agg ctc acc atc acc aag gac acc tcc aaa aac cag gtg     240
   Leu Lys Ser Arg Leu Thr Ile Thr Lys Asp Thr Ser Lys Asn Gln Val
   65                  70                  75                  80
   gtc ctt aca atg acc aag atg gac cct gtg gac aca gcc aca tat tac     288
   Val Leu Thr Met Thr Lys Met Asp Pro Val Asp Thr Ala Thr Tyr Tyr
                   85                  90                  95
   tgt gca cac aga cac cgt tac tat gat att agt ggt tat tac cgt ctc     336
   Cys Ala His Arg His Arg Tyr Tyr Asp Ile Ser Gly Tyr Tyr Arg Leu
               100                 105                 110
   ttc tct gat gct ttt gat atc tgg ggc caa ggg aca atg gtc acc gtc     384
   Phe Ser Asp Ala Phe Asp Ile Trp Gly Gln Gly Thr Met Val Thr Val
           115                 120                 125
   tcg agc ggt acg ggc ggt tca ggc gga acc ggc agc ggc act ggc ggg     432
   Ser Ser Gly Thr Gly Gly Ser Gly Gly Thr Gly Ser Gly Thr Gly Gly
       130                 135                 140
   tcg acg cag tct gtc gtg acg cag ccg ccc tca gtg tct ggg gcc cca     480
   Ser Thr Gln Ser Val Val Thr Gln Pro Pro Ser Val Ser Gly Ala Pro
   145                 150                 155                 160
   ggg cag agg gtc acc atc tcc tgc act ggg agc agc tcc aac atc ggg     528
   Gly Gln Arg Val Thr Ile Ser Cys Thr Gly Ser Ser Ser Asn Ile Gly
                   165                 170                 175
   gca ggt tat gat gta cac tgg tac cag cag ctt cca gga aca gcc ccc     576
   Ala Gly Tyr Asp Val His Trp Tyr Gln Gln Leu Pro Gly Thr Ala Pro
               180                 185                 190
   aaa ctc ctc atc tat ggt aac agc aat cgg ccc tca ggg gtc cct gac     624
   Lys Leu Leu Ile Tyr Gly Asn Ser Asn Arg Pro Ser Gly Val Pro Asp
           195                 200                 205
   cga ttc tct ggc tcc aag tct ggc acc tca gcc tcc ctg gcc atc act     672
   Arg Phe Ser Gly Ser Lys Ser Gly Thr Ser Ala Ser Leu Ala Ile Thr
       210                 215                 220
   ggg ctc cag gct gag gat gag gct gat tat tac tgc cag tcc tat gac     720
   Gly Leu Gln Ala Glu Asp Glu Ala Asp Tyr Tyr Cys Gln Ser Tyr Asp
   225                 230                 235                 240
   agc agc ttg agt ggt tcg gtg ttc ggc gga ggg acc aag ctg acc gtc      768
   Ser Ser Leu Ser Gly Ser Val Phe Gly Gly Gly Thr Lys Leu Thr Val
                   245                 250                 255
   cta ggt                                                              774
   Leu Gly
<210> 80
   <211> 258
   <212> PRT
   <213> Artificial sequence
<220>
   <223> SC04-374
<400> 80
   Gln Val Thr Leu Lys Glu Ser Gly Pro Thr Leu Val Lys Pro Thr Gln
   1               5                   10                  15
   Thr Leu Thr Leu Thr Cys Thr Phe Ser Gly Phe Ser Leu Ser Thr Ser
               20                  25                  30
   Gly Val Gly Val Gly Trp Ile Arg Gln Pro Pro Gly Lys Ala Leu Glu
           35                  40                  45
   Trp Leu Ala Val Ile Tyr Trp Asn Asp Asp Lys Leu Tyr Arg Pro Ser
       50                  55                  60
   Leu Lys Ser Arg Leu Thr Ile Thr Lys Asp Thr Ser Lys Asn Gln Val
   65                  70                  75                  80
   Val Leu Thr Met Thr Lys Met Asp Pro Val Asp Thr Ala Thr Tyr Tyr
                   85                  90                  95
   Cys Ala His Arg His Arg Tyr Tyr Asp Ile Ser Gly Tyr Tyr Arg Leu
               100                 105                 110
   Phe Ser Asp Ala Phe Asp Ile Trp Gly Gln Gly Thr Met Val Thr Val
           115                 120                 125
   Ser Ser Gly Thr Gly Gly Ser Gly Gly Thr Gly Ser Gly Thr Gly Gly
       130                 135                 140
   Ser Thr Gln Ser Val Val Thr Gln Pro Pro Ser Val Ser Gly Ala Pro
   145                 150                 155                 160
   Gly Gln Arg Val Thr Ile Ser Cys Thr Gly Ser Ser Ser Asn Ile Gly
   165 170 175
   Ala Gly Tyr Asp Val His Trp Tyr Gln Gln Leu Pro Gly Thr Ala Pro
   180 185 190
   Lys Leu Leu Ile Tyr Gly Asn Ser Asn Arg Pro Ser Gly Val Pro Asp
   195 200 205
   Arg Phe Ser Gly Ser Lys Ser Gly Thr Ser Ala Ser Leu Ala Ile Thr
   210 215 220
   Gly Leu Gln Ala Glu Asp Glu Ala Asp Tyr Tyr Cys Gln Ser Tyr Asp
   225 230 235 240
   Ser Ser Leu Ser Gly Ser Val Phe Gly Gly Gly Thr Lys Leu Thr Val
   245 250 255
   Leu Gly
<210> 81
   <211> 24
   <212> DNA
   <213> Artificial sequence
<220>
   <223> Primer HuCkappa
   <400> 81
   acactctccc ctgttgaagc tctt 24
<210> 82
   <211> 23
   <212> DNA
   <213> Artificial sequence
<220>
   <223> Primer HuClambda2
<400> 82
   tgaacattct gtaggggcca ctg 23
<210> 83
   <211> 23
   <212> DNA
   <213> Artificial sequence
<220>
   <223> Primer HuClambda7
<400> 83
   agagcattct gcaggggcca ctg 23
<210> 84
   <211> 4941
   <212> DNA
   <213> Artificial sequence
<220>
   <223> Vector PDV-C06
<400> 84
   aagcttgcat gcaaattcta tttcaaggag acagtcataa tgaaatacct attgcctacg      60
   gcagccgctg gattgttatt actcgcggcc cagccggcca tggccgaggt gtttgactaa     120
   tggggcgcgc ctcagggaac cctggtcacc gtctcgagcg gtacgggcgg ttcaggcgga     180
   accggcagcg gcactggcgg gtcgacggaa attgtgctca cacagtctcc agccaccctg     240
   tctttgtctc caggggaaag agccaccctc tcctgcaggg ccagtcagag tgttagcagc     300
   tacttagcct ggtaccaaca gaaacctggc caggctccca ggctcctcat ctatgatgca     360
   tccaacaggg ccactggcat cccagccagg ttcagtggca gtgggtctgg gacagacttc     420
   actctcacca tcagcagcct agagcctgaa gattttgcag tttattactg tcagcagcgt     480
   agcaactggc ctccggcttt cggcggaggg accaaggtgg agatcaaacg tgcggccgca     540
   catcatcatc accatcacgg ggccgcatat accgatattg aaatgaaccg cctgggcaaa     600
   ggggccgcat agactgttga aagttgttta gcaaaacctc atacagaaaa ttcatttact     660
   aacgtctgga aagacgacaa aactttagat cgttacgcta actatgaggg ctgtctgtgg     720
   aatgctacag gcgttgtggt ttgtactggt gacgaaactc agtgttacgg tacatgggtt     780
   cctattgggc ttgctatccc tgaaaatgag ggtggtggct ctgagggtgg cggttctgag     840
   ggtggcggtt ctgagggtgg cggtactaaa cctcctgagt acggtgatac acctattccg 900
   ggctatactt atatcaaccc tctcgacggc acttatccgc ctggtactga gcaaaacccc 960
   gctaatccta atccttctct tgaggagtct cagcctctta atactttcat gtttcagaat 1020
   aataggttcc gaaataggca gggtgcatta actgtttata cgggcactgt tactcaaggc 1080
   actgaccccg ttaaaactta ttaccagtac actcctgtat catcaaaagc catgtatgac 1140
   gcttactgga acggtaaatt cagagactgc gctttccatt ctggctttaa tgaggatcca 1200
   ttcgtttgtg aatatcaagg ccaatcgtct gacctgcctc aacctcctgt caatgctggc 1260
   ggcggctctg gtggtggttc tggtggcggc tctgagggtg gcggctctga gggtggcggt 1320
   tctgagggtg gcggctctga gggtggcggt tccggtggcg gctccggttc cggtgatttt 1380
   gattatgaaa aaatggcaaa cgctaataag ggggctatga ccgaaaatgc cgatgaaaac 1440
   gcgctacagt ctgacgctaa aggcaaactt gattctgtcg ctactgatta cggtgctgct 1500
   atcgatggtt tcattggtga cgtttccggc cttgctaatg gtaatggtgc tactggtgat 1560
   tttgctggct ctaattccca aatggctcaa gtcggtgacg gtgataattc acctttaatg 1620
   aataatttcc gtcaatattt accttctttg cctcagtcgg ttgaatgtcg cccttatgtc 1680
   tttggcgctg gtaaaccata tgaattttct attgattgtg acaaaataaa cttattccgt 1740
   ggtgtctttg cgtttctttt atatgttgcc acctttatgt atgtattttc gacgtttgct 1800
   aacatactgc gtaataagga gtcttaataa gaattcactg gccgtcgttt tacaacgtcg 1860
   tgactgggaa aaccctggcg ttacccaact taatcgcctt gcagcacatc cccctttcgc 1920
   cagctggcgt aatagcgaag aggcccgcac cgatcgccct tcccaacagt tgcgcagcct 1980
   gaatggcgaa tggcgcctga tgcggtattt tctccttacg catctgtgcg gtatttcaca 2040
   ccgcatacgt caaagcaacc atagtacgcg ccctgtagcg gcgcattaag cgcggcgggt 2100
   gtggtggtta cgcgcagcgt gaccgctaca cttgccagcg ccctagcgcc cgctcctttc 2160
   gctttcttcc cttcctttct cgccacgttc gccggctttc cccgtcaagc tctaaatcgg 2220
   gggctccctt tagggttccg atttagtgct ttacggcacc tcgaccccaa aaaacttgat 2280
   ttgggtgatg gttcacgtag tgggccatcg ccctgataga cggtttttcg ccctttgacg 2340
   ttggagtcca cgttctttaa tagtggactc ttgttccaaa ctggaacaac actcaaccct 2400
   atctcgggct attcttttga tttataaggg attttgccga tttcggccta ttggttaaaa 2460
   aatgagctga tttaacaaaa atttaacgcg aattttaaca aaatattaac gtttacaatt 2520
   ttatggtgca ctctcagtac aatctgctct gatgccgcat agttaagcca gccccgacac 2580
   ccgccaacac ccgctgacgc gccctgacgg gcttgtctgc tcccggcatc cgcttacaga 2640
   caagctgtga ccgtctccgg gagctgcatg tgtcagaggt tttcaccgtc atcaccgaaa 2700
   cgcgcgagac gaaagggcct cgtgatacgc ctatttttat aggttaatgt catgataata 2760
   atggtttctt agacgtcagg tggcactttt cggggaaatg tgcgcggaac ccctatttgt 2820
   ttatttttct aaatacattc aaatatgtat ccgctcatga gacaataacc ctgataaatg 2880
   cttcaataat attgaaaaag gaagagtatg agtattcaac atttccgtgt cgcccttatt 2940
   cccttttttg cggcattttg ccttcctgtt tttgctcacc cagaaacgct ggtgaaagta 3000
   aaagatgctg aagatcagtt gggtgcacga gtgggttaca tcgaactgga tctcaacagc 3060
   ggtaagatcc ttgagagttt tcgccccgaa gaacgttttc caatgatgag cacttttaaa 3120
   gttctgctat gtggcgcggt attatcccgt attgacgccg ggcaagagca actcggtcgc 3180
   cgcatacact attctcagaa tgacttggtt gagtactcac cagtcacaga aaagcatctt 3240
   acggatggca tgacagtaag agaattatgc agtgctgcca taaccatgag tgataacact 3300
   gcggccaact tacttctgac aacgatcgga ggaccgaagg agctaaccgc ttttttgcac 3360
   aacatggggg atcatgtaac tcgccttgat cgttgggaac cggagctgaa tgaagccata 3420
   ccaaacgacg agcgtgacac cacgatgcct gtagcaatgg caacaacgtt gcgcaaacta 3480
   ttaactggcg aactacttac tctagcttcc cggcaacaat taatagactg gatggaggcg 3540
   gataaagttg caggaccact tctgcgctcg gcccttccgg ctggctggtt tattgctgat 3600
   aaatctggag ccggtgagcg tgggtctcgc ggtatcattg cagcactggg gccagatggt 3660
   aagccctccc gtatcgtagt tatctacacg acggggagtc aggcaactat ggatgaacga 3720
   aatagacaga tcgctgagat aggtgcctca ctgattaagc attggtaact gtcagaccaa 3780
   gtttactcat atatacttta gattgattta aaacttcatt tttaatttaa aaggatctag 3840
   gtgaagatcc tttttgataa tctcatgacc aaaatccctt aacgtgagtt ttcgttccac 3900
   tgagcgtcag accccgtaga aaagatcaaa ggatcttctt gagatccttt ttttctgcgc 3960
   gtaatctgct gcttgcaaac aaaaaaacca ccgctaccag cggtggtttg tttgccggat 4020
   caagagctac caactctttt tccgaaggta actggcttca gcagagcgca gataccaaat 4080
   actgtccttc tagtgtagcc gtagttaggc caccacttca agaactctgt agcaccgcct 4140
   acatacctcg ctctgctaat cctgttacca gtggctgctg ccagtggcga taagtcgtgt 4200
   cttaccgggt tggactcaag acgatagtta ccggataagg cgcagcggtc gggctgaacg 4260
   gggggttcgt gcacacagcc cagcttggag cgaacgacct acaccgaact gagataccta 4320
   cagcgtgagc tatgagaaag cgccacgctt cccgaaggga gaaaggcgga caggtatccg 4380
   gtaagcggca gggtcggaac aggagagcgc acgagggagc ttccaggggg aaacgcctgg 4440
   tatctttata gtcctgtcgg gtttcgccac ctctgacttg agcgtcgatt tttgtgatgc 4500
   tcgtcagggg ggcggagcct atggaaaaac gccagcaacg cggccttttt acggttcctg 4560
   gccttttgct ggccttttgc tcacatgttc tttcctgcgt tatcccctga ttctgtggat 4620
   aaccgtatta ccgcctttga gtgagctgat accgctcgcc gcagccgaac gaccgagcgc 4680
   agcgagtcag tgagcgagga agcggaagag cgcccaatac gcaaaccgcc tctccccgcg 4740
   cgttggccga ttcattaatg cagctggcac gacaggtttc ccgactggaa agcgggcagt 4800
   gagcgcaacg caattaatgt gagttagctc actcattagg caccccaggc tttacacttt 4860
   atgcttccgg ctcgtatgtt gtgtggaatt gtgagcggat aacaatttca cacaggaaac 4920
   agctatgacc atgattacgc c 4941
<210> 85
   <211> 24
   <212> DNA
   <213> Artificial sequence
<220>
   <223> Primer HuCIgG
<400> 85
   gtccaccttg gtgttgctgg gctt 24
<210> 86
   <211> 669
   <212> PRT
   <213> West Nile virus
<400> 86
   Met Val Thr Leu Ser Asn Phe Gln Gly Lys Val Met Met Thr Val Asn
   1 5 10 15
   Ala Thr Asp Val Thr Asp Val Ile Thr Ile Pro Thr Ala Ala Gly Lys
   20 25 30
   Asn Leu Cys Ile Val Arg Ala Met Asp Val Gly Tyr Met Cys Asp Asp
   35 40 45
   Thr Ile Thr Tyr Glu Cys Pro Val Leu Ser Ala Gly Asn Asp Pro Glu
   50 55 60
   Asp Ile Asp Cys Trp Cys Thr Lys Ser Ala Val Tyr Val Arg Tyr Gly
   65 70 75 80
   Arg Cys Thr Lys Thr Arg His Ser Arg Arg Ser Arg Arg Ser Leu Thr
                   85                  90                  95
   Val Gln Thr His Gly Glu Ser Thr Leu Ala Asn Lys Lys Gly Ala Trp
               100                 105                 110
   Met Asp Ser Thr Lys Ala Thr Arg Tyr Leu Val Lys Thr Glu Ser Trp
           115                 120                 125
   Ile Leu Arg Asn Pro Gly Tyr Ala Leu Val Ala Ala Val Ile Gly Trp
       130                 135                 140
   Met Leu Gly Ser Asn Thr Met Gln Arg Val Val Phe Val Val Leu Leu
   145                 150                 155                 160
   Leu Leu Val Ala Pro Ala Tyr Ser Phe Asn Cys Leu Gly Met Ser Asn
                   165                 170                 175
   Arg Asp Phe Leu Glu Gly Val Ser Gly Ala Thr Trp Val Asp Leu Val
               180                 185                 190
   Leu Glu Gly Asp Ser Cys Val Thr Ile Met Ser Lys Asp Lys Pro Thr
           195                 200                 205
   Ile Asp Val Lys Met Met Asn Met Glu Ala Ala Asn Leu Ala Glu Val
       210                 215                 220
   Arg Ser Tyr Cys Tyr Leu Ala Thr Val Ser Asp Leu Ser Thr Lys Ala
   225                 230                 235                 240
   Ala Cys Pro Thr Met Gly Glu Ala His Asn Asp Lys Arg Ala Asp Pro
                   245                 250                 255
   Ala Phe Val Cys Arg Gln Gly Val Val Asp Arg Gly Trp Gly Asn Gly
               260                 265                 270
   Cys Gly Leu Phe Gly Lys Gly Ser Ile Asp Thr Cys Ala Lys Phe Ala
           275                 280                 285
   Cys Ser Thr Lys Ala Ile Gly Arg Thr Ile Leu Lys Glu Asn Ile Lys
       290                 295                 300
   Tyr Glu Val Ala Ile Phe Val His Gly Pro Thr Thr Val Glu Ser His
   305                 310                 315                 320
   Gly Asn Tyr Ser Thr Gln Val Gly Ala Thr Gln Ala Gly Arg Phe Ser
                   325                 330                 335
   Ile Thr Pro Ala Ala Pro Ser Tyr Thr Leu Lys Leu Gly Glu Tyr Gly
   340 345 350
   Glu Val Thr Val Asp Cys Glu Pro Arg Ser Gly Ile Asp Thr Asn Ala
   355 360 365
   Tyr Tyr Val Met Thr Val Gly Thr Lys Thr Phe Leu Val His Arg Glu
   370 375 380
   Trp Phe Met Asp Leu Asn Leu Pro Trp Ser Ser Ala Gly Ser Thr Val
   385 390 395 400
   Trp Arg Asn Arg Glu Thr Leu Met Glu Phe Glu Glu Pro His Ala Thr
   405 410 415
   Lys Gln Ser Val Ile Ala Leu Gly Ser Gln Glu Gly Ala Leu His Gln
   420 425 430
   Ala Leu Ala Gly Ala Ile Pro Val Glu Phe Ser Ser Asn Thr Val Lys
   435 440 445
   Leu Thr Ser Gly His Leu Lys Cys Arg Val Lys Met Glu Lys Leu Gln
   450 455 460
   Leu Lys Gly Thr Thr Tyr Gly Val Cys Ser Lys Ala Phe Lys Phe Leu
   465 470 475 480
   Gly Thr Pro Ala Asp Thr Gly His Gly Thr Val Val Leu Glu Leu Gln
   485 490 495
   Tyr Thr Gly Thr Asp Gly Pro Cys Lys Val Pro Ile Ser Ser Val Ala
   500 505 510
   Ser Leu Asn Asp Leu Thr Pro Val Gly Arg Leu Val Thr Val Asn Pro
   515 520 525
   Phe Val Ser Val Ala Thr Ala Asn Ala Lys Val Leu Ile Glu Leu Glu
   530 535 540
   Pro Pro Phe Gly Asp Ser Tyr Ile Val Val Gly Arg Gly Glu Gln Gln
   545 550 555 560
   Ile Asn His His Trp His Lys Ser Gly Ser Ser Ile Gly Lys Ala Phe
   565 570 575
   Thr Thr Thr Leu Lys Gly Ala Gln Arg Leu Ala Ala Leu Gly Asp Thr
                       580                 585                 590
   Ala Trp Asp Phe Gly Ser Val Gly Gly Val Phe Thr Ser Val Gly Lys
           595                 600                 605
   Ala Val His Gln Val Phe Gly Gly Ala Phe Arg Ser Leu Phe Gly Gly
       610                 615                 620
   Met Ser Trp Ile Thr Gln Gly Leu Leu Gly Ala Leu Leu Leu Trp Met
   625                 630                 635                 640
   Gly Ile Asn Ala Arg Asp Arg Ser Ile Ala Leu Thr Phe Leu Ala Val
                   645                 650                 655
   Gly Gly Val Leu Leu Phe Leu Ser Val Asn Val His Ala
               660                 665
<210> 87
   <211> 23
   <212> DNA
   <213> Artificial sequence
<220>
   <223> Primer CMV-Spe
<400> 87
   ccatgttgac attgattatt gac 23
<210> 88
   <211> 26
   <212> DNA
   <213> Artificial sequence
<220>
   <223> Primer WNV-E-95 REV
<400> 88
   gctctagact tgccgatgct gctgcc 26
<210> 89
   <211> 40
   <212> DNA
   <213> Artificial sequence
<220>
   <223> Primer clefsmaquwnv
<400> 89
   ggaattcagc atggcccagg tgaccctgag caacttccag 40
<210> 90
   <211> 26
   <212> DNA
   <213> Artificial sequence
<220>
   <223> Primer reverse WNVmychis
<400> 90
   gactagtcaa ctcaatggtg atggtg 26
<210> 91
   <211> 6760
   <212> DNA
   <213> Artificial sequence
<220>
   <223> Vector pSyn-C18-HCgammal
<400> 91
   ctagcaccaa gggccccagc gtgttccccc tggcccccag cagcaagagc accagcggcg 60
   gcacagccgc cctgggctgc ctggtgaagg actacttccc cgagcccgtg accgtgagct 120
   ggaacagcgg cgccttgacc agcggcgtgc acaccttccc cgccgtgctg cagagcagcg 180
   gcctgtacag cctgagcagc gtggtgaccg tgcccagcag cagcctgggc acccagacct 240
   acatctgcaa cgtgaaccac aagcccagca acaccaaggt ggacaaacgc gtggagccca 300
   agagctgcga caagacccac acctgccccc cctgccctgc ccccgagctg ctgggcggac 360
   cctccgtgtt cctgttcccc cccaagccca aggacaccct catgatcagc cggacccccg 420
   aggtgacctg cgtggtggtg gacgtgagcc acgaggaccc cgaggtgaag ttcaactggt 480
   acgtggacgg cgtggaggtg cacaacgcca agaccaagcc ccgggaggag cagtacaaca     540
   gcacctaccg ggtggtgagc gtgctcaccg tgctgcacca ggactggctg aacggcaagg     600
   agtacaagtg caaggtgagc aacaaggccc tgcctgcccc catcgagaag accatcagca     660
   aggccaaggg ccagccccgg gagccccagg tgtacaccct gccccccagc cgggaggaga      720
   tgaccaagaa ccaggtgtcc ctcacctgtc tggtgaaggg cttctacccc agcgacatcg     780
   ccgtggagtg ggagagcaac ggccagcccg agaacaacta caagaccacc ccccctgtgc     840
   tggacagcga cggcagcttc ttcctgtaca gcaagctcac cgtggacaag agccggtggc     900
   agcagggcaa cgtgttcagc tgcagcgtga tgcacgaggc cctgcacaac cactacaccc     960
   agaagagcct gagcctgagc cccggcaagt gataatctag agggcccgtt taaacccgct    1020
   gatcagcctc gactgtgcct tctagttgcc agccatctgt tgtttgcccc tcccccgtgc    1080
   cttccttgac cctggaaggt gccactccca ctgtcctttc ctaataaaat gaggaaattg    1140
   catcgcattg tctgagtagg tgtcattcta ttctgggggg tggggtgggg caggacagca    1200
   agggggagga ttgggaagac aatagcaggc atgctgggga tgcggtgggc tctatggctt    1260
   ctgaggcgga aagaaccagc tggggctcta gggggtatcc ccacgcgccc tgtagcggcg    1320
   cattaagcgc ggcgggtgtg gtggttacgc gcagcgtgac cgctacactt gccagcgccc    1380
   tagcgcccgc tcctttcgct ttcttccctt cctttctcgc cacgttcgcc ggctttcccc    1440
   gtcaagctct aaatcggggg ctccctttag ggttccgatt tagtgcttta cggcacctcg    1500
   accccaaaaa acttgattag ggtgatggtt cacgtagtgg gccatcgccc tgatagacgg    1560
   tttttcgccc tttgacgttg gagtccacgt tctttaatag tggactcttg ttccaaactg    1620
   gaacaacact caaccctatc tcggtctatt cttttgattt ataagggatt ttgccgattt    1680
   cggcctattg gttaaaaaat gagctgattt aacaaaaatt taacgcgaat taattctgtg    1740
   gaatgtgtgt cagttagggt gtggaaagtc cccaggctcc ccagcaggca gaagtatgca    1800
   aagcatgcat ctcaattagt cagcaaccag gtgtggaaag tccccaggct ccccagcagg    1860
   cagaagtatg caaagcatgc atctcaatta gtcagcaacc atagtcccgc ccctaactcc    1920
   gcccatcccg cccctaactc cgcccagttc cgcccattct ccgccccatg gctgactaat    1980
   tttttttatt tatgcagagg ccgaggccgc ctctgcctct gagctattcc agaagtagtg    2040
   aggaggcttt tttggaggcc taggcttttg caaaaagctc ccgggagctt gtatatccat    2100
   tttcggatct gatcaagaga caggatgagg atcgtttcgc atgattgaac aagatggatt    2160
   gcacgcaggt tctccggccg cttgggtgga gaggctattc ggctatgact gggcacaaca    2220
   gacaatcggc tgctctgatg ccgccgtgtt ccggctgtca gcgcaggggc gcccggttct    2280
   ttttgtcaag accgacctgt ccggtgccct gaatgaactg caggacgagg cagcgcggct    2340
   atcgtggctg gccacgacgg gcgttccttg cgcagctgtg ctcgacgttg tcactgaagc    2400
   gggaagggac tggctgctat tgggcgaagt gccggggcag gatctcctgt catctcacct 2460
   tgctcctgcc gagaaagtat ccatcatggc tgatgcaatg cggcggctgc atacgcttga 2520
   tccggctacc tgcccattcg accaccaagc gaaacatcgc atcgagcgag cacgtactcg 2580
   gatggaagcc ggtcttgtcg atcaggatga tctggacgaa gagcatcagg ggctcgcgcc 2640
   agccgaactg ttcgccaggc tcaaggcgcg catgcccgac ggcgaggatc tcgtcgtgac 2700
   ccatggcgat gcctgcttgc cgaatatcat ggtggaaaat ggccgctttt ctggattcat 2760
   cgactgtggc cggctgggtg tggcggaccg ctatcaggac atagcgttgg ctacccgtga 2820
   tattgctgaa gagcttggcg gcgaatgggc tgaccgcttc ctcgtgcttt acggtatcgc 2880
   cgctcccgat tcgcagcgca tcgccttcta tcgccttctt gacgagttct tctgagcggg 2940
   actctggggt tcgaaatgac cgaccaagcg acgcccaacc tgccatcacg agatttcgat 3000
   tccaccgccg ccttctatga aaggttgggc ttcggaatcg ttttccggga cgccggctgg 3060
   atgatcctcc agcgcgggga tctcatgctg gagttcttcg cccaccccaa cttgtttatt 3120
   gcagcttata atggttacaa ataaagcaat agcatcacaa atttcacaaa taaagcattt 3180
   ttttcactgc attctagttg tggtttgtcc aaactcatca atgtatctta tcatgtctgt 3240
   ataccgtcga cctctagcta gagcttggcg taatcatggt catagctgtt tcctgtgtga 3300
   aattgttatc cgctcacaat tccacacaac atacgagccg gaagcataaa gtgtaaagcc 3360
   tggggtgcct aatgagtgag ctaactcaca ttaattgcgt tgcgctcact gcccgctttc 3420
   cagtcgggaa acctgtcgtg ccagctgcat taatgaatcg gccaacgcgc ggggagaggc 3480
   ggtttgcgta ttgggcgctc ttccgcttcc tcgctcactg actcgctgcg ctcggtcgtt 3540
   cggctgcggc gagcggtatc agctcactca aaggcggtaa tacggttatc cacagaatca 3600
   ggggataacg caggaaagaa catgtgagca aaaggccagc aaaaggccag gaaccgtaaa 3660
   aaggccgcgt tgctggcgtt tttccatagg ctccgccccc ctgacgagca tcacaaaaat 3720
   cgacgctcaa gtcagaggtg gcgaaacccg acaggactat aaagatacca ggcgtttccc 3780
   cctggaagct ccctcgtgcg ctctcctgtt ccgaccctgc cgcttaccgg atacctgtcc 3840
   gcctttctcc cttcgggaag cgtggcgctt tctcatagct cacgctgtag gtatctcagt 3900
   tcggtgtagg tcgttcgctc caagctgggc tgtgtgcacg aaccccccgt tcagcccgac 3960
   cgctgcgcct tatccggtaa ctatcgtctt gagtccaacc cggtaagaca cgacttatcg 4020
   ccactggcag cagccactgg taacaggatt agcagagcga ggtatgtagg cggtgctaca 4080
   gagttcttga agtggtggcc taactacggc tacactagaa gaacagtatt tggtatctgc 4140
   gctctgctga agccagttac cttcggaaaa agagttggta gctcttgatc cggcaaacaa 4200
   accaccgctg gtagcggttt ttttgtttgc aagcagcaga ttacgcgcag aaaaaaagga 4260
   tctcaagaag atcctttgat cttttctacg gggtctgacg ctcagtggaa cgaaaactca 4320
   cgttaaggga ttttggtcat gagattatca aaaaggatct tcacctagat ccttttaaat 4380
   taaaaatgaa gttttaaatc aatctaaagt atatatgagt aaacttggtc tgacagttac 4440
   caatgcttaa tcagtgaggc acctatctca gcgatctgtc tatttcgttc atccatagtt 4500
   gcctgactcc ccgtcgtgta gataactacg atacgggagg gcttaccatc tggccccagt 4560
   gctgcaatga taccgcgaga cccacgctca ccggctccag atttatcagc aataaaccag 4620
   ccagccggaa gggccgagcg cagaagtggt cctgcaactt tatccgcctc catccagtct 4680
   attaattgtt gccgggaagc tagagtaagt agttcgccag ttaatagttt gcgcaacgtt 4740
   gttgccattg ctacaggcat cgtggtgtca cgctcgtcgt ttggtatggc ttcattcagc 4800
   tccggttccc aacgatcaag gcgagttaca tgatccccca tgttgtgcaa aaaagcggtt 4860
   agctccttcg gtcctccgat cgttgtcaga agtaagttgg ccgcagtgtt atcactcatg 4920
   gttatggcag cactgcataa ttctcttact gtcatgccat ccgtaagatg cttttctgtg 4980
   actggtgagt actcaaccaa gtcattctga gaatagtgta tgcggcgacc gagttgctct 5040
   tgcccggcgt caatacggga taataccgcg ccacatagca gaactttaaa agtgctcatc 5100
   attggaaaac gttcttcggg gcgaaaactc tcaaggatct taccgctgtt gagatccagt 5160
   tcgatgtaac ccactcgtgc acccaactga tcttcagcat cttttacttt caccagcgtt 5220
   tctgggtgag caaaaacagg aaggcaaaat gccgcaaaaa agggaataag ggcgacacgg 5280
   aaatgttgaa tactcatact cttccttttt caatattatt gaagcattta tcagggttat 5340
   tgtctcatga gcggatacat atttgaatgt atttagaaaa ataaacaaat aggggttccg 5400
   cgcacatttc cccgaaaagt gccacctgac gtcgacggat cgggagatct cccgatcccc 5460
   tatggtgcac tctcagtaca atctgctctg atgccgcata gttaagccag tatctgctcc 5520
   ctgcttgtgt gttggaggtc gctgagtagt gcgcgagcaa aatttaagct acaacaaggc 5580
   aaggcttgac cgacaattgc atgaagaatc tgcttagggt taggcgtttt gcgctgcttc 5640
   gctaggtggt caatattggc cattagccat attattcatt ggttatatag cataaatcaa 5700
   tattggctat tggccattgc atacgttgta tccatatcat aatatgtaca tttatattgg 5760
   ctcatgtcca acattaccgc catgttgaca ttgattattg actagttatt aatagtaatc 5820
   aattacgggg tcattagttc atagcccata tatggagttc cgcgttacat aacttacggt 5880
   aaatggcccg cctggctgac cgcccaacga cccccgccca ttgacgtcaa taatgacgta 5940
   tgttcccata gtaacgccaa tagggacttt ccattgacgt caatgggtgg agtatttacg 6000
   gtaaactgcc cacttggcag tacatcaagt gtatcatatg ccaagtacgc cccctattga 6060
   cgtcaatgac ggtaaatggc ccgcctggca ttatgcccag tacatgacct tatgggactt 6120
   tcctacttgg cagtacatct acgtattagt catcgctatt accatggtga tgcggttttg 6180
   gcagtacatc aatgggcgtg gatagcggtt tgactcacgg ggatttccaa gtctccaccc 6240
   cattgacgtc aatgggagtt tgttttggca ccaaaatcaa cgggactttc caaaatgtcg 6300
   taacaactcc gccccattga cgcaaatggg cggtaggcgt gtacggtggg aggtctatat 6360
   aagcagagct cgtttagtga accgtcagat cgcctggaga cgccatccac gctgttttga 6420
   cctccataga agacaccggg accgatccag cctccgcggc cgggaacggt gcattggaag 6480
   ctggcctgga tggcctgact ctcttaggta gccttgcaga agttggtcgt gaggcactgg 6540
   gcaggtaagt atcaaggtta caagacaggt ttaaggagat caatagaaac tgggcttgtc 6600
   gagacagaga agactcttgc gtttctgata ggcacctatt ggtcttactg acatccactt 6660
   tgcctttctc tccacaggtg tccactccca gttcaattac agctcgccac catggcctgc 6720
   cccggcttcc tgtgggccct ggtgatcagc acctgcctgg 6760

<210> 92
   <211> 6267
   <212> DNA
   <213> Artificial sequence
<220>
   <223> Vector pSyn-C05-Ckappa
<400> 92
   gacggatcgg gagatctccc gatcccctat ggtgcactct cagtacaatc tgctctgatg 60
   ccgcatagtt aagccagtat ctgctccctg cttgtgtgtt ggaggtcgct gagtagtgcg 120
   cgagcaaaat ttaagctaca acaaggcaag gcttgaccga caattgttaa ttaacatgaa 180
   gaatctgctt agggttaggc gttttgcgct gcttcgctag gtggtcaata ttggccatta 240
   gccatattat tcattggtta tatagcataa atcaatattg gctattggcc attgcatacg 300
   ttgtatccat atcataatat gtacatttat attggctcat gtccaacatt accgccatgt 360
   tgacattgat tattgactag ttattaatag taatcaatta cggggtcatt agttcatagc 420
   ccatatatgg agttccgcgt tacataactt acggtaaatg gcccgcctgg ctgaccgccc 480
   aacgaccccc gcccattgac gtcaataatg acgtatgttc ccatagtaac gccaataggg 540
   actttccatt gacgtcaatg ggtggagtat ttacggtaaa ctgcccactt ggcagtacat 600
   caagtgtatc atatgccaag tacgccccct attgacgtca atgacggtaa atggcccgcc 660
   tggcattatg cccagtacat gaccttatgg gactttccta cttggcagta catctacgta 720
   ttagtcatcg ctattaccat ggtgatgcgg ttttggcagt acatcaatgg gcgtggatag 780
   cggtttgact cacggggatt tccaagtctc caccccattg acgtcaatgg gagtttgttt 840
   tggcaccaaa atcaacggga ctttccaaaa tgtcgtaaca actccgcccc attgacgcaa 900
   atgggcggta ggcgtgtacg gtgggaggtc tatataagca gagctcgttt agtgaaccgt 960
   cagatcgcct ggagacgcca tccacgctgt tttgacctcc atagaagaca ccgggaccga 1020
   tccagcctcc gcggccggga acggtgcatt ggaatcgatg actctcttag gtagccttgc 1080
   agaagttggt cgtgaggcac tgggcaggta agtatcaagg ttacaagaca ggtttaagga 1140
   gatcaataga aactgggctt gtcgagacag agaagactct tgcgtttctg ataggcacct 1200
   attggtctta ctgacatcca ctttgccttt ctctccacag gtgtccactc ccagttcaat 1260
   tacagctcgc caccatggcc tgccccggct tcctgtgggc cctggtgatc agcacctgcc 1320
   tcgagttcag cggccctaag cggaccgtgg ccgctcccag cgtgttcatc ttccccccct 1380
   ccgacgagca gctgaagagc ggcaccgcca gcgtggtgtg cctgctgaac aacttctacc 1440
   cccgggaggc caaggtgcag tggaaggtgg acaacgccct gcagagcggc aacagccagg 1500
   agagcgtgac cgagcaggac agcaaggact ccacctacag cctgagcagc accctcaccc 1560
   tgagcaaggc cgactacgag aagcacaagg tgtacgcctg cgaggtgacc caccagggcc 1620
   tgagcagccc cgtgaccaag agcttcaacc ggggcgagtg ttaatagact taagtttaaa 1680
   ccgctgatca gcctcgactg tgccttctag ttgccagcca tctgttgttt gcccctcccc 1740
   cgtgccttcc ttgaccctgg aaggtgccac tcccactgtc ctttcctaat aaaatgagga 1800
   aattgcatcg cattgtctga gtaggtgtca ttctattctg gggggtgggg tggggcagga 1860
   cagcaagggg gaggattggg aagacaatag caggcatgct ggggatgcgg tgggctctat 1920
   ggcttctgag gcggaaagaa ccagctgggg ctctaggggg tatccccacg cgccctgtag 1980
   cggcgcatta agcgcggcgg gtgtggtggt tacgcgcagc gtgaccgcta cacttgccag 2040
   cgccctagcg cccgctcctt tcgctttctt cccttccttt ctcgccacgt tcgccggctt 2100
   tccccgtcaa gctctaaatc gggggctccc tttagggttc cgatttagtg ctttacggca 2160
   cctcgacccc aaaaaacttg attagggtga tggttcacgt agtgggccat cgccctgata 2220
   gacggttttt cgccctttga cgttggagtc cacgttcttt aatagtggac tcttgttcca 2280
   aactggaaca acactcaacc ctatctcggt ctattctttt gatttataag ggattttggc 2340
   catttcggcc tattggttaa aaaatgagct gatttaacaa aaatttaacg cgaattaatt 2400
   ctgtggaatg tgtgtcagtt agggtgtgga aagtccccag gctccccagc aggcagaagt 2460
   atgcaaagca tgcatctcaa ttagtcagca accaggtgtg gaaagtcccc aggctcccca 2520
   gcaggcagaa gtatgcaaag catgcatctc aattagtcag caaccatagt cccgccccta 2580
   actccgccca tcccgcccct aactccgccc agttccgccc attctccgcc ccatggctga 2640
   ctaatttttt ttatttatgc agaggccgag gccgcctctg cctctgagct attccagaag 2700
   tagtgaggag gcttttttgg aggcctaggc ttttgcaaaa agctcccggg agcttgtata   2760
   tccattttcg gatctgatca gcacgtgatg aaaaagcctg aactcaccgc gacgtctgtc   2820
   gagaagtttc tgatcgaaaa gttcgacagc gtctccgacc tgatgcagct ctcggagggc   2880
   gaagaatctc gtgctttcag cttcgatgta ggagggcgtg gatatgtcct gcgggtaaat   2940
   agctgcgccg atggtttcta caaagatcgt tatgtttatc ggcactttgc atcggccgcg   3000
   ctcccgattc cggaagtgct tgacattggg gaattcagcg agagcctgac ctattgcatc   3060
   tcccgccgtg cacagggtgt cacgttgcaa gacctgcctg aaaccgaact gcccgctgtt   3120
   ctgcagccgg tcgcggaggc catggatgcg atcgctgcgg ccgatcttag ccagacgagc   3180
   gggttcggcc cattcggacc acaaggaatc ggtcaataca ctacatggcg tgatttcata   3240
   tgcgcgattg ctgatcccca tgtgtatcac tggcaaactg tgatggacga caccgtcagt   3300
   gcgtccgtcg cgcaggctct cgatgagctg atgctttggg ccgaggactg ccccgaagtc   3360
   cggcacctcg tgcacgcgga tttcggctcc aacaatgtcc tgacggacaa tggccgcata   3420
   acagcggtca ttgactggag cgaggcgatg ttcggggatt cccaatacga ggtcgccaac   3480
   atcttcttct ggaggccgtg gttggcttgt atggagcagc agacgcgcta cttcgagcgg   3540
   aggcatccgg agcttgcagg atcgccgcgg ctccgggcgt atatgctccg cattggtctt   3600
   gaccaactct atcagagctt ggttgacggc aatttcgatg atgcagcttg ggcgcagggt   3660
   cgatgcgacg caatcgtccg atccggagcc gggactgtcg ggcgtacaca aatcgcccgc   3720
   agaagcgcgg ccgtctggac cgatggctgt gtagaagtac tcgccgatag tggaaaccga   3780
   cgccccagca ctcgtccgag ggcaaaggaa tagcacgtgc tacgagattt cgattccacc   3840
   gccgccttct atgaaaggtt gggcttcgga atcgttttcc gggacgccgg ctggatgatc   3900
   ctccagcgcg gggatctcat gctggagttc ttcgcccacc ccaacttgtt tattgcagct   3960
   tataatggtt acaaataaag caatagcatc acaaatttca caaataaagc atttttttca   4020
   ctgcattcta gttgtggttt gtccaaactc atcaatgtat cttatcatgt ctgtataccg   4080
   tcgacctcta gctagagctt ggcgtaatca tggtcatagc tgtttcctgt gtgaaattgt   4140
   tatccgctca caattccaca caacatacga gccggaagca taaagtgtaa agcctggggt   4200
   gcctaatgag tgagctaact cacattaatt gcgttgcgct cactgcccgc tttccagtcg   4260
   ggaaacctgt cgtgccagct gcattaatga atcggccaac gcgcggggag aggcggtttg   4320
   cgtattgggc gctcttccgc ttcctcgctc actgactcgc tgcgctcggt cgttcggctg   4380
   cggcgagcgg tatcagctca ctcaaaggcg gtaatacggt tatccacaga atcaggggat   4440
   aacgcaggaa agaacatgtg agcaaaaggc cagcaaaagg ccaggaaccg taaaaaggcc   4500
   gcgttgctgg cgtttttcca taggctccgc ccccctgacg agcatcacaa aaatcgacgc   4560
   tcaagtcaga ggtggcgaaa cccgacagga ctataaagat accaggcgtt tccccctgga    4620
   agctccctcg tgcgctctcc tgttccgacc ctgccgctta ccggatacct gtccgccttt    4680
   ctcccttcgg gaagcgtggc gctttctcat agctcacgct gtaggtatct cagttcggtg    4740
   taggtcgttc gctccaagct gggctgtgtg cacgaacccc ccgttcagcc cgaccgctgc    4800
   gccttatccg gtaactatcg tcttgagtcc aacccggtaa gacacgactt atcgccactg    4860
   gcagcagcca ctggtaacag gattagcaga gcgaggtatg taggcggtgc tacagagttc    4920
   ttgaagtggt ggcctaacta cggctacact agaagaacag tatttggtat ctgcgctctg    4980
   ctgaagccag ttaccttcgg aaaaagagtt ggtagctctt gatccggcaa acaaaccacc    5040
   gctggtagcg gtttttttgt ttgcaagcag cagattacgc gcagaaaaaa aggatctcaa    5100
   gaagatcctt tgatcttttc tacggggtct gacgctcagt ggaacgaaaa ctcacgttaa    5160
   gggattttgg tcatgagatt atcaaaaagg atcttcacct agatcctttt aaattaaaaa    5220
   tgaagtttta aatcaatcta aagtatatat gagtaaactt ggtctgacag ttaccaatgc    5280
   ttaatcagtg aggcacctat ctcagcgatc tgtctatttc gttcatccat agttgcctga    5340
   ctccccgtcg tgtagataac tacgatacgg gagggcttac catctggccc cagtgctgca    5400
   atgataccgc gagacccacg ctcaccggct ccagatttat cagcaataaa ccagccagcc    5460
   ggaagggccg agcgcagaag tggtcctgca actttatccg cctccatcca gtctattaat    5520
   tgttgccggg aagctagagt aagtagttcg ccagttaata gtttgcgcaa cgttgttgcc    5580
   attgctacag gcatcgtggt gtcacgctcg tcgtttggta tggcttcatt cagctccggt    5640
   tcccaacgat caaggcgagt tacatgatcc cccatgttgt gcaaaaaagc ggttagctcc    5700
   ttcggtcctc cgatcgttgt cagaagtaag ttggccgcag tgttatcact catggttatg    5760
   gcagcactgc ataattctct tactgtcatg ccatccgtaa gatgcttttc tgtgactggt    5820
   gagtactcaa ccaagtcatt ctgagaatag tgtatgcggc gaccgagttg ctcttgcccg    5880
   gcgtcaatac gggataatac cgcgccacat agcagaactt taaaagtgct catcattgga    5940
   aaacgttctt cggggcgaaa actctcaagg atcttaccgc tgttgagatc cagttcgatg    6000
   taacccactc gtgcacccaa ctgatcttca gcatctttta ctttcaccag cgtttctggg    6060
   tgagcaaaaa caggaaggca aaatgccgca aaaaagggaa taagggcgac acggaaatgt    6120
   tgaatactca tactcttcct ttttcaatat tattgaagca tttatcaggg ttattgtctc    6180
   atgagcggat acatatttga atgtatttag aaaaataaac aaataggggt tccgcgcaca    6240
   tttccccgaa aagtgccacc tgacgtc                                        6267
<210> 93
   <211> 6283
   <212> DNA
   <213> Artificial sequence
<220>
   <223> Vector pSyn-C04-Clambda
<400> 93
   gacggatcgg gagatctccc gatcccctat ggtgcactct cagtacaatc tgctctgatg     60
   ccgcatagtt aagccagtat ctgctccctg cttgtgtgtt ggaggtcgct gagtagtgcg    120
   cgagcaaaat ttaagctaca acaaggcaag gcttgaccga caattgttaa ttaacatgaa    180
   gaatctgctt agggttaggc gttttgcgct gcttcgctag gtggtcaata ttggccatta    240
   gccatattat tcattggtta tatagcataa atcaatattg gctattggcc attgcatacg    300
   ttgtatccat atcataatat gtacatttat attggctcat gtccaacatt accgccatgt    360
   tgacattgat tattgactag ttattaatag taatcaatta cggggtcatt agttcatagc    420
   ccatatatgg agttccgcgt tacataactt acggtaaatg gcccgcctgg ctgaccgccc    480
   aacgaccccc gcccattgac gtcaataatg acgtatgttc ccatagtaac gccaataggg    540
   actttccatt gacgtcaatg ggtggagtat ttacggtaaa ctgcccactt ggcagtacat    600
   caagtgtatc atatgccaag tacgccccct attgacgtca atgacggtaa atggcccgcc    660
   tggcattatg cccagtacat gaccttatgg gactttccta cttggcagta catctacgta    720
   ttagtcatcg ctattaccat ggtgatgcgg ttttggcagt acatcaatgg gcgtggatag    780
   cggtttgact cacggggatt tccaagtctc caccccattg acgtcaatgg gagtttgttt    840
   tggcaccaaa atcaacggga ctttccaaaa tgtcgtaaca actccgcccc attgacgcaa    900
   atgggcggta ggcgtgtacg gtgggaggtc tatataagca gagctcgttt agtgaaccgt    960
   cagatcgcct ggagacgcca tccacgctgt tttgacctcc atagaagaca ccgggaccga   1020
   tccagcctcc gcggccggga acggtgcatt ggaatcgatg actctcttag gtagccttgc   1080
   agaagttggt cgtgaggcac tgggcaggta agtatcaagg ttacaagaca ggtttaagga   1140
   gatcaataga aactgggctt gtcgagacag agaagactct tgcgtttctg ataggcacct   1200
   attggtctta ctgacatcca ctttgccttt ctctccacag gtgtccactc ccagttcaat   1260
   tacagctcgc caccatggcc tgccccggct tcctgtgggc cctggtgatc agcacctgcc   1320
   tcgagatccc cggaccgcgg ccgcaagctt accgtgctgg gccagcccaa ggccgctccc   1380
   agcgtgaccc tgttcccccc ctcctccgag gagctgcagg ccaacaaggc caccctggtg   1440
   tgcctcatca gcgacttcta ccctggcgcc gtgaccgtgg cctggaaggc cgacagcagc   1500
   cccgtgaagg ccggcgtgga gaccaccacc cccagcaagc agagcaacaa caagtacgcc   1560
   gccagcagct acctgagcct cacccccgag cagtggaaga gccaccggag ctacagctgc 1620
   caggtgaccc acgagggcag caccgtggag aagaccgtgg cccccaccga gtgcagctaa 1680
   tagacttaag tttaaaccgc tgatcagcct cgactgtgcc ttctagttgc cagccatctg 1740
   ttgtttgccc ctcccccgtg ccttccttga ccctggaagg tgccactccc actgtccttt 1800
   cctaataaaa tgaggaaatt gcatcgcatt gtctgagtag gtgtcattct attctggggg 1860
   gtggggtggg gcaggacagc aagggggagg attgggaaga caatagcagg catgctgggg 1920
   atgcggtggg ctctatggct tctgaggcgg aaagaaccag ctggggctct agggggtatc 1980
   cccacgcgcc ctgtagcggc gcattaagcg cggcgggtgt ggtggttacg cgcagcgtga 2040
   ccgctacact tgccagcgcc ctagcgcccg ctcctttcgc tttcttccct tcctttctcg 2100
   ccacgttcgc cggctttccc cgtcaagctc taaatcgggg gctcccttta gggttccgat 2160
   ttagtgcttt acggcacctc gaccccaaaa aacttgatta gggtgatggt tcacgtagtg 2220
   ggccatcgcc ctgatagacg gtttttcgcc ctttgacgtt ggagtccacg ttctttaata 2280
   gtggactctt gttccaaact ggaacaacac tcaaccctat ctcggtctat tcttttgatt 2340
   tataagggat tttggccatt tcggcctatt ggttaaaaaa tgagctgatt taacaaaaat 2400
   ttaacgcgaa ttaattctgt ggaatgtgtg tcagttaggg tgtggaaagt ccccaggctc 2460
   cccagcaggc agaagtatgc aaagcatgca tctcaattag tcagcaacca ggtgtggaaa 2520
   gtccccaggc tccccagcag gcagaagtat gcaaagcatg catctcaatt agtcagcaac 2580
   catagtcccg cccctaactc cgcccatccc gcccctaact ccgcccagtt ccgcccattc 2640
   tccgccccat ggctgactaa ttttttttat ttatgcagag gccgaggccg cctctgcctc 2700
   tgagctattc cagaagtagt gaggaggctt ttttggaggc ctaggctttt gcaaaaagct 2760
   cccgggagct tgtatatcca ttttcggatc tgatcagcac gtgatgaaaa agcctgaact 2820
   caccgcgacg tctgtcgaga agtttctgat cgaaaagttc gacagcgtct ccgacctgat 2880
   gcagctctcg gagggcgaag aatctcgtgc tttcagcttc gatgtaggag ggcgtggata 2940
   tgtcctgcgg gtaaatagct gcgccgatgg tttctacaaa gatcgttatg tttatcggca 3000
   ctttgcatcg gccgcgctcc cgattccgga agtgcttgac attggggaat tcagcgagag 3060
   cctgacctat tgcatctccc gccgtgcaca gggtgtcacg ttgcaagacc tgcctgaaac 3120
   cgaactgccc gctgttctgc agccggtcgc ggaggccatg gatgcgatcg ctgcggccga 3180
   tcttagccag acgagcgggt tcggcccatt cggaccgcaa ggaatcggtc aatacactac 3240
   atggcgtgat ttcatatgcg cgattgctga tccccatgtg tatcactggc aaactgtgat 3300
   ggacgacacc gtcagtgcgt ccgtcgcgca ggctctcgat gagctgatgc tttgggccga 3360
   ggactgcccc gaagtccggc acctcgtgca cgcggatttc ggctccaaca atgtcctgac 3420
   ggacaatggc cgcataacag cggtcattga ctggagcgag gcgatgttcg gggattccca 3480
   atacgaggtc gccaacatct tcttctggag gccgtggttg gcttgtatgg agcagcagac   3540
   gcgctacttc gagcggaggc atccggagct tgcaggatcg ccgcggctcc gggcgtatat   3600
   gctccgcatt ggtcttgacc aactctatca gagcttggtt gacggcaatt tcgatgatgc   3660
   agcttgggcg cagggtcgat gcgacgcaat cgtccgatcc ggagccggga ctgtcgggcg   3720
   tacacaaatc gcccgcagaa gcgcggccgt ctggaccgat ggctgtgtag aagtactcgc   3780
   cgatagtgga aaccgacgcc ccagcactcg tccgagggca aaggaatagc acgtgctacg   3840
   agatttcgat tccaccgccg ccttctatga aaggttgggc ttcggaatcg ttttccggga   3900
   cgccggctgg atgatcctcc agcgcgggga tctcatgctg gagttcttcg cccaccccaa   3960
   cttgtttatt gcagcttata atggttacaa ataaagcaat agcatcacaa atttcacaaa   4020
   taaagcattt ttttcactgc attctagttg tggtttgtcc aaactcatca atgtatctta   4080
   tcatgtctgt ataccgtcga cctctagcta gagcttggcg taatcatggt catagctgtt   4140
   tcctgtgtga aattgttatc cgctcacaat tccacacaac atacgagccg gaagcataaa   4200
   gtgtaaagcc tggggtgcct aatgagtgag ctaactcaca ttaattgcgt tgcgctcact   4260
   gcccgctttc cagtcgggaa acctgtcgtg ccagctgcat taatgaatcg gccaacgcgc   4320
   ggggagaggc ggtttgcgta ttgggcgctc ttccgcttcc tcgctcactg actcgctgcg   4380
   ctcggtcgtt cggctgcggc gagcggtatc agctcactca aaggcggtaa tacggttatc   4440
   cacagaatca ggggataacg caggaaagaa catgtgagca aaaggccagc aaaaggccag   4500
   gaaccgtaaa aaggccgcgt tgctggcgtt tttccatagg ctccgccccc ctgacgagca   4560
   tcacaaaaat cgacgctcaa gtcagaggtg gcgaaacccg acaggactat aaagatacca   4620
   ggcgtttccc cctggaagct ccctcgtgcg ctctcctgtt ccgaccctgc cgcttaccgg   4680
   atacctgtcc gcctttctcc cttcgggaag cgtggcgctt tctcatagct cacgctgtag   4740
   gtatctcagt tcggtgtagg tcgttcgctc caagctgggc tgtgtgcacg aaccccccgt   4800
   tcagcccgac cgctgcgcct tatccggtaa ctatcgtctt gagtccaacc cggtaagaca   4860
   cgacttatcg ccactggcag cagccactgg taacaggatt agcagagcga ggtatgtagg   4920
   cggtgctaca gagttcttga agtggtggcc taactacggc tacactagaa gaacagtatt   4980
   tggtatctgc gctctgctga agccagttac cttcggaaaa agagttggta gctcttgatc   5040
   cggcaaacaa accaccgctg gtagcggttt ttttgtttgc aagcagcaga ttacgcgcag   5100
   aaaaaaagga tctcaagaag atcctttgat cttttctacg gggtctgacg ctcagtggaa   5160
   cgaaaactca cgttaaggga ttttggtcat gagattatca aaaaggatct tcacctagat   5220
   ccttttaaat taaaaatgaa gttttaaatc aatctaaagt atatatgagt aaacttggtc   5280
   tgacagttac caatgcttaa tcagtgaggc acctatctca gcgatctgtc tatttcgttc   5340
   atccatagtt gcctgactcc ccgtcgtgta gataactacg atacgggagg gcttaccatc 5400
   tggccccagt gctgcaatga taccgcgaga cccacgctca ccggctccag atttatcagc 5460
   aataaaccag ccagccggaa gggccgagcg cagaagtggt cctgcaactt tatccgcctc 5520
   catccagtct attaattgtt gccgggaagc tagagtaagt agttcgccag ttaatagttt 5580
   gcgcaacgtt gttgccattg ctacaggcat cgtggtgtca cgctcgtcgt ttggtatggc 5640
   ttcattcagc tccggttccc aacgatcaag gcgagttaca tgatccccca tgttgtgcaa 5700
   aaaagcggtt agctccttcg gtcctccgat cgttgtcaga agtaagttgg ccgcagtgtt 5760
   atcactcatg gttatggcag cactgcataa ttctcttact gtcatgccat ccgtaagatg 5820
   cttttctgtg actggtgagt actcaaccaa gtcattctga gaatagtgta tgcggcgacc 5880
   gagttgctct tgcccggcgt caatacggga taataccgcg ccacatagca gaactttaaa 5940
   agtgctcatc attggaaaac gttcttcggg gcgaaaactc tcaaggatct taccgctgtt 6000
   gagatccagt tcgatgtaac ccactcgtgc acccaactga tcttcagcat cttttacttt 6060
   caccagcgtt tctgggtgag caaaaacagg aaggcaaaat gccgcaaaaa agggaataag 6120
   ggcgacacgg aaatgttgaa tactcatact cttccttttt caatattatt gaagcattta 6180
   tcagggttat tgtctcatga gcggatacat atttgaatgt atttagaaaa ataaacaaat 6240
   aggggttccg cgcacatttc cccgaaaagt gccacctgac gtc 6283
<210> 94
   <211> 47
<212> DNA
   <213> Artificial sequence
<220>
   <223> Oligonucleotide 5K-G
<400> 94
   acctgtctcg agttttccat ggctgacatc gtgatgaccc agtctcc 47
<210> 95
   <211> 42
   <212> DNA
   <213> Artificial sequence
<220>
   <223> Oligonucleotide sy3K-F
<400> 95
   gctgggggcg gccacggtcc gcttgatctc caccttggtc cc 42
<210> 96
   <211> 44
   <212> DNA
   <213> Artificial sequence
<220>
   <223> Oligonucleotide 5K-B
<400> 96
   acctgtctcg agttttccat ggctgacatc cagatgaccc agtc 44
<210> 97
   <211> 49
   <212> DNA
   <213> Artificial sequence
<220>
   <223> Oligonucleotide 5K-J
<400> 97
   acctgtctcg agttttccat ggctgacatc gtgatgaccc agtctccag 49
<210> 98
   <211> 52
   <212> DNA
   <213> Artificial sequence
<220>
   <223> Oligonucleotide 5L-B
<400> 98
   acctgtctcg agttttccat ggctcagtcc gccctgaccc agccccgctc ag 52
<210> 99
   <211> 28
   <212> DNA
   <213> Artificial sequence
<220>
   <223> Oligonucleotide sy3L-E
<400> 99
   ccagcacggt aagcttggtc ccagttcc 28
<210> 100
   <211> 44
   <212> DNA
   <213> Artificial sequence
<220>
   <223> Oligonucleotide 5L-G
<400> 100
   acctgtctcg agttttccat ggcttcctac gtgctgactc agcc 44
<210> 101
   <211> 28
   <212> DNA
   <213> Artificial sequence
<220>
   <223> Oligonucleotide sy3L-Cmod
<400> 101
   ccagcacggt aagcttggtg cctccgcc 28
<210> 102
   <211> 52
   <212> DNA
   <213> Artificial sequence
<220>
   <223> Oligonucleotide 5L-C
<400> 102
   acctgtctcg agttttccat ggctcagtcc gtgctgaccc agcctccctc ag 52
<210> 103
   <211> 47
   <212> DNA
   <213> Artificial sequence
<220>
   <223> Oligonucleotide 5H-H
<400> 103
   acctgtcttg aattctccat ggccgaggtg cagctggtgc agtctgg 47
<210> 104
   <211> 47
   <212> DNA
   <213> Artificial sequence
<220>
   <223> Oligonucleotide sy3H-A
<400> 104
   gcccttggtg ctagcgctgg agacggtcac cagggtgccc tggcccc 47
<210> 105
   <211> 47
   <212> DNA
   <213> Artificial sequence
<220>
   <223> Oligonucleotide sy3H-C
<400> 105
   gcccttggtg ctagcgctgg agacggtcac ggtggtgccc tggcccc 47
<210> 106
   <211> 47
   <212> DNA
   <213> Artificial sequence
<220>
   <223> Oligonucleotide 5H-C
<400> 106
   acctgtcttg aattctccat ggcccaggtg cagctggtgg agtctgg 47
<210> 107
   <211> 47
   <212> DNA
   <213> Artificial sequence
<220>
   <223> Oligonucleotide 5H-A
<400> 107
   acctgtcttg aattctccat ggcccaggtg cagctggtgc agtctgg 47
<210> 108
   <211> 47
   <212> DNA
   <213> Artificial sequence
<220>
   <223> Oligonucleotide 5H-N
<400> 108
   acctgtcttg aattctccat ggcccagatc accttgaagg agtctgg 47
<210> 109
   <211> 47
   <212> DNA
   <213> Artificial sequence
<220>
   <223> Oligonucleotide sy3H-D
<400> 109
   gcccttggtg ctagcgctgg acacggtcac catggtgccc tggcccc 47
<210> 110
   <211> 10515
   <212> DNA
   <213> Artificial sequence
<220>
   <223> pIg-C911-HCgammal
   <220>
   <221> misc_feature
   <222> (1326)..(5076)
   <223> Stuffer
<400> 110
   tcgacggatc gggagatctc ccgatcccct atggtgcact ctcagtacaa tctgctctga      60
   tgccgcatag ttaagccagt atctgctccc tgcttgtgtg ttggaggtcg ctgagtagtg     120
   cgcgagcaaa atttaagcta caacaaggca aggcttgacc gacaattgca tgaagaatct     180
   gcttagggtt aggcgttttg cgctgcttcg ctaggtggtc aatattggcc attagccata     240
   ttattcattg gttatatagc ataaatcaat attggctatt ggccattgca tacgttgtat     300
   ccatatcata atatgtacat ttatattggc tcatgtccaa cattaccgcc atgttgacat     360
   tgattattga ctagttatta atagtaatca attacggggt cattagttca tagcccatat     420
   atggagttcc gcgttacata acttacggta aatggcccgc ctggctgacc gcccaacgac     480
   ccccgcccat tgacgtcaat aatgacgtat gttcccatag taacgccaat agggactttc     540
   cattgacgtc aatgggtgga gtatttacgg taaactgccc acttggcagt acatcaagtg     600
   tatcatatgc caagtacgcc ccctattgac gtcaatgacg gtaaatggcc cgcctggcat     660
   tatgcccagt acatgacctt atgggacttt cctacttggc agtacatcta cgtattagtc     720
   atcgctatta ccatggtgat gcggttttgg cagtacatca atgggcgtgg atagcggttt     780
   gactcacggg gatttccaag tctccacccc attgacgtca atgggagttt gttttggcac     840
   caaaatcaac gggactttcc aaaatgtcgt aacaactccg ccccattgac gcaaatgggc 900
   ggtaggcgtg tacggtggga ggtctatata agcagagctc gtttagtgaa ccgtcagatc 960
   gcctggagac gccatccacg ctgttttgac ctccatagaa gacaccggga ccgatccagc 1020
   ctccgcggcc gggaacggtg cattggaagc tggcctggat atcctgactc tcttaggtag 1080
   ccttgcagaa gttggtcgtg aggcactggg caggtaagta tcaaggttac aagacaggtt 1140
   taaggagatc aatagaaact gggcttgtcg agacagagaa gactcttgcg tttctgatag 1200
   gcacctattg gtcttactga catccacttt gcctttctct ccacaggtgt ccactcccag 1260
   ttcaattaca gctcgccacc atgggatgga gctgtatcat cctcttcttg gtactgctgc 1320
   tggcccagcc ggccagtgac cttgaccggt gcaccacttt tgatgatgtt caagctccta 1380
   attacactca acatacttca tctatgaggg gggtttacta tcctgatgaa atttttagat 1440
   cggacactct ttatttaact caggatttat ttcttccatt ttattctaat gttacagggt 1500
   ttcatactat taatcatacg tttggcaacc ctgtcatacc ttttaaggat ggtatttatt 1560
   ttgctgccac agagaaatca aatgttgtcc gtggttgggt tttgggttct accatgaaca 1620
   acaagtcaca gtcggtgatt attattaaca attctactaa tgttgttata cgagcatgta 1680
   actttgaatt gtgtgacaac cctttctttg ctgtttctaa acccatgggt acacagacac 1740
   atactatgat attcgataat gcatttaatt gcactttcga gtacatatct gatgcctttt 1800
   cgcttgatgt ttcagaaaag tcaggtaatt ttaaacactt acgagagttt gtgtttaaaa 1860
   ataaagatgg gtttctctat gtttataagg gctatcaacc tatagatgta gttcgtgatc 1920
   taccttctgg ttttaacact ttgaaaccta tttttaagtt gcctcttggt attaacatta 1980
   caaattttag agccattctt acagcctttt cacctgctca agacatttgg ggcacgtcag 2040
   ctgcagccta ttttgttggc tatttaaagc caactacatt tatgctcaag tatgatgaaa 2100
   atggtacaat cacagatgct gttgattgtt ctcaaaatcc acttgctgaa ctcaaatgct 2160
   ctgttaagag ctttgagatt gacaaaggaa tttaccagac ctctaatttc agggttgttc 2220
   cctcaggaga tgttgtgaga ttccctaata ttacaaactt gtgtcctttt ggagaggttt 2280
   ttaatgctac taaattccct tctgtctatg catgggagag aaaaaaaatt tctaattgtg 2340
   ttgctgatta ctctgtgctc tacaactcaa catttttttc aacctttaag tgctatggcg 2400
   tttctgccac taagttgaat gatctttgct tctccaatgt ctatgcagat tcttttgtag 2460
   tcaagggaga tgatgtaaga caaatagcgc caggacaaac tggtgttatt gctgattata 2520
   attataaatt gccagatgat ttcatgggtt gtgtccttgc ttggaatact aggaacattg 2580
   atgctacttc aactggtaat tataattata aatataggta tcttagacat ggcaagctta 2640
   ggccctttga gagagacata tctaatgtgc ctttctcccc tgatggcaaa ccttgcaccc 2700
   cacctgctct taattgttat tggccattaa atgattatgg tttttacacc actactggca 2760
   ttggctacca accttacaga gttgtagtac tttcttttga acttttaaat gcaccggcca 2820
   cggtttgtgg accaaaatta tccactgacc ttattaagaa ccagtgtgtc aattttaatt 2880
   ttaatggact cactggtact ggtgtgttaa ctccttcttc aaagagattt caaccatttc 2940
   aacaatttgg ccgtgatgtt tctgatttca ctgattccgt tcgagatcct aaaacatctg 3000
   aaatattaga catttcacct tgctcttttg ggggtgtaag tgtaattaca cctggaacaa 3060
   atgcttcatc tgaagttgct gttctatatc aagatgttaa ctgcactgat gtttctacag 3120
   caattcatgc agatcaactc acaccagctt ggcgcatata ttctactgga aacaatgtat 3180
   tccagactca ggcaggctgt cttataggag ctgagcatgt cgacacttct tatgagtgcg 3240
   acattcctat tggagctggc atttgtgcta gttaccatac agtttcttta ttacgtagta 3300
   ctagccaaaa atctattgtg gcttatacta tgtctttagg tgctgatagt tcaattgctt 3360
   actctaataa caccattgct atacctacta acttttcaat tagcattact acagaagtaa 3420
   tgcctgtttc tatggctaaa acctccgtag attgtaatat gtacatctgc ggagattcta 3480
   ctgaatgtgc taatttgctt ctccaatatg gtagcttttg cacacaacta aatcgtgcac 3540
   tctcaggtat tgctgctgaa caggatcgca acacacgtga agtgttcgct caagtcaaac 3600
   aaatgtacaa aaccccaact ttgaaatatt ttggtggttt taatttttca caaatattac 3660
   ctgaccctct aaagccaact aagaggtctt ttattgagga cttgctcttt aataaggtga 3720
   cactcgctga tgctggcttc atgaagcaat atggcgaatg cctaggtgat attaatgcta 3780
   gagatctcat ttgtgcgcag aagttcaatg gacttacagt gttgccacct ctgctcactg 3840
   atgatatgat tgctgcctac actgctgctc tagttagtgg tactgccact gctggatgga 3900
   catttggtgc tggcgctgct cttcaaatac cttttgctat gcaaatggca tataggttca 3960
   atggcattgg agttacccaa aatgttctct atgagaacca aaaacaaatc gccaaccaat 4020
   ttaacaaggc gattagtcaa attcaagaat cacttacaac aacatcaact gcattgggca 4080
   agctgcaaga cgttgttaac cagaatgctc aagcattaaa cacacttgtt aaacaactta 4140
   gctctaattt tggtgcaatt tcaagtgtgc taaatgatat cctttcgcga cttgataaag 4200
   tcgaggcgga ggtacaaatt gacaggttaa ttacaggcag acttcaaagc cttcaaacct 4260
   atgtaacaca acaactaatc agggctgctg aaatcagggc ttctgctaat cttgctgcta 4320
   ctaaaatgtc tgagtgtgtt cttggacaat caaaaagagt tgacttttgt ggaaagggct 4380
   accaccttat gtccttccca caagcagccc cgcatggtgt tgtcttccta catgtcacgt 4440
   atgtgccatc ccaggagagg aacttcacca cagcgccagc aatttgtcat gaaggcaaag 4500
   catacttccc tcgtgaaggt gtttttgtgt ttaatggcac ttcttggttt attacacaga 4560
   ggaacttctt ttctccacaa ataattacta cagacaatac atttgtctca ggaaattgtg 4620
   atgtcgttat tggcatcatt aacaacacag tttatgatcc tctgcaacct gagcttgact 4680
   cattcaaaga agagctggac aagtacttca aaaatcatac atcaccagat gttgattttg 4740
   gcgacatttc aggcattaac gcttctgtcg tcaacattca aaaagaaatt gaccgcctca 4800
   atgaggtcgc taaaaattta aatgaatcac tcattgacct tcaagaactg ggaaaatatg 4860
   agcaatatat taaatggcct ctcgacgaac aaaaactcat ctcagaagag gatctgaatg 4920
   ctgtgggcca ggacacgcag gaggtcatcg tggtgccaca ctccttgccc tttaaggtgg 4980
   tggtgatctc agccatcctg gccctggtgg tgctcaccat catctccctt atcatcctca 5040
   tcatgctttg gcagaagaag ccacgttagg cggccgctcg agtgctagca ccaagggccc 5100
   cagcgtgttc cccctggccc ccagcagcaa gagcaccagc ggcggcacag ccgccctggg 5160
   ctgcctggtg aaggactact tccccgagcc cgtgaccgtg agctggaaca gcggcgcctt 5220
   gaccagcggc gtgcacacct tccccgccgt gctgcagagc agcggcctgt acagcctgag 5280
   cagcgtggtg accgtgccca gcagcagcct gggcacccag acctacatct gcaacgtgaa 5340
   ccacaagccc agcaacacca aggtggacaa acgcgtggag cccaagagct gcgacaagac 5400
   ccacacctgc cccccctgcc ctgcccccga gctgctgggc ggaccctccg tgttcctgtt 5460
   cccccccaag cccaaggaca ccctcatgat cagccggacc cccgaggtga cctgcgtggt 5520
   ggtggacgtg agccacgagg accccgaggt gaagttcaac tggtacgtgg acggcgtgga 5580
   ggtgcacaac gccaagacca agccccggga ggagcagtac aacagcacct accgggtggt 5640
   gagcgtgctc accgtgctgc accaggactg gctgaacggc aaggagtaca agtgcaaggt 5700
   gagcaacaag gccctgcctg cccccatcga gaagaccatc agcaaggcca agggccagcc 5760
   ccgggagccc caggtgtaca ccctgccccc cagccgggag gagatgacca agaaccaggt 5820
   gtccctcacc tgtctggtga agggcttcta ccccagcgac atcgccgtgg agtgggagag 5880
   caacggccag cccgagaaca actacaagac caccccccct gtgctggaca gcgacggcag 5940
   cttcttcctg tacagcaagc tcaccgtgga caagagccgg tggcagcagg gcaacgtgtt 6000
   cagctgcagc gtgatgcacg aggccctgca caaccactac acccagaaga gcctgagcct 6060
   gagccccggc aagtgataat ctagagggcc cgtttaaacc cgctgatcag cctcgactgt 6120
   gccttctagt tgccagccat ctgttgtttg cccctccccc gtgccttcct tgaccctgga 6180
   aggtgccact cccactgtcc tttcctaata aaatgaggaa attgcatcgc attgtctgag 6240
   taggtgtcat tctattctgg ggggtggggt ggggcaggac agcaaggggg aggattggga 6300
   agacaatagc aggcatgctg gggatgcggt gggctctatg gcttctgagg cggaaagaac 6360
   cagctggggc tctagggggt atccccacgc gccctgtagc ggcgcattaa gcgcggcggg 6420
   tgtggtggtt acgcgcagcg tgaccgctac acttgccagc gccctagcgc ccgctccttt 6480
   cgctttcttc ccttcctttc tcgccacgtt cgccggcttt ccccgtcaag ctctaaatcg 6540
   ggggctccct ttagggttcc gatttagtgc tttacggcac ctcgacccca aaaaacttga    6600
   ttagggtgat ggttcacgta gtgggccatc gccctgatag acggtttttc gccctttgac    6660
   gttggagtcc acgttcttta atagtggact cttgttccaa actggaacaa cactcaaccc    6720
   tatctcggtc tattcttttg atttataagg gattttgccg atttcggcct attggttaaa    6780
   aaatgagctg atttaacaaa aatttaacgc gaattaattc tgtggaatgt gtgtcagtta    6840
   gggtgtggaa agtccccagg ctccccagca ggcagaagta tgcaaagcat gcatctcaat    6900
   tagtcagcaa ccaggtgtgg aaagtcccca ggctccccag caggcagaag tatgcaaagc    6960
   atgcatctca attagtcagc aaccatagtc ccgcccctaa ctccgcccat cccgccccta    7020
   actccgccca gttccgccca ttctccgccc catggctgac taattttttt tatttatgca    7080
   gaggccgagg ccgcctctgc ctctgagcta ttccagaagt agtgaggagg cttttttgga    7140
   ggcctaggct tttgcaaaaa gctcccggga gcttgtatat ccattttcgg atctgatcaa    7200
   gagacaggat gaggatcgtt tcgcatgatt gaacaagatg gattgcacgc aggttctccg    7260
   gccgcttggg tggagaggct attcggctat gactgggcac aacagacaat cggctgctct    7320
   gatgccgccg tgttccggct gtcagcgcag gggcgcccgg ttctttttgt caagaccgac    7380
   ctgtccggtg ccctgaatga actgcaggac gaggcagcgc ggctatcgtg gctggccacg    7440
   acgggcgttc cttgcgcagc tgtgctcgac gttgtcactg aagcgggaag ggactggctg    7500
   ctattgggcg aagtgccggg gcaggatctc ctgtcatctc accttgctcc tgccgagaaa    7560
   gtatccatca tggctgatgc aatgcggcgg ctgcatacgc ttgatccggc tacctgccca    7620
   ttcgaccacc aagcgaaaca tcgcatcgag cgagcacgta ctcggatgga agccggtctt    7680
   gtcgatcagg atgatctgga cgaagagcat caggggctcg cgccagccga actgttcgcc    7740
   aggctcaagg cgcgcatgcc cgacggcgag gatctcgtcg tgacccatgg cgatgcctgc    7800
   ttgccgaata tcatggtgga aaatggccgc ttttctggat tcatcgactg tggccggctg    7860
   ggtgtggcgg accgctatca ggacatagcg ttggctaccc gtgatattgc tgaagagctt    7920
   ggcggcgaat gggctgaccg cttcctcgtg ctttacggta tcgccgctcc cgattcgcag    7980
   cgcatcgcct tctatcgcct tcttgacgag ttcttctgag cgggactctg gggttcgaaa    8040
   tgaccgacca agcgacgccc aacctgccat cacgagattt cgattccacc gccgccttct    8100
   atgaaaggtt gggcttcgga atcgttttcc gggacgccgg ctggatgatc ctccagcgcg    8160
   gggatctcat gctggagttc ttcgcccacc ccaacttgtt tattgcagct tataatggtt    8220
   acaaataaag caatagcatc acaaatttca caaataaagc atttttttca ctgcattcta    8280
   gttgtggttt gtccaaactc atcaatgtat cttatcatgt ctgtataccg tcgacctcta    8340
   gctagagctt ggcgtaatca tggtcatagc tgtttcctgt gtgaaattgt tatccgctca    8400
   caattccaca caacatacga gccggaagca taaagtgtaa agcctggggt gcctaatgag 8460
   tgagctaact cacattaatt gcgttgcgct cactgcccgc tttccagtcg ggaaacctgt 8520
   cgtgccagct gcattaatga atcggccaac gcgcggggag aggcggtttg cgtattgggc 8580
   gctcttccgc ttcctcgctc actgactcgc tgcgctcggt cgttcggctg cggcgagcgg 8640
   tatcagctca ctcaaaggcg gtaatacggt tatccacaga atcaggggat aacgcaggaa 8700
   agaacatgtg agcaaaaggc cagcaaaagg ccaggaaccg taaaaaggcc gcgttgctgg 8760
   cgtttttcca taggctccgc ccccctgacg agcatcacaa aaatcgacgc tcaagtcaga 8820
   ggtggcgaaa cccgacagga ctataaagat accaggcgtt tccccctgga agctccctcg 8880
   tgcgctctcc tgttccgacc ctgccgctta ccggatacct gtccgccttt ctcccttcgg 8940
   gaagcgtggc gctttctcat agctcacgct gtaggtatct cagttcggtg taggtcgttc 9000
   gctccaagct gggctgtgtg cacgaacccc ccgttcagcc cgaccgctgc gccttatccg 9060
   gtaactatcg tcttgagtcc aacccggtaa gacacgactt atcgccactg gcagcagcca 9120
   ctggtaacag gattagcaga gcgaggtatg taggcggtgc tacagagttc ttgaagtggt 9180
   ggcctaacta cggctacact agaagaacag tatttggtat ctgcgctctg ctgaagccag 9240
   ttaccttcgg aaaaagagtt ggtagctctt gatccggcaa acaaaccacc gctggtagcg 9300
   gtttttttgt ttgcaagcag cagattacgc gcagaaaaaa aggatctcaa gaagatcctt 9360
   tgatcttttc tacggggtct gacgctcagt ggaacgaaaa ctcacgttaa gggattttgg 9420
   tcatgagatt atcaaaaagg atcttcacct agatcctttt aaattaaaaa tgaagtttta 9480
   aatcaatcta aagtatatat gagtaaactt ggtctgacag ttaccaatgc ttaatcagtg 9540
   aggcacctat ctcagcgatc tgtctatttc gttcatccat agttgcctga ctccccgtcg 9600
   tgtagataac tacgatacgg gagggcttac catctggccc cagtgctgca atgataccgc 9660
   gagacccacg ctcaccggct ccagatttat cagcaataaa ccagccagcc ggaagggccg 9720
   agcgcagaag tggtcctgca actttatccg cctccatcca gtctattaat tgttgccggg 9780
   aagctagagt aagtagttcg ccagttaata gtttgcgcaa cgttgttgcc attgctacag 9840
   gcatcgtggt gtcacgctcg tcgtttggta tggcttcatt cagctccggt tcccaacgat 9900
   caaggcgagt tacatgatcc cccatgttgt gcaaaaaagc ggttagctcc ttcggtcctc 9960
   cgatcgttgt cagaagtaag ttggccgcag tgttatcact catggttatg gcagcactgc 10020
   ataattctct tactgtcatg ccatccgtaa gatgcttttc tgtgactggt gagtactcaa 10080
   ccaagtcatt ctgagaatag tgtatgcggc gaccgagttg ctcttgcccg gcgtcaatac 10140
   gggataatac cgcgccacat agcagaactt taaaagtgct catcattgga aaacgttctt 10200
   cggggcgaaa actctcaagg atcttaccgc tgttgagatc cagttcgatg taacccactc 10260
   gtgcacccaa ctgatcttca gcatctttta ctttcaccag cgtttctggg tgagcaaaaa 10320
   caggaaggca aaatgccgca aaaaagggaa taagggcgac acggaaatgt tgaatactca 10380
   tactcttcct ttttcaatat tattgaagca tttatcaggg ttattgtctc atgagcggat 10440
   acatatttga atgtatttag aaaaataaac aaataggggt tccgcgcaca tttccccgaa 10500
   aagtgccacc tgacg 10515
<210> 111
   <211> 8777
   <212> DNA
   <213> Artificial sequence
<220>
   <223> pIg-C909-Ckappa
   <220>
   <221> misc-feature
   <222> (1328)..(3860)
   <223>
<400> 111
   tcgacggatc gggagatctc ccgatcccct atggtgcact ctcagtacaa tctgctctga 60
   tgccgcatag ttaagccagt atctgctccc tgcttgtgtg ttggaggtcg ctgagtagtg 120
   cgcgagcaaa atttaagcta caacaaggca aggcttgacc gacaattgtt aattaacatg 180
   aagaatctgc ttagggttag gcgttttgcg ctgcttcgct aggtggtcaa tattggccat 240
   tagccatatt attcattggt tatatagcat aaatcaatat tggctattgg ccattgcata 300
   cgttgtatcc atatcataat atgtacattt atattggctc atgtccaaca ttaccgccat 360
   gttgacattg attattgact agttattaat agtaatcaat tacggggtca ttagttcata 420
   gcccatatat ggagttccgc gttacataac ttacggtaaa tggcccgcct ggctgaccgc 480
   ccaacgaccc ccgcccattg acgtcaataa tgacgtatgt tcccatagta acgccaatag 540
   ggactttcca ttgacgtcaa tgggtggagt atttacggta aactgcccac ttggcagtac 600
   atcaagtgta tcatatgcca agtacgcccc ctattgacgt caatgacggt aaatggcccg 660
   cctggcatta tgcccagtac atgaccttat gggactttcc tacttggcag tacatctacg 720
   tattagtcat cgctattacc atggtgatgc ggttttggca gtacatcaat gggcgtggat 780
   agcggtttga ctcacgggga tttccaagtc tccaccccat tgacgtcaat gggagtttgt 840
   tttggcacca aaatcaacgg gactttccaa aatgtcgtaa caactccgcc ccattgacgc 900
   aaatgggcgg taggcgtgta cggtgggagg tctatataag cagagctcgt ttagtgaacc 960
   gtcagatcgc ctggagacgc catccacgct gttttgacct ccatagaaga caccgggacc 1020
   gatccagcct ccgcggccgg gaacggtgca ttggaatcga tgactctctt aggtagcctt 1080
   gcagaagttg gtcgtgaggc actgggcagg taagtatcaa ggttacaaga caggtttaag 1140
   gagatcaata gaaactgggc ttgtcgagac agagaagact cttgcgtttc tgataggcac 1200
   ctattggtct tactgacatc cactttgcct ttctctccac aggtgtccac tcccagttca 1260
   attacagctc gccaccatgc ggctgcccgc ccagctgctg ggccttctca tgctgtgggt 1320
   gcccgcctcg agatctatcg atgcatgcca tggtaccaag cttgccacca tgagcagcag 1380
   ctcttggctg ctgctgagcc tggtggccgt gacagccgcc cagagcacca tcgaggagca 1440
   ggccaagacc ttcctggaca agttcaacca cgaggccgag gacctgttct accagagcag 1500
   cctggccagc tggaactaca acaccaacat caccgaggag aacgtgcaga acatgaacaa 1560
   cgccggcgac aagtggagcg ccttcctgaa ggagcagagc acactggccc agatgtaccc 1620
   cctgcaggag atccagaacc tgaccgtgaa gctgcagctg caggccctgc agcagaacgg 1680
   cagcagcgtg ctgagcgagg acaagagcaa gcggctgaac accatcctga acaccatgtc 1740
   caccatctac agcaccggca aagtgtgcaa ccccgacaac ccccaggagt gcctgctgct 1800
   ggagcccggc ctgaacgaga tcatggccaa cagcctggac tacaacgagc ggctgtgggc 1860
   ctgggagagc tggcggagcg aagtgggcaa gcagctgcgg cccctgtacg aggagtacgt 1920
   ggtgctgaag aacgagatgg ccagggccaa ccactacgag gactacggcg actactggag 1980
   aggcgactac gaagtgaacg gcgtggacgg ctacgactac agcagaggcc agctgatcga 2040
   ggacgtggag cacaccttcg aggagatcaa gcctctgtac gagcacctgc acgcctacgt 2100
   gcgggccaag ctgatgaacg cctaccccag ctacatcagc cccatcggct gcctgcccgc 2160
   ccacctgctg ggcgacatgt ggggccggtt ctggaccaac ctgtacagcc tgaccgtgcc 2220
   cttcggccag aagcccaaca tcgacgtgac cgacgccatg gtggaccagg cctgggacgc 2280
   ccagcggatc ttcaaggagg ccgagaagtt cttcgtgagc gtgggcctgc ccaacatgac 2340
   ccagggcttt tgggagaaca gcatgctgac cgaccccggc aatgtgcaga aggccgtgtg 2400
   ccaccccacc gcctgggacc tgggcaaggg cgacttccgg atcctgatgt gcaccaaagt 2460
   gaccatggac gacttcctga ccgcccacca cgagatgggc cacatccagt acgacatggc 2520
   ctacgccgcc cagcccttcc tgctgcggaa cggcgccaac gagggctttc acgaggccgt 2580
   gggcgagatc atgagcctga gcgccgccac ccccaagcac ctgaagagca tcggcctgct 2640
   gagccccgac ttccaggagg acaacgagac cgagatcaac ttcctgctga agcaggccct 2700
   gaccatcgtg ggcaccctgc ccttcaccta catgctggag aagtggcggt ggatggtgtt 2760
   taagggcgag atccccaagg accagtggat gaagaagtgg tgggagatga agcgggagat 2820
   cgtgggcgtg gtggagcccg tgccccacga cgagacctac tgcgaccccg ccagcctgtt 2880
   ccacgtgagc aacgactact ccttcatccg gtactacacc cggaccctgt accagttcca 2940
   gttccaggag gccctgtgcc aggccgccaa gcacgagggc cccctgcaca agtgcgacat 3000
   cagcaacagc accgaggccg gacagaaact gttcaacatg ctgcggctgg gcaagagcga 3060
   gccctggacc ctggccctgg agaatgtggt gggcgccaag aacatgaatg tgcgccccct 3120
   gctgaactac ttcgagcccc tgttcacctg gctgaaggac cagaacaaga acagcttcgt 3180
   gggctggagc accgactgga gcccctacgc cgaccagagc atcaaagtgc ggatcagcct 3240
   gaagagcgcc ctgggcgaca aggcctacga gtggaacgac aacgagatgt acctgttccg 3300
   gagcagcgtg gcctatgcca tgcggcagta cttcctgaaa gtgaagaacc agatgatcct 3360
   gttcggcgag gaggacgtga gagtggccaa cctgaagccc cggatcagct tcaacttctt 3420
   cgtgaccgcc cccaagaacg tgagcgacat catcccccgg accgaagtgg agaaggccat 3480
   ccggatgagc cggagccgga tcaacgacgc cttccggctg aacgacaact ccctggagtt 3540
   cctgggcatc cagcccaccc tgggccctcc caaccagccc cccgtgagca tctggctgat 3600
   cgtgtttggc gtggtgatgg gcgtgatcgt ggtgggaatc gtgatcctga tcttcaccgg 3660
   catccgggac cggaagaaga agaacaaggc ccggagcggc gagaacccct acgccagcat 3720
   cgatatcagc aagggcgaga acaaccccgg cttccagaac accgacgacg tgcagaccag 3780
   cttctgataa tctagaacga gctcgaattc gaagcttctg cagacgcgtc gacgtcatat 3840
   ggatccgata tcgccgtggc ggccgcaccc agcgtgttca tcttcccccc ctccgacgag 3900
   cagctgaaga gcggcaccgc cagcgtggtg tgcctgctga acaacttcta cccccgggag 3960
   gccaaggtgc agtggaaggt ggacaacgcc ctgcagagcg gcaacagcca ggagagcgtg 4020
   accgagcagg acagcaagga ctccacctac agcctgagca gcaccctcac cctgagcaag 4080
   gccgactacg agaagcacaa ggtgtacgcc tgcgaggtga cccaccaggg cctgagcagc 4140
   cccgtgacca agagcttcaa ccggggcgag tgttaataga cttaagttta aaccgctgat 4200
   cagcctcgac tgtgccttct agttgccagc catctgttgt ttgcccctcc cccgtgcctt 4260
   ccttgaccct ggaaggtgcc actcccactg tcctttccta ataaaatgag gaaattgcat 4320
   cgcattgtct gagtaggtgt cattctattc tggggggtgg ggtggggcag gacagcaagg 4380
   gggaggattg ggaagacaat agcaggcatg ctggggatgc ggtgggctct atggcttctg 4440
   aggcggaaag aaccagctgg ggctctaggg ggtatcccca cgcgccctgt agcggcgcat 4500
   taagcgcggc gggtgtggtg gttacgcgca gcgtgaccgc tacacttgcc agcgccctag 4560
   cgcccgctcc tttcgctttc ttcccttcct ttctcgccac gttcgccggc tttccccgtc 4620
   aagctctaaa tcgggggctc cctttagggt tccgatttag tgctttacgg cacctcgacc 4680
   ccaaaaaact tgattagggt gatggttcac gtagtgggcc atcgccctga tagacggttt 4740
   ttcgcccttt gacgttggag tccacgttct ttaatagtgg actcttgttc caaactggaa 4800
   caacactcaa ccctatctcg gtctattctt ttgatttata agggattttg gccatttcgg 4860
   cctattggtt aaaaaatgag ctgatttaac aaaaatttaa cgcgaattaa ttctgtggaa 4920
   tgtgtgtcag ttagggtgtg gaaagtcccc aggctcccca gcaggcagaa gtatgcaaag 4980
   catgcatctc aattagtcag caaccaggtg tggaaagtcc ccaggctccc cagcaggcag 5040
   aagtatgcaa agcatgcatc tcaattagtc agcaaccata gtcccgcccc taactccgcc 5100
   catcccgccc ctaactccgc ccagttccgc ccattctccg ccccatggct gactaatttt 5160
   ttttatttat gcagaggccg aggccgcctc tgcctctgag ctattccaga agtagtgagg 5220
   aggctttttt ggaggcctag gcttttgcaa aaagctcccg ggagcttgta tatccatttt 5280
   cggatctgat cagcacgtga tgaaaaagcc tgaactcacc gcgacgtctg tcgagaagtt 5340
   tctgatcgaa aagttcgaca gcgtctccga cctgatgcag ctctcggagg gcgaagaatc 5400
   tcgtgctttc agcttcgatg taggagggcg tggatatgtc ctgcgggtaa atagctgcgc 5460
   cgatggtttc tacaaagatc gttatgttta tcggcacttt gcatcggccg cgctcccgat 5520
   tccggaagtg cttgacattg gggaattcag cgagagcctg acctattgca tctcccgccg 5580
   tgcacagggt gtcacgttgc aagacctgcc tgaaaccgaa ctgcccgctg ttctgcagcc 5640
   ggtcgcggag gccatggatg cgatcgctgc ggccgatctt agccagacga gcgggttcgg 5700
   cccattcgga ccacaaggaa tcggtcaata cactacatgg cgtgatttca tatgcgcgat 5760
   tgctgatccc catgtgtatc actggcaaac tgtgatggac gacaccgtca gtgcgtccgt 5820
   cgcgcaggct ctcgatgagc tgatgctttg ggccgaggac tgccccgaag tccggcacct 5880
   cgtgcacgcg gatttcggct ccaacaatgt cctgacggac aatggccgca taacagcggt 5940
   cattgactgg agcgaggcga tgttcgggga ttcccaatac gaggtcgcca acatcttctt 6000
   ctggaggccg tggttggctt gtatggagca gcagacgcgc tacttcgagc ggaggcatcc 6060
   ggagcttgca ggatcgccgc ggctccgggc gtatatgctc cgcattggtc ttgaccaact 6120
   ctatcagagc ttggttgacg gcaatttcga tgatgcagct tgggcgcagg gtcgatgcga 6180
   cgcaatcgtc cgatccggag ccgggactgt cgggcgtaca caaatcgccc gcagaagcgc 6240
   ggccgtctgg accgatggct gtgtagaagt actcgccgat agtggaaacc gacgccccag 6300
   cactcgtccg agggcaaagg aatagcacgt gctacgagat ttcgattcca ccgccgcctt 6360
   ctatgaaagg ttgggcttcg gaatcgtttt ccgggacgcc ggctggatga tcctccagcg 6420
   cggggatctc atgctggagt tcttcgccca ccccaacttg tttattgcag cttataatgg 6480
   ttacaaataa agcaatagca tcacaaattt cacaaataaa gcattttttt cactgcattc 6540
   tagttgtggt ttgtccaaac tcatcaatgt atcttatcat gtctgtatac cgtcgacctc 6600
   tagctagagc ttggcgtaat catggtcata gctgtttcct gtgtgaaatt gttatccgct 6660
   cacaattcca cacaacatac gagccggaag cataaagtgt aaagcctggg gtgcctaatg 6720
   agtgagctaa ctcacattaa ttgcgttgcg ctcactgccc gctttccagt cgggaaacct 6780
   gtcgtgccag ctgcattaat gaatcggcca acgcgcgggg agaggcggtt tgcgtattgg 6840
   gcgctcttcc gcttcctcgc tcactgactc gctgcgctcg gtcgttcggc tgcggcgagc 6900
   ggtatcagct cactcaaagg cggtaatacg gttatccaca gaatcagggg ataacgcagg 6960
   aaagaacatg tgagcaaaag gccagcaaaa ggccaggaac cgtaaaaagg ccgcgttgct 7020
   ggcgtttttc cataggctcc gcccccctga cgagcatcac aaaaatcgac gctcaagtca 7080
   gaggtggcga aacccgacag gactataaag ataccaggcg tttccccctg gaagctccct 7140
   cgtgcgctct cctgttccga ccctgccgct taccggatac ctgtccgcct ttctcccttc 7200
   gggaagcgtg gcgctttctc atagctcacg ctgtaggtat ctcagttcgg tgtaggtcgt 7260
   tcgctccaag ctgggctgtg tgcacgaacc ccccgttcag cccgaccgct gcgccttatc 7320
   cggtaactat cgtcttgagt ccaacccggt aagacacgac ttatcgccac tggcagcagc 7380
   cactggtaac aggattagca gagcgaggta tgtaggcggt gctacagagt tcttgaagtg 7440
   gtggcctaac tacggctaca ctagaagaac agtatttggt atctgcgctc tgctgaagcc 7500
   agttaccttc ggaaaaagag ttggtagctc ttgatccggc aaacaaacca ccgctggtag 7560
   cggttttttt gtttgcaagc agcagattac gcgcagaaaa aaaggatctc aagaagatcc 7620
   tttgatcttt tctacggggt ctgacgctca gtggaacgaa aactcacgtt aagggatttt 7680
   ggtcatgaga ttatcaaaaa ggatcttcac ctagatcctt ttaaattaaa aatgaagttt 7740
   taaatcaatc taaagtatat atgagtaaac ttggtctgac agttaccaat gcttaatcag 7800
   tgaggcacct atctcagcga tctgtctatt tcgttcatcc atagttgcct gactccccgt 7860
   cgtgtagata actacgatac gggagggctt accatctggc cccagtgctg caatgatacc 7920
   gcgagaccca cgctcaccgg ctccagattt atcagcaata aaccagccag ccggaagggc 7980
   cgagcgcaga agtggtcctg caactttatc cgcctccatc cagtctatta attgttgccg 8040
   ggaagctaga gtaagtagtt cgccagttaa tagtttgcgc aacgttgttg ccattgctac 8100
   aggcatcgtg gtgtcacgct cgtcgtttgg tatggcttca ttcagctccg gttcccaacg 8160
   atcaaggcga gttacatgat cccccatgtt gtgcaaaaaa gcggttagct ccttcggtcc 8220
   tccgatcgtt gtcagaagta agttggccgc agtgttatca ctcatggtta tggcagcact 8280
   gcataattct cttactgtca tgccatccgt aagatgcttt tctgtgactg gtgagtactc 8340
   aaccaagtca ttctgagaat agtgtatgcg gcgaccgagt tgctcttgcc cggcgtcaat 8400
   acgggataat accgcgccac atagcagaac tttaaaagtg ctcatcattg gaaaacgttc 8460
   ttcggggcga aaactctcaa ggatcttacc gctgttgaga tccagttcga tgtaacccac 8520
   tcgtgcaccc aactgatctt cagcatcttt tactttcacc agcgtttctg ggtgagcaaa 8580
   aacaggaagg caaaatgccg caaaaaaggg aataagggcg acacggaaat gttgaatact 8640
   catactcttc ctttttcaat attattgaag catttatcag ggttattgtc tcatgagcgg 8700
   atacatattt gaatgtattt agaaaaataa acaaataggg gttccgcgca catttccccg 8760
   aaaagtgcca cctgacg 8777

<210> 112
   <211> 1356
   <212> DNA
   <213> Artificial sequence
<220>
   <223> Heavy chain CR4271
   <220>
   <221> CDS
   <222> (1)..(1356)
   <223>
<400> 112
   gag gtg cag ctg gtg cag tct gga gca gag gtg aaa aag ccc ggg gag       48
   Glu Val Gln Leu Val Gln Ser Gly Ala Glu Val Lys Lys Pro Gly Glu
   1               5                   10                  15
   tct ctg agg att tcc tgt aag ggt tct gga tac acc ttt aac aat tat       96
   Ser Leu Arg Ile Ser Cys Lys Gly Ser Gly Tyr Thr Phe Asn Asn Tyr
               20                  25                  30
   tgg atc ggc tgg gtg cgc cag atg ccc ggg aaa ggc ctg gag tgg atg      144
   Trp Ile Gly Trp Val Arg Gln Met Pro Gly Lys Gly Leu Glu Trp Met
           35                  40                  45
   ggg atc atc tat cct ggt gac tct gat acc aga tac agc ccg tcc gtc      192
   Gly Ile Ile Tyr Pro Gly Asp Ser Asp Thr Arg Tyr Ser Pro Ser Val
       50                  55                  60
   caa ggc cac gtc acc atc tca gcc gac aag tcc atc aac acc gcc tac      240
   Gln Gly His Val Thr Ile Ser Ala Asp Lys Ser Ile Asn Thr Ala Tyr
   65                  70                  75                  80
   ctg cag tgg agc agc ctg aag gcc tcg gac acc gcc gtg tat tac tgt      288
   Leu Gln Trp Ser Ser Leu Lys Ala Ser Asp Thr Ala Val Tyr Tyr Cys
                   85                  90                  95
   gcg aga cgg cct gga tac gac tat gga ttt tac tac ttt gac tac tgg      336
   Ala Arg Arg Pro Gly Tyr Asp Tyr Gly Phe Tyr Tyr Phe Asp Tyr Trp
               100                 105                 110
   ggc cag ggc acc ctg gtg acc gtc tcc agc gct agc acc aag ggc ccc      384
   Gly Gln Gly Thr Leu Val Thr Val Ser Ser Ala Ser Thr Lys Gly Pro
           115                 120                 125
   agc gtg ttc ccc ctg gcc ccc agc agc aag agc acc agc ggc ggc aca      432
   Ser Val Phe Pro Leu Ala Pro Ser Ser Lys Ser Thr Ser Gly Gly Thr
       130                 135                 140
   gcc gcc ctg ggc tgc ctg gtg aag gac tac ttc ccc gag ccc gtg acc      480
   Ala Ala Leu Gly Cys Leu Val Lys Asp Tyr Phe Pro Glu Pro Val Thr
   145                 150                 155                 160
   gtg agc tgg aac agc ggc gcc ttg acc agc ggc gtg cac acc ttc ccc      528
   Val Ser Trp Asn Ser Gly Ala Leu Thr Ser Gly Val His Thr Phe Pro
                   165                 170                 175
   gcc gtg ctg cag agc agc ggc ctg tac agc ctg agc agc gtg gtg acc      576
   Ala Val Leu Gln Ser Ser Gly Leu Tyr Ser Leu Ser Ser Val Val Thr
               180                 185                 190
   gtg ccc agc agc agc ctg ggc acc cag acc tac atc tgc aac gtg aac      624
   Val Pro Ser Ser Ser Leu Gly Thr Gln Thr Tyr Ile Cys Asn Val Asn
           195                 200                 205
   cac aag ccc agc aac acc aag gtg gac aaa cgc gtg gag ccc aag agc      672
   His Lys Pro Ser Asn Thr Lys Val Asp Lys Arg Val Glu Pro Lys Ser
       210                 215                 220
   tgc gac aag acc cac acc tgc ccc ccc tgc cct gcc ccc gag ctg ctg      720
   Cys Asp Lys Thr His Thr Cys Pro Pro Cys Pro Ala Pro Glu Leu Leu
   225                 230                 235                 240
   ggc gga ccc tcc gtg ttc ctg ttc ccc ccc aag ccc aag gac acc ctc      768
   Gly Gly Pro Ser Val Phe Leu Phe Pro Pro Lys Pro Lys Asp Thr Leu
                   245                 250                 255
   atg atc agc cgg acc ccc gag gtg acc tgc gtg gtg gtg gac gtg agc      816
   Met Ile Ser Arg Thr Pro Glu Val Thr Cys Val Val Val Asp Val Ser
               260                 265                 270
   cac gag gac ccc gag gtg aag ttc aac tgg tac gtg gac ggc gtg gag      864
   His Glu Asp Pro Glu Val Lys Phe Asn Trp Tyr Val Asp Gly Val Glu
           275                 280                 285
   gtg cac aac gcc aag acc aag ccc cgg gag gag cag tac aac agc acc      912
   Val His Asn Ala Lys Thr Lys Pro Arg Glu Glu Gln Tyr Asn Ser Thr
       290                 295                 300
   tac cgg gtg gtg agc gtg ctc acc gtg ctg cac cag gac tgg ctg aac      960
   Tyr Arg Val Val Ser Val Leu Thr Val Leu His Gln Asp Trp Leu Asn
   305                 310                 315                 320
   ggc aag gag tac aag tgc aag gtg agc aac aag gcc ctg cct gcc ccc     1008
   Gly Lys Glu Tyr Lys Cys Lys Val Ser Asn Lys Ala Leu Pro Ala Pro
                   325                 330                 335
   atc gag aag acc atc agc aag gcc aag ggc cag ccc cgg gag ccc cag     1056
   Ile Glu Lys Thr Ile Ser Lys Ala Lys Gly Gln Pro Arg Glu Pro Gln
           340                 345                 350
   gtg tac acc ctg ccc ccc agc cgg gag gag atg acc aag aac cag gtg     1104
   Val Tyr Thr Leu Pro Pro Ser Arg Glu Glu Met Thr Lys Asn Gln Val
           355                 360                 365
   tcc ctc acc tgt ctg gtg aag ggc ttc tac ccc agc gac atc gcc gtg     1152
   Ser Leu Thr Cys Leu Val Lys Gly Phe Tyr Pro Ser Asp Ile Ala Val
       370                 375                 380
   gag tgg gag agc aac ggc cag ccc gag aac aac tac aag acc acc ccc     1200
   Glu Trp Glu Ser Asn Gly Gln Pro Glu Asn Asn Tyr Lys Thr Thr Pro
   385                 390                 395                 400
   cct gtg ctg gac agc gac ggc agc ttc ttc ctg tac agc aag ctc acc     1248
   Pro Val Leu Asp Ser Asp Gly Ser Phe Phe Leu Tyr Ser Lys Leu Thr
                   405                 410                 415
   gtg gac aag agc cgg tgg cag cag ggc aac gtg ttc agc tgc agc gtg     1296
   Val Asp Lys Ser Arg Trp Gln Gln Gly Asn Val Phe Ser Cys Ser Val
               420                 425                 430
   atg cac gag gcc ctg cac aac cac tac acc cag aag agc ctg agc ctg     1344
   Met His Glu Ala Leu His Asn His Tyr Thr Gln Lys Ser Leu Ser Leu
           435                 440                 445
   agc ccc ggc aag                                                     1356
   Ser Pro Gly Lys
       450
<210> 113
   <211> 452
   <212> PRT
   <213> Artificial sequence
<220>
   <223> Heavy chain CR4271
<400> 113
   Glu Val Gln Leu Val Gln Ser Gly Ala Glu Val Lys Lys Pro Gly Glu
   1               5                   10                  15
   Ser Leu Arg Ile Ser Cys Lys Gly Ser Gly Tyr Thr Phe Asn Asn Tyr
               20                  25                  30
   Trp Ile Gly Trp Val Arg Gln Met Pro Gly Lys Gly Leu Glu Trp Met
           35                  40                  45
   Gly Ile Ile Tyr Pro Gly Asp Ser Asp Thr Arg Tyr Ser Pro Ser Val
       50                  55                  60
   Gln Gly His Val Thr Ile Ser Ala Asp Lys Ser Ile Asn Thr Ala Tyr
   65 70 75 80
   Leu Gln Trp Ser Ser Leu Lys Ala Ser Asp Thr Ala Val Tyr Tyr Cys
   85 90 95
   Ala Arg Arg Pro Gly Tyr Asp Tyr Gly Phe Tyr Tyr Phe Asp Tyr Trp
   100 105 110
   Gly Gln Gly Thr Leu Val Thr Val Ser Ser Ala Ser Thr Lys Gly Pro
   115 120 125
   Ser Val Phe Pro Leu Ala Pro Ser Ser Lys Ser Thr Ser Gly Gly Thr
   130 135 140
   Ala Ala Leu Gly Cys Leu Val Lys Asp Tyr Phe Pro Glu Pro Val Thr
   145 150 155 160
   Val Ser Trp Asn Ser Gly Ala Leu Thr Ser Gly Val His Thr Phe Pro
   165 170 175
   Ala Val Leu Gln Ser Ser Gly Leu Tyr Ser Leu Ser Ser Val Val Thr
   180 185 190
   Val Pro Ser Ser Ser Leu Gly Thr Gln Thr Tyr Ile Cys Asn Val Asn
   195 200 205
   His Lys Pro Ser Asn Thr Lys Val Asp Lys Arg Val Glu Pro Lys Ser
   210 215 220
   Cys Asp Lys Thr His Thr Cys Pro Pro Cys Pro Ala Pro Glu Leu Leu
   225 230 235 240
   Gly Gly Pro Ser Val Phe Leu Phe Pro Pro Lys Pro Lys Asp Thr Leu
   245 250 255
   Met Ile Ser Arg Thr Pro Glu Val Thr Cys Val Val Val Asp Val Ser
   260 265 270
   His Glu Asp Pro Glu Val Lys Phe Asn Trp Tyr Val Asp Gly Val Glu
   275 280 285
   Val His Asn Ala Lys Thr Lys Pro Arg Glu Glu Gln Tyr Asn Ser Thr
   290 295 300
   Tyr Arg Val Val Ser Val Leu Thr Val Leu His Gln Asp Trp Leu Asn
   305 310 315 320
   Gly Lys Glu Tyr Lys Cys Lys Val Ser Asn Lys Ala Leu Pro Ala Pro
   325 330 335
   Ile Glu Lys Thr Ile Ser Lys Ala Lys Gly Gln Pro Arg Glu Pro Gln
   340 345 350
   Val Tyr Thr Leu Pro Pro Ser Arg Glu Glu Met Thr Lys Asn Gln Val
   355 360 365
   Ser Leu Thr Cys Leu Val Lys Gly Phe Tyr Pro Ser Asp Ile Ala Val
   370 375 380
   Glu Trp Glu Ser Asn Gly Gln Pro Glu Asn Asn Tyr Lys Thr Thr Pro
   385 390 395 400
   Pro Val Leu Asp Ser Asp Gly Ser Phe Phe Leu Tyr Ser Lys Leu Thr
   405 410 415
   Val Asp Lys Ser Arg Trp Gln Gln Gly Asn Val Phe Ser Cys Ser Val
   420 425 430
   Met His Glu Ala Leu His Asn His Tyr Thr Gln Lys Ser Leu Ser Leu
   435 440 445
   Ser Pro Gly Lys
   450
<210> 114
   <211> 1380
   <212> DNA
   <213> Artificial sequence
<220>
   <223> Heavy chain CR4274
   <220>
   <221> CDS
   <222> (1)..(1380)
   <223>
<400> 114
   gag gtg cag ctg gtg cag tct gga gca gag gtg aaa aag ccc ggg gag 48
   Glu Val Gln Leu Val Gln Ser Gly Ala Glu Val Lys Lys Pro Gly Glu
   1               5                   10                  15
   tct ctg aag atc tcc tgt aag ggt tct gga tac agc ttt acc agc tac      96
   Ser Leu Lys Ile Ser Cys Lys Gly Ser Gly Tyr Ser Phe Thr Ser Tyr
               20                  25                  30
   tgg atc ggc tgg gtg cgc cag atg ccc ggg aaa ggc ctg gag tgg atg     144
   Trp Ile Gly Trp Val Arg Gln Met Pro Gly Lys Gly Leu Glu Trp Met
           35                  40                  45
   ggc atc atc tat cct ggt gac tct gat acc aga tac agc ccg tcc ttc     192
   Gly Ile Ile Tyr Pro Gly Asp Ser Asp Thr Arg Tyr Ser Pro Ser Phe
       50                  55                  60
   caa ggc cag gtc acc atc tca gcc gac agg tcc atc agc acc gcc tac     240
   Gln Gly Gln Val Thr Ile Ser Ala Asp Arg Ser Ile Ser Thr Ala Tyr
   65                  70                  75                  80
   ctg cag tgg agc agc ctg aag gcc tcg gac acc gcc atg tat tac tgt     288
   Leu Gln Trp Ser Ser Leu Lys Ala Ser Asp Thr Ala Met Tyr Tyr Cys
                   85                  90                  95
   gcg aga ctc cga ggc ccc tat tac gat ttt tgg aat ggc tat cgg gag     336
   Ala Arg Leu Arg Gly Pro Tyr Tyr Asp Phe Trp Asn Gly Tyr Arg Glu
               100                 105                 110
   aca cat gat gct ttt aat gtg tgg ggc cag ggc acc acc gtg acc gtc     384
   Thr His Asp Ala Phe Asn Val Trp Gly Gln Gly Thr Thr Val Thr Val
           115                 120                 125
   tcc agc gct agc acc aag ggc ccc agc gtg ttc ccc ctg gcc ccc agc     432
   Ser Ser Ala Ser Thr Lys Gly Pro Ser Val Phe Pro Leu Ala Pro Ser
       130                 135                 140
   agc aag agc acc agc ggc ggc aca gcc gcc ctg ggc tgc ctg gtg aag     480
   Ser Lys Ser Thr Ser Gly Gly Thr Ala Ala Leu Gly Cys Leu Val Lys
   145                 150                 155                 160
   gac tac ttc ccc gag ccc gtg acc gtg agc tgg aac agc ggc gcc ttg     528
   Asp Tyr Phe Pro Glu Pro Val Thr Val Ser Trp Asn Ser Gly Ala Leu
                   165                 170                 175
   acc agc ggc gtg cac acc ttc ccc gcc gtg ctg cag agc agc ggc ctg     576
   Thr Ser Gly Val His Thr Phe Pro Ala Val Leu Gln Ser Ser Gly Leu
               180                 185                 190
   tac agc ctg agc agc gtg gtg acc gtg ccc agc agc agc ctg ggc acc     624
   Tyr Ser Leu Ser Ser Val Val Thr Val Pro Ser Ser Ser Leu Gly Thr
           195                 200                 205
   cag acc tac atc tgc aac gtg aac cac aag ccc agc aac acc aag gtg     672
   Gln Thr Tyr Ile Cys Asn Val Asn His Lys Pro Ser Asn Thr Lys Val
       210                 215                 220
   gac aaa cgc gtg gag ccc aag agc tgc gac aag acc cac acc tgc ccc     720
   Asp Lys Arg Val Glu Pro Lys Ser Cys Asp Lys Thr His Thr Cys Pro
   225                 230                 235                 240
   ccc tgc cct gcc ccc gag ctg ctg ggc gga ccc tcc gtg ttc ctg ttc     768
   Pro Cys Pro Ala Pro Glu Leu Leu Gly Gly Pro Ser Val Phe Leu Phe
                   245                 250                 255
   ccc ccc aag ccc aag gac acc ctc atg atc agc cgg acc ccc gag gtg      816
   Pro Pro Lys Pro Lys Asp Thr Leu Met Ile Ser Arg Thr Pro Glu Val
               260                 265                 270
   acc tgc gtg gtg gtg gac gtg agc cac gag gac ccc gag gtg aag ttc      864
   Thr Cys Val Val Val Asp Val Ser His Glu Asp Pro Glu Val Lys Phe
           275                 280                 285
   aac tgg tac gtg gac ggc gtg gag gtg cac aac gcc aag acc aag ccc      912
   Asn Trp Tyr Val Asp Gly Val Glu Val His Asn Ala Lys Thr Lys Pro
       290                 295                 300
   cgg gag gag cag tac aac agc acc tac cgg gtg gtg agc gtg ctc acc      960
   Arg Glu Glu Gln Tyr Asn Ser Thr Tyr Arg Val Val Ser Val Leu Thr
   305                 310                 315                 320
   gtg ctg cac cag gac tgg ctg aac ggc aag gag tac aag tgc aag gtg     1008
   Val Leu His Gln Asp Trp Leu Asn Gly Lys Glu Tyr Lys Cys Lys Val
                   325                 330                 335
   agc aac aag gcc ctg cct gcc ccc atc gag aag acc atc agc aag gcc     1056
   Ser Asn Lys Ala Leu Pro Ala Pro Ile Glu Lys Thr Ile Ser Lys Ala
               340                 345                 350
   aag ggc cag ccc cgg gag ccc cag gtg tac acc ctg ccc ccc agc cgg     1104
   Lys Gly Gln Pro Arg Glu Pro Gln Val Tyr Thr Leu Pro Pro Ser Arg
           355                 360                 365
   gag gag atg acc aag aac cag gtg tcc ctc acc tgt ctg gtg aag ggc     1152
   Glu Glu Met Thr Lys Asn Gln Val Ser Leu Thr Cys Leu Val Lys Gly
       370                 375                 380
   ttc tac ccc agc gac atc gcc gtg gag tgg gag agc aac ggc cag ccc     1200
   Phe Tyr Pro Ser Asp Ile Ala Val Glu Trp Glu Ser Asn Gly Gln Pro
   385                 390                 395                 400
   gag aac aac tac aag acc acc ccc cct gtg ctg gac agc gac ggc agc     1248
   Glu Asn Asn Tyr Lys Thr Thr Pro Pro Val Leu Asp Ser Asp Gly Ser
                   405                 410                 415
   ttc ttc ctg tac agc aag ctc acc gtg gac aag agc cgg tgg cag cag     1296
   Phe Phe Leu Tyr Ser Lys Leu Thr Val Asp Lys Ser Arg Trp Gln Gln
               420                 425                 430
   ggc aac gtg ttc agc tgc agc gtg atg cac gag gcc ctg cac aac cac     1344
   Gly Asn Val Phe Ser Cys Ser Val Met His Glu Ala Leu His Asn His
           435                 440                 445
   tac acc cag aag agc ctg agc ctg agc ccc ggc aag                     1380
   Tyr Thr Gln Lys Ser Leu Ser Leu Ser Pro Gly Lys
       450                 455                 460
<210> 115
   <211> 460
   <212> PRT
   <213> Artificial sequence
<220>
   <223> Heavy chain CR4274
<400> 115
   Glu Val Gln Leu Val Gln Ser Gly Ala Glu Val Lys Lys Pro Gly Glu
   1 5 10 15
   Ser Leu Lys Ile Ser Cys Lys Gly Ser Gly Tyr Ser Phe Thr Ser Tyr
   20 25 30
   Trp Ile Gly Trp Val Arg Gln Met Pro Gly Lys Gly Leu Glu Trp Met
   35 40 45
   Gly Ile Ile Tyr Pro Gly Asp Ser Asp Thr Arg Tyr Ser Pro Ser Phe
   50 55 60
   Gln Gly Gln Val Thr Ile Ser Ala Asp Arg Ser Ile Ser Thr Ala Tyr
   65 70 75 80
   Leu Gln Trp Ser Ser Leu Lys Ala Ser Asp Thr Ala Met Tyr Tyr Cys
   85 90 95
   Ala Arg Leu Arg Gly Pro Tyr Tyr Asp Phe Trp Asn Gly Tyr Arg Glu
   100 105 110
   Thr His Asp Ala Phe Asn Val Trp Gly Gln Gly Thr Thr Val Thr Val
   115 120 125
   Ser Ser Ala Ser Thr Lys Gly Pro Ser Val Phe Pro Leu Ala Pro Ser
   130 135 140
   Ser Lys Ser Thr Ser Gly Gly Thr Ala Ala Leu Gly Cys Leu Val Lys
   145 150 155 160
   Asp Tyr Phe Pro Glu Pro Val Thr Val Ser Trp Asn Ser Gly Ala Leu
   165 170 175
   Thr Ser Gly Val His Thr Phe Pro Ala Val Leu Gln Ser Ser Gly Leu
   180 185 190
   Tyr Ser Leu Ser Ser Val Val Thr Val Pro Ser Ser Ser Leu Gly Thr
   195 200 205
   Gln Thr Tyr Ile Cys Asn Val Asn His Lys Pro Ser Asn Thr Lys Val
   210 215 220
   Asp Lys Arg Val Glu Pro Lys Ser Cys Asp Lys Thr His Thr Cys Pro
   225                 230                 235                 240
   Pro Cys Pro Ala Pro Glu Leu Leu Gly Gly Pro Ser Val Phe Leu Phe
                   245                 250                 255
   Pro Pro Lys Pro Lys Asp Thr Leu Met Ile Ser Arg Thr Pro Glu Val
               260                 265                 270
   Thr Cys Val Val Val Asp Val Ser His Glu Asp Pro Glu Val Lys Phe
           275                 280                 285
   Asn Trp Tyr Val Asp Gly Val Glu Val His Asn Ala Lys Thr Lys Pro
       290                 295                 300
   Arg Glu Glu Gln Tyr Asn Ser Thr Tyr Arg Val Val Ser Val Leu Thr
   305                 310                 315                 320
   Val Leu His Gln Asp Trp Leu Asn Gly Lys Glu Tyr Lys Cys Lys Val
                   325                 330                 335
   Ser Asn Lys Ala Leu Pro Ala Pro Ile Glu Lys Thr Ile Ser Lys Ala
               340                 345                 350
   Lys Gly Gln Pro Arg Glu Pro Gln Val Tyr Thr Leu Pro Pro Ser Arg
           355                 360                 365
   Glu Glu Met Thr Lys Asn Gln Val Ser Leu Thr Cys Leu Val Lys Gly
       370                 375                 380
   Phe Tyr Pro Ser Asp Ile Ala Val Glu Trp Glu Ser Asn Gly Gln Pro
   385                 390                 395                 400
   Glu Asn Asn Tyr Lys Thr Thr Pro Pro Val Leu Asp Ser Asp Gly Ser
                   405                 410                 415
   Phe Phe Leu Tyr Ser Lys Leu Thr Val Asp Lys Ser Arg Trp Gln Gln
               420                 425                 430
   Gly Asn Val Phe Ser Cys Ser Val Met His Glu Ala Leu His Asn His
           435                 440                 445
   Tyr Thr Gln Lys Ser Leu Ser Leu Ser Pro Gly Lys
       450                 455                 460
<210> 116
   <211> 1380
   <212> DNA
   <213> Artificial sequence
<220>
   <223> Heavy chain CR4283
   <220>
   <221> CDS
   <222> (1)..(1380)
   <223>
<400> 116
   gag gtg cag ctg gtg cag tct gga gca gag gtg aaa aag tcc ggg gag        48
   Glu Val Gln Leu Val Gln Ser Gly Ala Glu Val Lys Lys Ser Gly Glu
   1               5                   10                  15
   tct ctg aag atc tcc tgt aag ggt tct gga tac acc ttt aat acc tac        96
   Ser Leu Lys Ile Ser Cys Lys Gly Ser Gly Tyr Thr Phe Asn Thr Tyr
               20                  25                  30
   tgg atc ggc tgg gtg cgc cag atg ccc ggg aaa ggc ctg gag tgg atg        144
   Trp Ile Gly Trp Val Arg Gln Met Pro Gly Lys Gly Leu Glu Trp Met
           35                  40                  45
   ggg atc att tat cct ggt gac tct gat acc ata tac agc ccg tcc ttc        192
   Gly Ile Ile Tyr Pro Gly Asp Ser Asp Thr Ile Tyr Ser Pro Ser Phe
       50                  55                  60
   caa ggc cag gtc acc atc tca gcc gac aag tcc atc agc acc gcc tac        240
   Gln Gly Gln Val Thr Ile Ser Ala Asp Lys Ser Ile Ser Thr Ala Tyr
   65                  70                  75                  80
   ctg cag tgg agc agc ctg aag gcc tcg gac agc gcc atg tat tac tgt        288
   Leu Gln Trp Ser Ser Leu Lys Ala Ser Asp Ser Ala Met Tyr Tyr Cys
                   85                  90                  95
   gcg aga ctt acc ttt cga cgt gga tat agt ggc tcc gat tcg ttt ctc        336
   Ala Arg Leu Thr Phe Arg Arg Gly Tyr Ser Gly Ser Asp Ser Phe Leu
               100                 105                 110
   cct ccg ggg gac ttt gac tac tgg ggc cag ggc acc ctg gtg acc gtc        384
   Pro Pro Gly Asp Phe Asp Tyr Trp Gly Gln Gly Thr Leu Val Thr Val
           115                 120                 125
   tcc agc gct agc acc aag ggc ccc agc gtg ttc ccc ctg gcc ccc agc        432
   Ser Ser Ala Ser Thr Lys Gly Pro Ser Val Phe Pro Leu Ala Pro Ser
       130                 135                 140
   agc aag agc acc agc ggc ggc aca gcc gcc ctg ggc tgc ctg gtg aag        480
   Ser Lys Ser Thr Ser Gly Gly Thr Ala Ala Leu Gly Cys Leu Val Lys
   145                 150                 155                 160
   gac tac ttc ccc gag ccc gtg acc gtg agc tgg aac agc ggc gcc ttg        528
   Asp Tyr Phe Pro Glu Pro Val Thr Val Ser Trp Asn Ser Gly Ala Leu
                   165                 170                 175
   acc agc ggc gtg cac acc ttc ccc gcc gtg ctg cag agc agc ggc ctg      576
   Thr Ser Gly Val His Thr Phe Pro Ala Val Leu Gln Ser Ser Gly Leu
               180                 185                 190
   tac agc ctg agc agc gtg gtg acc gtg ccc agc agc agc ctg ggc acc      624
   Tyr Ser Leu Ser Ser Val Val Thr Val Pro Ser Ser Ser Leu Gly Thr
           195                 200                 205
   cag acc tac atc tgc aac gtg aac cac aag ccc agc aac acc aag gtg      672
   Gln Thr Tyr Ile Cys Asn Val Asn His Lys Pro Ser Asn Thr Lys Val
       210                 215                 220
   gac aaa cgc gtg gag ccc aag agc tgc gac aag acc cac acc tgc ccc      720
   Asp Lys Arg Val Glu Pro Lys Ser Cys Asp Lys Thr His Thr Cys Pro
   225                 230                 235                 240
   ccc tgc cct gcc ccc gag ctg ctg ggc gga ccc tcc gtg ttc ctg ttc      768
   Pro Cys Pro Ala Pro Glu Leu Leu Gly Gly Pro Ser Val Phe Leu Phe
                   245                 250                 255
   ccc ccc aag ccc aag gac acc ctc atg atc agc cgg acc ccc gag gtg      816
   Pro Pro Lys Pro Lys Asp Thr Leu Met Ile Ser Arg Thr Pro Glu Val
               260                 265                 270
   acc tgc gtg gtg gtg gac gtg agc cac gag gac ccc gag gtg aag ttc      864
   Thr Cys Val Val Val Asp Val Ser His Glu Asp Pro Glu Val Lys Phe
           275                 280                 285
   aac tgg tac gtg gac ggc gtg gag gtg cac aac gcc aag acc aag ccc      912
   Asn Trp Tyr Val Asp Gly Val Glu Val His Asn Ala Lys Thr Lys Pro
       290                 295                 300
   cgg gag gag cag tac aac agc acc tac cgg gtg gtg agc gtg ctc acc      960
   Arg Glu Glu Gln Tyr Asn Ser Thr Tyr Arg Val Val Ser Val Leu Thr
   305                 310                 315                 320
   gtg ctg cac cag gac tgg ctg aac ggc aag gag tac aag tgc aag gtg     1008
   Val Leu His Gln Asp Trp Leu Asn Gly Lys Glu Tyr Lys Cys Lys Val
                   325                 330                 335
   agc aac aag gcc ctg cct gcc ccc atc gag aag acc atc agc aag gcc     1056
   Ser Asn Lys Ala Leu Pro Ala Pro Ile Glu Lys Thr Ile Ser Lys Ala
               340                 345                 350
   aag ggc cag ccc cgg gag ccc cag gtg tac acc ctg ccc ccc agc cgg     1104
   Lys Gly Gln Pro Arg Glu Pro Gln Val Tyr Thr Leu Pro Pro Ser Arg
           355                 360                 365
   gag gag atg acc aag aac cag gtg tcc ctc acc tgt ctg gtg aag ggc     1152
   Glu Glu Met Thr Lys Asn Gln Val Ser Leu Thr Cys Leu Val Lys Gly
       370                 375                 380
   ttc tac ccc agc gac atc gcc gtg gag tgg gag agc aac ggc cag ccc     1200
   Phe Tyr Pro Ser Asp Ile Ala Val Glu Trp Glu Ser Asn Gly Gln Pro
   385                 390                 395                 400
   gag aac aac tac aag acc acc ccc cct gtg ctg gac agc gac ggc agc     1248
   Glu Asn Asn Tyr Lys Thr Thr Pro Pro Val Leu Asp Ser Asp Gly Ser
                   405                 410                 415
   ttc ttc ctg tac agc aag ctc acc gtg gac aag agc cgg tgg cag cag     1296
   Phe Phe Leu Tyr Ser Lys Leu Thr Val Asp Lys Ser Arg Trp Gln Gln
               420                 425                 430
   ggc aac gtg ttc agc tgc agc gtg atg cac gag gcc ctg cac aac cac      1344
   Gly Asn Val Phe Ser Cys Ser Val Met His Glu Ala Leu His Asn His
           435                 440                 445
   tac acc cag aag agc ctg agc ctg agc ccc ggc aag                      1380
   Tyr Thr Gln Lys Ser Leu Ser Leu Ser Pro Gly Lys
       450                 455                 460
<210> 117
   <211> 460
   <212> PRT
   <213> Artificial sequence
<220>
   <223> Heavy chain CR4283
<400> 117
   Glu Val Gln Leu Val Gln Ser Gly Ala Glu Val Lys Lys Ser Gly Glu
   1               5                   10                  15
   Ser Leu Lys Ile Ser Cys Lys Gly Ser Gly Tyr Thr Phe Asn Thr Tyr
               20                  25                  30
   Trp Ile Gly Trp Val Arg Gln Met Pro Gly Lys Gly Leu Glu Trp Met
           35                  40                  45
   Gly Ile Ile Tyr Pro Gly Asp Ser Asp Thr Ile Tyr Ser Pro Ser Phe
       50                  55                  60
   Gln Gly Gln Val Thr Ile Ser Ala Asp Lys Ser Ile Ser Thr Ala Tyr
   65                  70                  75                  80
   Leu Gln Trp Ser Ser Leu Lys Ala Ser Asp Ser Ala Met Tyr Tyr Cys
                   85                  90                  95
   Ala Arg Leu Thr Phe Arg Arg Gly Tyr Ser Gly Ser Asp Ser Phe Leu
               100                 105                 110
   Pro Pro Gly Asp Phe Asp Tyr Trp Gly Gln Gly Thr Leu Val Thr Val
           115                 120                 125
   Ser Ser Ala Ser Thr Lys Gly Pro Ser Val Phe Pro Leu Ala Pro Ser
       130                 135                 140
   Ser Lys Ser Thr Ser Gly Gly Thr Ala Ala Leu Gly Cys Leu Val Lys
   145 150 155 160
   Asp Tyr Phe Pro Glu Pro Val Thr Val Ser Trp Asn Ser Gly Ala Leu
   165 170 175
   Thr Ser Gly Val His Thr Phe Pro Ala Val Leu Gln Ser Ser Gly Leu
   180 185 190
   Tyr Ser Leu Ser Ser Val Val Thr Val Pro Ser Ser Ser Leu Gly Thr
   195 200 205
   Gln Thr Tyr Ile Cys Asn Val Asn His Lys Pro Ser Asn Thr Lys Val
   210 215 220
   Asp Lys Arg Val Glu Pro Lys Ser Cys Asp Lys Thr His Thr Cys Pro
   225 230 235 240
   Pro Cys Pro Ala Pro Glu Leu Leu Gly Gly Pro Ser Val Phe Leu Phe
   245 250 255
   Pro Pro Lys Pro Lys Asp Thr Leu Met Ile Ser Arg Thr Pro Glu Val
   260 265 270
   Thr Cys Val Val Val Asp Val Ser His Glu Asp Pro Glu Val Lys Phe
   275 280 285
   Asn Trp Tyr Val Asp Gly Val Glu Val His Asn Ala Lys Thr Lys Pro
   290 295 300
   Arg Glu Glu Gln Tyr Asn Ser Thr Tyr Arg Val Val Ser Val Leu Thr
   305 310 315 320
   Val Leu His Gln Asp Trp Leu Asn Gly Lys Glu Tyr Lys Cys Lys Val
   325 330 335
   Ser Asn Lys Ala Leu Pro Ala Pro Ile Glu Lys Thr Ile Ser Lys Ala
   340 345 350
   Lys Gly Gln Pro Arg Glu Pro Gln Val Tyr Thr Leu Pro Pro Ser Arg
   355 360 365
   Glu Glu Met Thr Lys Asn Gln Val Ser Leu Thr Cys Leu Val Lys Gly
   370 375 380
   Phe Tyr Pro Ser Asp Ile Ala Val Glu Trp Glu Ser Asn Gly Gln Pro
   385 390 395 400
   Glu Asn Asn Tyr Lys Thr Thr Pro Pro Val Leu Asp Ser Asp Gly Ser
                   405                 410                 415
   Phe Phe Leu Tyr Ser Lys Leu Thr Val Asp Lys Ser Arg Trp Gln Gln
               420                 425                 430
   Gly Asn Val Phe Ser Cys Ser Val Met His Glu Ala Leu His Asn His
           435                 440                 445
   Tyr Thr Gln Lys Ser Leu Ser Leu Ser Pro Gly Lys
       450                 455                 460
<210> 118
   <211> 1365
   <212> DNA
   <213> Artificial sequence
<220>
   <223> Heavy chain CR4289
   <220>
   <221> CDS
   <222> (1)..(1365)
   <223>
<400> 118
   gag gtg cag ctg gtg cag tct gga gca gag gtg aaa aag ccc ggg gag       48
   Glu Val Gln Leu Val Gln Ser Gly Ala Glu Val Lys Lys Pro Gly Glu
   1               5                   10                  15
   tct ctg agg atc tcc tgt aag ggt tct gga tac agc ttt acc agt aac       96
   Ser Leu Arg Ile Ser Cys Lys Gly Ser Gly Tyr Ser Phe Thr Ser Asn
               20                  25                  30
   tgg atc acc tgg gtg cgc cag atg ccc ggg aaa ggc ctg gag tgg atg      144
   Trp Ile Thr Trp Val Arg Gln Met Pro Gly Lys Gly Leu Glu Trp Met
           35                  40                  45
   ggg agg att gat cct agt gac tct tat acc aac tac agc ccg tcc ttc      192
   Gly Arg Ile Asp Pro Ser Asp Ser Tyr Thr Asn Tyr Ser Pro Ser Phe
       50                  55                  60
   caa ggc cac gtc acc atc tca gct gac aag tcc atc agc act gcc tac      240
   Gln Gly His Val Thr Ile Ser Ala Asp Lys Ser Ile Ser Thr Ala Tyr
   65                  70                  75                  80
   ctg cag tgg agc agc ctg aag gcc tcg gac acc gcc atg tat tac tgt        288
   Leu Gln Trp Ser Ser Leu Lys Ala Ser Asp Thr Ala Met Tyr Tyr Cys
                   85                  90                  95
   gcg aga gac gta gtt ggg gtg gga gct tcc gac tac tat tat tac atg        336
   Ala Arg Asp Val Val Gly Val Gly Ala Ser Asp Tyr Tyr Tyr Tyr Met
               100                 105                 110
   gac gtc tgg ggc cag ggc acc acc gtg acc gtc tcc agc gct agc acc        384
   Asp Val Trp Gly Gln Gly Thr Thr Val Thr Val Ser Ser Ala Ser Thr
           115                 120                 125
   aag ggc ccc agc gtg ttc ccc ctg gcc ccc agc agc aag agc acc agc        432
   Lys Gly Pro Ser Val Phe Pro Leu Ala Pro Ser Ser Lys Ser Thr Ser
       130                 135                 140
   ggc ggc aca gcc gcc ctg ggc tgc ctg gtg aag gac tac ttc ccc gag        480
   Gly Gly Thr Ala Ala Leu Gly Cys Leu Val Lys Asp Tyr Phe Pro Glu
   145                 150                 155                 160
   ccc gtg acc gtg agc tgg aac agc ggc gcc ttg acc agc ggc gtg cac        528
   Pro Val Thr Val Ser Trp Asn Ser Gly Ala Leu Thr Ser Gly Val His
                   165                 170                 175
   acc ttc ccc gcc gtg ctg cag agc agc ggc ctg tac agc ctg agc agc        576
   Thr Phe Pro Ala Val Leu Gln Ser Ser Gly Leu Tyr Ser Leu Ser Ser
               180                 185                 190
   gtg gtg acc gtg ccc agc agc agc ctg ggc acc cag acc tac atc tgc        624
   Val Val Thr Val Pro Ser Ser Ser Leu Gly Thr Gln Thr Tyr Ile Cys
           195                 200                 205
   aac gtg aac cac aag ccc agc aac acc aag gtg gac aaa cgc gtg gag        672
   Asn Val Asn His Lys Pro Ser Asn Thr Lys Val Asp Lys Arg Val Glu
       210                 215                 220
   ccc aag agc tgc gac aag acc cac acc tgc ccc ccc tgc cct gcc ccc        720
   Pro Lys Ser Cys Asp Lys Thr His Thr Cys Pro Pro Cys Pro Ala Pro
   225                 230                 235                 240
   gag ctg ctg ggc gga ccc tcc gtg ttc ctg ttc ccc ccc aag ccc aag        768
   Glu Leu Leu Gly Gly Pro Ser Val Phe Leu Phe Pro Pro Lys Pro Lys
                   245                 250                 255
   gac acc ctc atg atc agc cgg acc ccc gag gtg acc tgc gtg gtg gtg        816
   Asp Thr Leu Met Ile Ser Arg Thr Pro Glu Val Thr Cys Val Val Val
               260                 265                 270
   gac gtg agc cac gag gac ccc gag gtg aag ttc aac tgg tac gtg gac        864
   Asp Val Ser His Glu Asp Pro Glu Val Lys Phe Asn Trp Tyr Val Asp
           275                 280                 285
   ggc gtg gag gtg cac aac gcc aag acc aag ccc cgg gag gag cag tac        912
   Gly Val Glu Val His Asn Ala Lys Thr Lys Pro Arg Glu Glu Gln Tyr
       290                 295                 300
   aac agc acc tac cgg gtg gtg agc gtg ctc acc gtg ctg cac cag gac        960
   Asn Ser Thr Tyr Arg Val Val Ser Val Leu Thr Val Leu His Gln Asp
   305                 310                 315                 320
   tgg ctg aac ggc aag gag tac aag tgc aag gtg agc aac aag gcc ctg       1008
   Trp Leu Asn Gly Lys Glu Tyr Lys Cys Lys Val Ser Asn Lys Ala Leu
                   325                 330                 335
   cct gcc ccc atc gag aag acc atc agc aag gcc aag ggc cag ccc cgg     1056
   Pro Ala Pro Ile Glu Lys Thr Ile Ser Lys Ala Lys Gly Gln Pro Arg
               340                 345                 350
   gag ccc cag gtg tac acc ctg ccc ccc agc cgg gag gag atg acc aag     1104
   Glu Pro Gln Val Tyr Thr Leu Pro Pro Ser Arg Glu Glu Met Thr Lys
           355                 360                 365
   aac cag gtg tcc ctc acc tgt ctg gtg aag ggc ttc tac ccc agc gac     1152
   Asn Gln Val Ser Leu Thr Cys Leu Val Lys Gly Phe Tyr Pro Ser Asp
       370                 375                 380
   atc gcc gtg gag tgg gag agc aac ggc cag ccc gag aac aac tac aag     1200
   Ile Ala Val Glu Trp Glu Ser Asn Gly Gln Pro Glu Asn Asn Tyr Lys
   385                 390                 395                 400
   acc acc ccc cct gtg ctg gac agc gac ggc agc ttc ttc ctg tac agc     1248
   Thr Thr Pro Pro Val Leu Asp Ser Asp Gly Ser Phe Phe Leu Tyr Ser
                   405                 410                 415
   aag ctc acc gtg gac aag agc cgg tgg cag cag ggc aac gtg ttc agc     1296
   Lys Leu Thr Val Asp Lys Ser Arg Trp Gln Gln Gly Asn Val Phe Ser
               420                 425                 430
   tgc agc gtg atg cac gag gcc ctg cac aac cac tac acc cag aag agc     1344
   Cys Ser Val Met His Glu Ala Leu His Asn His Tyr Thr Gln Lys Ser
           435                 440                 445
   ctg agc ctg agc ccc ggc aag                                         1365
   Leu Ser Leu Ser Pro Gly Lys
       450                 455
<210> 119
   <211> 455
   <212> PRT
   <213> Artificial sequence
<220>
   <223> Heavy chain CR4289
<400> 119
   Glu Val Gln Leu Val Gln Ser Gly Ala Glu Val Lys Lys Pro Gly Glu
   1               5                   10                  15
   Ser Leu Arg Ile Ser Cys Lys Gly Ser Gly Tyr Ser Phe Thr Ser Asn
               20                  25                  30
   Trp Ile Thr Trp Val Arg Gln Met Pro Gly Lys Gly Leu Glu Trp Met
           35                  40                  45
   Gly Arg Ile Asp Pro Ser Asp Ser Tyr Thr Asn Tyr Ser Pro Ser Phe
   50 55 60
   Gln Gly His Val Thr Ile Ser Ala Asp Lys Ser Ile Ser Thr Ala Tyr
   65 70 75 80
   Leu Gln Trp Ser Ser Leu Lys Ala Ser Asp Thr Ala Met Tyr Tyr Cys
   85 90 95
   Ala Arg Asp Val Val Gly Val Gly Ala Ser Asp Tyr Tyr Tyr Tyr Met
   100 105 110
   Asp Val Trp Gly Gln Gly Thr Thr Val Thr Val Ser Ser Ala Ser Thr
   115 120 125
   Lys Gly Pro Ser Val Phe Pro Leu Ala Pro Ser Ser Lys Ser Thr Ser
   130 135 140
   Gly Gly Thr Ala Ala Leu Gly Cys Leu Val Lys Asp Tyr Phe Pro Glu
   145 150 155 160
   Pro Val Thr Val Ser Trp Asn Ser Gly Ala Leu Thr Ser Gly Val His
   165 170 175
   Thr Phe Pro Ala Val Leu Gln Ser Ser Gly Leu Tyr Ser Leu Ser Ser
   180 185 190
   Val Val Thr Val Pro Ser Ser Ser Leu Gly Thr Gln Thr Tyr Ile Cys
   195 200 205
   Asn Val Asn His Lys Pro Ser Asn Thr Lys Val Asp Lys Arg Val Glu
   210 215 220
   Pro Lys Ser Cys Asp Lys Thr His Thr Cys Pro Pro Cys Pro Ala Pro
   225 230 235 240
   Glu Leu Leu Gly Gly Pro Ser Val Phe Leu Phe Pro Pro Lys Pro Lys
   245 250 255
   Asp Thr Leu Met Ile Ser Arg Thr Pro Glu Val Thr Cys Val Val Val
   260 265 270
   Asp Val Ser His Glu Asp Pro Glu Val Lys Phe Asn Trp Tyr Val Asp
   275 280 285
   Gly Val Glu Val His Asn Ala Lys Thr Lys Pro Arg Glu Glu Gln Tyr
   290 295 300
   Asn Ser Thr Tyr Arg Val Val Ser Val Leu Thr Val Leu His Gln Asp
   305 310 315 320
   Trp Leu Asn Gly Lys Glu Tyr Lys Cys Lys Val Ser Asn Lys Ala Leu
   325 330 335
   Pro Ala Pro Ile Glu Lys Thr Ile Ser Lys Ala Lys Gly Gln Pro Arg
   340 345 350
   Glu Pro Gln Val Tyr Thr Leu Pro Pro Ser Arg Glu Glu Met Thr Lys
   355 360 365
   Asn Gln Val Ser Leu Thr Cys Leu Val Lys Gly Phe Tyr Pro Ser Asp
   370 375 380
   Ile Ala Val Glu Trp Glu Ser Asn Gly Gln Pro Glu Asn Asn Tyr Lys
   385 390 395 400
   Thr Thr Pro Pro Val Leu Asp Ser Asp Gly Ser Phe Phe Leu Tyr Ser
   405 410 415
   Lys Leu Thr Val Asp Lys Ser Arg Trp Gln Gln Gly Asn Val Phe Ser
   420 425 430
   Cys Ser Val Met His Glu Ala Leu His Asn His Tyr Thr Gln Lys Ser
   435 440 445
   Leu Ser Leu Ser Pro Gly Lys
   450 455

<210> 120
   <211> 1362
   <212> DNA
   <213> Artificial sequence
<220>
   <223> Heavy chain CR4299
   <220>
   <221> CDS
   <222> (1)..(1362)
   <223>
<400> 120
   cag gtg cag ctg gtg gag tct ggg gga ggc gtg gtc cag cct ggg agg       48
   Gln Val Gln Leu Val Glu Ser Gly Gly Gly Val Val Gln Pro Gly Arg
   1               5                   10                  15
   tcc ctg aga ctc tcc tgt gca gcc tct gga ttc acc ttc agt ggc tat       96
   Ser Leu Arg Leu Ser Cys Ala Ala Ser Gly Phe Thr Phe Ser Gly Tyr
               20                  25                  30
   gct atg cac tgg gtc cgc cag gct cca ggc aag ggg cta gac tgg gtg      144
   Ala Met His Trp Val Arg Gln Ala Pro Gly Lys Gly Leu Asp Trp Val
           35                  40                  45
   gca gtt ata tca tat gat gga agt gaa aaa tat tcc gcc gac tct gtg      192
   Ala Val Ile Ser Tyr Asp Gly Ser Glu Lys Tyr Ser Ala Asp Ser Val
       50                  55                  60
   aag ggc cgg ttc acc atc tcc aga gac aat tcc aag aac acg ctc tat      240
   Lys Gly Arg Phe Thr Ile Ser Arg Asp Asn Ser Lys Asn Thr Leu Tyr
   65                  70                  75                  80
   ctg caa atg aac agc ctg aga gct gag gac acg gct gtg tat tat tgt      288
   Leu Gln Met Asn Ser Leu Arg Ala Glu Asp Thr Ala Val Tyr Tyr Cys
                   85                  90                  95
   gcg aaa gag tcc ggg gga cct ata tgg tac aag tac tac ggc gtg gac      336
   Ala Lys Glu Ser Gly Gly Pro Ile Trp Tyr Lys Tyr Tyr Gly Val Asp
               100                 105                 110
   gtc tgg ggc cag ggc acc acc gtg acc gtc tcc agc gct agc acc aag      384
   Val Trp Gly Gln Gly Thr Thr Val Thr Val Ser Ser Ala Ser Thr Lys
           115                 120                 125
   ggc ccc agc gtg ttc ccc ctg gcc ccc agc agc aag agc acc agc ggc      432
   Gly Pro Ser Val Phe Pro Leu Ala Pro Ser Ser Lys Ser Thr Ser Gly
       130                 135                 140
   ggc aca gcc gcc ctg ggc tgc ctg gtg aag gac tac ttc ccc gag ccc      480
   Gly Thr Ala Ala Leu Gly Cys Leu Val Lys Asp Tyr Phe Pro Glu Pro
   145                 150                 155                 160
   gtg acc gtg agc tgg aac agc ggc gcc ttg acc agc ggc gtg cac acc      528
   Val Thr Val Ser Trp Asn Ser Gly Ala Leu Thr Ser Gly Val His Thr
                   165                 170                 175
   ttc ccc gcc gtg ctg cag agc agc ggc ctg tac agc ctg agc agc gtg      576
   Phe Pro Ala Val Leu Gln Ser Ser Gly Leu Tyr Ser Leu Ser Ser Val
               180                 185                 190
   gtg acc gtg ccc agc agc agc ctg ggc acc cag acc tac atc tgc aac      624
   Val Thr Val Pro Ser Ser Ser Leu Gly Thr Gln Thr Tyr Ile Cys Asn
           195                 200                 205
   gtg aac cac aag ccc agc aac acc aag gtg gac aaa cgc gtg gag ccc      672
   Val Asn His Lys Pro Ser Asn Thr Lys Val Asp Lys Arg Val Glu Pro
       210                 215                 220
   aag agc tgc gac aag acc cac acc tgc ccc ccc tgc cct gcc ccc gag      720
   Lys Ser Cys Asp Lys Thr His Thr Cys Pro Pro Cys Pro Ala Pro Glu
   225                 230                 235                 240
   ctg ctg ggc gga ccc tcc gtg ttc ctg ttc ccc ccc aag ccc aag gac        768
   Leu Leu Gly Gly Pro Ser Val Phe Leu Phe Pro Pro Lys Pro Lys Asp
                   245                 250                 255
   acc ctc atg atc agc cgg acc ccc gag gtg acc tgc gtg gtg gtg gac        816
   Thr Leu Met Ile Ser Arg Thr Pro Glu Val Thr Cys Val Val Val Asp
               260                 265                 270
   gtg agc cac gag gac ccc gag gtg aag ttc aac tgg tac gtg gac ggc        864
   Val Ser His Glu Asp Pro Glu Val Lys Phe Asn Trp Tyr Val Asp Gly
           275                 280                 285
   gtg gag gtg cac aac gcc aag acc aag ccc cgg gag gag cag tac aac        912
   Val Glu Val His Asn Ala Lys Thr Lys Pro Arg Glu Glu Gln Tyr Asn
       290                 295                 300
   agc acc tac cgg gtg gtg agc gtg ctc acc gtg ctg cac cag gac tgg        960
   Ser Thr Tyr Arg Val Val Ser Val Leu Thr Val Leu His Gln Asp Trp
   305                 310                 315                 320
   ctg aac ggc aag gag tac aag tgc aag gtg agc aac aag gcc ctg cct       1008
   Leu Asn Gly Lys Glu Tyr Lys Cys Lys Val Ser Asn Lys Ala Leu Pro
                   325                 330                 335
   gcc ccc atc gag aag acc atc agc aag gcc aag ggc cag ccc cgg gag       1056
   Ala Pro Ile Glu Lys Thr Ile Ser Lys Ala Lys Gly Gln Pro Arg Glu
               340                 345                 350
   ccc cag gtg tac acc ctg ccc ccc agc cgg gag gag atg acc aag aac       1104
   Pro Gln Val Tyr Thr Leu Pro Pro Ser Arg Glu Glu Met Thr Lys Asn
           355                 360                 365
   cag gtg tcc ctc acc tgt ctg gtg aag ggc ttc tac ccc agc gac atc       1152
   Gln Val Ser Leu Thr Cys Leu Val Lys Gly Phe Tyr Pro Ser Asp Ile
       370                 375                 380
   gcc gtg gag tgg gag agc aac ggc cag ccc gag aac aac tac aag acc       1200
   Ala Val Glu Trp Glu Ser Asn Gly Gln Pro Glu Asn Asn Tyr Lys Thr
   385                 390                 395                 400
   acc ccc cct gtg ctg gac agc gac ggc agc ttc ttc ctg tac agc aag       1248
   Thr Pro Pro Val Leu Asp Ser Asp Gly Ser Phe Phe Leu Tyr Ser Lys
                   405                 410                 415
   ctc acc gtg gac aag agc cgg tgg cag cag ggc aac gtg ttc agc tgc       1296
   Leu Thr Val Asp Lys Ser Arg Trp Gln Gln Gly Asn Val Phe Ser Cys
               420                 425                 430
   agc gtg atg cac gag gcc ctg cac aac cac tac acc cag aag agc ctg       1344
   Ser Val Met His Glu Ala Leu His Asn His Tyr Thr Gln Lys Ser Leu
           435                 440                 445
   agc ctg agc ccc ggc aag                                               1362
   Ser Leu Ser Pro Gly Lys
       450
<210> 121
   <211> 454
   <212> PRT
   <213> Artificial sequence
<220>
   <223> Heavy chain CR4299
<400> 121
   Gln Val Gln Leu Val Glu Ser Gly Gly Gly Val Val Gln Pro Gly Arg
   1 5 10 15
   Ser Leu Arg Leu Ser Cys Ala Ala Ser Gly Phe Thr Phe Ser Gly Tyr
   20 25 30
   Ala Met His Trp Val Arg Gln Ala Pro Gly Lys Gly Leu Asp Trp Val
   35 40 45
   Ala Val Ile Ser Tyr Asp Gly Ser Glu Lys Tyr Ser Ala Asp Ser Val
   50 55 60
   Lys Gly Arg Phe Thr Ile Ser Arg Asp Asn Ser Lys Asn Thr Leu Tyr
   65 70 75 80
   Leu Gln Met Asn Ser Leu Arg Ala Glu Asp Thr Ala Val Tyr Tyr Cys
   85 90 95
   Ala Lys Glu Ser Gly Gly Pro Ile Trp Tyr Lys Tyr Tyr Gly Val Asp
   100 105 110
   Val Trp Gly Gln Gly Thr Thr Val Thr Val Ser Ser Ala Ser Thr Lys
   115 120 125
   Gly Pro Ser Val Phe Pro Leu Ala Pro Ser Ser Lys Ser Thr Ser Gly
   130 135 140
   Gly Thr Ala Ala Leu Gly Cys Leu Val Lys Asp Tyr Phe Pro Glu Pro
   145 150 155 160
   Val Thr Val Ser Trp Asn Ser Gly Ala Leu Thr Ser Gly Val His Thr
   165 170 175
   Phe Pro Ala Val Leu Gln Ser Ser Gly Leu Tyr Ser Leu Ser Ser Val
   180 185 190
   Val Thr Val Pro Ser Ser Ser Leu Gly Thr Gln Thr Tyr Ile Cys Asn
   195 200 205
   Val Asn His Lys Pro Ser Asn Thr Lys Val Asp Lys Arg Val Glu Pro
   210 215 220
   Lys Ser Cys Asp Lys Thr His Thr Cys Pro Pro Cys Pro Ala Pro Glu
   225 230 235 240
   Leu Leu Gly Gly Pro Ser Val Phe Leu Phe Pro Pro Lys Pro Lys Asp
   245 250 255
   Thr Leu Met Ile Ser Arg Thr Pro Glu Val Thr Cys Val Val Val Asp
   260 265 270
   Val Ser His Glu Asp Pro Glu Val Lys Phe Asn Trp Tyr Val Asp Gly
   275 280 285
   Val Glu Val His Asn Ala Lys Thr Lys Pro Arg Glu Glu Gln Tyr Asn
   290 295 300
   Ser Thr Tyr Arg Val Val Ser Val Leu Thr Val Leu His Gln Asp Trp
   305 310 315 320
   Leu Asn Gly Lys Glu Tyr Lys Cys Lys Val Ser Asn Lys Ala Leu Pro
   325 330 335
   Ala Pro Ile Glu Lys Thr Ile Ser Lys Ala Lys Gly Gln Pro Arg Glu
   340 345 350
   Pro Gln Val Tyr Thr Leu Pro Pro Ser Arg Glu Glu Met Thr Lys Asn
   355 360 365
   Gln Val Ser Leu Thr Cys Leu Val Lys Gly Phe Tyr Pro Ser Asp Ile
   370 375 380
   Ala Val Glu Trp Glu Ser Asn Gly Gln Pro Glu Asn Asn Tyr Lys Thr
   385 390 395 400
   Thr Pro Pro Val Leu Asp Ser Asp Gly Ser Phe Phe Leu Tyr Ser Lys
   405 410 415
   Leu Thr Val Asp Lys Ser Arg Trp Gln Gln Gly Asn Val Phe Ser Cys
   420 425 430
   Ser Val Met His Glu Ala Leu His Asn His Tyr Thr Gln Lys Ser Leu
   435 440 445
   Ser Leu Ser Pro Gly Lys
   450
<210> 122
   <211> 1347
   <212> DNA
   <213> Artificial sequence
<220>
   <223> Heavy chain CR4311
   <220>
   <221> CDS
   <222> (1)..(1347)
   <223>
<400> 122
   cag gtg cag ctg gtg gag tct ggg gga ggc gtg gtc cag cct ggc agg       48
   Gln Val Gln Leu Val Glu Ser Gly Gly Gly Val Val Gln Pro Gly Arg
   1               5                   10                  15
   tcc ctg aga ctc tcc tgt gta gcc tct gga ttc acc ttc agt aag gac       96
   Ser Leu Arg Leu Ser Cys Val Ala Ser Gly Phe Thr Phe Ser Lys Asp
               20                  25                  30
   gct atg cac tgg gtc cgc cag gct cca ggc aag ggg cta gag tgg gtg      144
   Ala Met His Trp Val Arg Gln Ala Pro Gly Lys Gly Leu Glu Trp Val
           35                  40                  45
   gca gtt ata tca tat gat gga agt gat aaa cac tac gca gac tcc gtg      192
   Ala Val Ile Ser Tyr Asp Gly Ser Asp Lys His Tyr Ala Asp Ser Val
       50                  55                  60
   aag ggc cga gtc acc atc tcc aga gac aat tcc agg aaa acg ctg tat      240
   Lys Gly Arg Val Thr Ile Ser Arg Asp Asn Ser Arg Lys Thr Leu Tyr
   65                  70                  75                  80
   ctg cga atg gac agc ctg aga gct gag gac acg gct cta tat tac tgt      288
   Leu Arg Met Asp Ser Leu Arg Ala Glu Asp Thr Ala Leu Tyr Tyr Cys
                   85                  90                  95
   gcg aga gga tac aac tct ggt cat tac ttt gac tac tgg ggc cag ggc      336
   Ala Arg Gly Tyr Asn Ser Gly His Tyr Phe Asp Tyr Trp Gly Gln Gly
               100                 105                 110
   acc ctg gtg acc gtc tcc agc gct agc acc aag ggc ccc agc gtg ttc      384
   Thr Leu Val Thr Val Ser Ser Ala Ser Thr Lys Gly Pro Ser Val Phe
           115                 120                 125
   ccc ctg gcc ccc agc agc aag agc acc agc ggc ggc aca gcc gcc ctg      432
   Pro Leu Ala Pro Ser Ser Lys Ser Thr Ser Gly Gly Thr Ala Ala Leu
       130                 135                 140
   ggc tgc ctg gtg aag gac tac ttc ccc gag ccc gtg acc gtg agc tgg      480
   Gly Cys Leu Val Lys Asp Tyr Phe Pro Glu Pro Val Thr Val Ser Trp
   145                 150                 155                 160
   aac agc ggc gcc ttg acc agc ggc gtg cac acc ttc ccc gcc gtg ctg      528
   Asn Ser Gly Ala Leu Thr Ser Gly Val His Thr Phe Pro Ala Val Leu
                   165                 170                 175
   cag agc agc ggc ctg tac agc ctg agc agc gtg gtg acc gtg ccc agc      576
   Gln Ser Ser Gly Leu Tyr Ser Leu Ser Ser Val Val Thr Val Pro Ser
               180                 185                 190
   agc agc ctg ggc acc cag acc tac atc tgc aac gtg aac cac aag ccc      624
   Ser Ser Leu Gly Thr Gln Thr Tyr Ile Cys Asn Val Asn His Lys Pro
           195                 200                 205
   agc aac acc aag gtg gac aaa cgc gtg gag ccc aag agc tgc gac aag      672
   Ser Asn Thr Lys Val Asp Lys Arg Val Glu Pro Lys Ser Cys Asp Lys
       210                 215                 220
   acc cac acc tgc ccc ccc tgc cct gcc ccc gag ctg ctg ggc gga ccc      720
   Thr His Thr Cys Pro Pro Cys Pro Ala Pro Glu Leu Leu Gly Gly Pro
   225                 230                 235                 240
   tcc gtg ttc ctg ttc ccc ccc aag ccc aag gac acc ctc atg atc agc      768
   Ser Val Phe Leu Phe Pro Pro Lys Pro Lys Asp Thr Leu Met Ile Ser
                   245                 250                 255
   cgg acc ccc gag gtg acc tgc gtg gtg gtg gac gtg agc cac gag gac      816
   Arg Thr Pro Glu Val Thr Cys Val Val Val Asp Val Ser His Glu Asp
               260                 265                 270
   ccc gag gtg aag ttc aac tgg tac gtg gac ggc gtg gag gtg cac aac      864
   Pro Glu Val Lys Phe Asn Trp Tyr Val Asp Gly Val Glu Val His Asn
           275                 280                 285
   gcc aag acc aag ccc cgg gag gag cag tac aac agc acc tac cgg gtg      912
   Ala Lys Thr Lys Pro Arg Glu Glu Gln Tyr Asn Ser Thr Tyr Arg Val
       290                 295                 300
   gtg agc gtg ctc acc gtg ctg cac cag gac tgg ctg aac ggc aag gag      960
   Val Ser Val Leu Thr Val Leu His Gln Asp Trp Leu Asn Gly Lys Glu
   305                 310                 315                 320
   tac aag tgc aag gtg agc aac aag gcc ctg cct gcc ccc atc gag aag     1008
   Tyr Lys Cys Lys Val Ser Asn Lys Ala Leu Pro Ala Pro Ile Glu Lys
                   325                 330                 335
   acc atc agc aag gcc aag ggc cag ccc cgg gag ccc cag gtg tac acc     1056
   Thr Ile Ser Lys Ala Lys Gly Gln Pro Arg Glu Pro Gln Val Tyr Thr
               340                 345                 350
   ctg ccc ccc agc cgg gag gag atg acc aag aac cag gtg tcc ctc acc     1104
   Leu Pro Pro Ser Arg Glu Glu Met Thr Lys Asn Gln Val Ser Leu Thr
           355                 360                 365
   tgt ctg gtg aag ggc ttc tac ccc agc gac atc gcc gtg gag tgg gag     1152
   Cys Leu Val Lys Gly Phe Tyr Pro Ser Asp Ile Ala Val Glu Trp Glu
       370                 375                 380
   agc aac ggc cag ccc gag aac aac tac aag acc acc ccc cct gtg ctg     1200
   Ser Asn Gly Gln Pro Glu Asn Asn Tyr Lys Thr Thr Pro Pro Val Leu
   385                 390                 395                 400
   gac agc gac ggc agc ttc ttc ctg tac agc aag ctc acc gtg gac aag     1248
   Asp Ser Asp Gly Ser Phe Phe Leu Tyr Ser Lys Leu Thr Val Asp Lys
                   405                 410                 415
   agc cgg tgg cag cag ggc aac gtg ttc agc tgc agc gtg atg cac gag      1296
   Ser Arg Trp Gln Gln Gly Asn Val Phe Ser Cys Ser Val Met His Glu
               420                 425                 430
   gcc ctg cac aac cac tac acc cag aag agc ctg agc ctg agc ccc ggc      1344
   Ala Leu His Asn His Tyr Thr Gln Lys Ser Leu Ser Leu Ser Pro Gly
           435                 440                 445
   aag                                                                  1347
   Lys
<210> 123
   <211> 449
   <212> PRT
   <213> Artificial sequence
<220>
   <223> Heavy chain CR4311
<400> 123
   Gln Val Gln Leu Val Glu Ser Gly Gly Gly Val Val Gln Pro Gly Arg
   1               5                   10                  15
   Ser Leu Arg Leu Ser Cys Val Ala Ser Gly Phe Thr Phe Ser Lys Asp
               20                  25                  30
   Ala Met His Trp Val Arg Gln Ala Pro Gly Lys Gly Leu Glu Trp Val
           35                  40                  45
   Ala Val Ile Ser Tyr Asp Gly Ser Asp Lys His Tyr Ala Asp Ser Val
       50                  55                  60
   Lys Gly Arg Val Thr Ile Ser Arg Asp Asn Ser Arg Lys Thr Leu Tyr
   65                  70                  75                  80
   Leu Arg Met Asp Ser Leu Arg Ala Glu Asp Thr Ala Leu Tyr Tyr Cys
                   85                  90                  95
   Ala Arg Gly Tyr Asn Ser Gly His Tyr Phe Asp Tyr Trp Gly Gln Gly
               100                 105                 110
   Thr Leu Val Thr Val Ser Ser Ala Ser Thr Lys Gly Pro Ser Val Phe
           115                 120                 125
   Pro Leu Ala Pro Ser Ser Lys Ser Thr Ser Gly Gly Thr Ala Ala Leu
   130 135 140
   Gly Cys Leu Val Lys Asp Tyr Phe Pro Glu Pro Val Thr Val Ser Trp
   145 150 155 160
   Asn Ser Gly Ala Leu Thr Ser Gly Val His Thr Phe Pro Ala Val Leu
   165 170 175
   Gln Ser Ser Gly Leu Tyr Ser Leu Ser Ser Val Val Thr Val Pro Ser
   180 185 190
   Ser Ser Leu Gly Thr Gln Thr Tyr Ile Cys Asn Val Asn His Lys Pro
   195 200 205
   Ser Asn Thr Lys Val Asp Lys Arg Val Glu Pro Lys Ser Cys Asp Lys
   210 215 220
   Thr His Thr Cys Pro Pro Cys Pro Ala Pro Glu Leu Leu Gly Gly Pro
   225 230 235 240
   Ser Val Phe Leu Phe Pro Pro Lys Pro Lys Asp Thr Leu Met Ile Ser
   245 250 255
   Arg Thr Pro Glu Val Thr Cys Val Val Val Asp Val Ser His Glu Asp
   260 265 270
   Pro Glu Val Lys Phe Asn Trp Tyr Val Asp Gly Val Glu Val His Asn
   275 280 285
   Ala Lys Thr Lys Pro Arg Glu Glu Gln Tyr Asn Ser Thr Tyr Arg Val
   290 295 300
   Val Ser Val Leu Thr Val Leu His Gln Asp Trp Leu Asn Gly Lys Glu
   305 310 315 320
   Tyr Lys Cys Lys Val Ser Asn Lys Ala Leu Pro Ala Pro Ile Glu Lys
   325 330 335
   Thr Ile Ser Lys Ala Lys Gly Gln Pro Arg Glu Pro Gln Val Tyr Thr
   340 345 350
   Leu Pro Pro Ser Arg Glu Glu Met Thr Lys Asn Gln Val Ser Leu Thr
   355 360 365
   Cys Leu Val Lys Gly Phe Tyr Pro Ser Asp Ile Ala Val Glu Trp Glu
   370 375 380
   Ser Asn Gly Gln Pro Glu Asn Asn Tyr Lys Thr Thr Pro Pro Val Leu
   385                 390                 395                 400
   Asp Ser Asp Gly Ser Phe Phe Leu Tyr Ser Lys Leu Thr Val Asp Lys
                   405                 410                 415
   Ser Arg Trp Gln Gln Gly Asn Val Phe Ser Cys Ser Val Met His Glu
               420                 425                 430
   Ala Leu His Asn His Tyr Thr Gln Lys Ser Leu Ser Leu Ser Pro Gly
           435                 440                 445
   Lys
<210> 124
   <211> 1341
   <212> DNA
   <213> Artificial sequence
<220>
   <223> Heavy chain CR4325
   <220>
   <221> CDS
   <222> (1)..(1341)
   <223>
<400> 124
   cag gtg cag ctg gtg cag tct ggg gct gag gtg aag aag cct ggg tcc        48
   Gln Val Gln Leu Val Gln Ser Gly Ala Glu Val Lys Lys Pro Gly Ser
   1               5                   10                  15
   tcg gtg aag gtc tcc tgc aag gct tct gga gac acc ttc agc agt tat        96
   Ser Val Lys Val Ser Cys Lys Ala Ser Gly Asp Thr Phe Ser Ser Tyr
               20                  25                  30
   gct atc agc tgg gtg cga cag gcc cct gga caa ggg ctt gag tgg atg       144
   Ala Ile Ser Trp Val Arg Gln Ala Pro Gly Gln Gly Leu Glu Trp Met
           35                  40                  45
   gga ggg atc ttt ggt aca gca agc tac gca cag aag ttc cag ggc aga       192
   Gly Gly Ile Phe Gly Thr Ala Ser Tyr Ala Gln Lys Phe Gln Gly Arg
       50                  55                  60
   gtc acg att acc gcg gac gaa tcc acg agc aca gcc tac atg gag ctg      240
   Val Thr Ile Thr Ala Asp Glu Ser Thr Ser Thr Ala Tyr Met Glu Leu
   65                  70                  75                  80
   agc agc ctg aga tct gag gac acg gcc gtg tat tac tgt gcg aga gga      288
   Ser Ser Leu Arg Ser Glu Asp Thr Ala Val Tyr Tyr Cys Ala Arg Gly
                   85                  90                  95
   ggg atg gct aca aca ccg gga ctt gac tac tgg ggc cag ggc acc ctg      336
   Gly Met Ala Thr Thr Pro Gly Leu Asp Tyr Trp Gly Gln Gly Thr Leu
               100                 105                 110
   gtg acc gtc tcc agc gct agc acc aag ggc ccc agc gtg ttc ccc ctg      384
   Val Thr Val Ser Ser Ala Ser Thr Lys Gly Pro Ser Val Phe Pro Leu
           115                 120                 125
   gcc ccc agc agc aag agc acc agc ggc ggc aca gcc gcc ctg ggc tgc      432
   Ala Pro Ser Ser Lys Ser Thr Ser Gly Gly Thr Ala Ala Leu Gly Cys
       130                 135                 140
   ctg gtg aag gac tac ttc ccc gag ccc gtg acc gtg agc tgg aac agc      480
   Leu Val Lys Asp Tyr Phe Pro Glu Pro Val Thr Val Ser Trp Asn Ser
   145                 150                 155                 160
   ggc gcc ttg acc agc ggc gtg cac acc ttc ccc gcc gtg ctg cag agc      528
   Gly Ala Leu Thr Ser Gly Val His Thr Phe Pro Ala Val Leu Gln Ser
                   165                 170                 175
   agc ggc ctg tac agc ctg agc agc gtg gtg acc gtg ccc agc agc agc      576
   Ser Gly Leu Tyr Ser Leu Ser Ser Val Val Thr Val Pro Ser Ser Ser
               180                 185                 190
   ctg ggc acc cag acc tac atc tgc aac gtg aac cac aag ccc agc aac      624
   Leu Gly Thr Gln Thr Tyr Ile Cys Asn Val Asn His Lys Pro Ser Asn
           195                 200                 205
   acc aag gtg gac aaa cgc gtg gag ccc aag agc tgc gac aag acc cac      672
   Thr Lys Val Asp Lys Arg Val Glu Pro Lys Ser Cys Asp Lys Thr His
       210                 215                 220
   acc tgc ccc ccc tgc cct gcc ccc gag ctg ctg ggc gga ccc tcc gtg      720
   Thr Cys Pro Pro Cys Pro Ala Pro Glu Leu Leu Gly Gly Pro Ser Val
   225                 230                 235                 240
   ttc ctg ttc ccc ccc aag ccc aag gac acc ctc atg atc agc cgg acc      768
   Phe Leu Phe Pro Pro Lys Pro Lys Asp Thr Leu Met Ile Ser Arg Thr
                   245                 250                 255
   ccc gag gtg acc tgc gtg gtg gtg gac gtg agc cac gag gac ccc gag      816
   Pro Glu Val Thr Cys Val Val Val Asp Val Ser His Glu Asp Pro Glu
               260                 265                 270
   gtg aag ttc aac tgg tac gtg gac ggc gtg gag gtg cac aac gcc aag      864
   Val Lys Phe Asn Trp Tyr Val Asp Gly Val Glu Val His Asn Ala Lys
           275                 280                 285
   acc aag ccc cgg gag gag cag tac aac agc acc tac cgg gtg gtg agc      912
   Thr Lys Pro Arg Glu Glu Gln Tyr Asn Ser Thr Tyr Arg Val Val Ser
       290                 295                 300
   gtg ctc acc gtg ctg cac cag gac tgg ctg aac ggc aag gag tac aag      960
   Val Leu Thr Val Leu His Gln Asp Trp Leu Asn Gly Lys Glu Tyr Lys
   305                 310                 315                 320
   tgc aag gtg agc aac aag gcc ctg cct gcc ccc atc gag aag acc atc      1008
   Cys Lys Val Ser Asn Lys Ala Leu Pro Ala Pro Ile Glu Lys Thr Ile
                   325                 330                 335
   agc aag gcc aag ggc cag ccc cgg gag ccc cag gtg tac acc ctg ccc      1056
   Ser Lys Ala Lys Gly Gln Pro Arg Glu Pro Gln Val Tyr Thr Leu Pro
               340                 345                 350
   ccc agc cgg gag gag atg acc aag aac cag gtg tcc ctc acc tgt ctg      1104
   Pro Ser Arg Glu Glu Met Thr Lys Asn Gln Val Ser Leu Thr Cys Leu
           355                 360                 365
   gtg aag ggc ttc tac ccc agc gac atc gcc gtg gag tgg gag agc aac      1152
   Val Lys Gly Phe Tyr Pro Ser Asp Ile Ala Val Glu Trp Glu Ser Asn
       370                 375                 380
   ggc cag ccc gag aac aac tac aag acc acc ccc cct gtg ctg gac agc      1200
   Gly Gln Pro Glu Asn Asn Tyr Lys Thr Thr Pro Pro Val Leu Asp Ser
   385                 390                 395                 400
   gac ggc agc ttc ttc ctg tac agc aag ctc acc gtg gac aag agc cgg      1248
   Asp Gly Ser Phe Phe Leu Tyr Ser Lys Leu Thr Val Asp Lys Ser Arg
                   405                 410                 415
   tgg cag cag ggc aac gtg ttc agc tgc agc gtg atg cac gag gcc ctg      1296
   Trp Gln Gln Gly Asn Val Phe Ser Cys Ser Val Met His Glu Ala Leu
               420                 425                 430
   cac aac cac tac acc cag aag agc ctg agc ctg agc ccc ggc aag          1341
   His Asn His Tyr Thr Gln Lys Ser Leu Ser Leu Ser Pro Gly Lys
           435                 440                 445
<210> 125
   <211> 447
   <212> PRT
   <213> Artificial sequence
<220>
   <223> Heavy chain CR4325
<400> 125
   Gln Val Gln Leu Val Gln Ser Gly Ala Glu Val Lys Lys Pro Gly Ser
   1               5                   10                  15
   Ser Val Lys Val Ser Cys Lys Ala Ser Gly Asp Thr Phe Ser Ser Tyr
               20                  25                  30
   Ala Ile Ser Trp Val Arg Gln Ala Pro Gly Gln Gly Leu Glu Trp Met
           35                  40                  45
   Gly Gly Ile Phe Gly Thr Ala Ser Tyr Ala Gln Lys Phe Gln Gly Arg
   50 55 60
   Val Thr Ile Thr Ala Asp Glu Ser Thr Ser Thr Ala Tyr Met Glu Leu
   65 70 75 80
   Ser Ser Leu Arg Ser Glu Asp Thr Ala Val Tyr Tyr Cys Ala Arg Gly
   85 90 95
   Gly Met Ala Thr Thr Pro Gly Leu Asp Tyr Trp Gly Gln Gly Thr Leu
   100 105 110
   Val Thr Val Ser Ser Ala Ser Thr Lys Gly Pro Ser Val Phe Pro Leu
   115 120 125
   Ala Pro Ser Ser Lys Ser Thr Ser Gly Gly Thr Ala Ala Leu Gly Cys
   130 135 140
   Leu Val Lys Asp Tyr Phe Pro Glu Pro Val Thr Val Ser Trp Asn Ser
   145 150 155 160
   Gly Ala Leu Thr Ser Gly Val His Thr Phe Pro Ala Val Leu Gln Ser
   165 170 175
   Ser Gly Leu Tyr Ser Leu Ser Ser Val Val Thr Val Pro Ser Ser Ser
   180 185 190
   Leu Gly Thr Gln Thr Tyr Ile Cys Asn Val Asn His Lys Pro Ser Asn
   195 200 205
   Thr Lys Val Asp Lys Arg Val Glu Pro Lys Ser Cys Asp Lys Thr His
   210 215 220
   Thr Cys Pro Pro Cys Pro Ala Pro Glu Leu Leu Gly Gly Pro Ser Val
   225 230 235 240
   Phe Leu Phe Pro Pro Lys Pro Lys Asp Thr Leu Met Ile Ser Arg Thr
   245 250 255
   Pro Glu Val Thr Cys Val Val Val Asp Val Ser His Glu Asp Pro Glu
   260 265 270
   Val Lys Phe Asn Trp Tyr Val Asp Gly Val Glu Val His Asn Ala Lys
   275 280 285
   Thr Lys Pro Arg Glu Glu Gln Tyr Asn Ser Thr Tyr Arg Val Val Ser
   290 295 300
   Val Leu Thr Val Leu His Gln Asp Trp Leu Asn Gly Lys Glu Tyr Lys
   305 310 315 320
   Cys Lys Val Ser Asn Lys Ala Leu Pro Ala Pro Ile Glu Lys Thr Ile
   325 330 335
   Ser Lys Ala Lys Gly Gln Pro Arg Glu Pro Gln Val Tyr Thr Leu Pro
   340 345 350
   Pro Ser Arg Glu Glu Met Thr Lys Asn Gln Val Ser Leu Thr Cys Leu
   355 360 365
   Val Lys Gly Phe Tyr Pro Ser Asp Ile Ala Val Glu Trp Glu Ser Asn
   370 375 380
   Gly Gln Pro Glu Asn Asn Tyr Lys Thr Thr Pro Pro Val Leu Asp Ser
   385 390 395 400
   Asp Gly Ser Phe Phe Leu Tyr Ser Lys Leu Thr Val Asp Lys Ser Arg
   405 410 415
   Trp Gln Gln Gly Asn Val Phe Ser Cys Ser Val Met His Glu Ala Leu
   420 425 430
   His Asn His Tyr Thr Gln Lys Ser Leu Ser Leu Ser Pro Gly Lys
   435 440 445
<210> 126
   <211> 1371
   <212> DNA
   <213> Artificial sequence
<220>
   <223> Heavy chain CR4353
   <220>
   <221> CDS
   <222> (1)..(1371)
   <223>
<400> 126
   cag gtg cag ctg gtg gag tct ggg gga ggc gtg gtc cag cct ggg agg 48
   Gln Val Gln Leu Val Glu Ser Gly Gly Gly Val Val Gln Pro Gly Arg
   1               5                   10                  15
   tcc ctg aga ctc tcc tgt gca gcc tct gga ttc acc ttc agt aat tat      96
   Ser Leu Arg Leu Ser Cys Ala Ala Ser Gly Phe Thr Phe Ser Asn Tyr
               20                  25                  30
   gct atg cac tgg gtc cgc cag gct cca ggc aag ggg cta gag tgg gtg     144
   Ala Met His Trp Val Arg Gln Ala Pro Gly Lys Gly Leu Glu Trp Val
           35                  40                  45
   gca gtt ata tca tat gat gga ggt aat aaa tac tac gca gac tcc gtg     192
   Ala Val Ile Ser Tyr Asp Gly Gly Asn Lys Tyr Tyr Ala Asp Ser Val
       50                  55                  60
   aag ggc cga ttc acc atg tcc aga gac aat tcc aag aac acg ctg tat     240
   Lys Gly Arg Phe Thr Met Ser Arg Asp Asn Ser Lys Asn Thr Leu Tyr
   65                  70                  75                  80
   ctg caa atg aac agc ctg aga gct gag gac acg gct gtg tat tat tgt     288
   Leu Gln Met Asn Ser Leu Arg Ala Glu Asp Thr Ala Val Tyr Tyr Cys
                   85                  90                  95
   gcg aga gat ttt tgg agt ggt tac tca atg gta gac tcc tac tac tac     336
   Ala Arg Asp Phe Trp Ser Gly Tyr Ser Met Val Asp Ser Tyr Tyr Tyr
               100                 105                 110
   tac atg gac gtg tgg ggc cag ggc acc acc gtg acc gtc tcc agc gct     384
   Tyr Met Asp Val Trp Gly Gln Gly Thr Thr Val Thr Val Ser Ser Ala
           115                 120                 125
   agc acc aag ggc ccc agc gtg ttc ccc ctg gcc ccc agc agc aag agc     432
   Ser Thr Lys Gly Pro Ser Val Phe Pro Leu Ala Pro Ser Ser Lys Ser
       130                 135                 140
   acc agc ggc ggc aca gcc gcc ctg ggc tgc ctg gtg aag gac tac ttc     480
   Thr Ser Gly Gly Thr Ala Ala Leu Gly Cys Leu Val Lys Asp Tyr Phe
   145                 150                 155                 160
   ccc gag ccc gtg acc gtg agc tgg aac agc ggc gcc ttg acc agc ggc     528
   Pro Glu Pro Val Thr Val Ser Trp Asn Ser Gly Ala Leu Thr Ser Gly
                   165                 170                 175
   gtg cac acc ttc ccc gcc gtg ctg cag agc agc ggc ctg tac agc ctg     576
   Val His Thr Phe Pro Ala Val Leu Gln Ser Ser Gly Leu Tyr Ser Leu
               180                 185                 190
   agc agc gtg gtg acc gtg ccc agc agc agc ctg ggc acc cag acc tac     624
   Ser Ser Val Val Thr Val Pro Ser Ser Ser Leu Gly Thr Gln Thr Tyr
           195                 200                 205
   atc tgc aac gtg aac cac aag ccc agc aac acc aag gtg gac aaa cgc     672
   Ile Cys Asn Val Asn His Lys Pro Ser Asn Thr Lys Val Asp Lys Arg
       210                 215                 220
   gtg gag ccc aag agc tgc gac aag acc cac acc tgc ccc ccc tgc cct     720
   Val Glu Pro Lys Ser Cys Asp Lys Thr His Thr Cys Pro Pro Cys Pro
   225                 230                 235                 240
   gcc ccc gag ctg ctg ggc gga ccc tcc gtg ttc ctg ttc ccc ccc aag     768
   Ala Pro Glu Leu Leu Gly Gly Pro Ser Val Phe Leu Phe Pro Pro Lys
                   245                 250                 255
   ccc aag gac acc ctc atg atc agc cgg acc ccc gag gtg acc tgc gtg     816
   Pro Lys Asp Thr Leu Met Ile Ser Arg Thr Pro Glu Val Thr Cys Val
               260                 265                 270
   gtg gtg gac gtg agc cac gag gac ccc gag gtg aag ttc aac tgg tac      864
   Val Val Asp Val Ser His Glu Asp Pro Glu Val Lys Phe Asn Trp Tyr
           275                 280                 285
   gtg gac ggc gtg gag gtg cac aac gcc aag acc aag ccc cgg gag gag      912
   Val Asp Gly Val Glu Val His Asn Ala Lys Thr Lys Pro Arg Glu Glu
       290                 295                 300
   cag tac aac agc acc tac cgg gtg gtg agc gtg ctc acc gtg ctg cac      960
   Gln Tyr Asn Ser Thr Tyr Arg Val Val Ser Val Leu Thr Val Leu His
   305                 310                 315                 320
   cag gac tgg ctg aac ggc aag gag tac aag tgc aag gtg agc aac aag      1008
   Gln Asp Trp Leu Asn Gly Lys Glu Tyr Lys Cys Lys Val Ser Asn Lys
                   325                 330                 335
   gcc ctg cct gcc ccc atc gag aag acc atc agc aag gcc aag ggc cag      1056
   Ala Leu Pro Ala Pro Ile Glu Lys Thr Ile Ser Lys Ala Lys Gly Gln
               340                 345                 350
   ccc cgg gag ccc cag gtg tac acc ctg ccc ccc agc cgg gag gag atg      1104
   Pro Arg Glu Pro Gln Val Tyr Thr Leu Pro Pro Ser Arg Glu Glu Met
           355                 360                 365
   acc aag aac cag gtg tcc ctc acc tgt ctg gtg aag ggc ttc tac ccc      1152
   Thr Lys Asn Gln Val Ser Leu Thr Cys Leu Val Lys Gly Phe Tyr Pro
       370                 375                 380
   agc gac atc gcc gtg gag tgg gag agc aac ggc cag ccc gag aac aac      1200
   Ser Asp Ile Ala Val Glu Trp Glu Ser Asn Gly Gln Pro Glu Asn Asn
   385                 390                 395                 400
   tac aag acc acc ccc cct gtg ctg gac agc gac ggc agc ttc ttc ctg      1248
   Tyr Lys Thr Thr Pro Pro Val Leu Asp Ser Asp Gly Ser Phe Phe Leu
                   405                 410                 415
   tac agc aag ctc acc gtg gac aag agc cgg tgg cag cag ggc aac gtg      1296
   Tyr Ser Lys Leu Thr Val Asp Lys Ser Arg Trp Gln Gln Gly Asn Val
               420                 425                 430
   ttc agc tgc agc gtg atg cac gag gcc ctg cac aac cac tac acc cag      1344
   Phe Ser Cys Ser Val Met His Glu Ala Leu His Asn His Tyr Thr Gln
           435                 440                 445
   aag agc ctg agc ctg agc ccc ggc aag                                  1371
   Lys Ser Leu Ser Leu Ser Pro Gly Lys
       450                 455
<210> 127
   <211> 457
   <212> PRT
   <213> Artificial sequence
<220>
   <223> Heavy chain CR4353
<400> 127
   Gln Val Gln Leu Val Glu Ser Gly Gly Gly Val Val Gln Pro Gly Arg
   1               5                   10                  15
   Ser Leu Arg Leu Ser Cys Ala Ala Ser Gly Phe Thr Phe Ser Asn Tyr
               20                  25                  30
   Ala Met His Trp Val Arg Gln Ala Pro Gly Lys Gly Leu Glu Trp Val
           35                  40                  45
   Ala Val Ile Ser Tyr Asp Gly Gly Asn Lys Tyr Tyr Ala Asp Ser Val
       50                  55                  60
   Lys Gly Arg Phe Thr Met Ser Arg Asp Asn Ser Lys Asn Thr Leu Tyr
   65                  70                  75                  80
   Leu Gln Met Asn Ser Leu Arg Ala Glu Asp Thr Ala Val Tyr Tyr Cys
                   85                  90                  95
   Ala Arg Asp Phe Trp Ser Gly Tyr Ser Met Val Asp Ser Tyr Tyr Tyr
               100                 105                 110
   Tyr Met Asp Val Trp Gly Gln Gly Thr Thr Val Thr Val Ser Ser Ala
           115                 120                 125
   Ser Thr Lys Gly Pro Ser Val Phe Pro Leu Ala Pro Ser Ser Lys Ser
       130                 135                 140
   Thr Ser Gly Gly Thr Ala Ala Leu Gly Cys Leu Val Lys Asp Tyr Phe
   145                 150                 155                 160
   Pro Glu Pro Val Thr Val Ser Trp Asn Ser Gly Ala Leu Thr Ser Gly
                   165                 170                 175
   Val His Thr Phe Pro Ala Val Leu Gln Ser Ser Gly Leu Tyr Ser Leu
               180                 185                 190
   Ser Ser Val Val Thr Val Pro Ser Ser Ser Leu Gly Thr Gln Thr Tyr
           195                 200                 205
   Ile Cys Asn Val Asn His Lys Pro Ser Asn Thr Lys Val Asp Lys Arg
       210                 215                 220
   Val Glu Pro Lys Ser Cys Asp Lys Thr His Thr Cys Pro Pro Cys Pro
   225                 230                 235                 240
   Ala Pro Glu Leu Leu Gly Gly Pro Ser Val Phe Leu Phe Pro Pro Lys
                   245                 250                 255
   Pro Lys Asp Thr Leu Met Ile Ser Arg Thr Pro Glu Val Thr Cys Val
               260                 265                 270
   Val Val Asp Val Ser His Glu Asp Pro Glu Val Lys Phe Asn Trp Tyr
           275                 280                 285
   Val Asp Gly Val Glu Val His Asn Ala Lys Thr Lys Pro Arg Glu Glu
       290                 295                 300
   Gln Tyr Asn Ser Thr Tyr Arg Val Val Ser Val Leu Thr Val Leu His
   305                 310                 315                 320
   Gln Asp Trp Leu Asn Gly Lys Glu Tyr Lys Cys Lys Val Ser Asn Lys
                   325                 330                 335
   Ala Leu Pro Ala Pro Ile Glu Lys Thr Ile Ser Lys Ala Lys Gly Gln
               340                 345                 350
   Pro Arg Glu Pro Gln Val Tyr Thr Leu Pro Pro Ser Arg Glu Glu Met
           355                 360                 365
   Thr Lys Asn Gln Val Ser Leu Thr Cys Leu Val Lys Gly Phe Tyr Pro
       370                 375                 380
   Ser Asp Ile Ala Val Glu Trp Glu Ser Asn Gly Gln Pro Glu Asn Asn
   385                 390                 395                 400
   Tyr Lys Thr Thr Pro Pro Val Leu Asp Ser Asp Gly Ser Phe Phe Leu
                   405                 410                 415
   Tyr Ser Lys Leu Thr Val Asp Lys Ser Arg Trp Gln Gln Gly Asn Val
               420                 425                 430
   Phe Ser Cys Ser Val Met His Glu Ala Leu His Asn His Tyr Thr Gln
           435                 440                 445
   Lys Ser Leu Ser Leu Ser Pro Gly Lys
       450                 455
<210> 128
   <211> 1380
   <212> DNA
   <213> Artificial sequence
<220>
   <223> Heavy chain CR4361
   <220>
   <221> CDS
   <222> (1)..(1380)
   <223>
<400> 128
   gag gtg cag ctg gtg cag tct gga gca gaa gtg aaa aag ccc ggg gag      48
   Glu Val Gln Leu Val Gln Ser Gly Ala Glu Val Lys Lys Pro Gly Glu
   1               5                   10                  15
   tct ctg aag atc tcc tgt aag gcc tct gga ttc agc ttt agc acc tat      96
   Ser Leu Lys Ile Ser Cys Lys Ala Ser Gly Phe Ser Phe Ser Thr Tyr
               20                  25                  30
   tgg atc ggc tgg gta cgc cag atg ccc ggg aaa ggc ctg gag tgg atg      144
   Trp Ile Gly Trp Val Arg Gln Met Pro Gly Lys Gly Leu Glu Trp Met
           35                  40                  45
   ggg atc atc tat cct gct gac tct gat acc aga tac agc ccg tcc ttc      192
   Gly Ile Ile Tyr Pro Ala Asp Ser Asp Thr Arg Tyr Ser Pro Ser Phe
       50                  55                  60
   caa ggc cag gtc acc atc tca gcc gac aag tcc atc agc acc gcc tac      240
   Gln Gly Gln Val Thr Ile Ser Ala Asp Lys Ser Ile Ser Thr Ala Tyr
   65                  70                  75                  80
   ctg cag tgg agc agc ctg aag gcc tcg gac acc gcc atg tat tac tgt      288
   Leu Gln Trp Ser Ser Leu Lys Ala Ser Asp Thr Ala Met Tyr Tyr Cys
                   85                  90                  95
   gcg aga ctc cga ggc ccc tat tac gat ttt tgg aat ggc tat cgg gag      336
   Ala Arg Leu Arg Gly Pro Tyr Tyr Asp Phe Trp Asn Gly Tyr Arg Glu
               100                 105                 110
   aca cat gat gct ttt aat gtg tgg ggc cag ggc acc atg gtg acc gtg      384
   Thr His Asp Ala Phe Asn Val Trp Gly Gln Gly Thr Met Val Thr Val
           115                 120                 125
   tcc agc gct agc acc aag ggc ccc agc gtg ttc ccc ctg gcc ccc agc      432
   Ser Ser Ala Ser Thr Lys Gly Pro Ser Val Phe Pro Leu Ala Pro Ser
       130                 135                 140
   agc aag agc acc agc ggc ggc aca gcc gcc ctg ggc tgc ctg gtg aag      480
   Ser Lys Ser Thr Ser Gly Gly Thr Ala Ala Leu Gly Cys Leu Val Lys
   145                 150                 155                 160
   gac tac ttc ccc gag ccc gtg acc gtg agc tgg aac agc ggc gcc ttg      528
   Asp Tyr Phe Pro Glu Pro Val Thr Val Ser Trp Asn Ser Gly Ala Leu
                   165                 170                 175
   acc agc ggc gtg cac acc ttc ccc gcc gtg ctg cag agc agc ggc ctg      576
   Thr Ser Gly Val His Thr Phe Pro Ala Val Leu Gln Ser Ser Gly Leu
               180                 185                 190
   tac agc ctg agc agc gtg gtg acc gtg ccc agc agc agc ctg ggc acc      624
   Tyr Ser Leu Ser Ser Val Val Thr Val Pro Ser Ser Ser Leu Gly Thr
           195                 200                 205
   cag acc tac atc tgc aac gtg aac cac aag ccc agc aac acc aag gtg      672
   Gln Thr Tyr Ile Cys Asn Val Asn His Lys Pro Ser Asn Thr Lys Val
       210                 215                 220
   gac aaa cgc gtg gag ccc aag agc tgc gac aag acc cac acc tgc ccc      720
   Asp Lys Arg Val Glu Pro Lys Ser Cys Asp Lys Thr His Thr Cys Pro
   225                 230                 235                 240
   ccc tgc cct gcc ccc gag ctg ctg ggc gga ccc tcc gtg ttc ctg ttc      768
   Pro Cys Pro Ala Pro Glu Leu Leu Gly Gly Pro Ser Val Phe Leu Phe
                   245                 250                 255
   ccc ccc aag ccc aag gac acc ctc atg atc agc cgg acc ccc gag gtg      816
   Pro Pro Lys Pro Lys Asp Thr Leu Met Ile Ser Arg Thr Pro Glu Val
               260                 265                 270
   acc tgc gtg gtg gtg gac gtg agc cac gag gac ccc gag gtg aag ttc      864
   Thr Cys Val Val Val Asp Val Ser His Glu Asp Pro Glu Val Lys Phe
           275                 280                 285
   aac tgg tac gtg gac ggc gtg gag gtg cac aac gcc aag acc aag ccc      912
   Asn Trp Tyr Val Asp Gly Val Glu Val His Asn Ala Lys Thr Lys Pro
       290                 295                 300
   cgg gag gag cag tac aac agc acc tac cgg gtg gtg agc gtg ctc acc      960
   Arg Glu Glu Gln Tyr Asn Ser Thr Tyr Arg Val Val Ser Val Leu Thr
   305                 310                 315                 320
   gtg ctg cac cag gac tgg ctg aac ggc aag gag tac aag tgc aag gtg     1008
   Val Leu His Gln Asp Trp Leu Asn Gly Lys Glu Tyr Lys Cys Lys Val
                   325                 330                 335
   agc aac aag gcc ctg cct gcc ccc atc gag aag acc atc agc aag gcc     1056
   Ser Asn Lys Ala Leu Pro Ala Pro Ile Glu Lys Thr Ile Ser Lys Ala
               340                 345                 350
   aag ggc cag ccc cgg gag ccc cag gtg tac acc ctg ccc ccc agc cgg     1104
   Lys Gly Gln Pro Arg Glu Pro Gln Val Tyr Thr Leu Pro Pro Ser Arg
           355                 360                 365
   gag gag atg acc aag aac cag gtg tcc ctc acc tgt ctg gtg aag ggc     1152
   Glu Glu Met Thr Lys Asn Gln Val Ser Leu Thr Cys Leu Val Lys Gly
       370                 375                 380
   ttc tac ccc agc gac atc gcc gtg gag tgg gag agc aac ggc cag ccc     1200
   Phe Tyr Pro Ser Asp Ile Ala Val Glu Trp Glu Ser Asn Gly Gln Pro
   385                 390                 395                 400
   gag aac aac tac aag acc acc ccc cct gtg ctg gac agc gac ggc agc     1248
   Glu Asn Asn Tyr Lys Thr Thr Pro Pro Val Leu Asp Ser Asp Gly Ser
                   405                 410                 415
   ttc ttc ctg tac agc aag ctc acc gtg gac aag agc cgg tgg cag cag     1296
   Phe Phe Leu Tyr Ser Lys Leu Thr Val Asp Lys Ser Arg Trp Gln Gln
               420                 425                 430
   ggc aac gtg ttc agc tgc agc gtg atg cac gag gcc ctg cac aac cac      1344
   Gly Asn Val Phe Ser Cys Ser Val Met His Glu Ala Leu His Asn His
           435                 440                 445
   tac acc cag aag agc ctg agc ctg agc ccc ggc aag                      1380
   Tyr Thr Gln Lys Ser Leu Ser Leu Ser Pro Gly Lys
       450                 455                 460

<210> 129
   <211> 460
   <212> PRT
   <213> Artificial sequence
<220>
   <223> Heavy chain CR4361
<400> 129
   Glu Val Gln Leu Val Gln Ser Gly Ala Glu Val Lys Lys Pro Gly Glu
   1               5                   10                  15
   Ser Leu Lys Ile Ser Cys Lys Ala Ser Gly Phe Ser Phe Ser Thr Tyr
               20                  25                  30
   Trp Ile Gly Trp Val Arg Gln Met Pro Gly Lys Gly Leu Glu Trp Met
           35                  40                  45
   Gly Ile Ile Tyr Pro Ala Asp Ser Asp Thr Arg Tyr Ser Pro Ser Phe
       50                  55                  60
   Gln Gly Gln Val Thr Ile Ser Ala Asp Lys Ser Ile Ser Thr Ala Tyr
   65                  70                  75                  80
   Leu Gln Trp Ser Ser Leu Lys Ala Ser Asp Thr Ala Met Tyr Tyr Cys
                   85                  90                  95
   Ala Arg Leu Arg Gly Pro Tyr Tyr Asp Phe Trp Asn Gly Tyr Arg Glu
               100                 105                 110
   Thr His Asp Ala Phe Asn Val Trp Gly Gln Gly Thr Met Val Thr Val
           115                 120                 125
   Ser Ser Ala Ser Thr Lys Gly Pro Ser Val Phe Pro Leu Ala Pro Ser
       130                 135                 140
   Ser Lys Ser Thr Ser Gly Gly Thr Ala Ala Leu Gly Cys Leu Val Lys
   145 150 155 160
   Asp Tyr Phe Pro Glu Pro Val Thr Val Ser Trp Asn Ser Gly Ala Leu
   165 170 175
   Thr Ser Gly Val His Thr Phe Pro Ala Val Leu Gln Ser Ser Gly Leu
   180 185 190
   Tyr Ser Leu Ser Ser Val Val Thr Val Pro Ser Ser Ser Leu Gly Thr
   195 200 205
   Gln Thr Tyr Ile Cys Asn Val Asn His Lys Pro Ser Asn Thr Lys Val
   210 215 220
   Asp Lys Arg Val Glu Pro Lys Ser Cys Asp Lys Thr His Thr Cys Pro
   225 230 235 240
   Pro Cys Pro Ala Pro Glu Leu Leu Gly Gly Pro Ser Val Phe Leu Phe
   245 250 255
   Pro Pro Lys Pro Lys Asp Thr Leu Met Ile Ser Arg Thr Pro Glu Val
   260 265 270
   Thr Cys Val Val Val Asp Val Ser His Glu Asp Pro Glu Val Lys Phe
   275 280 285
   Asn Trp Tyr Val Asp Gly Val Glu Val His Asn Ala Lys Thr Lys Pro
   290 295 300
   Arg Glu Glu Gln Tyr Asn Ser Thr Tyr Arg Val Val Ser Val Leu Thr
   305 310 315 320
   Val Leu His Gln Asp Trp Leu Asn Gly Lys Glu Tyr Lys Cys Lys Val
   325 330 335
   Ser Asn Lys Ala Leu Pro Ala Pro Ile Glu Lys Thr Ile Ser Lys Ala
   340 345 350
   Lys Gly Gln Pro Arg Glu Pro Gln Val Tyr Thr Leu Pro Pro Ser Arg
   355 360 365
   Glu Glu Met Thr Lys Asn Gln Val Ser Leu Thr Cys Leu Val Lys Gly
   370 375 380
   Phe Tyr Pro Ser Asp Ile Ala Val Glu Trp Glu Ser Asn Gly Gln Pro
   385 390 395 400
   Glu Asn Asn Tyr Lys Thr Thr Pro Pro Val Leu Asp Ser Asp Gly Ser
                   405                 410                 415
   Phe Phe Leu Tyr Ser Lys Leu Thr Val Asp Lys Ser Arg Trp Gln Gln
               420                 425                 430
   Gly Asn Val Phe Ser Cys Ser Val Met His Glu Ala Leu His Asn His
           435                 440                 445
   Tyr Thr Gln Lys Ser Leu Ser Leu Ser Pro Gly Lys
       450                 455                 460
<210> 130
   <211> 1380
   <212> DNA
   <213> Artificial sequence
<220>
   <223> Heavy chain CR4374
   <220>
   <221> CDS
   <222> (1)..(1380)
   <223>
<400> 130
   cag atc acc ttg aag gag tct ggt cct acg ctg gtg aaa ccc aca cag        48
   Gln Ile Thr Leu Lys Glu Ser Gly Pro Thr Leu Val Lys Pro Thr Gln
   1               5                   10                  15
   acc ctc acg ttg acc tgc acc ttc tct ggg ttc tca ctc agc act agt        96
   Thr Leu Thr Leu Thr Cys Thr Phe Ser Gly Phe Ser Leu Ser Thr Ser
               20                  25                  30
   gga gtg ggt gtg ggc tgg atc cgt cag ccc cca gga aag gcc ctg gag       144
   Gly Val Gly Val Gly Trp Ile Arg Gln Pro Pro Gly Lys Ala Leu Glu
           35                  40                  45
   tgg ctt gca gtc att tat tgg aat gat gat aag ctc tac agg cca tct       192
   Trp Leu Ala Val Ile Tyr Trp Asn Asp Asp Lys Leu Tyr Arg Pro Ser
       50                  55                  60
   ctg aag agc agg ctc acc atc acc aag gac acc tcc aaa aac cag gtg       240
   Leu Lys Ser Arg Leu Thr Ile Thr Lys Asp Thr Ser Lys Asn Gln Val
   65                  70                  75                  80
   gtc ctt aca atg acc aag atg gac cct gtg gac aca gcc aca tat tac      288
   Val Leu Thr Met Thr Lys Met Asp Pro Val Asp Thr Ala Thr Tyr Tyr
                   85                  90                  95
   tgt gca cac aga cac cgt tac tat gat att agt ggt tat tac cgt ctc      336
   Cys Ala His Arg His Arg Tyr Tyr Asp Ile Ser Gly Tyr Tyr Arg Leu
               100                 105                 110
   ttc tct gat gct ttt gat atc tgg ggc cag ggc acc atg gtg acc gtg      384
   Phe Ser Asp Ala Phe Asp Ile Trp Gly Gln Gly Thr Met Val Thr Val
           115                 120                 125
   tcc agc gct agc acc aag ggc ccc agc gtg ttc ccc ctg gcc ccc agc      432
   Ser Ser Ala Ser Thr Lys Gly Pro Ser Val Phe Pro Leu Ala Pro Ser
       130                 135                 140
   agc aag agc acc agc ggc ggc aca gcc gcc ctg ggc tgc ctg gtg aag      480
   Ser Lys Ser Thr Ser Gly Gly Thr Ala Ala Leu Gly Cys Leu Val Lys
   145                 150                 155                 160
   gac tac ttc ccc gag ccc gtg acc gtg agc tgg aac agc ggc gcc ttg      528
   Asp Tyr Phe Pro Glu Pro Val Thr Val Ser Trp Asn Ser Gly Ala Leu
                   165                 170                 175
   acc agc ggc gtg cac acc ttc ccc gcc gtg ctg cag agc agc ggc ctg      576
   Thr Ser Gly Val His Thr Phe Pro Ala Val Leu Gln Ser Ser Gly Leu
               180                 185                 190
   tac agc ctg agc agc gtg gtg acc gtg ccc agc agc agc ctg ggc acc      624
   Tyr Ser Leu Ser Ser Val Val Thr Val Pro Ser Ser Ser Leu Gly Thr
           195                 200                 205
   cag acc tac atc tgc aac gtg aac cac aag ccc agc aac acc aag gtg      672
   Gln Thr Tyr Ile Cys Asn Val Asn His Lys Pro Ser Asn Thr Lys Val
       210                 215                 220
   gac aaa cgc gtg gag ccc aag agc tgc gac aag acc cac acc tgc ccc      720
   Asp Lys Arg Val Glu Pro Lys Ser Cys Asp Lys Thr His Thr Cys Pro
   225                 230                 235                 240
   ccc tgc cct gcc ccc gag ctg ctg ggc gga ccc tcc gtg ttc ctg ttc      768
   Pro Cys Pro Ala Pro Glu Leu Leu Gly Gly Pro Ser Val Phe Leu Phe
                   245                 250                 255
   ccc ccc aag ccc aag gac acc ctc atg atc agc cgg acc ccc gag gtg      816
   Pro Pro Lys Pro Lys Asp Thr Leu Met Ile Ser Arg Thr Pro Glu Val
               260                 265                 270
   acc tgc gtg gtg gtg gac gtg agc cac gag gac ccc gag gtg aag ttc      864
   Thr Cys Val Val Val Asp Val Ser His Glu Asp Pro Glu Val Lys Phe
           275                 280                 285
   aac tgg tac gtg gac ggc gtg gag gtg cac aac gcc aag acc aag ccc      912
   Asn Trp Tyr Val Asp Gly Val Glu Val His Asn Ala Lys Thr Lys Pro
       290                 295                 300
   cgg gag gag cag tac aac agc acc tac cgg gtg gtg agc gtg ctc acc      960
   Arg Glu Glu Gln Tyr Asn Ser Thr Tyr Arg Val Val Ser Val Leu Thr
   305                 310                 315                 320
   gtg ctg cac cag gac tgg ctg aac ggc aag gag tac aag tgc aag gtg     1008
   Val Leu His Gln Asp Trp Leu Asn Gly Lys Glu Tyr Lys Cys Lys Val
                   325                 330                 335
   agc aac aag gcc ctg cct gcc ccc atc gag aag acc atc agc aag gcc      1056
   Ser Asn Lys Ala Leu Pro Ala Pro Ile Glu Lys Thr Ile Ser Lys Ala
               340                 345                 350
   aag ggc cag ccc cgg gag ccc cag gtg tac acc ctg ccc ccc agc cgg      1104
   Lys Gly Gln Pro Arg Glu Pro Gln Val Tyr Thr Leu Pro Pro Ser Arg
           355                 360                 365
   gag gag atg acc aag aac cag gtg tcc ctc acc tgt ctg gtg aag ggc      1152
   Glu Glu Met Thr Lys Asn Gln Val Ser Leu Thr Cys Leu Val Lys Gly
       370                 375                 380
   ttc tac ccc agc gac atc gcc gtg gag tgg gag agc aac ggc cag ccc      1200
   Phe Tyr Pro Ser Asp Ile Ala Val Glu Trp Glu Ser Asn Gly Gln Pro
   385                 390                 395                 400
   gag aac aac tac aag acc acc ccc cct gtg ctg gac agc gac ggc agc      1248
   Glu Asn Asn Tyr Lys Thr Thr Pro Pro Val Leu Asp Ser Asp Gly Ser
                   405                 410                 415
   ttc ttc ctg tac agc aag ctc acc gtg gac aag agc cgg tgg cag cag      1296
   Phe Phe Leu Tyr Ser Lys Leu Thr Val Asp Lys Ser Arg Trp Gln Gln
               420                 425                 430
   ggc aac gtg ttc agc tgc agc gtg atg cac gag gcc ctg cac aac cac      1344
   Gly Asn Val Phe Ser Cys Ser Val Met His Glu Ala Leu His Asn His
           435                 440                 445
   tac acc cag aag agc ctg agc ctg agc ccc ggc aag                      1380
   Tyr Thr Gln Lys Ser Leu Ser Leu Ser Pro Gly Lys
       450                 455                 460
<210> 131
   <211> 460
   <212> PRT
   <213> Artificial sequence
<220>
   <223> Heavy chain CR4374
<400> 131
   Gln Ile Thr Leu Lys Glu Ser Gly Pro Thr Leu Val Lys Pro Thr Gln
   1               5                   10                  15
   Thr Leu Thr Leu Thr Cys Thr Phe Ser Gly Phe Ser Leu Ser Thr Ser
               20                  25                  30
   Gly Val Gly Val Gly Trp Ile Arg Gln Pro Pro Gly Lys Ala Leu Glu
           35                  40                  45
   Trp Leu Ala Val Ile Tyr Trp Asn Asp Asp Lys Leu Tyr Arg Pro Ser
   50 55 60
   Leu Lys Ser Arg Leu Thr Ile Thr Lys Asp Thr Ser Lys Asn Gln Val
   65 70 75 80
   Val Leu Thr Met Thr Lys Met Asp Pro Val Asp Thr Ala Thr Tyr Tyr
   85 90 95
   Cys Ala His Arg His Arg Tyr Tyr Asp Ile Ser Gly Tyr Tyr Arg Leu
   100 105 110
   Phe Ser Asp Ala Phe Asp Ile Trp Gly Gln Gly Thr Met Val Thr Val
   115 120 125
   Ser Ser Ala Ser Thr Lys Gly Pro Ser Val Phe Pro Leu Ala Pro Ser
   130 135 140
   Ser Lys Ser Thr Ser Gly Gly Thr Ala Ala Leu Gly Cys Leu Val Lys
   145 150 155 160
   Asp Tyr Phe Pro Glu Pro Val Thr Val Ser Trp Asn Ser Gly Ala Leu
   165 170 175
   Thr Ser Gly Val His Thr Phe Pro Ala Val Leu Gln Ser Ser Gly Leu
   180 185 190
   Tyr Ser Leu Ser Ser Val Val Thr Val Pro Ser Ser Ser Leu Gly Thr
   195 200 205
   Gln Thr Tyr Ile Cys Asn Val Asn His Lys Pro Ser Asn Thr Lys Val
   210 215 220
   Asp Lys Arg Val Glu Pro Lys Ser Cys Asp Lys Thr His Thr Cys Pro
   225 230 235 240
   Pro Cys Pro Ala Pro Glu Leu Leu Gly Gly Pro Ser Val Phe Leu Phe
   245 250 255
   Pro Pro Lys Pro Lys Asp Thr Leu Met Ile Ser Arg Thr Pro Glu Val
   260 265 270
   Thr Cys Val Val Val Asp Val Ser His Glu Asp Pro Glu Val Lys Phe
   275 280 285
   Asn Trp Tyr Val Asp Gly Val Glu Val His Asn Ala Lys Thr Lys Pro
   290 295 300
   Arg Glu Glu Gln Tyr Asn Ser Thr Tyr Arg Val Val Ser Val Leu Thr
   305 310 315 320
   Val Leu His Gln Asp Trp Leu Asn Gly Lys Glu Tyr Lys Cys Lys Val
   325 330 335
   Ser Asn Lys Ala Leu Pro Ala Pro Ile Glu Lys Thr Ile Ser Lys Ala
   340 345 350
   Lys Gly Gln Pro Arg Glu Pro Gln Val Tyr Thr Leu Pro Pro Ser Arg
   355 360 365
   Glu Glu Met Thr Lys Asn Gln Val Ser Leu Thr Cys Leu Val Lys Gly
   370 375 380
   Phe Tyr Pro Ser Asp Ile Ala Val Glu Trp Glu Ser Asn Gly Gln Pro
   385 390 395 400
   Glu Asn Asn Tyr Lys Thr Thr Pro Pro Val Leu Asp Ser Asp Gly Ser
   405 410 415
   Phe Phe Leu Tyr Ser Lys Leu Thr Val Asp Lys Ser Arg Trp Gln Gln
   420 425 430
   Gly Asn Val Phe Ser Cys Ser Val Met His Glu Ala Leu His Asn His
   435 440 445
   Tyr Thr Gln Lys Ser Leu Ser Leu Ser Pro Gly Lys
   450 455 460
<210> 132
   <211> 648
   <212> DNA
   <213> Artificial sequence
<220>
   <223> Light chain CR4271
   <220>
   <221> CDS
   <222> (1)..(648)
   <223>
<400> 132
   cag tcc gcc ctg acc cag ccc cgc tca gtg tcc ggg tct cct gga cag       48
   Gln Ser Ala Leu Thr Gln Pro Arg Ser Val Ser Gly Ser Pro Gly Gln
   1               5                   10                  15
   tca gtc acc atc tcc tgc act gga acc agc agt gat gtt ggt ggt tat       96
   Ser Val Thr Ile Ser Cys Thr Gly Thr Ser Ser Asp Val Gly Gly Tyr
               20                  25                  30
   aac tat gtc tcc tgg tac caa cat cac cca ggc aaa gcc ccc aaa ctc      144
   Asn Tyr Val Ser Trp Tyr Gln His His Pro Gly Lys Ala Pro Lys Leu
           35                  40                  45
   atg att tat gat gtc agt aat cgg ccc tta ggg gtt tct aat cgc ttc      192
   Met Ile Tyr Asp Val Ser Asn Arg Pro Leu Gly Val Ser Asn Arg Phe
       50                  55                  60
   tct ggc tcc aag tct ggc aac acg gcc tcc ctg acc atc tct ggg ctc      240
   Ser Gly Ser Lys Ser Gly Asn Thr Ala Ser Leu Thr Ile Ser Gly Leu
   65                  70                  75                  80
   cag gct gag gac gag gct gat tat tac tgc agc tca tat aca agc agc      288
   Gln Ala Glu Asp Glu Ala Asp Tyr Tyr Cys Ser Ser Tyr Thr Ser Ser
                   85                  90                  95
   agc act tat gtc ttc gga act ggg acc aag ctt acc gtg ctg ggc cag      336
   Ser Thr Tyr Val Phe Gly Thr Gly Thr Lys Leu Thr Val Leu Gly Gln
               100                 105                 110
   ccc aag gcc gct ccc agc gtg acc ctg ttc ccc ccc tcc tcc gag gag      384
   Pro Lys Ala Ala Pro Ser Val Thr Leu Phe Pro Pro Ser Ser Glu Glu
           115                 120                 125
   ctg cag gcc aac aag gcc acc ctg gtg tgc ctc atc agc gac ttc tac      432
   Leu Gln Ala Asn Lys Ala Thr Leu Val Cys Leu Ile Ser Asp Phe Tyr
       130                 135                 140
   cct ggc gcc gtg acc gtg gcc tgg aag gcc gac agc agc ccc gtg aag      480
   Pro Gly Ala Val Thr Val Ala Trp Lys Ala Asp Ser Ser Pro Val Lys
   145                 150                 155                 160
   gcc ggc gtg gag acc acc acc ccc agc aag cag agc aac aac aag tac      528
   Ala Gly Val Glu Thr Thr Thr Pro Ser Lys Gln Ser Asn Asn Lys Tyr
                   165                 170                 175
   gcc gcc agc agc tac ctg agc ctc acc ccc gag cag tgg aag agc cac      576
   Ala Ala Ser Ser Tyr Leu Ser Leu Thr Pro Glu Gln Trp Lys Ser His
               180                 185                 190
   cgg agc tac agc tgc cag gtg acc cac gag ggc agc acc gtg gag aag      624
   Arg Ser Tyr Ser Cys Gln Val Thr His Glu Gly Ser Thr Val Glu Lys
           195                 200                 205
   acc gtg gcc ccc acc gag tgc agc                                      648
   Thr Val Ala Pro Thr Glu Cys Ser
       210                 215
<210> 133
   <211> 216
   <212> PRT
   <213> Artificial sequence
<220>
   <223> Light chain CR4271
<400> 133
   Gln Ser Ala Leu Thr Gln Pro Arg Ser Val Ser Gly Ser Pro Gly Gln
   1               5                   10                  15
   Ser Val Thr Ile Ser Cys Thr Gly Thr Ser Ser Asp Val Gly Gly Tyr
               20                  25                  30
   Asn Tyr Val Ser Trp Tyr Gln His His Pro Gly Lys Ala Pro Lys Leu
           35                  40                  45
   Met Ile Tyr Asp Val Ser Asn Arg Pro Leu Gly Val Ser Asn Arg Phe
       50                  55                  60
   Ser Gly Ser Lys Ser Gly Asn Thr Ala Ser Leu Thr Ile Ser Gly Leu
   65                  70                  75                  80
   Gln Ala Glu Asp Glu Ala Asp Tyr Tyr Cys Ser Ser Tyr Thr Ser Ser
                   85                  90                  95
   Ser Thr Tyr Val Phe Gly Thr Gly Thr Lys Leu Thr Val Leu Gly Gln
               100                 105                 110
   Pro Lys Ala Ala Pro Ser Val Thr Leu Phe Pro Pro Ser Ser Glu Glu
           115                 120                 125
   Leu Gln Ala Asn Lys Ala Thr Leu Val Cys Leu Ile Ser Asp Phe Tyr
       130                 135                 140
   Pro Gly Ala Val Thr Val Ala Trp Lys Ala Asp Ser Ser Pro Val Lys
   145                 150                 155                 160
   Ala Gly Val Glu Thr Thr Thr Pro Ser Lys Gln Ser Asn Asn Lys Tyr
                   165                 170                 175
   Ala Ala Ser Ser Tyr Leu Ser Leu Thr Pro Glu Gln Trp Lys Ser His
               180                 185                 190
   Arg Ser Tyr Ser Cys Gln Val Thr His Glu Gly Ser Thr Val Glu Lys
                   195                 200                 205
   Thr Val Ala Pro Thr Glu Cys Ser
       210                 215
<210> 134
   <211> 660
   <212> DNA
   <213> Artificial sequence
<220>
   <223> Light chain CR4274
   <220>
   <221> CDS
   <222> (1)..(660)
   <223>
<400> 134
   gac atc gtg atg acc cag tct cca gac tcc ctg gct gtg tct ctg ggc        48
   Asp Ile Val Met Thr Gln Ser Pro Asp Ser Leu Ala Val Ser Leu Gly
   1               5                   10                  15
   gag agg gcc acc atc aac tgc aag tcc agc cag agt gtt tta tac agc        96
   Glu Arg Ala Thr Ile Asn Cys Lys Ser Ser Gln Ser Val Leu Tyr Ser
               20                  25                  30
   tcc aac aat aag aac tac tta gct tgg tac cag cag aaa cca gga cag       144
   Ser Asn Asn Lys Asn Tyr Leu Ala Trp Tyr Gln Gln Lys Pro Gly Gln
           35                  40                  45
   cct cct aag ctg ctc att tac tgg gca tct acc cgg gaa tcc ggg gtc       192
   Pro Pro Lys Leu Leu Ile Tyr Trp Ala Ser Thr Arg Glu Ser Gly Val
       50                  55                  60
   cct gac cga ttc agt ggc agc ggg tct ggg aca gat ttc act ctc acc       240
   Pro Asp Arg Phe Ser Gly Ser Gly Ser Gly Thr Asp Phe Thr Leu Thr
   65                  70                  75                  80
   atc agc agc ctg cag gct gaa gat gtg gca gtt tat tat tgt cag caa       288
   Ile Ser Ser Leu Gln Ala Glu Asp Val Ala Val Tyr Tyr Cys Gln Gln
                   85                  90                  95
   tat tat agt act cct ccg act ttc ggc gga ggg acc aag gtg gag atc       336
   Tyr Tyr Ser Thr Pro Pro Thr Phe Gly Gly Gly Thr Lys Val Glu Ile
               100                 105                 110
   aag cgg acc gtg gcc gct ccc agc gtg ttc atc ttc ccc ccc tcc gac       384
   Lys Arg Thr Val Ala Ala Pro Ser Val Phe Ile Phe Pro Pro Ser Asp
           115                 120                 125
   gag cag ctg aag agc ggc acc gcc agc gtg gtg tgc ctg ctg aac aac      432
   Glu Gln Leu Lys Ser Gly Thr Ala Ser Val Val Cys Leu Leu Asn Asn
       130                 135                 140
   ttc tac ccc cgg gag gcc aag gtg cag tgg aag gtg gac aac gcc ctg      480
   Phe Tyr Pro Arg Glu Ala Lys Val Gln Trp Lys Val Asp Asn Ala Leu
   145                 150                 155                 160
   cag agc ggc aac agc cag gag agc gtg acc gag cag gac agc aag gac      528
   Gln Ser Gly Asn Ser Gln Glu Ser Val Thr Glu Gln Asp Ser Lys Asp
                   165                 170                 175
   tcc acc tac agc ctg agc agc acc ctc acc ctg agc aag gcc gac tac      576
   Ser Thr Tyr Ser Leu Ser Ser Thr Leu Thr Leu Ser Lys Ala Asp Tyr
               180                 185                 190
   gag aag cac aag gtg tac gcc tgc gag gtg acc cac cag ggc ctg agc      624
   Glu Lys His Lys Val Tyr Ala Cys Glu Val Thr His Gln Gly Leu Ser
           195                 200                 205
   agc ccc gtg acc aag agc ttc aac cgg ggc gag tgt                      660
   Ser Pro Val Thr Lys Ser Phe Asn Arg Gly Glu Cys
       210                 215                 220
<210> 135
   <211> 220
   <212> PRT
   <213> Artificial sequence
<220>
   <223> Light chain CR4274
<400> 135
   Asp Ile Val Met Thr Gln Ser Pro Asp Ser Leu Ala Val Ser Leu Gly
   1               5                   10                  15
   Glu Arg Ala Thr Ile Asn Cys Lys Ser Ser Gln Ser Val Leu Tyr Ser
               20                  25                  30
   Ser Asn Asn Lys Asn Tyr Leu Ala Trp Tyr Gln Gln Lys Pro Gly Gln
           35                  40                  45
   Pro Pro Lys Leu Leu Ile Tyr Trp Ala Ser Thr Arg Glu Ser Gly Val
       50                  55                  60
   Pro Asp Arg Phe Ser Gly Ser Gly Ser Gly Thr Asp Phe Thr Leu Thr
   65                  70                  75                  80
   Ile Ser Ser Leu Gln Ala Glu Asp Val Ala Val Tyr Tyr Cys Gln Gln
                   85                  90                  95
   Tyr Tyr Ser Thr Pro Pro Thr Phe Gly Gly Gly Thr Lys Val Glu Ile
               100                 105                 110
   Lys Arg Thr Val Ala Ala Pro Ser Val Phe Ile Phe Pro Pro Ser Asp
           115                 120                 125
   Glu Gln Leu Lys Ser Gly Thr Ala Ser Val Val Cys Leu Leu Asn Asn
       130                 135                 140
   Phe Tyr Pro Arg Glu Ala Lys Val Gln Trp Lys Val Asp Asn Ala Leu
   145                 150                 155                 160
   Gln Ser Gly Asn Ser Gln Glu Ser Val Thr Glu Gln Asp Ser Lys Asp
                   165                 170                 175
   Ser Thr Tyr Ser Leu Ser Ser Thr Leu Thr Leu Ser Lys Ala Asp Tyr
               180                 185                 190
   Glu Lys His Lys Val Tyr Ala Cys Glu Val Thr His Gln Gly Leu Ser
           195                 200                 205
   Ser Pro Val Thr Lys Ser Phe Asn Arg Gly Glu Cys
       210                 215                 220
<210> 136
   <211> 636
   <212> DNA
   <213> Artificial sequence
<220>
   <223> Light chain CR4283
   <220>
   <221> CDS
   <222> (1)..(636)
   <223>
<400> 136
   gac atc cag atg acc cag tct cct tcc acc ctg tct gca tct gta gga       48
   Asp Ile Gln Met Thr Gln Ser Pro Ser Thr Leu Ser Ala Ser Val Gly
   1               5                   10                  15
   gac aga gtc acc atc act tgc cgg gcc agt cag agt att agt agc tgg        96
   Asp Arg Val Thr Ile Thr Cys Arg Ala Ser Gln Ser Ile Ser Ser Trp
               20                  25                  30
   ttg gcc tgg tat cag cag aaa cca ggg aaa gcc cct aat ctc ctg atc       144
   Leu Ala Trp Tyr Gln Gln Lys Pro Gly Lys Ala Pro Asn Leu Leu Ile
           35                  40                  45
   tat gct gca tcc agt ttg caa agt ggg gtc cca tca agg ttc agc ggc       192
   Tyr Ala Ala Ser Ser Leu Gln Ser Gly Val Pro Ser Arg Phe Ser Gly
       50                  55                  60
   agt gga tct ggg aca gat ttc act ctc acc atc agc agc ctg cag cct       240
   Ser Gly Ser Gly Thr Asp Phe Thr Leu Thr Ile Ser Ser Leu Gln Pro
   65                  70                  75                  80
   gat gac tct gca act tat tac tgc caa cag tat aat act tat ccc ctc       288
   Asp Asp Ser Ala Thr Tyr Tyr Cys Gln Gln Tyr Asn Thr Tyr Pro Leu
                   85                  90                  95
   act ttc ggg acc aag gtg gag atc aag cgg acc gtg gcc gct ccc agc       336
   Thr Phe Gly Thr Lys Val Glu Ile Lys Arg Thr Val Ala Ala Pro Ser
               100                 105                 110
   gtg ttc atc ttc ccc ccc tcc gac gag cag ctg aag agc ggc acc gcc       384
   Val Phe Ile Phe Pro Pro Ser Asp Glu Gln Leu Lys Ser Gly Thr Ala
           115                 120                 125
   agc gtg gtg tgc ctg ctg aac aac ttc tac ccc cgg gag gcc aag gtg       432
   Ser Val Val Cys Leu Leu Asn Asn Phe Tyr Pro Arg Glu Ala Lys Val
       130                 135                 140
   cag tgg aag gtg gac aac gcc ctg cag agc ggc aac agc cag gag agc       480
   Gln Trp Lys Val Asp Asn Ala Leu Gln Ser Gly Asn Ser Gln Glu Ser
   145                 150                 155                 160
   gtg acc gag cag gac agc aag gac tcc acc tac agc ctg agc agc acc       528
   Val Thr Glu Gln Asp Ser Lys Asp Ser Thr Tyr Ser Leu Ser Ser Thr
                   165                 170                 175
   ctc acc ctg agc aag gcc gac tac gag aag cac aag gtg tac gcc tgc       576
   Leu Thr Leu Ser Lys Ala Asp Tyr Glu Lys His Lys Val Tyr Ala Cys
               180                 185                 190
   gag gtg acc cac cag ggc ctg agc agc ccc gtg acc aag agc ttc aac       624
   Glu Val Thr His Gln Gly Leu Ser Ser Pro Val Thr Lys Ser Phe Asn
           195                 200                 205
   cgg ggc gag tgt                                                       636
   Arg Gly Glu Cys
       210
<210> 137
   <211> 212
   <212> PRT
   <213> Artificial sequence
<220>
   <223> Light chain CR4283
<400> 137
   Asp Ile Gln Met Thr Gln Ser Pro Ser Thr Leu Ser Ala Ser Val Gly
   1               5                   10                  15
   Asp Arg Val Thr Ile Thr Cys Arg Ala Ser Gln Ser Ile Ser Ser Trp
               20                  25                  30
   Leu Ala Trp Tyr Gln Gln Lys Pro Gly Lys Ala Pro Asn Leu Leu Ile
           35                  40                  45
   Tyr Ala Ala Ser Ser Leu Gln Ser Gly Val Pro Ser Arg Phe Ser Gly
       50                  55                  60
   Ser Gly Ser Gly Thr Asp Phe Thr Leu Thr Ile Ser Ser Leu Gln Pro
   65                  70                  75                  80
   Asp Asp Ser Ala Thr Tyr Tyr Cys Gln Gln Tyr Asn Thr Tyr Pro Leu
                   85                  90                  95
   Thr Phe Gly Thr Lys Val Glu Ile Lys Arg Thr Val Ala Ala Pro Ser
               100                 105                 110
   Val Phe Ile Phe Pro Pro Ser Asp Glu Gln Leu Lys Ser Gly Thr Ala
           115                 120                 125
   Ser Val Val Cys Leu Leu Asn Asn Phe Tyr Pro Arg Glu Ala Lys Val
       130                 135                 140
   Gln Trp Lys Val Asp Asn Ala Leu Gln Ser Gly Asn Ser Gln Glu Ser
   145                 150                 155                 160
   Val Thr Glu Gln Asp Ser Lys Asp Ser Thr Tyr Ser Leu Ser Ser Thr
                   165                 170                 175
   Leu Thr Leu Ser Lys Ala Asp Tyr Glu Lys His Lys Val Tyr Ala Cys
               180                 185                 190
   Glu Val Thr His Gln Gly Leu Ser Ser Pro Val Thr Lys Ser Phe Asn
           195                 200                 205
   Arg Gly Glu Cys
       210
<210> 138
   <211> 651
   <212> DNA
   <213> Artificial sequence
<220>
   <223> Light chain CR4289
   <220>
   <221> CDS
   <222> (1)..(651)
   <223>
<400> 138
   tcg acg gaa att gtg ttg acg cag tct cca ggc acc ctg tct ttg tct      48
   Ser Thr Glu Ile Val Leu Thr Gln Ser Pro Gly Thr Leu Ser Leu Ser
   1               5                   10                  15
   cca ggg gaa aca gcc acc ctc tcc tgc agg acc agt cag agt gtt agt      96
   Pro Gly Glu Thr Ala Thr Leu Ser Cys Arg Thr Ser Gln Ser Val Ser
               20                  25                  30
   agc agc tac tta ggc tgg tac cag cag aaa cct ggc cag gct ccc agg      144
   Ser Ser Tyr Leu Gly Trp Tyr Gln Gln Lys Pro Gly Gln Ala Pro Arg
           35                  40                  45
   ctc ctc atc tat ggt gca tcc atc agg gcc act ggc atc cca gcc agg      192
   Leu Leu Ile Tyr Gly Ala Ser Ile Arg Ala Thr Gly Ile Pro Ala Arg
       50                  55                  60
   ttc agt ggc agt ggg tct ggg aca gag ttc act ctc acc atc gac agc      240
   Phe Ser Gly Ser Gly Ser Gly Thr Glu Phe Thr Leu Thr Ile Asp Ser
   65                  70                  75                  80
   cta cag tct gaa gat ttt gca gtt tat tac tgt cag cag tat aat aac      288
   Leu Gln Ser Glu Asp Phe Ala Val Tyr Tyr Cys Gln Gln Tyr Asn Asn
                   85                  90                  95
   tgg cct ccg atc acc ttc ggc caa ggg aca cga ctg gag att aaa cgt      336
   Trp Pro Pro Ile Thr Phe Gly Gln Gly Thr Arg Leu Glu Ile Lys Arg
               100                 105                 110
   gcg gcc gca ccc agc gtg ttc atc ttc ccc ccc tcc gac gag cag ctg      384
   Ala Ala Ala Pro Ser Val Phe Ile Phe Pro Pro Ser Asp Glu Gln Leu
           115                 120                 125
   aag agc ggc acc gcc agc gtg gtg tgc ctg ctg aac aac ttc tac ccc      432
   Lys Ser Gly Thr Ala Ser Val Val Cys Leu Leu Asn Asn Phe Tyr Pro
       130                 135                 140
   cgg gag gcc aag gtg cag tgg aag gtg gac aac gcc ctg cag agc ggc      480
   Arg Glu Ala Lys Val Gln Trp Lys Val Asp Asn Ala Leu Gln Ser Gly
   145                 150                 155                 160
   aac agc cag gag agc gtg acc gag cag gac agc aag gac tcc acc tac      528
   Asn Ser Gln Glu Ser Val Thr Glu Gln Asp Ser Lys Asp Ser Thr Tyr
                   165                 170                 175
   agc ctg agc agc acc ctc acc ctg agc aag gcc gac tac gag aag cac      576
   Ser Leu Ser Ser Thr Leu Thr Leu Ser Lys Ala Asp Tyr Glu Lys His
               180                 185                 190
   aag gtg tac gcc tgc gag gtg acc cac cag ggc ctg agc agc ccc gtg      624
   Lys Val Tyr Ala Cys Glu Val Thr His Gln Gly Leu Ser Ser Pro Val
           195                 200                 205
   acc aag agc ttc aac cgg ggc gag tgt                                  651
   Thr Lys Ser Phe Asn Arg Gly Glu Cys
       210                 215
<210> 139
   <211> 217
   <212> PRT
   <213> Artificial sequence
<220>
   <223> Light chain CR4289
<400> 139
   Ser Thr Glu Ile Val Leu Thr Gln Ser Pro Gly Thr Leu Ser Leu Ser
   1               5                   10                  15
   Pro Gly Glu Thr Ala Thr Leu Ser Cys Arg Thr Ser Gln Ser Val Ser
               20                  25                  30
   Ser Ser Tyr Leu Gly Trp Tyr Gln Gln Lys Pro Gly Gln Ala Pro Arg
           35                  40                  45
   Leu Leu Ile Tyr Gly Ala Ser Ile Arg Ala Thr Gly Ile Pro Ala Arg
       50                  55                  60
   Phe Ser Gly Ser Gly Ser Gly Thr Glu Phe Thr Leu Thr Ile Asp Ser
   65                  70                  75                  80
   Leu Gln Ser Glu Asp Phe Ala Val Tyr Tyr Cys Gln Gln Tyr Asn Asn
                   85                  90                  95
   Trp Pro Pro Ile Thr Phe Gly Gln Gly Thr Arg Leu Glu Ile Lys Arg
               100                 105                 110
   Ala Ala Ala Pro Ser Val Phe Ile Phe Pro Pro Ser Asp Glu Gln Leu
           115                 120                 125
   Lys Ser Gly Thr Ala Ser Val Val Cys Leu Leu Asn Asn Phe Tyr Pro
       130                 135                 140
   Arg Glu Ala Lys Val Gln Trp Lys Val Asp Asn Ala Leu Gln Ser Gly
   145                 150                 155                 160
   Asn Ser Gln Glu Ser Val Thr Glu Gln Asp Ser Lys Asp Ser Thr Tyr
                   165                 170                 175
   Ser Leu Ser Ser Thr Leu Thr Leu Ser Lys Ala Asp Tyr Glu Lys His
               180                 185                 190
   Lys Val Tyr Ala Cys Glu Val Thr His Gln Gly Leu Ser Ser Pro Val
           195                 200                 205
   Thr Lys Ser Phe Asn Arg Gly Glu Cys
       210                 215
<210> 140
   <211> 648
   <212> DNA
   <213> Artificial sequence
<220>
   <223> Light chain CR4299
   <220>
   <221> CDS
   <222> (1) .. (698)
   <223>
<400> 140
   tcc tac gtg ctg act cag cca ccc tcg ctg tct gca gcc ccc agg cag      48
   Ser Tyr Val Leu Thr Gln Pro Pro Ser Leu Ser Ala Ala Pro Arg Gln
   1               5                   10                  15
   agg gtc acc atc tcc tgt tct gga agc agc tcc aat atc gga aat tat      96
   Arg Val Thr Ile Ser Cys Ser Gly Ser Ser Ser Asn Ile Gly Asn Tyr
               20                  25                  30
   ggt gtg aac tgg tac cag cag ctc cca gga aag gct ccc aaa ctc ctc     144
   Gly Val Asn Trp Tyr Gln Gln Leu Pro Gly Lys Ala Pro Lys Leu Leu
           35                  40                  45
   atc tat tat gat gat ctg ctg ccc tca ggg gtc tct gac cga ttc tct       192
   Ile Tyr Tyr Asp Asp Leu Leu Pro Ser Gly Val Ser Asp Arg Phe Ser
       50                  55                  60
   ggc tcc aag tct ggc acc tca gcc tcc ctg gcc atc agt ggg ctc cag       240
   Gly Ser Lys Ser Gly Thr Ser Ala Ser Leu Ala Ile Ser Gly Leu Gln
   65                  70                  75                  80
   tct gag gat gaa ggt gat tat tac tgt gca gcg tgg gat gac acc cta       288
   Ser Glu Asp Glu Gly Asp Tyr Tyr Cys Ala Ala Trp Asp Asp Thr Leu
                   85                  90                  95
   agt gct tgg gtg ttc ggc gga ggc acc aag ctt acc gtg ctg ggc cag       336
   Ser Ala Trp Val Phe Gly Gly Gly Thr Lys Leu Thr Val Leu Gly Gln
               100                 105                 110
   ccc aag gcc gct ccc agc gtg acc ctg ttc ccc ccc tcc tcc gag gag       384
   Pro Lys Ala Ala Pro Ser Val Thr Leu Phe Pro Pro Ser Ser Glu Glu
           115                 120                 125
   ctg cag gcc aac aag gcc acc ctg gtg tgc ctc atc agc gac ttc tac       432
   Leu Gln Ala Asn Lys Ala Thr Leu Val Cys Leu Ile Ser Asp Phe Tyr
       130                 135                 140
   cct ggc gcc gtg acc gtg gcc tgg aag gcc gac agc agc ccc gtg aag       480
   Pro Gly Ala Val Thr Val Ala Trp Lys Ala Asp Ser Ser Pro Val Lys
   145                 150                 155                 160
   gcc ggc gtg gag acc acc acc ccc agc aag cag agc aac aac aag tac       528
   Ala Gly Val Glu Thr Thr Thr Pro Ser Lys Gln Ser Asn Asn Lys Tyr
                   165                 170                 175
   gcc gcc agc agc tac ctg agc ctc acc ccc gag cag tgg aag agc cac       576
   Ala Ala Ser Ser Tyr Leu Ser Leu Thr Pro Glu Gln Trp Lys Ser His
               180                 185                 190
   cgg agc tac agc tgc cag gtg acc cac gag ggc agc acc gtg gag aag       624
   Arg Ser Tyr Ser Cys Gln Val Thr His Glu Gly Ser Thr Val Glu Lys
           195                 200                 205
   acc gtg gcc ccc acc gag tgc agc                                       648
   Thr Val Ala Pro Thr Glu Cys Ser
       210                 215
<210> 141
   <211> 216
   <212> PRT
   <213> Artificial sequence
<220>
   <223> Light chain CR4299
<400> 141
   Ser Tyr Val Leu Thr Gln Pro Pro Ser Leu Ser Ala Ala Pro Arg Gln
   1               5                   10                  15
   Arg Val Thr Ile Ser Cys Ser Gly Ser Ser Ser Asn Ile Gly Asn Tyr
               20                  25                  30
   Gly Val Asn Trp Tyr Gln Gln Leu Pro Gly Lys Ala Pro Lys Leu Leu
           35                  40                  45
   Ile Tyr Tyr Asp Asp Leu Leu Pro Ser Gly Val Ser Asp Arg Phe Ser
       50                  55                  60
   Gly Ser Lys Ser Gly Thr Ser Ala Ser Leu Ala Ile Ser Gly Leu Gln
   65                  70                  75                  80
   Ser Glu Asp Glu Gly Asp Tyr Tyr Cys Ala Ala Trp Asp Asp Thr Leu
                   85                  90                  95
   Ser Ala Trp Val Phe Gly Gly Gly Thr Lys Leu Thr Val Leu Gly Gln
               100                 105                 110
   Pro Lys Ala Ala Pro Ser Val Thr Leu Phe Pro Pro Ser Ser Glu Glu
           115                 120                 125
   Leu Gln Ala Asn Lys Ala Thr Leu Val Cys Leu Ile Ser Asp Phe Tyr
       130                 135                 140
   Pro Gly Ala Val Thr Val Ala Trp Lys Ala Asp Ser Ser Pro Val Lys
   145                 150                 155                 160
   Ala Gly Val Glu Thr Thr Thr Pro Ser Lys Gln Ser Asn Asn Lys Tyr
                   165                 170                 175
   Ala Ala Ser Ser Tyr Leu Ser Leu Thr Pro Glu Gln Trp Lys Ser His
               180                 185                 190
   Arg Ser Tyr Ser Cys Gln Val Thr His Glu Gly Ser Thr Val Glu Lys
           195                 200                 205
   Thr Val Ala Pro Thr Glu Cys Ser
       210                 215
<210> 142
   <211> 648
   <212> DNA
   <213> Artificial sequence
<220>
   <223> Light chain CR4311
   <220>
   <221> CDS
   <222> (1)..(648)
   <223>
<400> 142
   cag tcc gtg ctg acc cag cct ccc tca gtg tct gcg gcc cca gga cag       48
   Gln Ser Val Leu Thr Gln Pro Pro Ser Val Ser Ala Ala Pro Gly Gln
   1               5                   10                  15
   aag gtc acc atc tcc tgc tct gga acc agc tcc aat att ggg gat aat       96
   Lys Val Thr Ile Ser Cys Ser Gly Thr Ser Ser Asn Ile Gly Asp Asn
               20                  25                  30
   tat gta tcc tgg tac cag cac ctc cca gga aca gcc ccc aaa ctc ctc      144
   Tyr Val Ser Trp Tyr Gln His Leu Pro Gly Thr Ala Pro Lys Leu Leu
           35                  40                  45
   att tat gac aat aat aag cga ccc tca ggg att cct gac cga ttc tct      192
   Ile Tyr Asp Asn Asn Lys Arg Pro Ser Gly Ile Pro Asp Arg Phe Ser
       50                  55                  60
   ggc tcc aag tct ggc acg tca gcc acc ctg ggc gtc acc gga ctc cag      240
   Gly Ser Lys Ser Gly Thr Ser Ala Thr Leu Gly Val Thr Gly Leu Gln
   65                  70                  75                  80
   act ggg gac gag gcc gat tat tac tgc gga aca tgg gat agc agc ctg      288
   Thr Gly Asp Glu Ala Asp Tyr Tyr Cys Gly Thr Trp Asp Ser Ser Leu
                   85                  90                  95
   act gct gtg gtc ttc ggc gga ggc acc aag ctt acc gtg ctg ggc cag      336
   Thr Ala Val Val Phe Gly Gly Gly Thr Lys Leu Thr Val Leu Gly Gln
               100                 105                 110
   ccc aag gcc gct ccc agc gtg acc ctg ttc ccc ccc tcc tcc gag gag      384
   Pro Lys Ala Ala Pro Ser Val Thr Leu Phe Pro Pro Ser Ser Glu Glu
           115                 120                 125
   ctg cag gcc aac aag gcc acc ctg gtg tgc ctc atc agc gac ttc tac      432
   Leu Gln Ala Asn Lys Ala Thr Leu Val Cys Leu Ile Ser Asp Phe Tyr
       130                 135                 140
   cct ggc gcc gtg acc gtg gcc tgg aag gcc gac agc agc ccc gtg aag      480
   Pro Gly Ala Val Thr Val Ala Trp Lys Ala Asp Ser Ser Pro Val Lys
   145                 150                 155                 160
   gcc ggc gtg gag acc acc acc ccc agc aag cag agc aac aac aag tac      528
   Ala Gly Val Glu Thr Thr Thr Pro Ser Lys Gln Ser Asn Asn Lys Tyr
                   165                 170                 175
   gcc gcc agc agc tac ctg agc ctc acc ccc gag cag tgg aag agc cac      576
   Ala Ala Ser Ser Tyr Leu Ser Leu Thr Pro Glu Gln Trp Lys Ser His
               180                 185                 190
   cgg agc tac agc tgc cag gtg acc cac gag ggc agc acc gtg gag aag      624
   Arg Ser Tyr Ser Cys Gln Val Thr His Glu Gly Ser Thr Val Glu Lys
           195                 200                 205
   acc gtg gcc ccc acc gag tgc agc                                      648
   Thr Val Ala Pro Thr Glu Cys Ser
       210                 215

<210> 143
   <211> 216
   <212> PRT
   <213> Artificial sequence
<220>
   <223> Light chain CR4311
<400> 143
   Gln Ser Val Leu Thr Gln Pro Pro Ser Val Ser Ala Ala Pro Gly Gln
   1               5                   10                  15
   Lys Val Thr Ile Ser Cys Ser Gly Thr Ser Ser Asn Ile Gly Asp Asn
               20                  25                  30
   Tyr Val Ser Trp Tyr Gln His Leu Pro Gly Thr Ala Pro Lys Leu Leu
           35                  40                  45
   Ile Tyr Asp Asn Asn Lys Arg Pro Ser Gly Ile Pro Asp Arg Phe Ser
       50                  55                  60
   Gly Ser Lys Ser Gly Thr Ser Ala Thr Leu Gly Val Thr Gly Leu Gln
   65                  70                  75                  80
   Thr Gly Asp Glu Ala Asp Tyr Tyr Cys Gly Thr Trp Asp Ser Ser Leu
                   85                  90                  95
   Thr Ala Val Val Phe Gly Gly Gly Thr Lys Leu Thr Val Leu Gly Gln
               100                 105                 110
   Pro Lys Ala Ala Pro Ser Val Thr Leu Phe Pro Pro Ser Ser Glu Glu
           115                 120                 125
   Leu Gln Ala Asn Lys Ala Thr Leu Val Cys Leu Ile Ser Asp Phe Tyr
       130                 135                 140
   Pro Gly Ala Val Thr Val Ala Trp Lys Ala Asp Ser Ser Pro Val Lys
   145                 150                 155                 160
   Ala Gly Val Glu Thr Thr Thr Pro Ser Lys Gln Ser Asn Asn Lys Tyr
                   165                 170                 175
   Ala Ala Ser Ser Tyr Leu Ser Leu Thr Pro Glu Gln Trp Lys Ser His
               180                 185                 190
   Arg Ser Tyr Ser Cys Gln Val Thr His Glu Gly Ser Thr Val Glu Lys
           195                 200                 205
   Thr Val Ala Pro Thr Glu Cys Ser
       210                 215
<210> 144
   <211> 654
   <212> DNA
   <213> Artificial sequence
<220>
   <223> Light chain CR4325
   <220>
   <221> CDS
   <222> (1)..(654)
   <223>
<400> 144
   gac atc gtg atg acc cag tct cca gac tcc ctg gct gtg tct ctg ggc      48
   Asp Ile Val Met Thr Gln Ser Pro Asp Ser Leu Ala Val Ser Leu Gly
   1               5                   10                  15
   gag agg gcc acc atc aac tgc aag tcc agc cag agt gtt tta tac agc      96
   Glu Arg Ala Thr Ile Asn Cys Lys Ser Ser Gln Ser Val Leu Tyr Ser
               20                  25                  30
   tcc aac aat aag aac tac tta gct tgg tac cag cag aaa cca gga cag     144
   Ser Asn Asn Lys Asn Tyr Leu Ala Trp Tyr Gln Gln Lys Pro Gly Gln
           35                  40                  45
   cct cct aag ctg ctc att tac tgg gca tct acc cgg gaa tcc ggg gtc     192
   Pro Pro Lys Leu Leu Ile Tyr Trp Ala Ser Thr Arg Glu Ser Gly Val
       50                  55                  60
   cct gac cga ttc agt ggc agc ggg tct ggg aca gat ttc act ctc acc      240
   Pro Asp Arg Phe Ser Gly Ser Gly Ser Gly Thr Asp Phe Thr Leu Thr
   65                  70                  75                  80
   atc agc agc ctg cag gct gaa gat gtg gca gtt tat tac tgt cag caa      288
   Ile Ser Ser Leu Gln Ala Glu Asp Val Ala Val Tyr Tyr Cys Gln Gln
                   85                  90                  95
   tat tat agt acc ccg ttg acg ttc ggg acc aag gtg gag atc aag cgg      336
   Tyr Tyr Ser Thr Pro Leu Thr Phe Gly Thr Lys Val Glu Ile Lys Arg
               100                 105                 110
   acc gtg gcc gct ccc agc gtg ttc atc ttc ccc ccc tcc gac gag cag      384
   Thr Val Ala Ala Pro Ser Val Phe Ile Phe Pro Pro Ser Asp Glu Gln
           115                 120                 125
   ctg aag agc ggc acc gcc agc gtg gtg tgc ctg ctg aac aac ttc tac      432
   Leu Lys Ser Gly Thr Ala Ser Val Val Cys Leu Leu Asn Asn Phe Tyr
       130                 135                 140
   ccc cgg gag gcc aag gtg cag tgg aag gtg gac aac gcc ctg cag agc      480
   Pro Arg Glu Ala Lys Val Gln Trp Lys Val Asp Asn Ala Leu Gln Ser
   145                 150                 155                 160
   ggc aac agc cag gag agc gtg acc gag cag gac agc aag gac tcc acc      528
   Gly Asn Ser Gln Glu Ser Val Thr Glu Gln Asp Ser Lys Asp Ser Thr
                   165                 170                 175
   tac agc ctg agc agc acc ctc acc ctg agc aag gcc gac tac gag aag      576
   Tyr Ser Leu Ser Ser Thr Leu Thr Leu Ser Lys Ala Asp Tyr Glu Lys
               180                 185                 190
   cac aag gtg tac gcc tgc gag gtg acc cac cag ggc ctg agc agc ccc      624
   His Lys Val Tyr Ala Cys Glu Val Thr His Gln Gly Leu Ser Ser Pro
           195                 200                 205
   gtg acc aag agc ttc aac cgg ggc gag tgt                              654
   Val Thr Lys Ser Phe Asn Arg Gly Glu Cys
       210                 215
<210> 145
   <211> 218
   <212> PRT
   <213> Artificial sequence
<220>
   <223> Light chain CR4325
<400> 145
   Asp Ile Val Met Thr Gln Ser Pro Asp Ser Leu Ala Val Ser Leu Gly
   1               5                   10                  15
   Glu Arg Ala Thr Ile Asn Cys Lys Ser Ser Gln Ser Val Leu Tyr Ser
               20                  25                  30
   Ser Asn Asn Lys Asn Tyr Leu Ala Trp Tyr Gln Gln Lys Pro Gly Gln
           35                  40                  45
   Pro Pro Lys Leu Leu Ile Tyr Trp Ala Ser Thr Arg Glu Ser Gly Val
       50                  55                  60
   Pro Asp Arg Phe Ser Gly Ser Gly Ser Gly Thr Asp Phe Thr Leu Thr
   65                  70                  75                  80
   Ile Ser Ser Leu Gln Ala Glu Asp Val Ala Val Tyr Tyr Cys Gln Gln
                   85                  90                  95
   Tyr Tyr Ser Thr Pro Leu Thr Phe Gly Thr Lys Val Glu Ile Lys Arg
               100                 105                 110
   Thr Val Ala Ala Pro Ser Val Phe Ile Phe Pro Pro Ser Asp Glu Gln
           115                 120                 125
   Leu Lys Ser Gly Thr Ala Ser Val Val Cys Leu Leu Asn Asn Phe Tyr
       130                 135                 140
   Pro Arg Glu Ala Lys Val Gln Trp Lys Val Asp Asn Ala Leu Gln Ser
   145                 150                 155                 160
   Gly Asn Ser Gln Glu Ser Val Thr Glu Gln Asp Ser Lys Asp Ser Thr
                   165                 170                 175
   Tyr Ser Leu Ser Ser Thr Leu Thr Leu Ser Lys Ala Asp Tyr Glu Lys
               180                 185                 190
   His Lys Val Tyr Ala Cys Glu Val Thr His Gln Gly Leu Ser Ser Pro
           195                 200                 205
   Val Thr Lys Ser Phe Asn Arg Gly Glu Cys
       210                 215
<210> 146
   <211> 645
   <212> DNA
   <213> Artificial sequence
<220>
   <223> Light chain CR4353
   <220>
   <221> CDS
   <222> (1)..(645)
   <223>
<400> 146
   tcg acg gaa acg aca ctc acg cag tcc cca ggc acc ctg tct ttg tct        48
   Ser Thr Glu Thr Thr Leu Thr Gln Ser Pro Gly Thr Leu Ser Leu Ser
   1               5                   10                  15
   ccc ggg gaa aga gcc acc ctc tcc tgc aga gcc agt cag agt gtt agc        96
   Pro Gly Glu Arg Ala Thr Leu Ser Cys Arg Ala Ser Gln Ser Val Ser
               20                  25                  30
   aac acc ttc tta gcc tgg tac cag cag aaa cct ggc cag gct ccc agg       144
   Asn Thr Phe Leu Ala Trp Tyr Gln Gln Lys Pro Gly Gln Ala Pro Arg
           35                  40                  45
   ctc ctc atc tat ggt gca tcc agc agg gcc act ggc atc cca gac agg       192
   Leu Leu Ile Tyr Gly Ala Ser Ser Arg Ala Thr Gly Ile Pro Asp Arg
       50                  55                  60
   ttc agt ggc agt ggg tct ggg aca gac ttc act ctc acc atc agc aga       240
   Phe Ser Gly Ser Gly Ser Gly Thr Asp Phe Thr Leu Thr Ile Ser Arg
   65                  70                  75                  80
   ctg gag cct gaa gat ttt gca gcg tat tac tgt cag cag tat ggt agc       288
   Leu Glu Pro Glu Asp Phe Ala Ala Tyr Tyr Cys Gln Gln Tyr Gly Ser
                   85                  90                  95
   tcg ctc act ttc ggc cct ggg acc aaa gtg gat atc aaa cgt gcg gcc       336
   Ser Leu Thr Phe Gly Pro Gly Thr Lys Val Asp Ile Lys Arg Ala Ala
               100                 105                 110
   gca ccc agc gtg ttc atc ttc ccc ccc tcc gac gag cag ctg aag agc       384
   Ala Pro Ser Val Phe Ile Phe Pro Pro Ser Asp Glu Gln Leu Lys Ser
           115                 120                 125
   ggc acc gcc agc gtg gtg tgc ctg ctg aac aac ttc tac ccc cgg gag       432
   Gly Thr Ala Ser Val Val Cys Leu Leu Asn Asn Phe Tyr Pro Arg Glu
       130                 135                 140
   gcc aag gtg cag tgg aag gtg gac aac gcc ctg cag agc ggc aac agc       480
   Ala Lys Val Gln Trp Lys Val Asp Asn Ala Leu Gln Ser Gly Asn Ser
   145                 150                 155                 160
   cag gag agc gtg acc gag cag gac agc aag gac tcc acc tac agc ctg       528
   Gln Glu Ser Val Thr Glu Gln Asp Ser Lys Asp Ser Thr Tyr Ser Leu
                   165                 170                 175
   agc agc acc ctc acc ctg agc aag gcc gac tac gag aag cac aag gtg       576
   Ser Ser Thr Leu Thr Leu Ser Lys Ala Asp Tyr Glu Lys His Lys Val
               180                 185                 190
   tac gcc tgc gag gtg acc cac cag ggc ctg agc agc ccc gtg acc aag       624
   Tyr Ala Cys Glu Val Thr His Gln Gly Leu Ser Ser Pro Val Thr Lys
           195                 200                 205
   agc ttc aac cgg ggc gag tgt                                           645
   Ser Phe Asn Arg Gly Glu Cys
       210                 215
<210> 147
   <211> 215
   <212> PRT
   <213> Artificial sequence
<220>
   <223> Light chain CR4353
<400> 147
   Ser Thr Glu Thr Thr Leu Thr Gln Ser Pro Gly Thr Leu Ser Leu Ser
   1               5                   10                  15
   Pro Gly Glu Arg Ala Thr Leu Ser Cys Arg Ala Ser Gln Ser Val Ser
               20                  25                  30
   Asn Thr Phe Leu Ala Trp Tyr Gln Gln Lys Pro Gly Gln Ala Pro Arg
           35                  40                  45
   Leu Leu Ile Tyr Gly Ala Ser Ser Arg Ala Thr Gly Ile Pro Asp Arg
       50                  55                  60
   Phe Ser Gly Ser Gly Ser Gly Thr Asp Phe Thr Leu Thr Ile Ser Arg
   65                  70                  75                  80
   Leu Glu Pro Glu Asp Phe Ala Ala Tyr Tyr Cys Gln Gln Tyr Gly Ser
                   85                  90                  95
   Ser Leu Thr Phe Gly Pro Gly Thr Lys Val Asp Ile Lys Arg Ala Ala
               100                 105                 110
   Ala Pro Ser Val Phe Ile Phe Pro Pro Ser Asp Glu Gln Leu Lys Ser
           115                 120                 125
   Gly Thr Ala Ser Val Val Cys Leu Leu Asn Asn Phe Tyr Pro Arg Glu
       130                 135                 140
   Ala Lys Val Gln Trp Lys Val Asp Asn Ala Leu Gln Ser Gly Asn Ser
   145                 150                 155                 160
   Gln Glu Ser Val Thr Glu Gln Asp Ser Lys Asp Ser Thr Tyr Ser Leu
                       165                 170                 175
   Ser Ser Thr Leu Thr Leu Ser Lys Ala Asp Tyr Glu Lys His Lys Val
               180                 185                 190
   Tyr Ala Cys Glu Val Thr His Gln Gly Leu Ser Ser Pro Val Thr Lys
           195                 200                 205
   Ser Phe Asn Arg Gly Glu Cys
       210                 215
<210> 148
   <211> 663
   <212> DNA
   <213> Artificial sequence
<220>
   <223> Light chain CR4361
   <220>
   <221> CDS
   <222> (1)..(663)
   <223>
<400> 148
   tcg acg gat gtt gtg atg act cag tct cca gac tcc ctg gct gtg tct         48
   Ser Thr Asp Val Val Met Thr Gln Ser Pro Asp Ser Leu Ala Val Ser
   1               5                   10                  15
   ctg ggc gag agg gcc acc atc aac tgc aag tcc agc cag aat att tta         96
   Leu Gly Glu Arg Ala Thr Ile Asn Cys Lys Ser Ser Gln Asn Ile Leu
               20                  25                  30
   gac aac tcc gac aat aag aac ttc tta gct tgg tac cag cag aaa cca        144
   Asp Asn Ser Asp Asn Lys Asn Phe Leu Ala Trp Tyr Gln Gln Lys Pro
           35                  40                  45
   gga cag cct cct aaa ttg ctc att tac tgg gca tct gcc cgg gag tcc        192
   Gly Gln Pro Pro Lys Leu Leu Ile Tyr Trp Ala Ser Ala Arg Glu Ser
       50                  55                  60
   ggg gtc cct gac cga ttc agt ggc agc ggg tct ggg aca gat ttc act        240
   Gly Val Pro Asp Arg Phe Ser Gly Ser Gly Ser Gly Thr Asp Phe Thr
   65                  70                  75                  80
   ctc acc atc agc agc ctg cag gct gaa gat gtg gca ctt tat tac tgt        288
   Leu Thr Ile Ser Ser Leu Gln Ala Glu Asp Val Ala Leu Tyr Tyr Cys
                   85                  90                  95
   cag caa tat tat aat act ccc atc acc ttc ggt caa ggg aca cga ctg      336
   Gln Gln Tyr Tyr Asn Thr Pro Ile Thr Phe Gly Gln Gly Thr Arg Leu
               100                 105                 110
   gag att aaa cgt gcg gcc gca ccc agc gtg ttc atc ttc ccc ccc tcc      384
   Glu Ile Lys Arg Ala Ala Ala Pro Ser Val Phe Ile Phe Pro Pro Ser
           115                 120                 125
   gac gag cag ctg aag agc ggc acc gcc agc gtg gtg tgc ctg ctg aac      432
   Asp Glu Gln Leu Lys Ser Gly Thr Ala Ser Val Val Cys Leu Leu Asn
       130                 135                 140
   aac ttc tac ccc cgg gag gcc aag gtg cag tgg aag gtg gac aac gcc      480
   Asn Phe Tyr Pro Arg Glu Ala Lys Val Gln Trp Lys Val Asp Asn Ala
   145                 150                 155                 160
   ctg cag agc ggc aac agc cag gag agc gtg acc gag cag gac agc aag      528
   Leu Gln Ser Gly Asn Ser Gln Glu Ser Val Thr Glu Gln Asp Ser Lys
                   165                 170                 175
   gac tcc acc tac agc ctg agc agc acc ctc acc ctg agc aag gcc gac      576
   Asp Ser Thr Tyr Ser Leu Ser Ser Thr Leu Thr Leu Ser Lys Ala Asp
               180                 185                 190
   tac gag aag cac aag gtg tac gcc tgc gag gtg acc cac cag ggc ctg      624
   Tyr Glu Lys His Lys Val Tyr Ala Cys Glu Val Thr His Gln Gly Leu
           195                 200                 205
   agc agc ccc gtg acc aag agc ttc aac cgg ggc gag tgt                  663
   Ser Ser Pro Val Thr Lys Ser Phe Asn Arg Gly Glu Cys
       210                 215                 220
<210> 149
   <211> 221
   <212> PRT
   <213> Artificial sequence
<220>
   <223> Light chain CR4361
<400> 149
   Ser Thr Asp Val Val Met Thr Gln Ser Pro Asp Ser Leu Ala Val Ser
   1               5                   10                  15
   Leu Gly Glu Arg Ala Thr Ile Asn Cys Lys Ser Ser Gln Asn Ile Leu
               20                  25                  30
   Asp Asn Ser Asp Asn Lys Asn Phe Leu Ala Trp Tyr Gln Gln Lys Pro
           35                  40                  45
   Gly Gln Pro Pro Lys Leu Leu Ile Tyr Trp Ala Ser Ala Arg Glu Ser
   50 55 60
   Gly Val Pro Asp Arg Phe Ser Gly Ser Gly Ser Gly Thr Asp Phe Thr
   65 70 75 80
   Leu Thr Ile Ser Ser Leu Gln Ala Glu Asp Val Ala Leu Tyr Tyr Cys
   85 90 95
   Gln Gln Tyr Tyr Asn Thr Pro Ile Thr Phe Gly Gln Gly Thr Arg Leu
   100 105 110
   Glu Ile Lys Arg Ala Ala Ala Pro Ser Val Phe Ile Phe Pro Pro Ser
   115 120 125
   Asp Glu Gln Leu Lys Ser Gly Thr Ala Ser Val Val Cys Leu Leu Asn
   130 135 140
   Asn Phe Tyr Pro Arg Glu Ala Lys Val Gln Trp Lys Val Asp Asn Ala
   145 150 155 160
   Leu Gln Ser Gly Asn Ser Gln Glu Ser Val Thr Glu Gln Asp Ser Lys
   165 170 175
   Asp Ser Thr Tyr Ser Leu Ser Ser Thr Leu Thr Leu Ser Lys Ala Asp
   180 185 190
   Tyr Glu Lys His Lys Val Tyr Ala Cys Glu Val Thr His Gln Gly Leu
   195 200 205
   Ser Ser Pro Val Thr Lys Ser Phe Asn Arg Gly Glu Cys
   210 215 220
<210> 150
   <211> 651
   <212> DNA
   <213> Artificial sequence
<220>
   <223> Light chain CR4374
   <220>
   <221> CDS
   <222> (1)..(651)
   <223>
<400> 150
   cag tcc gtg ctg acc cag cct ccc tca gtg tct ggg gcc cca ggg cag       48
   Gln Ser Val Leu Thr Gln Pro Pro Ser Val Ser Gly Ala Pro Gly Gln
   1               5                   10                  15
   agg gtc acc atc tcc tgc act ggg agc agc tcc aac atc ggg gca ggt       96
   Arg Val Thr Ile Ser Cys Thr Gly Ser Ser Ser Asn Ile Gly Ala Gly
               20                  25                  30
   tat gat gta cac tgg tac cag cag ctt cca gga aca gcc ccc aaa ctc      144
   Tyr Asp Val His Trp Tyr Gln Gln Leu Pro Gly Thr Ala Pro Lys Leu
           35                  40                  45
   ctc atc tat ggt aac agc aat cgg ccc tca ggg gtc cct gac cga ttc      192
   Leu Ile Tyr Gly Asn Ser Asn Arg Pro Ser Gly Val Pro Asp Arg Phe
       50                  55                  60
   tct ggc tcc aag tct ggc acc tca gcc tcc ctg gcc atc act ggg ctc      240
   Ser Gly Ser Lys Ser Gly Thr Ser Ala Ser Leu Ala Ile Thr Gly Leu
   65                  70                  75                  80
   cag gct gag gat gag gct gat tat tac tgc cag tcc tat gac agc agc      288
   Gln Ala Glu Asp Glu Ala Asp Tyr Tyr Cys Gln Ser Tyr Asp Ser Ser
                   85                  90                  95
   ttg agt ggt tcg gtg ttc ggc gga ggc acc aag ctt acc gtg ctg ggc      336
   Leu Ser Gly Ser Val Phe Gly Gly Gly Thr Lys Leu Thr Val Leu Gly
               100                 105                 110
   cag ccc aag gcc gct ccc agc gtg acc ctg ttc ccc ccc tcc tcc gag      384
   Gln Pro Lys Ala Ala Pro Ser Val Thr Leu Phe Pro Pro Ser Ser Glu
           115                 120                 125
   gag ctg cag gcc aac aag gcc acc ctg gtg tgc ctc atc agc gac ttc      432
   Glu Leu Gln Ala Asn Lys Ala Thr Leu Val Cys Leu Ile Ser Asp Phe
       130                 135                 140
   tac cct ggc gcc gtg acc gtg gcc tgg aag gcc gac agc agc ccc gtg      480
   Tyr Pro Gly Ala Val Thr Val Ala Trp Lys Ala Asp Ser Ser Pro Val
   145                 150                 155                 160
   aag gcc ggc gtg gag acc acc acc ccc agc aag cag agc aac aac aag      528
   Lys Ala Gly Val Glu Thr Thr Thr Pro Ser Lys Gln Ser Asn Asn Lys
                   165                 170                 175
   tac gcc gcc agc agc tac ctg agc ctc acc ccc gag cag tgg aag agc      576
   Tyr Ala Ala Ser Ser Tyr Leu Ser Leu Thr Pro Glu Gln Trp Lys Ser
               180                 185                 190
   cac cgg agc tac agc tgc cag gtg acc cac gag ggc agc acc gtg gag      624
   His Arg Ser Tyr Ser Cys Gln Val Thr His Glu Gly Ser Thr Val Glu
           195                 200                 205
   aag acc gtg gcc ccc acc gag tgc agc                                  651
   Lys Thr Val Ala Pro Thr Glu Cys Ser
       210                 215
<210> 151
   <211> 217
   <212> PRT
   <213> Artificial sequence
<220>
   <223> Light chain CR4374
<400> 151
   Gln Ser Val Leu Thr Gln Pro Pro Ser Val Ser Gly Ala Pro Gly Gln
   1 5 10 15
   Arg Val Thr Ile Ser Cys Thr Gly Ser Ser Ser Asn Ile Gly Ala Gly
   20 25 30
   Tyr Asp Val His Trp Tyr Gln Gln Leu Pro Gly Thr Ala Pro Lys Leu
   35 40 45
   Leu Ile Tyr Gly Asn Ser Asn Arg Pro Ser Gly Val Pro Asp Arg Phe
   50 55 60
   Ser Gly Ser Lys Ser Gly Thr Ser Ala Ser Leu Ala Ile Thr Gly Leu
   65 70 75 80
   Gln Ala Glu Asp Glu Ala Asp Tyr Tyr Cys Gln Ser Tyr Asp Ser Ser
   85 90 95
   Leu Ser Gly Ser Val Phe Gly Gly Gly Thr Lys Leu Thr Val Leu Gly
   100 105 110
   Gln Pro Lys Ala Ala Pro Ser Val Thr Leu Phe Pro Pro Ser Ser Glu
   115 120 125
   Glu Leu Gln Ala Asn Lys Ala Thr Leu Val Cys Leu Ile Ser Asp Phe
   130 135 140
   Tyr Pro Gly Ala Val Thr Val Ala Trp Lys Ala Asp Ser Ser Pro Val
   145 150 155 160
   Lys Ala Gly Val Glu Thr Thr Thr Pro Ser Lys Gln Ser Asn Asn Lys
   165 170 175
   Tyr Ala Ala Ser Ser Tyr Leu Ser Leu Thr Pro Glu Gln Trp Lys Ser
   180 185 190
   His Arg Ser Tyr Ser Cys Gln Val Thr His Glu Gly Ser Thr Val Glu
   195 200 205
   Lys Thr Val Ala Pro Thr Glu Cys Ser
   210 215
<210> 152
   <211> 23
   <212> DNA
   <213> Artificial sequence
<220>
   <223> HuVlambda1A
<400> 152
   cagtctgtgc tgactcagcc acc 23
<210> 153
   <211> 23
   <212> DNA
   <213> Artificial sequence
<220>
   <223> HuVlambda1B
<400> 153
   cagtctgtgy tgacgcagcc gcc 23
<210> 154
   <211> 23
   <212> DNA
   <213> Artificial sequence
<220>
   <223> HuVlambda1C
<400> 154
   cagtctgtcg tgacgcagcc gcc 23
<210> 155
   <211> 21
   <212> DNA
   <213> Artificial sequence
<220>
   <223> HuVlambda2
<400> 155
   cartctgccc tgactcagcc t 21
<210> 156
   <211> 23
   <212> DNA
   <213> Artificial sequence
<220>
   <223> HuVlambda3A
<400> 156
   tcctatgwgc tgactcagcc acc 23
<210> 157
   <211> 23
   <212> DNA
   <213> Artificial sequence
<220>
   <223> HuVlambda3B
<400> 157
   tcttctgagc tgactcagga ccc 23
<210> 158
   <211> 23
   <212> DNA
   <213> Artificial sequence
<220>
   <223> HuVlambda4
<400> 158
   cacgttatac tgactcaacc gcc 23
<210> 159
   <211> 23
   <212> DNA
   <213> Artificial sequence
<220>
   <223> HuVlambda5
<400> 159
   caggctgtgc tgactcagcc gtc 23
<210> 160
   <211> 23
   <212> DNA
   <213> Artificial sequence
<220>
   <223> HuVlambda6
<400> 160
   aattttatgc tgactcagcc cca 23
<210> 161
   <211> 23
   <212> DNA
   <213> Artificial sequence
<220>
   <223> HuVlambda7/8
<400> 161
   cagrctgtgg tgacycagga gcc 23
<210> 162
   <211> 23
   <212> DNA
   <213> Artificial sequence
<220>
   <223> HuVlambda9
   <400> 162
   cwgcctgtgc tgactcagcc mcc 23
<210> 163
   <211> 23
   <212> DNA
   <213> Artificial sequence
<220>
   <223> HuVkappa1B
<400> 163
   gacatccagw tgacccagtc tcc 23
<210> 164
   <211> 23
   <212> DNA
   <213> Artificial sequence
<220>
   <223> HuVkappa2
<400> 164
   gatgttgtga tgactcagtc tcc 23
<210> 165
   <211> 23
   <212> DNA
   <213> Artificial sequence
<220>
   <223> HuVkappa3
<400> 165
   gaaattgtgw tgacrcagtc tcc 23
<210> 166
   <211> 23
   <212> DNA
   <213> Artificial sequence
<220>
   <223> HuVkappa4
<400> 166
   gatattgtga tgacccacac tcc 23
<210> 167
   <211> 23
   <212> DNA
   <213> Artificial sequence
<220>
   <223> HuVkappa5
<400> 167
   gaaacgacac tcacgcagtc tcc 23
<210> 168
   <211> 23
   <212> DNA
   <213> Artificial sequence
<220>
   <223> HuVkappa6
<400> 168
   gaaattgtgc tgactcagtc tcc 23
<210> 169
   <211> 41
   <212> DNA
   <213> Artificial sequence
<220>
   <223> HuVkappa1B-SalI
<400> 169
   tgagcacaca ggtcgacgga catccagwtg acccagtctc c 41
<210> 170
   <211> 41
   <212> DNA
   <213> Artificial sequence
<220>
   <223> HuVkappa2-SalI
<400> 170
   tgagcacaca ggtcgacgga tgttgtgatg actcagtctc c 41
<210> 171
   <211> 41
   <212> DNA
   <213> Artificial sequence
<220>
   <223> HuVkappa3B-SalI
<400> 171
   tgagcacaca ggtcgacgga aattgtgwtg acrcagtctc c 41
<210> 172
   <211> 41
   <212> DNA
   <213> Artificial sequence
<220>
   <223> HuVkappa4B-SalI
<400> 172
   tgagcacaca ggtcgacgga tattgtgatg acccacactc c 41
<210> 173
   <211> 41
   <212> DNA
   <213> Artificial sequence
<220>
   <223> HuVkappa5-SalI
<400> 173
   tgagcacaca ggtcgacgga aacgacactc acgcagtctc c 41
<210> 174
   <211> 41
   <212> DNA
   <213> Artificial sequence
<220>
   <223> HuVkappa6-SalI
<400> 174
   tgagcacaca ggtcgacgga aattgtgctg actcagtctc c 41
<210> 175
   <211> 48
   <212> DNA
   <213> Artificial sequence
<220>
   <223> HuJkappa1-NotI
<400> 175
   gagtcattct cgacttgcgg ccgcacgttt gatttccacc ttggtccc 48
<210> 176
   <211> 48
   <212> DNA
   <213> Artificial sequence
<220>
   <223> HuJkappa2-NotI
<400> 176
   gagtcattct cgacttgcgg ccgcacgttt gatctccagc ttggtccc 48
<210> 177
   <211> 48
   <212> DNA
   <213> Artificial sequence
<220>
   <223> HuJkappa3-NotI
<400> 177
   gagtcattct cgacttgcgg ccgcacgttt gatatccact ttggtccc 48
<210> 178
   <211> 48
   <212> DNA
   <213> Artificial sequence
<220>
   <223> HuJkappa4-NotI
<400> 178
   gagtcattct cgacttgcgg ccgcacgttt gatctccacc ttggtccc 48
<210> 179
   <211> 48
   <212> DNA
   <213> Artificial sequence
<220>
   <223> HuJkappa5-NotI
<400> 179
   gagtcattct cgacttgcgg ccgcacgttt aatctccagt cgtgtccc 48
<210> 180
   <211> 41
   <212> DNA
   <213> Artificial sequence
<220>
   <223> HuVlambda1A-SalI
<400> 180
   tgagcacaca ggtcgacgca gtctgtgctg actcagccac c 41
<210> 181
   <211> 41
   <212> DNA
   <213> Artificial sequence
<220>
   <223> HuVlambda1B-SalI
<400> 181
   tgagcacaca ggtcgacgca gtctgtgytg acgcagccgc c 41
<210> 182
   <211> 41
   <212> DNA
   <213> Artificial sequence
<220>
   <223> Huvlambda1C-SalI
<400> 182
   tgagcacaca ggtcgacgca gtctgtcgtg acgcagccgc c 41
<210> 183
   <211> 39
   <212> DNA
   <213> Artificial sequence
<220>
   <223> HuVlambda2-SalI

<400> 183
   tgagcacaca ggtcgacgca rtctgccctg actcagcct 39
<210> 184
   <211> 41
   <212> DNA
   <213> Artificial sequence
<220>
   <223> HuV1ambda3A-SalI
<400> 184
   tgagcacaca ggtcgacgtc ctatgwgctg actcagccac c 41
<210> 185
   <211> 41
   <212> DNA
   <213> Artificial sequence
<220>
   <223> HuVlambda3B-SalI
<400> 185
   tgagcacaca ggtcgacgtc ttctgagctg actcaggacc c 41
<210> 186
   <211> 41
   <212> DNA
   <213> Artificial sequence
<220>
   <223> HuVlambda4-SalI
<400> 186
   tgagcacaca ggtcgacgca cgttatactg actcaaccgc c 41
<210> 187
   <211> 41
   <212> DNA
   <213> Artificial sequence
<220>
   <223> HuVlambda5-SalI
<400> 187
   tgagcacaca ggtcgacgca ggctgtgctg actcagccgt c 41
<210> 188
   <211> 41
   <212> DNA
   <213> Artificial sequence
<220>
   <223> HuVlambda6-SalI
<400> 188
   tgagcacaca ggtcgacgaa ttttatgctg actcagcccc a 41
<210> 189
   <211> 41
   <212> DNA
   <213> Artificial sequence
<220>
   <223> HuVlambda7/8-SalI
<400> 189
   tgagcacaca ggtcgacgca grctgtggtg acycaggagc c 41
<210> 190
   <211> 41
   <212> DNA
   <213> Artificial sequence
<220>
   <223> HuVlambda9-SalI
<400> 190
   tgagcacaca ggtcgacgcw gcctgtgctg actcagccmc c 41
<210> 191
   <211> 48
   <212> DNA
   <213> Artificial sequence
<220>
   <223> HuJlambda1-NotI
<400> 191
   gagtcattct cgacttgcgg ccgcacctag gacggtgacc ttggtccc 48
<210> 192
   <211> 48
   <212> DNA
   <213> Artificial sequence
<220>
   <223> HuJlambda2/3-NotI
<400> 192
   gagtcattct cgacttgcgg ccgcacctag gacggtcagc ttggtccc 48
<210> 193
   <211> 48
   <212> DNA
   <213> Artificial sequence
<220>
   <223> HuJlambda4/5-NotI
<400> 193
   gagtcattct cgacttgcgg ccgcacytaa aacggtgagc tgggtccc 48
<210> 194
   <211> 23
   <212> DNA
   <213> Artificial sequence
<220>
   <223> HuVH1B/7A
<400> 194
   cagrtgcagc tggtgcartc tgg 23
<210> 195
   <211> 23
   <212> DNA
   <213> Artificial sequence
<220>
   <223> HuVH1C
<400> 195
   saggtccagc tggtrcagtc tgg 23
<210> 196
   <211> 23
   <212> DNA
   <213> Artificial sequence
<220>
   <223> HuVH2B
<400> 196
   saggtgcagc tggtggagtc tgg 23
<210> 197
   <211> 23
   <212> DNA
   <213> Artificial sequence
<220>
   <223> HuVH3B
<400> 197
   saggtgcagc tggtggagtc tgg 23
<210> 198
   <211> 23
   <212> DNA
   <213> Artificial sequence
<220>
   <223> HuVH3C
<400> 198
   gaggtgcagc tggtggagwc ygg 23
<210> 199
   <211> 23
   <212> DNA
   <213> Artificial sequence
<220>
   <223> HuVH4B
<400> 199
   caggtgcagc tacagcagtg ggg 23
<210> 200
   <211> 23
   <212> DNA
   <213> Artificial sequence
   <220>
   <223> HuVH4C
<400> 200
   cagstgcagc tgcaggagtc sgg 23
<210> 201
   <211> 23
   <212> DNA
   <213> Artificial sequence
<220>
   <223> HuVH5B
<400> 201
   gargtgcagc tggtgcagtc tgg 23
<210> 202
   <211> 23
   <212> DNA
   <213> Artificial sequence
<220>
   <223> HuVH6A
<400> 202
   caggtacagc tgcagcagtc agg 23
<210> 203
   <211> 56
   <212> DNA
   <213> Artificial sequence
<220>
   <223> HuVH1B/7A-SfiI
<400> 203
   gtcctcgcaa ctgcggccca gccggccatg gcccagrtgc agctggtgca rtctgg 56
<210> 204
   <211> 56
   <212> DNA
   <213> Artificial sequence
<220>
   <223> HuVH1C-SfiI
<400> 204
   gtcctcgcaa ctgcggccca gccggccatg gccsaggtcc agctggtrca gtctgg 56
<210> 205
   <211> 56
   <212> DNA
   <213> Artificial sequence
<220>
   <223> HuVH2B-SfiI
<400> 205
   gtcctcgcaa ctgcggccca gccggccatg gcccagrtca ccttgaagga gtctgg 56
<210> 206
   <211> 56
   <212> DNA
   <213> Artificial sequence
<220>
   <223> HuVH3B-SfiI
<400> 206
   gtcctcgcaa ctgcggccca gccggccatg gccsaggtgc agctggtgga gtctgg 56
<210> 207
   <211> 56
   <212> DNA
   <213> Artificial sequence
<220>
   <223> HuVH3C-SfiI
<400> 207
   gtcctcgcaa ctgcggccca gccggccatg gccgaggtgc agctggtgga gwcygg 56
<210> 208
   <211> 56
   <212> DNA
   <213> Artificial sequence
<220>
   <223> HuVH4B-SfiI
<400> 208
   gtcctcgcaa ctgcggccca gccggccatg gcccaggtgc agctacagca gtgggg 56
<210> 209
   <211> 56
   <212> DNA
   <213> Artificial sequence
<220>
   <223> HuVH4C-SfiI
<400> 209
   gtcctcgcaa ctgcggccca gccggccatg gcccagstgc agctgcagga gtcsgg 56
<210> 210
   <211> 56
   <212> DNA
   <213> Artificial sequence
<220>
   <223> HuVH5B-SfiI
<400> 210
   gtcctcgcaa ctgcggccca gccggccatg gccgargtgc agctggtgca gtctgg 56
<210> 211
   <211> 56
   <212> DNA
   <213> Artificial sequence
<220>
   <223> HuVH6A-SfiI
<400> 211
   gtcctcgcaa ctgcggccca gccggccatg gcccaggtac agctgcagca gtcagg 56
<210> 212
   <211> 36
   <212> DNA
   <213> Artificial sequence
<220>
   <223> HuJH1/2-XhoI
<400> 212
   gagtcattct cgactcgaga cggtgaccag ggtgcc 36
<210> 213
   <211> 36
   <212> DNA
   <213> Artificial sequence
<220>
   <223> HuJH3-XhoI
<400> 213
   gagtcattct cgactcgaga cggtgaccat tgtccc 36
<210> 214
   <211> 36
   <212> DNA
   <213> Artificial sequence
<220>
   <223> HuJH4/5-XhoI
<400> 214
   gagtcattct cgactcgaga cggtgaccag ggttcc 36
<210> 215
   <211> 36
   <212> DNA
   <213> Artificial sequence
<220>
   <223> HuJH6-XhoI
<400> 215
   gagtcattct cgactcgaga cggtgaccgt ggtccc 36
<210> 216
   <211> 5855
   <212> DNA
   <213> Artificial sequence
<220>
   <223> Vector pCR-IgM
<400> 216
   gttctttcct gcgttatccc ctgattctgt ggataaccgt attaccgcct ttgagtgagc     60
   tgataccgct cgccgcagcc gaacgaccga gcgcagcgag tcagtgagcg aggaagcgga    120
   agagcgccca atacgcaaac cgcctctccc cgcgcgttgg ccgattcatt aatgcagctg    180
   gcacgacagg tttcccgact ggaaagcggg cagtgagcgc aacgcaatta atgtgagtta    240
   gctcactcat taggcacccc aggctttaca ctttatgctt ccggctcgta tgttgtgtgg    300
   aattgtgagc ggataacaat ttcacacagg aaacagctat gaccatgatt acgccaagct    360
   cagaattaac cctcactaaa gggactagtc ctgcaggttt aaacgaattc gcccttcagg    420
   gagtgctagc gccccaaccc ttttccccct cgtctcctgt gagaattccc cgtcggatac    480
   gagcagcgtg gccgttggct gcctcgcaca ggacttcctt cccgactcca tcactttctc    540
   ctggaaatac aagaacaact ctgacatcag cagcacccgg ggcttcccat cagtcctgag    600
   agggggcaag tacgcagcca cctcacaggt gctgctgcct tccaaggacg tcatgcaggg 660
   cacagacgaa cacgtggtgt gcaaagtcca gcaccccaac ggcaacaaag aaaagaacgt 720
   gcctcttcca ggtgagggcc gggcccagcc accgggacag agagggagcc gaagggggcg 780
   ggagtggcgg gcaccgggct gacacgtgtc cctcactgca gtgattgctg agctgcctcc 840
   caaagtgagc gtcttcgtcc caccccgcga cggcttcttc ggcaaccccc gcaagtccaa 900
   gctcatctgc caggccacgg gtttcagtcc ccggcagatt caggtgtcct ggctgcgcga 960
   ggggaagcag gtggggtctg gcgtcaccac ggaccaggtg caggctgagg ccaaagagtc 1020
   tgggcccacg acctacaagg tgaccagcac actgaccatc aaagagagcg actggctcag 1080
   ccagagcatg ttcacctgcc gcgtggatca caggggcctg accttccagc agaatgcgtc 1140
   ctccatgtgt gtccccggtg agtgacctgt ccccaggggc agcacccacc gacacacagg 1200
   ggtccactcg ggtctggcat tcgccacccc ggatgcagcc atctactccc tgagccttgg 1260
   cttcccagag cggccaaggg caggggctcg ggcggcagga cccctgggct cggcagaggc 1320
   agttgctact ctttgggtgg gaaccatgcc tccgcccaca tccacacctg ccccacctct 1380
   gactcccttc tcttgactcc agatcaagac acagccatcc gggtcttcgc catcccccca 1440
   tcctttgcca gcatcttcct caccaagtcc accaagttga cctgcctggt cacagacctg 1500
   accacctatg acagcgtgac catctcctgg acccgccaga atggcgaagc tgtgaaaacc 1560
   cacaccaaca tctccgagag ccaccccaat gccactttca gcgccgtggg tgaggccagc 1620
   atctgcgagg atgactggaa ttccggggag aggttcacgt gcaccgtgac ccacacagac 1680
   ctgccctcgc cactgaagca gaccatctcc cggcccaagg gtaggcccca ctcttgcccc 1740
   tcttcctgca ctccctggga cctcccttgg cctctggggc atggtggaaa gcacccctca 1800
   ctcccccgtt gtctgggcaa ctggggaaaa ggggactcaa ccccagccca caggctggtc 1860
   cccccactgc cccgccctca ccaccatctc tgttcacagg ggtggccctg cacaggcccg 1920
   atgtctactt gctgccacca gcccgggagc agctgaacct gcgggagtcg gccaccatca 1980
   cgtgcctggt gacgggcttc tctcccgcgg acgtcttcgt gcagtggatg cagagggggc 2040
   agcccttgtc cccggagaag tatgtgacca gcgccccaat gcctgagccc caggccccag 2100
   gccggtactt cgcccacagc atcctgaccg tgtccgaaga ggaatggaac acgggggaga 2160
   cctacacctg cgtggtggcc catgaggccc tgcccaacag ggtcaccgag aggaccgtgg 2220
   acaagtccac cggtaaaccc accctgtaca acgtgtccct ggtcatgtcc gacacagctg 2280
   gcacctgcta ctgatgatct agatctagaa cacaaagggc gaattcgcgg ccgctaaatt 2340
   caattcgccc tatagtgagt cgtattacaa ttcactggcc gtcgttttac aacgtcgtga 2400
   ctgggaaaac cctggcgtta cccaacttaa tcgccttgca gcacatcccc ctttcgccag 2460
   ctggcgtaat agcgaagagg cccgcaccga tcgcccttcc caacagttgc gcagcctata 2520
   cgtacggcag tttaaggttt acacctataa aagagagagc cgttatcgtc tgtttgtgga 2580
   tgtacagagt gatattattg acacgccggg gcgacggatg gtgatccccc tggccagtgc 2640
   acgtctgctg tcagataaag tctcccgtga actttacccg gtggtgcata tcggggatga 2700
   aagctggcgc atgatgacca ccgatatggc cagtgtgccg gtctccgtta tcggggaaga 2760
   agtggctgat ctcagccacc gcgaaaatga catcaaaaac gccattaacc tgatgttctg 2820
   gggaatataa atgtcaggca tgagattatc aaaaaggatc ttcacctaga tccttttcac 2880
   gtagaaagcc agtccgcaga aacggtgctg accccggatg aatgtcagct actgggctat 2940
   ctggacaagg gaaaacgcaa gcgcaaagag aaagcaggta gcttgcagtg ggcttacatg 3000
   gcgatagcta gactgggcgg ttttatggac agcaagcgaa ccggaattgc cagctggggc 3060
   gccctctggt aaggttggga agccctgcaa agtaaactgg atggctttct cgccgccaag 3120
   gatctgatgg cgcaggggat caagctctga tcaagagaca ggatgaggat cgtttcgcat 3180
   gattgaacaa gatggattgc acgcaggttc tccggccgct tgggtggaga ggctattcgg 3240
   ctatgactgg gcacaacaga caatcggctg ctctgatgcc gccgtgttcc ggctgtcagc 3300
   gcaggggcgc ccggttcttt ttgtcaagac cgacctgtcc ggtgccctga atgaactgca 3360
   agacgaggca gcgcggctat cgtggctggc cacgacgggc gttccttgcg cagctgtgct 3420
   cgacgttgtc actgaagcgg gaagggactg gctgctattg ggcgaagtgc cggggcagga 3480
   tctcctgtca tctcaccttg ctcctgccga gaaagtatcc atcatggctg atgcaatgcg 3540
   gcggctgcat acgcttgatc cggctacctg cccattcgac caccaagcga aacatcgcat 3600
   cgagcgagca cgtactcgga tggaagccgg tcttgtcgat caggatgatc tggacgaaga 3660
   gcatcagggg ctcgcgccag ccgaactgtt cgccaggctc aaggcgagca tgcccgacgg 3720
   cgaggatctc gtcgtgaccc atggcgatgc ctgcttgccg aatatcatgg tggaaaatgg 3780
   ccgcttttct ggattcatcg actgtggccg gctgggtgtg gcggaccgct atcaggacat 3840
   agcgttggct acccgtgata ttgctgaaga gcttggcggc gaatgggctg accgcttcct 3900
   cgtgctttac ggtatcgccg ctcccgattc gcagcgcatc gccttctatc gccttcttga 3960
   cgagttcttc tgaattatta acgcttacaa tttcctgatg cggtattttc tccttacgca 4020
   tctgtgcggt atttcacacc gcatacaggt ggcacttttc ggggaaatgt gcgcggaacc 4080
   cctatttgtt tatttttcta aatacattca aatatgtatc cgctcatgag acaataaccc 4140
   tgataaatgc ttcaataata ttgaaaaagg aagagtatga gtattcaaca tttccgtgtc 4200
   gcccttattc ccttttttgc ggcattttgc cttcctgttt ttgctcaccc agaaacgctg 4260
   gtgaaagtaa aagatgctga agatcagttg ggtgcacgag tgggttacat cgaactggat 4320
   ctcaacagcg gtaagatcct tgagagtttt cgccccgaag aacgttttcc aatgatgagc 4380
   acttttaaag ttctgctatg tggcgcggta ttatcccgta ttgacgccgg gcaagagcaa 4440
   ctcggtcgcc gcatacacta ttctcagaat gacttggttg agtactcacc agtcacagaa 4500
   aagcatctta cggatggcat gacagtaaga gaattatgca gtgctgccat aaccatgagt 4560
   gataacactg cggccaactt acttctgaca acgatcggag gaccgaagga gctaaccgct 4620
   tttttgcaca acatggggga tcatgtaact cgccttgatc gttgggaacc ggagctgaat 4680
   gaagccatac caaacgacga gcgtgacacc acgatgcctg tagcaatggc aacaacgttg 4740
   cgcaaactat taactggcga actacttact ctagcttccc ggcaacaatt aatagactgg 4800
   atggaggcgg ataaagttgc aggaccactt ctgcgctcgg cccttccggc tggctggttt 4860
   attgctgata aatctggagc cggtgagcgt gggtctcgcg gtatcattgc agcactgggg 4920
   ccagatggta agccctcccg tatcgtagtt atctacacga cggggagtca ggcaactatg 4980
   gatgaacgaa atagacagat cgctgagata ggtgcctcac tgattaagca ttggtaactg 5040
   tcagaccaag tttactcata tatactttag attgatttaa aacttcattt ttaatttaaa 5100
   aggatctagg tgaagatcct ttttgataat ctcatgacca aaatccctta acgtgagttt 5160
   tcgttccact gagcgtcaga ccccgtagaa aagatcaaag gatcttcttg agatcctttt 5220
   tttctgcgcg taatctgctg cttgcaaaca aaaaaaccac cgctaccagc ggtggtttgt 5280
   ttgccggatc aagagctacc aactcttttt ccgaaggtaa ctggcttcag cagagcgcag 5340
   ataccaaata ctgtccttct agtgtagccg tagttaggcc accacttcaa gaactctgta 5400
   gcaccgccta catacctcgc tctgctaatc ctgttaccag tggctgctgc cagtggcgat 5460
   aagtcgtgtc ttaccgggtt ggactcaaga cgatagttac cggataaggc gcagcggtcg 5520
   ggctgaacgg ggggttcgtg cacacagccc agcttggagc gaacgaccta caccgaactg 5580
   agatacctac agcgtgagct atgagaaagc gccacgcttc ccgaagggag aaaggcggac 5640
   aggtatccgg taagcggcag ggtcggaaca ggagagcgca cgagggagct tccaggggga 5700
   aacgcctggt atctttatag tcctgtcggg tttcgccacc tctgacttga gcgtcgattt 5760
   ttgtgatgct cgtcaggggg gcggagccta tggaaaaacg ccagcaacgc ggccttttta 5820
   cggttcctgg gcttttgctg gccttttgct cacat 5855
<210> 217
   <211> 2257
   <212> DNA
   <213> Artificial sequence
<220>
   <223> Heavy chain CRM4374
   <220>
   <221> Intron
   <222> (697)..(786)
   <223>
<220>
   <221> Intron
   <222> (1589)..(1867)
   <223>
<220>
   <221> Intron
   <222> (1123)..(1366)
   <223>
<400> 217
   cagatcacct tgaaggagtc tggtcctacg ctggtgaaac ccacacagac cctcacgttg     60
   acctgcacct tctctgggtt ctcactcagc actagtggag tgggtgtggg ctggatccgt    120
   cagcccccag gaaaggccct ggagtggctt gcagtcattt attggaatga tgataagctc    180
   tacaggccat ctctgaagag caggctcacc atcaccaagg acacctccaa aaaccaggtg    240
   gtccttacaa tgaccaagat ggaccctgtg gacacagcca catattactg tgcacacaga    300
   caccgttact atgatattag tggttattac cgtctcttct ctgatgcttt tgatatctgg    360
   ggccagggca ccatggtgac cgtgtccagc gctagcgccc caaccctttt ccccctcgtc    420
   tcctgtgaga attccccgtc ggatacgagc agcgtggccg ttggctgcct cgcacaggac    480
   ttccttcccg actccatcac tttctcctgg aaatacaaga acaactctga catcagcagc    540
   acccggggct tcccatcagt cctgagaggg ggcaagtacg cagccacctc acaggtgctg    600
   ctgccttcca aggacgtcat gcagggcaca gacgaacacg tggtgtgcaa agtccagcac    660
   cccaacggca acaaagaaaa gaacgtgcct cttccaggtg agggccgggc ccagccaccg    720
   ggacagagag ggagccgaag ggggcgggag tggcgggcac cgggctgaca cgtgtccctc    780
   actgcagtga ttgctgagct gcctcccaaa gtgagcgtct tcgtcccacc ccgcgacggc    840
   ttcttcggca acccccgcaa gtccaagctc atctgccagg ccacgggttt cagtccccgg    900
   cagattcagg tgtcctggct gcgcgagggg aagcaggtgg ggtctggcgt caccacggac     960
   caggtgcagg ctgaggccaa agagtctggg cccacgacct acaaggtgac cagcacactg    1020
   accatcaaag agagcgactg gctcagccag agcatgttca cctgccgcgt ggatcacagg    1080
   ggcctgacct tccagcagaa tgcgtcctcc atgtgtgtcc ccggtgagtg acctgtcccc    1140
   aggggcagca cccaccgaca cacaggggtc cactcgggtc tggcattcgc caccccggat    1200
   gcagccatct actccctgag ccttggcttc ccagagcggc caagggcagg ggctcgggcg    1260
   gcaggacccc tgggctcggc agaggcagtt gctactcttt gggtgggaac catgcctccg    1320
   cccacatcca cacctgcccc acctctgact cccttctctt gactccagat caagacacag    1380
   ccatccgggt cttcgccatc cccccatcct ttgccagcat cttcctcacc aagtccacca    1440
   agttgacctg cctggtcaca gacctgacca cctatgacag cgtgaccatc tcctggaccc    1500
   gccagaatgg cgaagctgtg aaaacccaca ccaacatctc cgagagccac cccaatgcca    1560
   ctttcagcgc cgtgggtgag gccagcatct gcgaggatga ctggaattcc ggggagaggt    1620
   tcacgtgcac cgtgacccac acagacctgc cctcgccact gaagcagacc atctcccggc    1680
   ccaagggtag gccccactct tgcccctctt cctgcactcc ctgggacctc ccttggcctc    1740
   tggggcatgg tggaaagcac ccctcactcc cccgttgtct gggcaactgg ggaaaagggg    1800
   actcaacccc agcccacagg ctggtccccc cactgccccg ccctcaccac catctctgtt    1860
   cacaggggtg gccctgcaca ggcccgatgt ctacttgctg ccaccagccc gggagcagct    1920
   gaacctgcgg gagtcggcca ccatcacgtg cctggtgacg ggcttctctc ccgcggacgt    1980
   cttcgtgcag tggatgcaga gggggcagcc cttgtccccg gagaagtatg tgaccagcgc    2040
   cccaatgcct gagccccagg ccccaggccg gtacttcgcc cacagcatcc tgaccgtgtc    2100
   cgaagaggaa tggaacacgg gggagaccta cacctgcgtg gtggcccatg aggccctgcc    2160
   caacagggtc accgagagga ccgtggacaa gtccaccggt aaacccaccc tgtacaacgt    2220
   gtccctggtc atgtccgaca cagctggcac ctgctac                             2257
<210> 218
   <211> 581
   <212> PRT
   <213> Artificial sequence
<220>
   <223> Heavy chain CRM4374
<400> 218
   Gln Ile Thr Leu Lys Glu Ser Gly Pro Thr Leu Val Lys Pro Thr Gln
   1               5                   10                  15
   Thr Leu Thr Leu Thr Cys Thr Phe Ser Gly Phe Ser Leu Ser Thr Ser
               20                  25                  30
   Gly Val Gly Val Gly Trp Ile Arg Gln Pro Pro Gly Lys Ala Leu Glu
           35                  40                  45
   Trp Leu Ala Val Ile Tyr Trp Asn Asp Asp Lys Leu Tyr Arg Pro Ser
       50                  55                  60
   Leu Lys Ser Arg Leu Thr Ile Thr Lys Asp Thr Ser Lys Asn Gln Val
   65                  70                  75                  80
   Val Leu Thr Met Thr Lys Met Asp Pro Val Asp Thr Ala Thr Tyr Tyr
                   85                  90                  95
   Cys Ala His Arg His Arg Tyr Tyr Asp Ile Ser Gly Tyr Tyr Arg Leu
               100                 105                 110
   Phe Ser Asp Ala Phe Asp Ile Trp Gly Gln Gly Thr Met Val Thr Val
           115                 120                 125
   Ser Ser Ala Ser Ala Pro Thr Leu Phe Pro Leu Val Ser Cys Glu Asn
       130                 135                 140
   Ser Pro Ser Asp Thr Ser Ser Val Ala Val Gly Cys Leu Ala Gln Asp
   145                 150                 155                 160
   Phe Leu Pro Asp Ser Ile Thr Phe Ser Trp Lys Tyr Lys Asn Asn Ser
                   165                 170                 175
   Asp Ile Ser Ser Thr Arg Gly Phe Pro Ser Val Leu Arg Gly Gly Lys
               180                 185                 190
   Tyr Ala Ala Thr Ser Gln Val Leu Leu Pro Ser Lys Asp Val Met Gln
           195                 200                 205
   Gly Thr Asp Glu His Val Val Cys Lys Val Gln His Pro Asn Gly Asn
       210                 215                 220
   Lys Glu Lys Asn Val Pro Leu Pro Val Ile Ala Glu Leu Pro Pro Lys
   225                 230                 235                 240
   Val Ser Val Phe Val Pro Pro Arg Asp Gly Phe Phe Gly Asn Pro Arg
                   245                 250                 255
   Lys Ser Lys Leu Ile Cys Gln Ala Thr Gly Phe Ser Pro Arg Gln Ile
   260 265 270
   Gln Val Ser Trp Leu Arg Glu Gly Lys Gln Val Gly Ser Gly Val Thr
   275 280 285
   Thr Asp Gln Val Gln Ala Glu Ala Lys Glu Ser Gly Pro Thr Thr Tyr
   290 295 300
   Lys Val Thr Ser Thr Leu Thr Ile Lys Glu Ser Asp Trp Leu Ser Gln
   305 310 315 320
   Ser Met Phe Thr Cys Arg Val Asp His Arg Gly Leu Thr Phe Gln Gln
   325 330 335
   Asn Ala Ser Ser Met Cys Val Pro Asp Gln Asp Thr Ala Ile Arg Val
   340 345 350
   Phe Ala Ile Pro Pro Ser Phe Ala Ser Ile Phe Leu Thr Lys Ser Thr
   355 360 365
   Lys Leu Thr Cys Leu Val Thr Asp Leu Thr Thr Tyr Asp Ser Val Thr
   370 375 380
   Ile Ser Trp Thr Arg Gln Asn Gly Glu Ala Val Lys Thr His Thr Asn
   385 390 395 400
   Ile Ser Glu Ser His Pro Asn Ala Thr Phe Ser Ala Val Gly Glu Ala
   405 410 415
   Ser Ile Cys Glu Asp Asp Trp Asn Ser Gly Glu Arg Phe Thr Cys Thr
   420 425 430
   Val Thr His Thr Asp Leu Pro Ser Pro Leu Lys Gln Thr Ile Ser Arg
   435 440 445
   Pro Lys Gly Val Ala Leu His Arg Pro Asp Val Tyr Leu Leu Pro Pro
   450 455 460
   Ala Arg Glu Gln Leu Asn Leu Arg Glu Ser Ala Thr Ile Thr Cys Leu
   465 470 475 480
   Val Thr Gly Phe Ser Pro Ala Asp Val Phe Val Gln Trp Met Gln Arg
   485 490 495
   Gly Gln Pro Leu Ser Pro Glu Lys Tyr Val Thr Ser Ala Pro Met Pro
   500 505 510
   Glu Pro Gln Ala Pro Gly Arg Tyr Phe Ala His Ser Ile Leu Thr Val
   515 520 525
   Ser Glu Glu Glu Trp Asn Thr Gly Glu Thr Tyr Thr Cys Val Val Ala
   530 535 540
   His Glu Ala Leu Pro Asn Arg Val Thr Glu Arg Thr Val Asp Lys Ser
   545 550 555 560
   Thr Gly Lys Pro Thr Leu Tyr Asn Val Ser Leu Val Met Ser Asp Thr
   565 570 575
   Ala Gly Thr Cys Tyr
   580
<210> 219
   <211> 8792
   <212> DNA
   <213> Artificial sequence
<220>
   <223> Vector pIg-C910-Clambda
<400> 219
   tcgacggatc gggagatctc ccgatcccct atggtgcact ctcagtacaa tctgctctga      60
   tgccgcatag ttaagccagt atctgctccc tgcttgtgtg ttggaggtcg ctgagtagtg     120
   cgcgagcaaa atttaagcta caacaaggca aggcttgacc gacaattgtt aattaacatg     180
   aagaatctgc ttagggttag gcgttttgcg ctgcttcgct aggtggtcaa tattggccat     240
   tagccatatt attcattggt tatatagcat aaatcaatat tggctattgg ccattgcata     300
   cgttgtatcc atatcataat atgtacattt atattggctc atgtccaaca ttaccgccat     360
   gttgacattg attattgact agttattaat agtaatcaat tacggggtca ttagttcata     420
   gcccatatat ggagttccgc gttacataac ttacggtaaa tggcccgcct ggctgaccgc     480
   ccaacgaccc ccgcccattg acgtcaataa tgacgtatgt tcccatagta acgccaatag     540
   ggactttcca ttgacgtcaa tgggtggagt atttacggta aactgcccac ttggcagtac     600
   atcaagtgta tcatatgcca agtacgcccc ctattgacgt caatgacggt aaatggcccg     660
   cctggcatta tgcccagtac atgaccttat gggactttcc tacttggcag tacatctacg     720
   tattagtcat cgctattacc atggtgatgc ggttttggca gtacatcaat gggcgtggat     780
   agcggtttga ctcacgggga tttccaagtc tccaccccat tgacgtcaat gggagtttgt 840
   tttggcacca aaatcaacgg gactttccaa aatgtcgtaa caactccgcc ccattgacgc 900
   aaatgggcgg taggcgtgta cggtgggagg tctatataag cagagctcgt ttagtgaacc 960
   gtcagatcgc ctggagacgc catccacgct gttttgacct ccatagaaga caccgggacc 1020
   gatccagcct ccgcggccgg gaacggtgca ttggaatcga tgactctctt aggtagcctt 1080
   gcagaagttg gtcgtgaggc actgggcagg taagtatcaa ggttacaaga caggtttaag 1140
   gagatcaata gaaactgggc ttgtcgagac agagaagact cttgcgtttc tgataggcac 1200
   ctattggtct tactgacatc cactttgcct ttctctccac aggtgtccac tcccagttca 1260
   attacagctc gccaccatgc ggttctccgc tcagctgctg ggccttctgg tgctgtggat 1320
   tcccggcgtc tcgagatcta tcgatgcatg ccatggtacc aagcttgcca ccatgagcag 1380
   cagctcttgg ctgctgctga gcctggtggc cgtgacagcc gcccagagca ccatcgagga 1440
   gcaggccaag accttcctgg acaagttcaa ccacgaggcc gaggacctgt tctaccagag 1500
   cagcctggcc agctggaact acaacaccaa catcaccgag gagaacgtgc agaacatgaa 1560
   caacgccggc gacaagtgga gcgccttcct gaaggagcag agcacactgg cccagatgta 1620
   ccccctgcag gagatccaga acctgaccgt gaagctgcag ctgcaggccc tgcagcagaa 1680
   cggcagcagc gtgctgagcg aggacaagag caagcggctg aacaccatcc tgaacaccat 1740
   gtccaccatc tacagcaccg gcaaagtgtg caaccccgac aacccccagg agtgcctgct 1800
   gctggagccc ggcctgaacg agatcatggc caacagcctg gactacaacg agcggctgtg 1860
   ggcctgggag agctggcgga gcgaagtggg caagcagctg cggcccctgt acgaggagta 1920
   cgtggtgctg aagaacgaga tggccagggc caaccactac gaggactacg gcgactactg 1980
   gagaggcgac tacgaagtga acggcgtgga cggctacgac tacagcagag gccagctgat 2040
   cgaggacgtg gagcacacct tcgaggagat caagcctctg tacgagcacc tgcacgccta 2100
   cgtgcgggcc aagctgatga acgcctaccc cagctacatc agccccatcg gctgcctgcc 2160
   cgcccacctg ctgggcgaca tgtggggccg gttctggacc aacctgtaca gcctgaccgt 2220
   gcccttcggc cagaagccca acatcgacgt gaccgacgcc atggtggacc aggcctggga 2280
   cgcccagcgg atcttcaagg aggccgagaa gttcttcgtg agcgtgggcc tgcccaacat 2340
   gacccagggc ttttgggaga acagcatgct gaccgacccc ggcaatgtgc agaaggccgt 2400
   gtgccacccc accgcctggg acctgggcaa gggcgacttc cggatcctga tgtgcaccaa 2460
   agtgaccatg gacgacttcc tgaccgccca ccacgagatg ggccacatcc agtacgacat 2520
   ggcctacgcc gcccagccct tcctgctgcg gaacggcgcc aacgagggct ttcacgaggc 2580
   cgtgggcgag atcatgagcc tgagcgccgc cacccccaag cacctgaaga gcatcggcct 2640
   gctgagcccc gacttccagg aggacaacga gaccgagatc aacttcctgc tgaagcaggc 2700
   cctgaccatc gtgggcaccc tgcccttcac ctacatgctg gagaagtggc ggtggatggt 2760
   gtttaagggc gagatcccca aggaccagtg gatgaagaag tggtgggaga tgaagcggga 2820
   gatcgtgggc gtggtggagc ccgtgcccca cgacgagacc tactgcgacc ccgccagcct 2880
   gttccacgtg agcaacgact actccttcat ccggtactac acccggaccc tgtaccagtt 2940
   ccagttccag gaggccctgt gccaggccgc caagcacgag ggccccctgc acaagtgcga 3000
   catcagcaac agcaccgagg ccggacagaa actgttcaac atgctgcggc tgggcaagag 3060
   cgagccctgg accctggccc tggagaatgt ggtgggcgcc aagaacatga atgtgcgccc 3120
   cctgctgaac tacttcgagc ccctgttcac ctggctgaag gaccagaaca agaacagctt 3180
   cgtgggctgg agcaccgact ggagccccta cgccgaccag agcatcaaag tgcggatcag 3240
   cctgaagagc gccctgggcg acaaggccta cgagtggaac gacaacgaga tgtacctgtt 3300
   ccggagcagc gtggcctatg ccatgcggca gtacttcctg aaagtgaaga accagatgat 3360
   cctgttcggc gaggaggacg tgagagtggc caacctgaag ccccggatca gcttcaactt 3420
   cttcgtgacc gcccccaaga acgtgagcga catcatcccc cggaccgaag tggagaaggc 3480
   catccggatg agccggagcc ggatcaacga cgccttccgg ctgaacgaca actccctgga 3540
   gttcctgggc atccagccca ccctgggccc tcccaaccag ccccccgtga gcatctggct 3600
   gatcgtgttt ggcgtggtga tgggcgtgat cgtggtggga atcgtgatcc tgatcttcac 3660
   cggcatccgg gaccggaaga agaagaacaa ggcccggagc ggcgagaacc cctacgccag 3720
   catcgatatc agcaagggcg agaacaaccc cggcttccag aacaccgacg acgtgcagac 3780
   cagcttctga taatctagaa cgagctcgaa ttcgaagctt ctgcagacgc gtcgacgtca 3840
   tatggatccg atatcgccgt ggcggccgca ggccagccca aggccgctcc cagcgtgacc 3900
   ctgttccccc cctcctccga ggagctgcag gccaacaagg ccaccctggt gtgcctcatc 3960
   agcgacttct accctggcgc cgtgaccgtg gcctggaagg ccgacagcag ccccgtgaag 4020
   gccggcgtgg agaccaccac ccccagcaag cagagcaaca acaagtacgc cgccagcagc 4080
   tacctgagcc tcacccccga gcagtggaag agccaccgga gctacagctg ccaggtgacc 4140
   cacgagggca gcaccgtgga gaagaccgtg gcccccaccg agtgcagcta atagacttaa 4200
   gtttaaaccg ctgatcagcc tcgactgtgc cttctagttg ccagccatct gttgtttgcc 4260
   cctcccccgt gccttccttg accctggaag gtgccactcc cactgtcctt tcctaataaa 4320
   atgaggaaat tgcatcgcat tgtctgagta ggtgtcattc tattctgggg ggtggggtgg 4380
   ggcaggacag caagggggag gattgggaag acaatagcag gcatgctggg gatgcggtgg 4440
   gctctatggc ttctgaggcg gaaagaacca gctggggctc tagggggtat ccccacgcgc 4500
   cctgtagcgg cgcattaagc gcggcgggtg tggtggttac gcgcagcgtg accgctacac 4560
   ttgccagcgc cctagcgccc gctcctttcg ctttcttccc ttcctttctc gccacgttcg 4620
   ccggctttcc ccgtcaagct ctaaatcggg ggctcccttt agggttccga tttagtgctt 4680
   tacggcacct cgaccccaaa aaacttgatt agggtgatgg ttcacgtagt gggccatcgc 4740
   cctgatagac ggtttttcgc cctttgacgt tggagtccac gttctttaat agtggactct 4800
   tgttccaaac tggaacaaca ctcaacccta tctcggtcta ttcttttgat ttataaggga 4860
   ttttggccat ttcggcctat tggttaaaaa atgagctgat ttaacaaaaa tttaacgcga 4920
   attaattctg tggaatgtgt gtcagttagg gtgtggaaag tccccaggct ccccagcagg 4980
   cagaagtatg caaagcatgc atctcaatta gtcagcaacc aggtgtggaa agtccccagg 5040
   ctccccagca ggcagaagta tgcaaagcat gcatctcaat tagtcagcaa ccatagtccc 5100
   gcccctaact ccgcccatcc cgcccctaac tccgcccagt tccgcccatt ctccgcccca 5160
   tggctgacta atttttttta tttatgcaga ggccgaggcc gcctctgcct ctgagctatt 5220
   ccagaagtag tgaggaggct tttttggagg cctaggcttt tgcaaaaagc tcccgggagc 5280
   ttgtatatcc attttcggat ctgatcagca cgtgatgaaa aagcctgaac tcaccgcgac 5340
   gtctgtcgag aagtttctga tcgaaaagtt cgacagcgtc tccgacctga tgcagctctc 5400
   ggagggcgaa gaatctcgtg ctttcagctt cgatgtagga gggcgtggat atgtcctgcg 5460
   ggtaaatagc tgcgccgatg gtttctacaa agatcgttat gtttatcggc actttgcatc 5520
   ggccgcgctc ccgattccgg aagtgcttga cattggggaa ttcagcgaga gcctgaccta 5580
   ttgcatctcc cgccgtgcac agggtgtcac gttgcaagac ctgcctgaaa ccgaactgcc 5640
   cgctgttctg cagccggtcg cggaggccat ggatgcgatc gctgcggccg atcttagcca 5700
   gacgagcggg ttcggcccat tcggaccgca aggaatcggt caatacacta catggcgtga 5760
   tttcatatgc gcgattgctg atccccatgt gtatcactgg caaactgtga tggacgacac 5820
   cgtcagtgcg tccgtcgcgc aggctctcga tgagctgatg ctttgggccg aggactgccc 5880
   cgaagtccgg cacctcgtgc acgcggattt cggctccaac aatgtcctga cggacaatgg 5940
   ccgcataaca gcggtcattg actggagcga ggcgatgttc ggggattccc aatacgaggt 6000
   cgccaacatc ttcttctgga ggccgtggtt ggcttgtatg gagcagcaga cgcgctactt 6060
   cgagcggagg catccggagc ttgcaggatc gccgcggctc cgggcgtata tgctccgcat 6120
   tggtcttgac caactctatc agagcttggt tgacggcaat ttcgatgatg cagcttgggc 6180
   gcagggtcga tgcgacgcaa tcgtccgatc cggagccggg actgtcgggc gtacacaaat 6240
   cgcccgcaga agcgcggccg tctggaccga tggctgtgta gaagtactcg ccgatagtgg 6300
   aaaccgacgc cccagcactc gtccgagggc aaaggaatag cacgtgctac gagatttcga 6360
   ttccaccgcc gccttctatg aaaggttggg cttcggaatc gttttccggg acgccggctg 6420
   gatgatcctc cagcgcgggg atctcatgct ggagttcttc gcccacccca acttgtttat 6480
   tgcagcttat aatggttaca aataaagcaa tagcatcaca aatttcacaa ataaagcatt 6540
   tttttcactg cattctagtt gtggtttgtc caaactcatc aatgtatctt atcatgtctg 6600
   tataccgtcg acctctagct agagcttggc gtaatcatgg tcatagctgt ttcctgtgtg 6660
   aaattgttat ccgctcacaa ttccacacaa catacgagcc ggaagcataa agtgtaaagc 6720
   ctggggtgcc taatgagtga gctaactcac attaattgcg ttgcgctcac tgcccgcttt 6780
   ccagtcggga aacctgtcgt gccagctgca ttaatgaatc ggccaacgcg cggggagagg 6840
   cggtttgcgt attgggcgct cttccgcttc ctcgctcact gactcgctgc gctcggtcgt 6900
   tcggctgcgg cgagcggtat cagctcactc aaaggcggta atacggttat ccacagaatc 6960
   aggggataac gcaggaaaga acatgtgagc aaaaggccag caaaaggcca ggaaccgtaa 7020
   aaaggccgcg ttgctggcgt ttttccatag gctccgcccc cctgacgagc atcacaaaaa 7080
   tcgacgctca agtcagaggt ggcgaaaccc gacaggacta taaagatacc aggcgtttcc 7140
   ccctggaagc tccctcgtgc gctctcctgt tccgaccctg ccgcttaccg gatacctgtc 7200
   cgcctttctc ccttcgggaa gcgtggcgct ttctcatagc tcacgctgta ggtatctcag 7260
   ttcggtgtag gtcgttcgct ccaagctggg ctgtgtgcac gaaccccccg ttcagcccga 7320
   ccgctgcgcc ttatccggta actatcgtct tgagtccaac ccggtaagac acgacttatc 7380
   gccactggca gcagccactg gtaacaggat tagcagagcg aggtatgtag gcggtgctac 7440
   agagttcttg aagtggtggc ctaactacgg ctacactaga agaacagtat ttggtatctg 7500
   cgctctgctg aagccagtta ccttcggaaa aagagttggt agctcttgat ccggcaaaca 7560
   aaccaccgct ggtagcggtt tttttgtttg caagcagcag attacgcgca gaaaaaaagg 7620
   atctcaagaa gatcctttga tcttttctac ggggtctgac gctcagtgga acgaaaactc 7680
   acgttaaggg attttggtca tgagattatc aaaaaggatc ttcacctaga tccttttaaa 7740
   ttaaaaatga agttttaaat caatctaaag tatatatgag taaacttggt ctgacagtta 7800
   ccaatgctta atcagtgagg cacctatctc agcgatctgt ctatttcgtt catccatagt 7860
   tgcctgactc cccgtcgtgt agataactac gatacgggag ggcttaccat ctggccccag 7920
   tgctgcaatg ataccgcgag acccacgctc accggctcca gatttatcag caataaacca 7980
   gccagccgga agggccgagc gcagaagtgg tcctgcaact ttatccgcct ccatccagtc 8040
   tattaattgt tgccgggaag ctagagtaag tagttcgcca gttaatagtt tgcgcaacgt 8100
   tgttgccatt gctacaggca tcgtggtgtc acgctcgtcg tttggtatgg cttcattcag 8160
   ctccggttcc caacgatcaa ggcgagttac atgatccccc atgttgtgca aaaaagcggt 8220
   tagctccttc ggtcctccga tcgttgtcag aagtaagttg gccgcagtgt tatcactcat 8280
   ggttatggca gcactgcata attctcttac tgtcatgcca tccgtaagat gcttttctgt 8340
   gactggtgag tactcaacca agtcattctg agaatagtgt atgcggcgac cgagttgctc 8400
   ttgcccggcg tcaatacggg ataataccgc gccacatagc agaactttaa aagtgctcat 8460
   cattggaaaa cgttcttcgg ggcgaaaact ctcaaggatc ttaccgctgt tgagatccag 8520
   ttcgatgtaa cccactcgtg cacccaactg atcttcagca tcttttactt tcaccagcgt 8580
   ttctgggtga gcaaaaacag gaaggcaaaa tgccgcaaaa aagggaataa gggcgacacg 8640
   gaaatgttga atactcatac tcttcctttt tcaatattat tgaagcattt atcagggtta 8700
   ttgtctcatg agcggataca tatttgaatg tatttagaaa aataaacaaa taggggttcc 8760
   gcgcacattt ccccgaaaag tgccacctga cg 8792

<210> 220
   <211> 663
   <212> DNA
   <213> Artificial sequence
<220>
   <223> Light chain of CR5074
   <220>
   <221> CDS
   <222> (1)..(663)
   <223>
<400> 220
   cag tct gtg ttg acg cag ccg ccc tca gtg tct ggg gcc cca ggg cag       48
   Gln Ser Val Leu Thr Gln Pro Pro Ser Val Ser Gly Ala Pro Gly Gln
   1               5                   10                  15
   agg gtc acc atc tcc tgc act ggg agc agc tcc aac atc ggg aca ggt       96
   Arg Val Thr Ile Ser Cys Thr Gly Ser Ser Ser Asn Ile Gly Thr Gly
               20                  25                  30
   tat gat gta cac tgg tac cag cag ctt cca gga aca gcc ccc aaa ctc      144
   Tyr Asp Val His Trp Tyr Gln Gln Leu Pro Gly Thr Ala Pro Lys Leu
           35                  40                  45
   ctc atc tat gct gac acc aat cgg ccc tca ggg gtc cct gac cga ttc      192
   Leu Ile Tyr Ala Asp Thr Asn Arg Pro Ser Gly Val Pro Asp Arg Phe
       50                  55                  60
   tct ggc tcc aag tct ggc acc tca gcc tcc ctg gcc atc act ggg gtc      240
   Ser Gly Ser Lys Ser Gly Thr Ser Ala Ser Leu Ala Ile Thr Gly Val
   65                  70                  75                  80
   cag gct gag gat gag gct gat tat tac tgc cag tcc tat gac acc agc      288
   Gln Ala Glu Asp Glu Ala Asp Tyr Tyr Cys Gln Ser Tyr Asp Thr Ser
   85 90 95
   ctg act ggt tgg gtg ttc ggc gga ggg acc aag gtc acc gtc cta ggt 336
   Leu Thr Gly Trp Val Phe Gly Gly Gly Thr Lys Val Thr Val Leu Gly
   100 105 110
   gcg gcc gca ggc cag ccc aag gcc gct ccc agc gtg acc ctg ttc ccc 384
   Ala Ala Ala Gly Gln Pro Lys Ala Ala Pro Ser Val Thr Leu Phe Pro
   115 120 125
   ccc tcc tcc gag gag ctg cag gcc aac aag gcc acc ctg gtg tgc ctc 432
   Pro Ser Ser Glu Glu Leu Gln Ala Asn Lys Ala Thr Leu Val Cys Leu
   130 135 140
   atc agc gac ttc tac cct ggc gcc gtg acc gtg gcc tgg aag gcc gac 480
   Ile Ser Asp Phe Tyr Pro Gly Ala Val Thr Val Ala Trp Lys Ala Asp
   145 150 155 160
   agc agc ccc gtg aag gcc ggc gtg gag acc acc acc ccc agc aag cag 528
   Ser Ser Pro Val Lys Ala Gly Val Glu Thr Thr Thr Pro Ser Lys Gln
   165 170 175
   agc aac aac aag tac gcc gcc agc agc tac ctg agc ctc acc ccc gag 576
   Ser Asn Asn Lys Tyr Ala Ala Ser Ser Tyr Leu Ser Leu Thr Pro Glu
   180 185 190
   cag tgg aag agc cac cgg agc tac agc tgc cag gtg acc cac gag ggc 624
   Gln Trp Lys Ser His Arg Ser Tyr Ser Cys Gln Val Thr His Glu Gly
   195 200 205
   agc acc gtg gag aag acc gtg gcc ccc acc gag tgc agc 663
   Ser Thr Val Glu Lys Thr Val Ala Pro Thr Glu Cys Ser
   210 215 220
<210> 221
   <211> 221
   <212> PRT
   <213> Artificial sequence
<220>
   <223> Light chain of CR5074
<400> 221
   Gln Ser Val Leu Thr Gln Pro Pro Ser Val Ser Gly Ala Pro Gly Gln
   1 5 10 15
   Arg Val Thr Ile Ser Cys Thr Gly Ser Ser Ser Asn Ile Gly Thr Gly
   20 25 30
   Tyr Asp Val His Trp Tyr Gln Gln Leu Pro Gly Thr Ala Pro Lys Leu
   35 40 45
   Leu Ile Tyr Ala Asp Thr Asn Arg Pro Ser Gly Val Pro Asp Arg Phe
       50                  55                  60
   Ser Gly Ser Lys Ser Gly Thr Ser Ala Ser Leu Ala Ile Thr Gly Val
   65                  70                  75                  80
   Gln Ala Glu Asp Glu Ala Asp Tyr Tyr Cys Gln Ser Tyr Asp Thr Ser
                   85                  90                  95
   Leu Thr Gly Trp Val Phe Gly Gly Gly Thr Lys Val Thr Val Leu Gly
               100                 105                 110
   Ala Ala Ala Gly Gln Pro Lys Ala Ala Pro Ser Val Thr Leu Phe Pro
           115                 120                 125
   Pro Ser Ser Glu Glu Leu Gln Ala Asn Lys Ala Thr Leu Val Cys Leu
       130                 135                 140
   Ile Ser Asp Phe Tyr Pro Gly Ala Val Thr Val Ala Trp Lys Ala Asp
   145                 150                 155                 160
   Ser Ser Pro Val Lys Ala Gly Val Glu Thr Thr Thr Pro Ser Lys Gln
                   165                 170                 175
   Ser Asn Asn Lys Tyr Ala Ala Ser Ser Tyr Leu Ser Leu Thr Pro Glu
               180                 185                 190
   Gln Trp Lys Ser His Arg Ser Tyr Ser Cys Gln Val Thr His Glu Gly
           195                 200                 205
   Ser Thr Val Glu Lys Thr Val Ala Pro Thr Glu Cys Ser
       210                 215                 220
<210> 222
   <211> 663
   <212> DNA
   <213> Artificial sequence
<220>
   <223> Light chain of CR5080
   <220>
   <221> CDS
   <222> (1)..(663)
   <223>
<400> 222
   cag tct gtg ctg act cag cca ccc tca gtg tct ggg gcc cca ggg cag        48
   Gln Ser Val Leu Thr Gln Pro Pro Ser Val Ser Gly Ala Pro Gly Gln
   1               5                   10                  15
   agg gtc acc atc tcc tgc act ggg agc agc tcc aac atc ggg gca ggt        96
   Arg Val Thr Ile Ser Cys Thr Gly Ser Ser Ser Asn Ile Gly Ala Gly
               20                  25                  30
   tat gat gta cac tgg tac cag cag ctt cca gga aca gcc ccc aaa ctc       144
   Tyr Asp Val His Trp Tyr Gln Gln Leu Pro Gly Thr Ala Pro Lys Leu
           35                  40                  45
   ctc atc tat ggt aac agc aat cgg ccc tca ggg gtc cct gac cga ttc       192
   Leu Ile Tyr Gly Asn Ser Asn Arg Pro Ser Gly Val Pro Asp Arg Phe
       50                  55                  60
   tct ggc tcc aag tct ggc acc tca gcc tcc ctg gcc atc act ggg ctc       240
   Ser Gly Ser Lys Ser Gly Thr Ser Ala Ser Leu Ala Ile Thr Gly Leu
   65                  70                  75                  80
   cag gct gag gat gag gct gat tat tac tgc cag tcc tat gac agc agc       288
   Gln Ala Glu Asp Glu Ala Asp Tyr Tyr Cys Gln Ser Tyr Asp Ser Ser
                   85                  90                  95
   ctg agt ggt tgg gcg ttc ggc gga ggg acc aag ctg acc gtc cta ggt       336
   Leu Ser Gly Trp Ala Phe Gly Gly Gly Thr Lys Leu Thr Val Leu Gly
               100                 105                 110
   gcg gcc gca ggc cag ccc aag gcc gct ccc agc gtg acc ctg ttc ccc       384
   Ala Ala Ala Gly Gln Pro Lys Ala Ala Pro Ser Val Thr Leu Phe Pro
           115                 120                 125
   ccc tcc tcc gag gag ctg cag gcc aac aag gcc acc ctg gtg tgc ctc       432
   Pro Ser Ser Glu Glu Leu Gln Ala Asn Lys Ala Thr Leu Val Cys Leu
       130                 135                 140
   atc agc gac ttc tac cct ggc gcc gtg acc gtg gcc tgg aag gcc gac       480
   Ile Ser Asp Phe Tyr Pro Gly Ala Val Thr Val Ala Trp Lys Ala Asp
   145                 150                 155                 160
   agc agc ccc gtg aag gcc ggc gtg gag acc acc acc ccc agc aag cag       528
   Ser Ser Pro Val Lys Ala Gly Val Glu Thr Thr Thr Pro Ser Lys Gln
                   165                 170                 175
   agc aac aac aag tac gcc gcc agc agc tac ctg agc ctc acc ccc gag       576
   Ser Asn Asn Lys Tyr Ala Ala Ser Ser Tyr Leu Ser Leu Thr Pro Glu
               180                 185                 190
   cag tgg aag agc cac cgg agc tac agc tgc cag gtg acc cac gag ggc       624
   Gln Trp Lys Ser His Arg Ser Tyr Ser Cys Gln Val Thr His Glu Gly
           195                 200                 205
   agc acc gtg gag aag acc gtg gcc ccc acc gag tgc agc                   663
   Ser Thr Val Glu Lys Thr Val Ala Pro Thr Glu Cys Ser
       210                 215                 220
<210> 223
   <211> 221
   <212> PRT
   <213> Artificial sequence
<220>
   <223> Light chain of CR5080
<400> 223
   Gln Ser Val Leu Thr Gln Pro Pro Ser Val Ser Gly Ala Pro Gly Gln
   1               5                   10                  15
   Arg Val Thr Ile Ser Cys Thr Gly Ser Ser Ser Asn Ile Gly Ala Gly
               20                  25                  30
   Tyr Asp Val His Trp Tyr Gln Gln Leu Pro Gly Thr Ala Pro Lys Leu
           35                  40                  45
   Leu Ile Tyr Gly Asn Ser Asn Arg Pro Ser Gly Val Pro Asp Arg Phe
       50                  55                  60
   Ser Gly Ser Lys Ser Gly Thr Ser Ala Ser Leu Ala Ile Thr Gly Leu
   65                  70                  75                  80
   Gln Ala Glu Asp Glu Ala Asp Tyr Tyr Cys Gln Ser Tyr Asp Ser Ser
                   85                  90                  95
   Leu Ser Gly Trp Ala Phe Gly Gly Gly Thr Lys Leu Thr Val Leu Gly
               100                 105                 110
   Ala Ala Ala Gly Gln Pro Lys Ala Ala Pro Ser Val Thr Leu Phe Pro
           115                 120                 125
   Pro Ser Ser Glu Glu Leu Gln Ala Asn Lys Ala Thr Leu Val Cys Leu
       130                 135                 140
   Ile Ser Asp Phe Tyr Pro Gly Ala Val Thr Val Ala Trp Lys Ala Asp
   145                 150                 155                 160
   Ser Ser Pro Val Lys Ala Gly Val Glu Thr Thr Thr Pro Ser Lys Gln
                   165                 170                 175
   Ser Asn Asn Lys Tyr Ala Ala Ser Ser Tyr Leu Ser Leu Thr Pro Glu
               180                 185                 190
   Gln Trp Lys Ser His Arg Ser Tyr Ser Cys Gln Val Thr His Glu Gly
           195                 200                 205
   Ser Thr Val Glu Lys Thr Val Ala Pro Thr Glu Cys Ser
       210                 215                 220
<210> 224
   <211> 663
   <212> DNA
   <213> Artificial sequence
<220>
   <223> Light chain of CR5085
   <220>
   <221> CDS
   <222> (1)..(663)
   <223>
<400> 224
   cag tct gtc gtg acg cag ccg ccc tca gtg tct ggg gcc cca ggg cag        48
   Gln Ser Val Val Thr Gln Pro Pro Ser Val Ser Gly Ala Pro Gly Gln
   1               5                   10                  15
   agg gtc acc atc tcc tgc act ggg agc agc tcc aac atc ggg gca ggt        96
   Arg Val Thr Ile Ser Cys Thr Gly Ser Ser Ser Asn Ile Gly Ala Gly
               20                  25                  30
   tat gat gta cac tgg tac cag cag ctt cca gga aca gcc ccc aaa ctc       144
   Tyr Asp Val His Trp Tyr Gln Gln Leu Pro Gly Thr Ala Pro Lys Leu
           35                  40                  45
   ctc atc tat ggt aac agc aat cgg ccc tca ggg gtc cct gac cga ttc       192
   Leu Ile Tyr Gly Asn Ser Asn Arg Pro Ser Gly Val Pro Asp Arg Phe
       50                  55                  60
   tct ggc tcc aag tct ggc acc tca gcc tcc ctg gcc atc act ggg ctc       240
   Ser Gly Ser Lys Ser Gly Thr Ser Ala Ser Leu Ala Ile Thr Gly Leu
   65                  70                  75                  80
   cag gct gag gat gag act gat tat tac tgc cag tcc tat gac agc agc       288
   Gln Ala Glu Asp Glu Thr Asp Tyr Tyr Cys Gln Ser Tyr Asp Ser Ser
                   85                  90                  95
   ctg aat ggt tgg gtg ttc ggc gga ggg acc aag ctg acc gtc cta ggt       336
   Leu Asn Gly Trp Val Phe Gly Gly Gly Thr Lys Leu Thr Val Leu Gly
               100                 105                 110
   gcg gcc gca ggc cag ccc aag gcc gct ccc agc gtg acc ctg ttc ccc      384
   Ala Ala Ala Gly Gln Pro Lys Ala Ala Pro Ser Val Thr Leu Phe Pro
           115                 120                 125
   ccc tcc tcc gag gag ctg cag gcc aac aag gcc acc ctg gtg tgc ctc      432
   Pro Ser Ser Glu Glu Leu Gln Ala Asn Lys Ala Thr Leu Val Cys Leu
       130                 135                 140
   atc agc gac ttc tac cct ggc gcc gtg acc gtg gcc tgg aag gcc gac      480
   Ile Ser Asp Phe Tyr Pro Gly Ala Val Thr Val Ala Trp Lys Ala Asp
   145                 150                 155                 160
   agc agc ccc gtg aag gcc ggc gtg gag acc acc acc ccc agc aag cag      528
   Ser Ser Pro Val Lys Ala Gly Val Glu Thr Thr Thr Pro Ser Lys Gln
                   165                 170                 175
   agc aac aac aag tac gcc gcc agc agc tac ctg agc ctc acc ccc gag      576
   Ser Asn Asn Lys Tyr Ala Ala Ser Ser Tyr Leu Ser Leu Thr Pro Glu
               180                 185                 190
   cag tgg aag agc cac cgg agc tac agc tgc cag gtg acc cac gag ggc      624
   Gln Trp Lys Ser His Arg Ser Tyr Ser Cys Gln Val Thr His Glu Gly
           195                 200                 205
   agc acc gtg gag aag acc gtg gcc ccc acc gag tgc agc                  663
   Ser Thr Val Glu Lys Thr Val Ala Pro Thr Glu Cys Ser
       210                 215                 220
<210> 225
   <211> 221
   <212> PRT
   <213> Artificial sequence
<220>
   <223> Light chain of CR5085
<400> 225
   Gln Ser Val Val Thr Gln Pro Pro Ser Val Ser Gly Ala Pro Gly Gln
   1               5                   10                  15
   Arg Val Thr Ile Ser Cys Thr Gly Ser Ser Ser Asn Ile Gly Ala Gly
               20                  25                  30
   Tyr Asp Val His Trp Tyr Gln Gln Leu Pro Gly Thr Ala Pro Lys Leu
           35                  40                  45
   Leu Ile Tyr Gly Asn Ser Asn Arg Pro Ser Gly Val Pro Asp Arg Phe
       50                  55                  60
   Ser Gly Ser Lys Ser Gly Thr Ser Ala Ser Leu Ala Ile Thr Gly Leu
   65                  70                  75                  80
   Gln Ala Glu Asp Glu Thr Asp Tyr Tyr Cys Gln Ser Tyr Asp Ser Ser
                   85                  90                  95
   Leu Asn Gly Trp Val Phe Gly Gly Gly Thr Lys Leu Thr Val Leu Gly
               100                 105                 110
   Ala Ala Ala Gly Gln Pro Lys Ala Ala Pro Ser Val Thr Leu Phe Pro
           115                 120                 125
   Pro Ser Ser Glu Glu Leu Gln Ala Asn Lys Ala Thr Leu Val Cys Leu
       130                 135                 140
   Ile Ser Asp Phe Tyr Pro Gly Ala Val Thr Val Ala Trp Lys Ala Asp
   145                 150                 155                 160
   Ser Ser Pro Val Lys Ala Gly Val Glu Thr Thr Thr Pro Ser Lys Gln
                   165                 170                 175
   Ser Asn Asn Lys Tyr Ala Ala Ser Ser Tyr Leu Ser Leu Thr Pro Glu
               180                 185                 190
   Gln Trp Lys Ser His Arg Ser Tyr Ser Cys Gln Val Thr His Glu Gly
           195                 200                 205
   Ser Thr Val Glu Lys Thr Val Ala Pro Thr Glu Cys Ser
       210                 215                 220
<210> 226
   <211> 663
   <212> DNA
   <213> Artificial sequence
<220>
   <223> Light chain of CR5088
   <220>
   <221> CDS
   <222> (1)..(663)
   <223>
<400> 226
   cag tct gtc gtg acg cag ccg ccc tca gtg tct ggg gcc cca ggg cag        48
   Gln Ser Val Val Thr Gln Pro Pro Ser Val Ser Gly Ala Pro Gly Gln
   1               5                   10                  15
   agg atc acc atc tcc tgc act ggg agc agc tcc aac atc ggg gca ggt        96
   Arg Ile Thr Ile Ser Cys Thr Gly Ser Ser Ser Asn Ile Gly Ala Gly
               20                  25                  30
   tat gat gta cac tgg tac cag cag ctt cca gga aca gcc ccc aaa ttc       144
   Tyr Asp Val His Trp Tyr Gln Gln Leu Pro Gly Thr Ala Pro Lys Phe
           35                  40                  45
   ctc atc tat ggt aac agc aat cgg ccc tca ggg gtc cct gac cga ttc       192
   Leu Ile Tyr Gly Asn Ser Asn Arg Pro Ser Gly Val Pro Asp Arg Phe
       50                  55                  60
   tct ggc tcc aag tct ggc acc tca gcc tcc ctg gcc atc act ggg ctc       240
   Ser Gly Ser Lys Ser Gly Thr Ser Ala Ser Leu Ala Ile Thr Gly Leu
   65                  70                  75                  80
   cag gct gag gat gag gct gat tat tac tgc cag tcc tat gac agc agc       288
   Gln Ala Glu Asp Glu Ala Asp Tyr Tyr Cys Gln Ser Tyr Asp Ser Ser
                   85                  90                  95
   ctg agt ggt tgg gtg ttc ggc gga ggg acc aag ctg acc gtc cta ggt       336
   Leu Ser Gly Trp Val Phe Gly Gly Gly Thr Lys Leu Thr Val Leu Gly
               100                 105                 110
   gcg gcc gca ggc cag ccc aag gcc gct ccc agc gtg acc ctg ttc ccc       384
   Ala Ala Ala Gly Gln Pro Lys Ala Ala Pro Ser Val Thr Leu Phe Pro
           115                 120                 125
   ccc tcc tcc gag gag ctg cag gcc aac aag gcc acc ctg gtg tgc ctc       432
   Pro Ser Ser Glu Glu Leu Gln Ala Asn Lys Ala Thr Leu Val Cys Leu
       130                 135                 140
   atc agc gac ttc tac cct ggc gcc gtg acc gtg gcc tgg aag gcc gac       480
   Ile Ser Asp Phe Tyr Pro Gly Ala Val Thr Val Ala Trp Lys Ala Asp
   145                 150                 155                 160
   agc agc ccc gtg aag gcc ggc gtg gag acc acc acc ccc agc aag cag       528
   Ser Ser Pro Val Lys Ala Gly Val Glu Thr Thr Thr Pro Ser Lys Gln
                   165                 170                 175
   agc aac aac aag tac gcc gcc agc agc tac ctg agc ctc acc ccc gag       576
   Ser Asn Asn Lys Tyr Ala Ala Ser Ser Tyr Leu Ser Leu Thr Pro Glu
               180                 185                 190
   cag tgg aag agc cac cgg agc tac agc tgc cag gtg acc cac gag ggc       624
   Gln Trp Lys Ser His Arg Ser Tyr Ser Cys Gln Val Thr His Glu Gly
           195                 200                 205
   agc acc gtg gag aag acc gtg gcc ccc acc gag tgc agc                   663
   Ser Thr Val Glu Lys Thr Val Ala Pro Thr Glu Cys Ser
       210                 215                 220
<210> 227
   <211> 221
   <212> PRT
   <213> Artificial sequence
<220>
   <223> Light chain of CR5088
<400> 227
   Gln Ser Val Val Thr Gln Pro Pro Ser Val Ser Gly Ala Pro Gly Gln
   1               5                   10                  15
   Arg Ile Thr Ile Ser Cys Thr Gly Ser Ser Ser Asn Ile Gly Ala Gly
               20                  25                  30
   Tyr Asp Val His Trp Tyr Gln Gln Leu Pro Gly Thr Ala Pro Lys Phe
           35                  40                  45
   Leu Ile Tyr Gly Asn Ser Asn Arg Pro Ser Gly Val Pro Asp Arg Phe
       50                  55                  60
   Ser Gly Ser Lys Ser Gly Thr Ser Ala Ser Leu Ala Ile Thr Gly Leu
   65                  70                  75                  80
   Gln Ala Glu Asp Glu Ala Asp Tyr Tyr Cys Gln Ser Tyr Asp Ser Ser
                   85                  90                  95
   Leu Ser Gly Trp Val Phe Gly Gly Gly Thr Lys Leu Thr Val Leu Gly
               100                 105                 110
   Ala Ala Ala Gly Gln Pro Lys Ala Ala Pro Ser Val Thr Leu Phe Pro
           115                 120                 125
   Pro Ser Ser Glu Glu Leu Gln Ala Asn Lys Ala Thr Leu Val Cys Leu
       130                 135                 140
   Ile Ser Asp Phe Tyr Pro Gly Ala Val Thr Val Ala Trp Lys Ala Asp
   145                 150                 155                 160
   Ser Ser Pro Val Lys Ala Gly Val Glu Thr Thr Thr Pro Ser Lys Gln
                   165                 170                 175
   Ser Asn Asn Lys Tyr Ala Ala Ser Ser Tyr Leu Ser Leu Thr Pro Glu
               180                 185                 190
   Gln Trp Lys Ser His Arg Ser Tyr Ser Cys Gln Val Thr His Glu Gly
           195                 200                 205
   Ser Thr Val Glu Lys Thr Val Ala Pro Thr Glu Cys Ser
               210                 215                 220
<210> 228
   <211> 771
   <212> DNA
   <213> Artificial sequence
<220>
   <223> SC05-074
   <220>
   <221> CDS
   <222> (1)..(771)
   <223>
<400> 228
   cag gtc acc ttg aag gag tct ggt cct acg ctg gtg aaa ccc aca cag        48
   Gln Val Thr Leu Lys Glu Ser Gly Pro Thr Leu Val Lys Pro Thr Gln
   1               5                   10                  15
   acc ctc acg ttg acc tgc acc ttc tct ggg ttc tca ctc agc act agt        96
   Thr Leu Thr Leu Thr Cys Thr Phe Ser Gly Phe Ser Leu Ser Thr Ser
               20                  25                  30
   gga gtg ggt gtg ggc tgg atc cgt cag ccc cca gga aag gcc ctg gag       144
   Gly Val Gly Val Gly Trp Ile Arg Gln Pro Pro Gly Lys Ala Leu Glu
           35                  40                  45
   tgg ctt gca gtc att tat tgg aat gat gat aag ctc tac agg cca tct       192
   Trp Leu Ala Val Ile Tyr Trp Asn Asp Asp Lys Leu Tyr Arg Pro Ser
       50                  55                  60
   ctg aag agc agg ctc acc atc acc aag gac acc tcc aaa aac cag gtg       240
   Leu Lys Ser Arg Leu Thr Ile Thr Lys Asp Thr Ser Lys Asn Gln Val
   65                  70                  75                  80
   gtc ctt aca atg acc aag atg gac cct gtg gac aca gcc aca tat tac       288
   Val Leu Thr Met Thr Lys Met Asp Pro Val Asp Thr Ala Thr Tyr Tyr
                   85                  90                  95
   tgt gca cac aga cac cgt tac tat gat att agt ggt tat tac cgt ctc       336
   Cys Ala His Arg His Arg Tyr Tyr Asp Ile Ser Gly Tyr Tyr Arg Leu
               100                 105                 110
   ttc tct gat gct ttt gat atc tgg ggc caa ggg aca atg gtc acc gtc       384
   Phe Ser Asp Ala Phe Asp Ile Trp Gly Gln Gly Thr Met Val Thr Val
           115                 120                 125
   tcg agc ggt acg ggc ggt tca ggc gga acc ggc agc ggc act ggc ggg       432
   Ser Ser Gly Thr Gly Gly Ser Gly Gly Thr Gly Ser Gly Thr Gly Gly
       130                 135                 140
   tcg acg cag tct gtg ttg acg cag ccg ccc tca gtg tct ggg gcc cca        480
   Ser Thr Gln Ser Val Leu Thr Gln Pro Pro Ser Val Ser Gly Ala Pro
   145                 150                 155                 160
   ggg cag agg gtc acc atc tcc tgc act ggg agc agc tcc aac atc ggg        528
   Gly Gln Arg Val Thr Ile Ser Cys Thr Gly Ser Ser Ser Asn Ile Gly
                   165                 170                 175
   aca ggt tat gat gta cac tgg tac cag cag ctt cca gga aca gcc ccc        576
   Thr Gly Tyr Asp Val His Trp Tyr Gln Gln Leu Pro Gly Thr Ala Pro
               180                 185                 190
   aaa ctc ctc atc tat gct gac acc aat cgg ccc tca ggg gtc cct gac        624
   Lys Leu Leu Ile Tyr Ala Asp Thr Asn Arg Pro Ser Gly Val Pro Asp
           195                 200                 205
   cga ttc tct ggc tcc aag tct ggc acc tca gcc tcc ctg gcc atc act        672
   Arg Phe Ser Gly Ser Lys Ser Gly Thr Ser Ala Ser Leu Ala Ile Thr
       210                 215                 220
   ggg gtc cag gct gag gat gag gct gat tat tac tgc cag tcc tat gac        720
   Gly Val Gln Ala Glu Asp Glu Ala Asp Tyr Tyr Cys Gln Ser Tyr Asp
   225                 230                 235                 240
   acc agc ctg act ggt tgg gtg ttc ggc gga ggg acc aag gtc acc gtc        768
   Thr Ser Leu Thr Gly Trp Val Phe Gly Gly Gly Thr Lys Val Thr Val
                   245                 250                 255
   cta                                                                    771
   Leu
<210> 229
   <211> 257
   <212> PRT
   <213> Artificial sequence
<220>
   <223> SC05-074
<400> 229
   Gln Val Thr Leu Lys Glu Ser Gly Pro Thr Leu Val Lys Pro Thr Gln
   1               5                   10                  15
   Thr Leu Thr Leu Thr Cys Thr Phe Ser Gly Phe Ser Leu Ser Thr Ser
               20                  25                  30
   Gly Val Gly Val Gly Trp Ile Arg Gln Pro Pro Gly Lys Ala Leu Glu
           35                  40                  45
   Trp Leu Ala Val Ile Tyr Trp Asn Asp Asp Lys Leu Tyr Arg Pro Ser
   50 55 60
   Leu Lys Ser Arg Leu Thr Ile Thr Lys Asp Thr Ser Lys Asn Gln Val
   65 70 75 80
   Val Leu Thr Met Thr Lys Met Asp Pro Val Asp Thr Ala Thr Tyr Tyr
   85 90 95
   Cys Ala His Arg His Arg Tyr Tyr Asp Ile Ser Gly Tyr Tyr Arg Leu
   100 105 110
   Phe Ser Asp Ala Phe Asp Ile Trp Gly Gln Gly Thr Met Val Thr Val
   115 120 125
   Ser Ser Gly Thr Gly Gly Ser Gly Gly Thr Gly Ser Gly Thr Gly Gly
   130 135 140
   Ser Thr Gln Ser Val Leu Thr Gln Pro Pro Ser Val Ser Gly Ala Pro
   145 150 155 160
   Gly Gln Arg Val Thr Ile Ser Cys Thr Gly Ser Ser Ser Asn Ile Gly
   165 170 175
   Thr Gly Tyr Asp Val His Trp Tyr Gln Gln Leu Pro Gly Thr Ala Pro
   180 185 190
   Lys Leu Leu Ile Tyr Ala Asp Thr Asn Arg Pro Ser Gly Val Pro Asp
   195 200 205
   Arg Phe Ser Gly Ser Lys Ser Gly Thr Ser Ala Ser Leu Ala Ile Thr
   210 215 220
   Gly Val Gln Ala Glu Asp Glu Ala Asp Tyr Tyr Cys Gln Ser Tyr Asp
   225 230 235 240
   Thr Ser Leu Thr Gly Trp Val Phe Gly Gly Gly Thr Lys Val Thr Val
   245 250 255
   Leu
<210> 230
   <211> 771
   <212> DNA
   <213> Artificial sequence
   <220>
   <223> SC05-080
   <220>
   <221> CDS
   <222> (1)..(771)
   <223>
<400> 230
   cag gtc acc ttg aag gag tct ggt cct acg ctg gtg aaa ccc aca cag       48
   Gln Val Thr Leu Lys Glu Ser Gly Pro Thr Leu Val Lys Pro Thr Gln
   1               5                   10                  15
   acc ctc acg ttg acc tgc acc ttc tct ggg ttc tca ctc agc act agt       96
   Thr Leu Thr Leu Thr Cys Thr Phe Ser Gly Phe Ser Leu Ser Thr Ser
               20                  25                  30
   gga gtg ggt gtg ggc tgg atc cgt cag ccc cca gga aag gcc ctg gag      144
   Gly Val Gly Val Gly Trp Ile Arg Gln Pro Pro Gly Lys Ala Leu Glu
           35                  40                  45
   tgg ctt gca gtc att tat tgg aat gat gat aag ctc tac agg cca tct      192
   Trp Leu Ala Val Ile Tyr Trp Asn Asp Asp Lys Leu Tyr Arg Pro Ser
       50                  55                  60
   ctg aag agc agg ctc acc atc acc aag gac acc tcc aaa aac cag gtg      240
   Leu Lys Ser Arg Leu Thr Ile Thr Lys Asp Thr Ser Lys Asn Gln Val
   65                  70                  75                  80
   gtc ctt aca atg acc aag atg gac cct gtg gac aca gcc aca tat tac      288
   Val Leu Thr Met Thr Lys Met Asp Pro Val Asp Thr Ala Thr Tyr Tyr
                   85                  90                  95
   tgt gca cac aga cac cgt tac tat gat att agt ggt tat tac cgt ctc      336
   Cys Ala His Arg His Arg Tyr Tyr Asp Ile Ser Gly Tyr Tyr Arg Leu
               100                 105                 110
   ttc tct gat gct ttt gat atc tgg ggc caa ggg aca atg gtc acc gtc      384
   Phe Ser Asp Ala Phe Asp Ile Trp Gly Gln Gly Thr Met Val Thr Val
           115                 120                 125
   tcg agc ggt acg ggc ggt tca ggc gga acc ggc agc ggc act ggc ggg      432
   Ser Ser Gly Thr Gly Gly Ser Gly Gly Thr Gly Ser Gly Thr Gly Gly
       130                 135                 140
   tcg acg cag tct gtg ctg act cag cca ccc tca gtg tct ggg gcc cca      480
   Ser Thr Gln Ser Val Leu Thr Gln Pro Pro Ser Val Ser Gly Ala Pro
   145                 150                 155                 160
   ggg cag agg gtc acc atc tcc tgc act ggg agc agc tcc aac atc ggg      528
   Gly Gln Arg Val Thr Ile Ser Cys Thr Gly Ser Ser Ser Asn Ile Gly
                   165                 170                 175
   gca ggt tat gat gta cac tgg tac cag cag ctt cca gga aca gcc ccc      576
   Ala Gly Tyr Asp Val His Trp Tyr Gln Gln Leu Pro Gly Thr Ala Pro
                   180                 185                 190
   aaa ctc ctc atc tat ggt aac agc aat cgg ccc tca ggg gtc cct gac        624
   Lys Leu Leu Ile Tyr Gly Asn Ser Asn Arg Pro Ser Gly Val Pro Asp
           195                 200                 205
   cga ttc tct ggc tcc aag tct ggc acc tca gcc tcc ctg gcc atc act        672
   Arg Phe Ser Gly Ser Lys Ser Gly Thr Ser Ala Ser Leu Ala Ile Thr
       210                 215                 220
   ggg ctc cag gct gag gat gag gct gat tat tac tgc cag tcc tat gac        720
   Gly Leu Gln Ala Glu Asp Glu Ala Asp Tyr Tyr Cys Gln Ser Tyr Asp
   225                 230                 235                 240
   agc agc ctg agt ggt tgg gcg ttc ggc gga ggg acc aag ctg acc gtc        768
   Ser Ser Leu Ser Gly Trp Ala Phe Gly Gly Gly Thr Lys Leu Thr Val
                   245                 250                 255
   cta                                                                    771
   Leu
<210> 231
   <211> 257
   <212> PRT
   <213> Artificial sequence
<220>
   <223> SC05-080
<400> 231
   Gln Val Thr Leu Lys Glu Ser Gly Pro Thr Leu Val Lys Pro Thr Gln
   1               5                   10                  15
   Thr Leu Thr Leu Thr Cys Thr Phe Ser Gly Phe Ser Leu Ser Thr Ser
               20                  25                  30
   Gly Val Gly Val Gly Trp Ile Arg Gln Pro Pro Gly Lys Ala Leu Glu
           35                  40                  45
   Trp Leu Ala Val Ile Tyr Trp Asn Asp Asp Lys Leu Tyr Arg Pro Ser
       50                  55                  60
   Leu Lys Ser Arg Leu Thr Ile Thr Lys Asp Thr Ser Lys Asn Gln Val
   65                  70                  75                  80
   Val Leu Thr Met Thr Lys Met Asp Pro Val Asp Thr Ala Thr Tyr Tyr
                   85                  90                  95
   Cys Ala His Arg His Arg Tyr Tyr Asp Ile Ser Gly Tyr Tyr Arg Leu
   100 105 110
   Phe Ser Asp Ala Phe Asp Ile Trp Gly Gln Gly Thr Met Val Thr Val
   115 120 125
   Ser Ser Gly Thr Gly Gly Ser Gly Gly Thr Gly Ser Gly Thr Gly Gly
   130 135 140
   Ser Thr Gln Ser Val Leu Thr Gln Pro Pro Ser Val Ser Gly Ala Pro
   145 150 155 160
   Gly Gln Arg Val Thr Ile Ser Cys Thr Gly Ser Ser Ser Asn Ile Gly
   165 170 175
   Ala Gly Tyr Asp Val His Trp Tyr Gln Gln Leu Pro Gly Thr Ala Pro
   180 185 190
   Lys Leu Leu Ile Tyr Gly Asn Ser Asn Arg Pro Ser Gly Val Pro Asp
   195 200 205
   Arg Phe Ser Gly Ser Lys Ser Gly Thr Ser Ala Ser Leu Ala Ile Thr
   210 215 220
   Gly Leu Gln Ala Glu Asp Glu Ala Asp Tyr Tyr Cys Gln Ser Tyr Asp
   225 230 235 240
   Ser Ser Leu Ser Gly Trp Ala Phe Gly Gly Gly Thr Lys Leu Thr Val
   245 250 255
   Leu
<210> 232
   <211> 771
   <212> DNA
   <213> Artificial sequence
<220>
   <223> SC05-085
   <220>
   <221> CDS
   <222> (1) .. (771)
   <223>
<400> 232
   cag gtc acc ttg aag gag tct ggt cct acg ctg gtg aaa ccc aca cag        48
   Gln Val Thr Leu Lys Glu Ser Gly Pro Thr Leu Val Lys Pro Thr Gln
   1               5                   10                  15
   acc ctc acg ttg acc tgc acc ttc tct ggg ttc tca ctc agc act agt        96
   Thr Leu Thr Leu Thr Cys Thr Phe Ser Gly Phe Ser Leu Ser Thr Ser
               20                  25                  30
   gga gtg ggt gtg ggc tgg atc cgt cag ccc cca gga aag gcc ctg gag       144
   Gly Val Gly Val Gly Trp Ile Arg Gln Pro Pro Gly Lys Ala Leu Glu
           35                  40                  45
   tgg ctt gca gtc att tat tgg aat gat gat aag ctc tac agg cca tct       192
   Trp Leu Ala Val Ile Tyr Trp Asn Asp Asp Lys Leu Tyr Arg Pro Ser
       50                  55                  60
   ctg aag agc agg ctc acc atc acc aag gac acc tcc aaa aac cag gtg       240
   Leu Lys Ser Arg Leu Thr Ile Thr Lys Asp Thr Ser Lys Asn Gln Val
   65                  70                  75                  80
   gtc ctt aca atg acc aag atg gac cct gtg gac aca gcc aca tat tac       288
   Val Leu Thr Met Thr Lys Met Asp Pro Val Asp Thr Ala Thr Tyr Tyr
                   85                  90                  95
   tgt gca cac aga cac cgt tac tat gat att agt ggt tat tac cgt ctc       336
   Cys Ala His Arg His Arg Tyr Tyr Asp Ile Ser Gly Tyr Tyr Arg Leu
               100                 105                 110
   ttc tct gat gct ttt gat atc tgg ggc caa ggg aca atg gtc acc gtc       384
   Phe Ser Asp Ala Phe Asp Ile Trp Gly Gln Gly Thr Met Val Thr Val
           115                 120                 125
   tcg agc ggt acg ggc ggt tca ggc gga acc ggc agc ggc act ggc ggg       432
   Ser Ser Gly Thr Gly Gly Ser Gly Gly Thr Gly Ser Gly Thr Gly Gly
       130                 135                 140
   tcg acg cag tct gtc gtg acg cag ccg ccc tca gtg tct ggg gcc cca       480
   Ser Thr Gln Ser Val Val Thr Gln Pro Pro Ser Val Ser Gly Ala Pro
   145                 150                 155                 160
   ggg cag agg gtc acc atc tcc tgc act ggg agc agc tcc aac atc ggg       528
   Gly Gln Arg Val Thr Ile Ser Cys Thr Gly Ser Ser Ser Asn Ile Gly
                   165                 170                 175
   gca ggt tat gat gta cac tgg tac cag cag ctt cca gga aca gcc ccc       576
   Ala Gly Tyr Asp Val His Trp Tyr Gln Gln Leu Pro Gly Thr Ala Pro
               180                 185                 190
   aaa ctc ctc atc tat ggt aac agc aat cgg ccc tca ggg gtc cct gac       624
   Lys Leu Leu Ile Tyr Gly Asn Ser Asn Arg Pro Ser Gly Val Pro Asp
           195                 200                 205
   cga ttc tct ggc tcc aag tct ggc acc tca gcc tcc ctg gcc atc act       672
   Arg Phe Ser Gly Ser Lys Ser Gly Thr Ser Ala Ser Leu Ala Ile Thr
       210                 215                 220
   ggg ctc cag gct gag gat gag act gat tat tac tgc cag tcc tat gac      720
   Gly Leu Gln Ala Glu Asp Glu Thr Asp Tyr Tyr Cys Gln Ser Tyr Asp
   225                 230                 235                 240
   agc agc ctg aat ggt tgg gtg ttc ggc gga ggg acc aag ctg acc gtc      768
   Ser Ser Leu Asn Gly Trp Val Phe Gly Gly Gly Thr Lys Leu Thr Val
                   245                 250                 255
   cta                                                                  771
   Leu
<210> 233
   <211> 257
   <212> PRT
   <213> Artificial sequence
<220>
   <223> SC05-085
<400> 233
   Gln Val Thr Leu Lys Glu Ser Gly Pro Thr Leu Val Lys Pro Thr Gln
   1               5                   10                  15
   Thr Leu Thr Leu Thr Cys Thr Phe Ser Gly Phe Ser Leu Ser Thr Ser
               20                  25                  30
   Gly Val Gly Val Gly Trp Ile Arg Gln Pro Pro Gly Lys Ala Leu Glu
           35                  40                  45
   Trp Leu Ala Val Ile Tyr Trp Asn Asp Asp Lys Leu Tyr Arg Pro Ser
       50                  55                  60
   Leu Lys Ser Arg Leu Thr Ile Thr Lys Asp Thr Ser Lys Asn Gln Val
   65                  70                  75                  80
   Val Leu Thr Met Thr Lys Met Asp Pro Val Asp Thr Ala Thr Tyr Tyr
                   85                  90                  95
   Cys Ala His Arg His Arg Tyr Tyr Asp Ile Ser Gly Tyr Tyr Arg Leu
               100                 105                 110
   Phe Ser Asp Ala Phe Asp Ile Trp Gly Gln Gly Thr Met Val Thr Val
           115                 120                 125
   Ser Ser Gly Thr Gly Gly Ser Gly Gly Thr Gly Ser Gly Thr Gly Gly
       130                 135                 140
   Ser Thr Gln Ser Val Val Thr Gln Pro Pro Ser Val Ser Gly Ala Pro
   145                 150                 155                 160
   Gly Gln Arg Val Thr Ile Ser Cys Thr Gly Ser Ser Ser Asn Ile Gly
                   165                 170                 175
   Ala Gly Tyr Asp Val His Trp Tyr Gln Gln Leu Pro Gly Thr Ala Pro
               180                 185                 190
   Lys Leu Leu Ile Tyr Gly Asn Ser Asn Arg Pro Ser Gly Val Pro Asp
           195                 200                 205
   Arg Phe Ser Gly Ser Lys Ser Gly Thr Ser Ala Ser Leu Ala Ile Thr
       210                 215                 220
   Gly Leu Gln Ala Glu Asp Glu Thr Asp Tyr Tyr Cys Gln Ser Tyr Asp
   225                 230                 235                 240
   Ser Ser Leu Asn Gly Trp Val Phe Gly Gly Gly Thr Lys Leu Thr Val
                   245                 250                 255
   Leu

<210> 234
   <211> 771
   <212> DNA
   <213> Artificial sequence
<220>
   <223> SC05-088
   <220>

   <221> CDS
   <222> (1) .. (771)
   <223>
<400> 234
   cag gtc acc ttg aag gag tct ggt cct acg ctg gtg aaa ccc aca cag        48
   Gln Val Thr Leu Lys Glu Ser Gly Pro Thr Leu Val Lys Pro Thr Gln
   1               5                   10                  15
   acc ctc acg ttg acc tgc acc ttc tct ggg ttc tca ctc agc act agt         96
   Thr Leu Thr Leu Thr Cys Thr Phe Ser Gly Phe Ser Leu Ser Thr Ser
           20                  25                  30
   gga gtg ggt gtg ggc tgg atc cgt cag ccc cca gga aag gcc ctg gag        144
   Gly Val Gly Val Gly Trp Ile Arg Gln Pro Pro Gly Lys Ala Leu Glu
       35                  40                  45
   tgg ctt gca gtc att tat tgg aat gat gat aag ctc tac agg cca tct        192
   Trp Leu Ala Val Ile Tyr Trp Asn Asp Asp Lys Leu Tyr Arg Pro Ser
       50                  55                  60
   ctg aag agc agg ctc acc atc acc aag gac acc tcc aaa aac cag gtg        240
   Leu Lys Ser Arg Leu Thr Ile Thr Lys Asp Thr Ser Lys Asn Gln Val
   65                  70                  75                  80
   gtc ctt aca atg acc aag atg gac cct gtg gac aca gcc aca tat tac        288
   Val Leu Thr Met Thr Lys Met Asp Pro Val Asp Thr Ala Thr Tyr Tyr
                   85                  90                  95
   tgt gca cac aga cac cgt tac tat gat att agt ggt tat tac cgt ctc        336
   Cys Ala His Arg His Arg Tyr Tyr Asp Ile Ser Gly Tyr Tyr Arg Leu
               100                 105                 110
   ttc tct gat gct ttt gat atc tgg ggc caa ggg aca atg gtc acc gtc        384
   Phe Ser Asp Ala Phe Asp Ile Trp Gly Gln Gly Thr Met Val Thr Val
           115                 120                 125
   tcg agc ggt acg ggc ggt tca ggc gga acc ggc agc ggc act ggc ggg        432
   Ser Ser Gly Thr Gly Gly Ser Gly Gly Thr Gly Ser Gly Thr Gly Gly
       130                 135                 140
   tcg acg cag tct gtc gtg acg cag ccg ccc tca gtg tct ggg gcc cca        480
   Ser Thr Gln Ser Val Val Thr Gln Pro Pro Ser Val Ser Gly Ala Pro
   145                 150                 155                 160
   ggg cag agg atc acc atc tcc tgc act ggg agc agc tcc aac atc ggg        528
   Gly Gln Arg Ile Thr Ile Ser Cys Thr Gly Ser Ser Ser Asn Ile Gly
                   165                 170                 175
   gca ggt tat gat gta cac tgg tac cag cag ctt cca gga aca gcc ccc        576
   Ala Gly Tyr Asp Val His Trp Tyr Gln Gln Leu Pro Gly Thr Ala Pro
               180                 185                 190
   aaa ttc ctc atc tat ggt aac agc aat cgg ccc tca ggg gtc cct gac        624
   Lys Phe Leu Ile Tyr Gly Asn Ser Asn Arg Pro Ser Gly Val Pro Asp
           195                 200                 205
   cga ttc tct ggc tcc aag tct ggc acc tca gcc tcc ctg gcc atc act        672
   Arg Phe Ser Gly Ser Lys Ser Gly Thr Ser Ala Ser Leu Ala Ile Thr
       210                 215                 220
   ggg ctc cag gct gag gat gag gct gat tat tac tgc cag tcc tat gac        720
   Gly Leu Gln Ala Glu Asp Glu Ala Asp Tyr Tyr Cys Gln Ser Tyr Asp
   225                 230                 235                 240
   agc agc ctg agt ggt tgg gtg ttc ggc gga ggg acc aag ctg acc gtc        768
   Ser Ser Leu Ser Gly Trp Val Phe Gly Gly Gly Thr Lys Leu Thr Val
                   245                 250                 255
   cta                                                                    771
   Leu
<210> 235
   <211> 257
   <212> PRT
   <213> Artificial sequence
<220>
   <223> SC05-088
<400> 235
   Gln Val Thr Leu Lys Glu Ser Gly Pro Thr Leu Val Lys Pro Thr Gln
   1               5                   10                  15
   Thr Leu Thr Leu Thr Cys Thr Phe Ser Gly Phe Ser Leu Ser Thr Ser
               20                  25                  30
   Gly Val Gly Val Gly Trp Ile Arg Gln Pro Pro Gly Lys Ala Leu Glu
           35                  40                  45
   Trp Leu Ala Val Ile Tyr Trp Asn Asp Asp Lys Leu Tyr Arg Pro Ser
       50                  55                  60
   Leu Lys Ser Arg Leu Thr Ile Thr Lys Asp Thr Ser Lys Asn Gln Val
   65                  70                  75                  80
   Val Leu Thr Met Thr Lys Met Asp Pro Val Asp Thr Ala Thr Tyr Tyr
                   85                  90                  95
   Cys Ala His Arg His Arg Tyr Tyr Asp Ile Ser Gly Tyr Tyr Arg Leu
               100                 105                 110
   Phe Ser Asp Ala Phe Asp Ile Trp Gly Gln Gly Thr Met Val Thr Val
           115                 120                 125
   Ser Ser Gly Thr Gly Gly Ser Gly Gly Thr Gly Ser Gly Thr Gly Gly
       130                 135                 140
   Ser Thr Gln Ser Val Val Thr Gln Pro Pro Ser Val Ser Gly Ala Pro
   145                 150                 155                 160
   Gly Gln Arg Ile Thr Ile Ser Cys Thr Gly Ser Ser Ser Asn Ile Gly
                   165                 170                 175
   Ala Gly Tyr Asp Val His Trp Tyr Gln Gln Leu Pro Gly Thr Ala Pro
   180 185 190
   Lys Phe Leu Ile Tyr Gly Asn Ser Asn Arg Pro Ser Gly Val Pro Asp
   195 200 205
   Arg Phe Ser Gly Ser Lys Ser Gly Thr Ser Ala Ser Leu Ala Ile Thr
   210 215 220
   Gly Leu Gln Ala Glu Asp Glu Ala Asp Tyr Tyr Cys Gln Ser Tyr Asp
   225 230 235 240
   Ser Ser Leu Ser Gly Trp Val Phe Gly Gly Gly Thr Lys Leu Thr Val
   245 250 255
   Leu
<210> 236
   <211> 14
   <212> PRT
   <213> Artificial sequence
<220>
   <223> LCDR1
<400> 236
   Thr Gly Ser Ser Ser Asn Ile Gly Thr Gly Tyr Asp Val His
   1 5 10
<210> 237
   <211> 14
   <212> PRT
   <213> Artificial sequence
<220>
   <223> LCDR1
<400> 237
   Thr Gly Ser Ser Ser Asn Ile Gly Ala Gly Tyr Asp Val His
   1 5 10
<210> 238
   <211> 14
   <212> PRT
   <213> Artificial sequence
<220>
   <223> LCDR1
<400> 238
   Thr Gly Ser Ser Ser Asn Ile Gly Ala Gly Tyr Asp Val His
   1 5 10
<210> 239
   <211> 14
   <212> PRT
   <213> Artificial sequence
<220>
   <223> LCDR1
<400> 239
   Thr Gly Ser Ser Ser Asn Ile Gly Ala Gly Tyr Asp Val His
   1 5 10
<210> 240
   <211> 7
   <212> PRT
   <213> Artificial sequence
<220>
   <223> LCDR2
<400> 240
   Ala Asp Thr Asn Arg Pro Ser
   1 5
<210> 241
   <211> 7
   <212> PRT
   <213> Artificial sequence
<220>
   <223> LCDR2
<400> 241
   Gly Asn Ser Asn Arg Pro Ser
   1 5
<210> 242
   <211> 7
   <212> PRT
   <213> Artificial sequence
<220>
   <223> LCDR2
<400> 242
   Gly Asn Ser Asn Arg Pro Ser
   1 5
<210> 243
   <211> 7
   <212> PRT
   <213> Artificial sequence
<220>
   <223> LCDR2
<400> 243
   Gly Asn Ser Asn Arg Pro Ser
   1 5
<210> 244
   <211> 11
   <212> PRT
   <213> Artificial sequence
<220>
   <223> LCDR3
<400> 244
   Gln Ser Tyr Asp Thr Ser Leu Thr Gly Trp Val
   1 5 10
<210> 245
   <211> 11
   <212> PRT
   <213> Artificial sequence
<220>
   <223> LCDR3
<400> 245
   Gln Ser Tyr Asp Ser Ser Leu Ser Gly Trp Ala
   1 5 10
<210> 246
   <211> 11
   <212> PRT
   <213> Artificial sequence
<220>
   <223> LCDR3
<400> 246
   Gln Ser Tyr Asp Ser Ser Leu Asn Gly Trp Val
   1 5 10
<210> 247
   <211> 11
   <212> PRT
   <213> Artificial sequence
<220>
   <223> LCDR3
<400> 247
   Gln Ser Tyr Asp Ser Ser Leu Ser Gly Trp Val
   1 5 10